# EUROPEAN PATENT SPECIFICATION

(11) **EP 3 529 332 B1**
(45) Date of publication and mention of the grant of the patent: **25.11.2020**
(21) Application number: 17797058.9
(22) Date of filing: 16.10.2017
(51) Int. Cl.: C09K 19/06, C09K 19/20, C09K 19/04

(54) **LIQUID-CRYSTAL MEDIUM**
FLÜSSIGKRISTALLMEDIUM
MILIEU À CRISTAUX LIQUIDES

(30) Priority: 19.10.2016 EP 16194611
(43) Date of publication of application: 28.08.2019
(73) Proprietor: Merck Patent GmbH, 64293 Darmstadt (DE)
(72) Inventor: GREINERT, Nils, 64342 Seeheim-Jugenheim (DE); BREMER, Matthias, 64295 Darmstadt (DE); SUESS, Patrick, 69514 Laudenbach (DE); SCHOENEFELD, Christian, 64832 Babenhausen (DE); SIEBERLING, Jochen, 64287 Darmstadt (DE); SEEGER, Renate, 64560 Riedstadt (DE); HAWLITSCHEK, Anna Lisa, 64283 Darmstadt (DE)
(86) International application number: PCT/EP2017/076312
(87) International publication number: WO 2018/073159

(56) References cited:
- EP-A1- 2 716 625
- WO-A1-2004/107028
- WO-A1-2015/198916
- WO-A1-2016/206771
- WO-A1-2017/071793
- JP-A- 2012 082 349
- JP-B2- 5 509 678

## Description

The present invention relates to a liquid crystal (LC) medium comprising polymerisable compounds, to a process for its preparation, to its use for optical, electro-optical and electronic purposes, in particular in flexible LC displays, and to LC displays comprising it.

### Background of the Invention

Recently liquid crystal (LC) mixtures have been developed for the realization of flexible substrate based LC displays. These LC mixtures contain reactive polymer precursors that allow the formation of polymer walls in the display, which help to maintain the gap distance of the LC layer. This technology thus enables manufacturing of free form and robust displays by using LC materials.

Free form LC displays can either have a permanent shape other than the flat shape of rigid flat panel displays, for example a curved shape, or can even have flexible shape. The simplest form of the first type are curved TVs that have been developed in the recent past and offer the viewer an enhanced viewing experience. Thereby it is possible to provide displays which are not only shaped in one but in two dimensions, and which can be used for example as car dashboards or advertising screens.

Flexible displays, another type of free form displays, have also been developed, and have been proposed for example for use in mobile phones or smart watches utilizing the advantages of flexibility. Further potential applications are foldable or rollable mobile phones, as well as extra-large screens for presentations or home entertainment, which, due to their size, require to be rollable or foldable for being transported or stowed. Advantageously such devices are based on plastic substrates instead of rigid glass substrates as used in conventional, unflexible LC displays.

Another display concept, 'unbreakable' displays, are also based on plastic substrates and refers to a display design featuring particular robustness, durability, and resistance against mechanical impact. One problem that should be solved is that mobile devices have an elevated risk of being dropped accidentally or becoming otherwise damaged during their normal use. In view of the high value of these devices, a solution to this problem would be highly desirable.

There is thus a great demand for free form or unbreakable LC displays.

One of the main technical challenges of LC displays with flexible substrates is that a constant LC layer thickness is critical for proper device operation. A proper combination of defined LC layer thickness and LC material properties ensures that the pixels can be switched between a black state and light transmitting state. In case of a varying layer thickness, unwanted interference with the gap distance between the substrates can result in visible optical defects. It should therefore be ensured that the LC layer thickness is not altered by the bending or the lack of rigidity of flexible plastic substrates.

In conventional LC displays with rigid glass substrates, usually spacer particles are added to the LC layer in order to define and maintain a constant layer thickness. A possible solution for free form displays is to adapt this concept by incorporating supporting structures, like for example polymer walls, that can both resist compression and bind the two substrates together. A suitable manufacturing process is to prefabricate the polymer wall structures, spread the LC mixture on the substrate, and subsequently close the panel with the top substrate. Potential problems with this approach are for example that spreading of the LC mixture is obstructed by the support structures, and that bonding to the top substrate might not be sufficient.

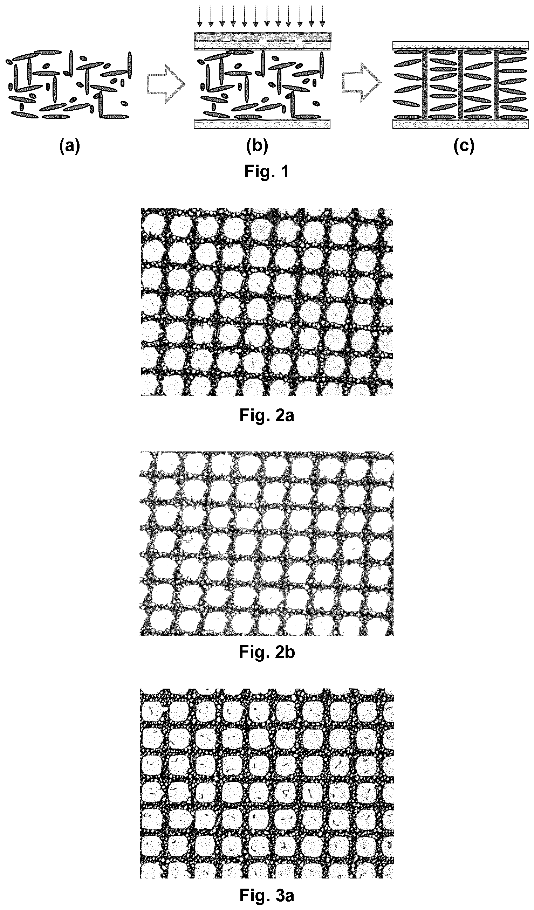

An alternative solution is to create the polymer wall structures by means of a photolithographic process after the display has been assembled. This is schematically illustrated in **Fig. 1** showing a polymer wall formation process. **Fig. 1** (a) shows an LC mixture consisting of LC host molecules (rods), polymerisable monomer (dots), and photo-initiator (not shown). As shown in **Fig. 1** (b) the LC mixture is filled into the display, or the LC mixture is spread on a first substrate and a second substrate applied on top, and UV radiation (indicated by the arrows) is applied through a photomask. Polymerization induced phase separation takes place, as a result of which polymer walls are formed in irradiated regions according to the mask pattern as shown in **Fig. 1** (c), while the LC phase of the LC host molecules (rods) in the pixel area is restored.

The principle of creating polymer walls by this method for LC display applications is a known technique that has been described in the literature and has been suggested for use in a variety of display modes.

For example, US6130738 and EP2818534 A1 disclose an LC display that comprises polymer walls formed from one or two polymerisable monomers that are contained in the LC host mixture.

However, the currently used LC mixtures and monomers for use in flexible LC displays with polymer wall formation do still have several drawbacks and leave room for further improvement.

For example, it was observed that the polymerisable compounds and LC media used in prior art do often show insufficient phase separation between the polymer walls and the LC molecules of the LC host mixture. This leads on the one hand to the undesired inclusion of LC molecules in the polymer walls, and on the other hand to increased amounts of polymer molecules dissolved or dispersed in the LC host mixture, both of which can negatively influence the display performance.

Thus, LC molecules trapped in the polymer wall can lead to reduced transparency and contrast of the display, a deterioration of the electrooptical response due to formation of domains with different switching speed, and decreased adhesion of the polymer walls to the substrates. On the other hand, undesired amounts of polymer molecules in the LC host mixture can negatively affect the LC mixture properties.

Moreover, it was observed that the thickness of the polymer walls is often not constant but varying, which can lead to non-uniform pixel size. Besides the polymer walls do often still not show sufficient stability against mechanical pressure on the one hand and sufficient elasticity on the other hand. Also, the polymer walls are often too thick, which reduces transparency and contrast of the display.

It is therefore desirable to have available improved LC mixtures and monomers for use in flexible LC displays which can overcome the drawbacks of materials used in prior art as described above.

The present invention is based on the object of providing novel suitable materials, in particular LC host mixtures comprising polymerisable monomers, for use in flexible LC displays with polymer walls, which do not have the disadvantages indicated above or do so only to a reduced extent.

In particular, the invention is based on the object of providing LC media comprising polymerisable monomers, which enable the formation of polymer walls in a time- and cost-effective manner, and which are suitable for mass production. The formed polymer walls should show clear phase separation from the LC host mixture, without or with a reduced amount of defects or LC molecules trapped in the polymer wall, and without or with a reduced amount of polymer molecules dissolved in the LC host mixture. Also, the polymer walls should show constant thickness, high elasticity, high stability against mechanical pressure, and good adhesion to the substrates.

Another object of the invention is to provide improved LC host mixtures for flexible displays which should show high specific resistance values, high VHR values, high reliability, low threshold voltages, short response times, high birefringence, show good UV absorption especially at longer wavelengths, allow quick and complete polymerisation of the monomers contained therein, and reduce or prevent the occurrence of image sticking in the display.

Another object of the invention is to provide LC dsiplays with polymer walls that show high transparency in the addressed state, good contrast, high switching speed and a large operating temperature range.

Another object of the present invention is to provide an improved technical solution for enabling LCD technology for free form and unbreakable plastic substrate based LC displays.

The above objects have been achieved in accordance with the present invention by materials and processes as described and claimed hereinafter.

Thus, it has surprisingly been found that at least some of the above-mentioned objects can be achieved by using an LC medium which comprises an LC host mixture and one or more polymerisable monomers as disclosed and claimed hereinafter, which contains a polymerisable compound having a cinnamate group that is connected to an acrylate or methacrylate group by a hydrocarbon spacer group. It was observed that, by using such an LC medium, it is possible to achieve polymer walls with a more constant thickness and better phase separation between the polymer walls and the LC host mixture. In particular, the use of an LC medium comprising such polymerisable compounds provides polymer walls with improved resistance against mechanical and UV stress.

It has also been surprisingly found that the polymerisable compounds contained in the LC medium can also be used to form spacers to maintain a constant cell gap between the substrates of the LC display. This can support or even replace the spacer materials that are normally used in prior art.

JP2012-082349 A, JP5509678 B2, WO2015/198916 A1, EP2716625 A1, WO2004/107028 A1, WO2017/071793 A and WO2016/206771 A disclose LC media with polymerizable compounds, but do not disclose or suggest an LC medium as defined in claim 1.

### Summary of the Invention

The invention relates to a liquid crystal (LC) medium comprising a polymerisable component A) which comprises, and preferably consists of, one or more polymerisable compounds, and a liquid-crystalline component B), hereinafter also referred to as "LC host mixture", which comprises, and preferably consists of, one or more mesogenic or liquid-crystalline compounds, wherein the polymerisable component A) comprises
one or more first polymerisable compounds comprising a cinnamate group of which the O atom is connected to an acrylate or methacrylate group via a hydrocarbon spacer group having from 2 to 20 C atoms, which are selected of formula I as defined in claim 1,
one or more second polymerisable compounds comprising a straight-chain or branched hydrocarbon group having from 1 to 30 C atoms, or a monocyclic hydrocarbon group having from 3 to 24 ring atoms, or a bi- or polycyclic hydrocarbon group having from 4 to 30 ring atoms, and attached thereto (exactly) one polymerisable group, which are selected from formulae II3, II4, II5, II6, II7, II8, IIAA, IIAB and IIAC as defined in claim 1,
optionally one or more third polymerisable compounds comprising a straight-chain, branched or cyclic hydrocarbon group having from 1 to 30 C atoms, and attached thereto two or more polymerisable groups, and
optionally one or more fourth polymerisable compounds comprising a ring system containing one or more aromatic or heteroaromatic rings or condensed aromatic or heteroaromatic rings, and attached thereto two polymerisable groups,
optionally a photoinitiator,
optionally a photosensitizer.

Preferably the LC medium according to the present invention does not contain a polymerisable compound with a maleimide group.

The liquid-crystalline component B) of an LC medium according to the present invention is hereinafter also referred to as "LC host mixture", and preferably contains LC compounds that are selected only from low-molecular-weight compounds which are unpolymerisable, and optionally contains further additives like stabilisers or chiral dopants.

The invention furthermore relates to an LC medium or LC display as described above and below, wherein the polymerisable compounds, or the compounds of component A), are polymerised.

The invention furthermore relates to a process for preparing an LC medium as described above and below, comprising the steps of mixing an LC host mixture or LC component B) as described above and below, with one or more polymerisable compounds as described above and below, and optionally with further LC compounds and/or additives.

The invention further relates to the use of LC medium in LC displays, preferably in flexible LC displays.

The invention furthermore relates to an LC display comprising an LC medium as described above and below.

The invention furthermore relates to an LC display comprising polymer walls obtainable by polymerisation of one or more polymerisable compounds or a polymerisable component A) as described above and below, or comprising an LC medium as described above and below.

The invention furthermore relates to an LC display comprising spacers obtainable by polymerisation of one or more polymerisable compounds or a polymerisable component A) as described above and below, or comprising an LC medium as described above and below.

The LC display according to the present invention is preferably a flexible LC display, preferably a TN, OCB, IPS, FFS, posi-VA, VA or UB-FFS display.

The invention furthermore relates to an LC display comprising two substrates, at least one which is transparent to light, an electrode provided on each substrate or two electrodes provided on only one of the substrates, and located between the substrates a layer of an LC medium as described above and below, wherein the polymerisable compounds are polymerised between the substrates of the display.

The invention furthermore relates to a process for manufacturing an LC display as described above and below, comprising the steps of filling or otherwise providing an LC medium as described above and below between the substrates of the display, and polymerising the polymerisable compounds.

The displays according to the invention have two electrodes, preferably in the form of transparent layers, which are applied to one or both of the substrates. In some displays, for example in TN, OCB or VA displays, one electrode is applied to each of the two substrates. In other displays, for example in IPS, FFS or UB-FFS displays, both electrodes are applied to only one of the two substrates.

The polymerisable compounds of the polymerisable compoment are preferably polymerised by photopolymerisation, very preferably by UV photopolymerisation.

### Brief Description of the Drawings

**Fig. 1** schematically illustrates the polymer wall formation process in displays according to prior art and according to the present invention.
**Fig.2** **and** **3** show polarization microscope images of test cells containing polymerisable mixture 1 according to Use Example 1 and polymerisable mixture C1 according to Comparison Example C1, respectively, after polymerization (a) and after thermal stress test (b).
**Fig.4-6** show polarization microscope images of test cells containing polymerisable mixtures 2-4 according to Use Examples 2-4, respectively.

### Detailed Description of the Invention

Above and below, the term "free form display" will be understood to mean a display that has either a permanent shape other than a plane-parallel shape, like for example a curved shape, or a flexible display. The term "flexible display" will be understood to mean a display which is bendable without breaking, like for example a display having flexible plastic substrates instead of rigid glass substrates and not comprising any other rigid layers. The term "curved display" will be understood to mean a display which has top and bottom subtrates that are not plane-parallel but curved.

Above and below, the term "flat display with reduced touch Mura sensitivity" will be understood to mean a display wherein irregular luminosity variation defects, which are caused by touching the front screen of a display, are reduced.

Above and below, the term "bi- or polycyclic group" will be understood to mean a group that consists of two or more fused rings, i.e. rings that share at last one common atom (in contrast to rings that are connected via covalent bonds between atoms belonging to different rings), wherein fusion of the rings occurs
a) across a sequence of atoms (bridgehead), like for example in bicyclo[2.2.1 ]heptane (norbornane) or tricyclo[3.3.3.1]decane (adamantane), hereinafter also referred to as "bridged bi- or polycyclic groups",
b) across a bond between two atoms, like for example in bicyclo[4.4.0]decane (decalin), hereinafter also referred to as "fused bi- or polycyclic groups"
c) at a single atom (spiro atom), like for example in spiro[4.5]decane, hereinafter also referred to as "spirocyclic groups".

Unless indicated otherwise, the abbreviation "RM" is used above and below when referring to a reactive mesogen.

Above and below, polymerisable compounds or RMs with one polymerisable reactive group are also referred to as "monoreactive", polymerisable compounds or RMs with two polymerisable reactive groups are also referred to as "direactive", and polymerisable compounds or RMs with three polymerisable reactive groups are also referred to as "trireactive".

Unless indicated otherwise, the expression "LC mixture" is used when referring to the LC host mixture (i.e. without the RMs or polymerizable compounds), while the expression "LC medium" is used when referring to the LC host mixture plus the RM(s) or polymerizable compounds.

Unless stated otherwise, the polymerisable compounds and RMs are preferably selected from achiral compounds.

As used herein, the terms "active layer" and "switchable layer" mean a layer in an electrooptical display, for example an LC display, that comprises one or more molecules having structural and optical anisotropy, like for example LC molecules, which change their orientation upon an external stimulus like an electric or magnetic field, resulting in a change of the transmission of the layer for polarized or unpolarized light.

As used herein, the terms "reactive mesogen" and "RM" will be understood to mean a compound containing a mesogenic or liquid crystalline skeleton, and one or more functional groups attached thereto which are suitable for polymerisation and are also referred to as "polymerisable group" or "P".

Unless stated otherwise, the term "polymerisable compound" as used herein will be understood to mean a polymerisable monomeric compound.

As used herein, the term "low-molecular-weight compound" will be understood to mean to a compound that is monomeric and/or is not prepared by a polymerisation reaction, as opposed to a "polymeric compound" or a "polymer".

As used herein, the term "unpolymerisable compound" will be understood to mean a compound that does not contain a functional group that is suitable for polymerisation under the conditions usually applied for the polymerisation of the RMs or polymerizable compounds.

The term "mesogenic group" as used herein is known to the person skilled in the art and described in the literature, and means a group which, due to the anisotropy of its attracting and repelling interactions, essentially contributes to causing a liquid-crystal (LC) phase in low-molecular-weight or polymeric substances. Compounds containing mesogenic groups (mesogenic compounds) do not necessarily have to have an LC phase themselves. It is also possible for mesogenic compounds to exhibit LC phase behaviour only after mixing with other compounds and/or after polymerisation. Typical mesogenic groups are, for example, rigid rod- or disc-shaped units. An overview of the terms and definitions used in connection with mesogenic or LC compounds is given in Pure Appl. Chem. 2001, 73(5), 888 and C. Tschierske, G. Pelzl, S. Diele, Angew. Chem. 2004, 116, 6340-6368.

The term "spacer group", hereinafter also referred to as "Sp", as used herein is known to the person skilled in the art and is described in the literature, see, for example, Pure Appl. Chem. 2001, 73(5), 888 and C. Tschierske, G. Pelzl, S. Diele, Angew. Chem. 2004, 116, 6340-6368. As used herein, the terms "spacer group" or "spacer" mean a flexible group, for example an alkylene group, which connects the mesogenic group and the polymerisable group(s) in a polymerisable mesogenic compound.

Above and below, 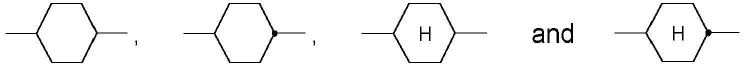 denote a trans-1,4-cyclohexylene ring, and 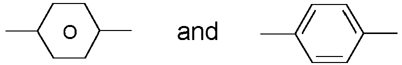 denote a 1,4-phenylene ring.

Above and below "organic group" denotes a carbon or hydrocarbon group.

"Carbon group" denotes a mono- or polyvalent organic group containing at least one carbon atom, where this either contains no further atoms (such as, for example, -C≡C-) or optionally contains one or more further atoms, such as, for example, N, O, S, B, P, Si, Se, As, Te or Ge (for example carbonyl, etc.). The term "hydrocarbon group" denotes a carbon group which additionally contains one or more H atoms and optionally one or more heteroatoms, such as, for example, N, O, S, B, P, Si, Se, As, Te or Ge.

"Halogen" denotes F, CI, Br or I.

-CO-, -C(=O)- and -C(O)- denote a carbonyl group, i.e.

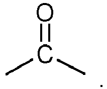

A carbon or hydrocarbon group can be a saturated or unsaturated group. Unsaturated groups are, for example, aryl, alkenyl or alkynyl groups. A carbon or hydrocarbon radical having more than 3 C atoms can be straight-chain, branched and/or cyclic and may also contain spiro links or condensed rings.

The terms "alkyl", "aryl", "heteroaryl", etc., also encompass polyvalent groups, for example alkylene, arylene, heteroarylene, etc.

The term "aryl" denotes an aromatic carbon group or a group derived therefrom. The term "heteroaryl" denotes "aryl" as defined above, containing one or more heteroatoms, preferably selected from N, O, S, Se, Te, Si and Ge.

Preferred carbon and hydrocarbon groups are optionally substituted, straight-chain, branched or cyclic, alkyl, alkenyl, alkynyl, alkoxy, alkylcarbonyl, alkoxycarbonyl, alkylcarbonyloxy and alkoxycarbonyloxy having 1 to 40, preferably 1 to 20, very preferably 1 to 12, C atoms, optionally substituted aryl or aryloxy having 5 to 30, preferably 6 to 25, C atoms, or optionally substituted alkylaryl, arylalkyl, alkylaryloxy, arylalkyloxy, arylcarbonyl, aryloxycarbonyl, arylcarbonyloxy and aryloxycarbonyloxy having 5 to 30, preferably 6 to 25, C atoms, wherein one or more C atoms may also be replaced by hetero atoms, preferably selected from N, O, S, Se, Te, Si and Ge.

Further preferred carbon and hydrocarbon groups are C₁-C₂₀ alkyl, C₂-C₂₀ alkenyl, C₂-C₂₀ alkynyl, C₃-C₂₀ allyl, C₄-C₂₀ alkyldienyl, C₄-C₂₀ polyenyl, C₆-C₂₀ cycloalkyl, C₄-C₁₅ cycloalkenyl, C₆-C₃₀ aryl, C₆-C₃₀ alkylaryl, C6-C30 arylalkyl, C₆-C₃₀ alkylaryloxy, C₆-C₃₀ arylalkyloxy, C₂-C₃₀ heteroaryl, C₂-C₃₀ heteroaryloxy.

Particular preference is given to C₁-C₁₂ alkyl, C₂-C₁₂ alkenyl, C₂-C₁₂ alkynyl, C₆-C₂₅ aryl and C₂-C₂₅ heteroaryl.

Further preferred carbon and hydrocarbon groups are straight-chain, branched or cyclic alkyl having 1 to 20, preferably 1 to 12, C atoms, which are unsubstituted or mono- or polysubstituted by F, Cl, Br, I or CN and in which one or more non-adjacent CH₂ groups may each be replaced, independently of one another, by -C(R^{S1})=C(R^{S1})-, -C≡C-, -N(R^{S1})-, -O-, -S-, -CO-, -CO-O-, -O-CO-, -O-CO-O- in such a way that O and/or S atoms are not linked directly to one another, and

R^{S1} denotes H, F, CI, CN, a straight-chain, branched or cyclic alkyl chain having 1 to 25 C atoms, in which, in addition, one or more non-adjacent C atoms may be replaced by -O-, -S-, -CO-, -CO-O-, -O-CO-, -O-CO-O- and in which one or more H atoms may be replaced by F or Cl, or denotes an optionally substituted aryl or aryloxy group with 6 to 30 C atoms, or an optionally substituted heteroaryl or heteroaryloxy group with 2 to 30 C atoms.

Preferred alkyl groups are, for example, methyl, ethyl, n-propyl, isopropyl, n-butyl, isobutyl, s-butyl, t-butyl, 2-methylbutyl, n-pentyl, s-pentyl, cyclopentyl, n-hexyl, cyclohexyl, 2-ethylhexyl, n-heptyl, cycloheptyl, n-octyl, cyclooctyl, n-nonyl, n-decyl, n-undecyl, n-dodecyl, dodecanyl, trifluoromethyl, perfluoro-n-butyl, 2,2,2-trifluoroethyl, perfluorooctyl, perfluorohexyl, etc.

Preferred alkenyl groups are, for example, ethenyl, propenyl, butenyl, pentenyl, cyclopentenyl, hexenyl, cyclohexenyl, heptenyl, cycloheptenyl, octenyl, cyclooctenyl, etc.

Preferred alkynyl groups are, for example, ethynyl, propynyl, butynyl, pentynyl, hexynyl, octynyl, etc.

Preferred alkoxy groups are, for example, methoxy, ethoxy, 2-methoxy-ethoxy, n-propoxy, i-propoxy, n-butoxy, i-butoxy, s-butoxy, t-butoxy, 2-methylbutoxy, n-pentoxy, n-hexoxy, n-heptoxy, n-octoxy, n-nonoxy, n-decoxy, n-undecoxy, n-dodecoxy, etc.

Preferred amino groups are, for example, dimethylamino, methylamino, methylphenylamino, phenylamino, etc.

Aryl and heteroaryl groups can be monocyclic or polycyclic, i.e. they can contain one ring (such as, for example, phenyl) or two or more rings, which may also be fused (such as, for example, naphthyl) or covalently bonded (such as, for example, biphenyl), or contain a combination of fused and linked rings. Heteroaryl groups contain one or more heteroatoms, preferably selected from O, N, S and Se.

Particular preference is given to mono-, bi- or tricyclic aryl groups having 6 to 25 C atoms and mono-, bi- or tricyclic heteroaryl groups having 5 to 25 ring atoms, which optionally contain fused rings and are optionally substituted. Preference is furthermore given to 5-, 6- or 7-membered aryl and heteroaryl groups, in which, in addition, one or more CH groups may be replaced by N, S or O in such a way that O atoms and/or S atoms are not linked directly to one another.

Preferred aryl groups are, for example, phenyl, biphenyl, terphenyl, [1,1':3',1"]terphenyl-2'-yl, naphthyl, anthracene, binaphthyl, phenanthrene, 9,10-dihydro-phenanthrene, pyrene, dihydropyrene, chrysene, perylene, tetracene, pentacene, benzopyrene, fluorene, indene, indenofluorene, spirobifluorene, etc.

Preferred heteroaryl groups are, for example, 5-membered rings, such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole, 1,3,4-thiadiazole, 6-membered rings, such as pyridine, pyridazine, pyrimidine, pyrazine, 1,3,5-triazine, 1,2,4-triazine, 1,2,3-triazine, 1,2,4,5-tetrazine, 1,2,3,4-tetrazine, 1,2,3,5-tetrazine, or condensed groups, such as indole, isoindole, indolizine, indazole, benzimidazole, benzotriazole, purine, naphthimidazole, phenanthrimidazole, pyridimidazole, pyrazinimidazole, quinoxalinimidazole, benzoxazole, naphthoxazole, anthroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene, benzothiadiazothiophene, or combinations of these groups.

The aryl and heteroaryl groups mentioned above and below may also be substituted by alkyl, alkoxy, thioalkyl, fluorine, fluoroalkyl or further aryl or heteroaryl groups.

The (non-aromatic) alicyclic and heterocyclic groups encompass both saturated rings, i.e. those containing exclusively single bonds, and also partially unsaturated rings, i.e. those which may also contain multiple bonds. Heterocyclic rings contain one or more heteroatoms, preferably selected from Si, O, N, S and Se.

The (non-aromatic) alicyclic and heterocyclic groups can be monocyclic, i.e. contain only one ring (such as, for example, cyclohexane), or polycyclic, i.e. contain a plurality of rings (such as, for example, decahydronaphthalene or bicyclooctane). Particular preference is given to saturated groups. Preference is furthermore given to mono-, bi- or tricyclic groups having 5 to 25 ring atoms, which optionally contain fused rings and are optionally substituted. Preference is furthermore given to 5-, 6-, 7- or 8-membered carbocyclic groups, in which, in addition, one or more C atoms may be replaced by Si and/or one or more CH groups may be replaced by N and/or one or more non-adjacent CH₂ groups may be replaced by -O- and/or -S-.

Preferred alicyclic and heterocyclic groups are, for example, 5-membered groups, such as cyclopentane, tetrahydrofuran, tetrahydrothiofuran, pyrrolidine, 6-membered groups, such as cyclohexane, silinane, cyclohexene, tetrahydropyran, tetrahydrothiopyran, 1,3-dioxane, 1,3-dithiane, piperidine, 7-membered groups, such as cycloheptane, and fused groups, such as tetrahydronaphthalene, decahydronaphthalene, indane, bicyclo[1.1.1]-pentane-1,3-diyl, bicyclo[2.2.2]octane-1,4-diyl, spiro[3.3]heptane-2,6-diyl, octahydro-4,7 -methanoindane-2,5-diyl.

Preferred substituents are, for example, solubility-promoting groups, such as alkyl or alkoxy, electron-withdrawing groups, such as fluorine, nitro or nitrile, or substituents for increasing the glass transition temperature (Tg) in the polymer, in particular bulky groups, such as, for example, t-butyl or optionally substituted aryl groups.

Preferred substituents, hereinafter also referred to as L^{s}, are, for example, F, CI, Br, I, -CN, -NO₂, -NCO, -NCS, -OCN, -SCN, -C(=O)N(R^{S})₂, -C(=O)Y^{S}, - C(=O)R^{S}, -N(R^{S})₂, straight-chain or branched alkyl, alkoxy, alkylcarbonyl, alkoxycarbonyl, alkylcarbonyloxy or alkoxycarbonyloxy each having 1 to 25 C atoms, in which one or more H atoms may optionally be replaced by F or CI, optionally substituted silyl having 1 to 20 Si atoms, or optionally substituted aryl having 6 to 25, preferably 6 to 15, C atoms,
wherein R^{S} denotes H, F, CI, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F or CI,
Y^{S} denotes halogen, preferably F.

"Substituted silyl or aryl" preferably means substituted by halogen, -CN, R⁰, -OR⁰, -CO-R^{O}, -CO-O-R⁰, -O-CO-R⁰ or -O-CO-O-R⁰, wherein R⁰ denotes H or alkyl with 1 to 20 C atoms.

Particularly preferred substituents L are, for example, F, CI, CN, NO₂, CH₃, C₂H₅, OCH₃, OC₂H₅, COCH₃, COC₂H₅, COOCH₃, COOC₂H₅, CF₃, OCF₃, OCHF₂, OC₂F₅, furthermore phenyl. 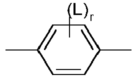 is preferably 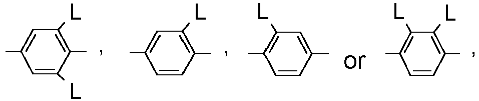 in which L has one of the meanings indicated above and r is 0, 1, 2, 3 or 4.

The polymerisable group P, P^{x} or P^{1,2} is a group which is suitable for a polymerisation reaction, such as, for example, free-radical or ionic chain polymerisation, polyaddition or polycondensation, or for a polymer-analogous reaction, for example addition or condensation onto a main polymer chain. Particular preference is given to groups for chain polymerisation, in particular those containing a C=C double bond or -C≡C- triple bond, and groups which are suitable for polymerisation with ring opening, such as, for example, oxetane or epoxide groups.

Preferred groups P, P^{x} and P^{1,2} are selected from the group consisting of CH₂=CW¹-CO-O-, CH₂=CW¹-CO-, 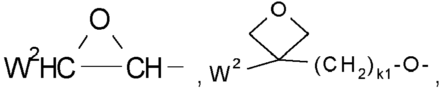 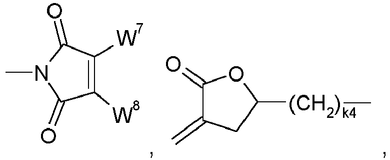 CH₂=CW²-(O)ₖ₃-, CW¹=CH-CO-(O)ₖ₃-, CW¹=CH-CO-NH-, CH₂=CW¹-CO-NH-, CH₃-CH=CH-O-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, HO-CW²W³-, HS-CW²W³-, HW²N-, HO-CW²W³-NH-, CH₂=CW¹-CO-NH-, CH₂=CH-(COO)ₖ₁-Phe-(O)ₖ₂-, CH₂=CH-(CO)ₖ₁-Phe-(O)ₖ₂- , Phe-CH=CH-, HOOC-, OCN- and W⁴W⁵W⁶Si-, in which W¹ denotes H, F, CI, CN, CF₃, phenyl or alkyl having 1 to 5 C atoms, in particular H, F, Cl , CH₃ or C₂H₅, W² and W³ each, independently of one another, denote H or alkyl having 1 to 5 C atoms, in particular H, methyl, ethyl or n-propyl, W⁴, W⁵ and W⁶ each, independently of one another, denote CI, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, which is optionally substituted by one or more radicals L as defined above which are other than P-Sp-, k₁, k₂ and k₃ each, independently of one another, denote 0 or 1, k₃ preferably denotes 1, and k₄ denotes an integer from 1 to 10.

Very preferred groups P, P^{x} and P^{1,2} are selected from the group consisting of CH₂=CW¹-CO-O-, CH₂=CW¹-CO-, 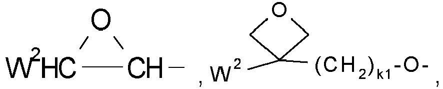 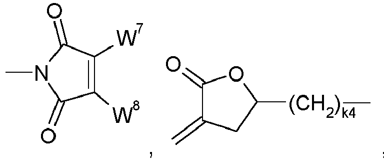 CH₂=CW²-O-, CH₂=CW²⁻, CW¹=CH-CO-(O)ₖ₃-, CW¹=CH-CO-NH-, CH₂=CW¹-CO-NH-, (CH₂=CH)₂CH-OCO-, (CH₂=CH-CH₂)₂CH-OCO-, (CH₂=CH)₂CH-O-, (CH₂=CH-CH₂)₂N-, (CH₂=CH-CH₂)₂N-CO-, CH₂=CW¹-CO-NH-, CH₂=CH-(COO)ₖ₁-Phe-(O)ₖ₂-, CH₂=CH-(CO)ₖ₁-Phe-(O)ₖ₂-, Phe-CH=CH- and W⁴W⁵W⁶Si-, in which W¹ denotes H, F, CI, CN, CF₃, phenyl or alkyl having 1 to 5 C atoms, in particular H, F, CI, CH₃ or C₂H₅, W² and W³ each, independently of one another, denote H or alkyl having 1 to 5 C atoms, in particular H, methyl, ethyl or n-propyl, W⁴, W⁵ and W⁶ each, independently of one another, denote CI, oxaalkyl or oxacarbonylalkyl having 1 to 5 C atoms, W⁷ and W⁸ each, independently of one another, denote H, Cl or alkyl having 1 to 5 C atoms, Phe denotes 1,4-phenylene, k₁, k₂ and k₃ each, independently of one another, denote 0 or 1, k₃ preferably denotes 1, and k₄ denotes an integer from 1 to 10.

Very particularly preferred groups P, P^{x} and P^{1,2} are selected from the group consisting of CH₂=CW¹-CO-O-, in particular CH₂=CH-CO-O-, CH₂=C(CH₃)-CO-O- and CH₂=CF-CO-O-, furthermore CH₂=CH-O-, (CH₂=CH)₂CH-O-CO-, (CH₂=CH)₂CH-O-,

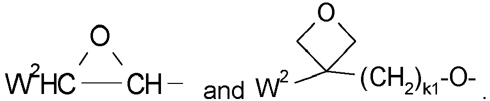

Further preferred polymerisable groups P, P^{x} and P^{1,2} are selected from the group consisting of vinyloxy, acrylate, methacrylate, ethacrylate (which is CH₂=CW¹-CO-O- wherein W¹ is ethyl), fluoroacrylate, chloroacrylate, oxetane and epoxide, most preferably from acrylate and methacrylate.

If Sp, Sp^{x} or Sp^{1,2} is different from a single bond, it is preferably selected of the formula Sp"-X", so that the respective radical P-Sp- conforms to the formula P-Sp"-X"-, wherein
- Sp": denotes alkylene having 1 to 20, preferably 1 to 12, C atoms, which is optionally mono- or polysubstituted by F, Cl, Br, I or CN and in which, in addition, one or more non-adjacent CH₂ groups may each be replaced, independently of one another, by -O-, -S-, -NH-, -N(R⁰)-, -Si(R⁰R⁰⁰)-, - CO-, -CO-O-, -O-CO-, -O-CO-O-, -S-CO-, -CO-S-, -N(R⁰⁰)-CO-O-, -O-CO-N(R⁰)-, -N(R⁰)-CO-N(R⁰⁰)-, -CH=CH- or -C≡C- in such a way that O and/or S atoms are not linked directly to one another,
- X": denotes -O-, -S-, -CO-, -CO-O-, -O-CO-, -O-CO-O-, -CO-N(R⁰)-, -N(R⁰)-CO-, -N(R⁰)-CO-N(R⁰⁰)-, -OCH₂-, -CH₂O-, -SCH₂-, -CH₂S-, -CF₂O-, - OCF₂-, -CF₂S-, -SCF₂-, -CF₂CH₂-, -CH₂CF₂-, -CF₂CF₂-, -CH=N-, - N=CH-, -N=N-, -CH=CR⁰-, -CY²=CY³-, -C≡C-, -CH=CH-CO-O-, -O-CO-CH=CH- or a single bond,
- R⁰ and R⁰⁰: each, independently of one another, denote H or alkyl having 1 to 20 C atoms, and
- Y² and Y³: each, independently of one another, denote H, F, Cl or CN.

X" is preferably -O-, -S-, -CO-, -COO-, -OCO-, -O-COO-, -CO-NR⁰-, -NR⁰-CO-, -NR⁰-CO-NR⁰⁰- or a single bond.

Typical spacer groups Sp, Sp^{x}, Sp^{1,2} and -Sp"-X"- are, for example, -(CH₂)ₚ₁-, -(CH₂CH₂O)_{q1}-CH₂CH₂-, -CH₂CH₂-S-CH₂CH₂-, -CH₂CH₂-NH-CH₂CH₂- or -(SiR⁰R⁰⁰-O)ₚ₁-, in which p1 is an integer from 1 to 12, q1 is an integer from 1 to 3, and R⁰ and R⁰⁰ have the meanings indicated above.

Particularly preferred groups Sp, Sp^{x}, Sp^{1,2} and -Sp"-X"- are -(CH₂)ₚ₁-, -(CH₂)ₚ₁-O-, -(CH₂)ₚ₁-O-CO-, -(CH₂)ₚ₁-CO-O-, -(CH₂)ₚ₁-O-CO-O-, in which p1 and q1 have the meanings indicated above.

Particularly preferred groups Sp" are, in each case straight-chain, ethylene, propylene, butylene, pentylene, hexylene, heptylene, octylene, nonylene, decylene, undecylene, dodecylene, octadecylene, ethyleneoxyethylene, methyleneoxybutylene, ethylenethioethylene, ethylene-N-methylimino-ethylene, 1-methylalkylene, ethenylene, propenylene and butenylene.

The use of LC media according to the present invention show unexpected improvements over the LC media of prior art.

The LC media of prior art for use in polymer walls usually contain a mixture of monoreactive and direactive polymerisable compounds, typically with an acrylate, methacrylate or vinylether group. In order to achieve polymer walls with good mechanical stability, usually a high amount of direactive polymerisable compounds is required. However, if the amount of direactive compounds is too high this can cause inclusion of LC host mixture in the polymer walls. On the other hand, if the amount of direactive polymerisable compounds is too low this leads to unsufficient hardness and mechanical stability of the resulting polymer walls, which can in turn cause local defects when pressure is applied to the display. This is a serious drawback especially in case of flexible displays. There is therefore the problem to achieve both a high mechanical stability and a highly defined shape of the polymer walls.

This problem can be overcome by using LC media according to the present invention, which contain one or more first polymerisable compounds as described above and below with a reactive cinnammate group of which the ester portion is connected via a spacer group to a polymerisable acrylate or methacrylate group. The cinnamate group acts as a second polymerisable group, thus allowing the formation of a crosslinked polymer.

Compared to the polymerisable compounds as used in the LC media of prior art, the polymerisable compounds with a cinnammate group can be used in high concentration of 50% or more, while still allowing formation of polymer walls with highly defined shape. At the same time, the compounds can be crosslinked via the cinnamate group and do thus enable the formation of polymer walls with high mechanical stability. The LC media according to the present invention do therefore enable LC displays with constant thickness and reduced optical defects even under mechanical pressure. This could be demonstrated in comparison with structure-analogous polymerisable compounds wherein the C=C double bond of the cinnamate moiety is replaced by a saturated C-C bond.

Component A) of the LC medium comprises one or more first polymerisable compounds selected of formula I 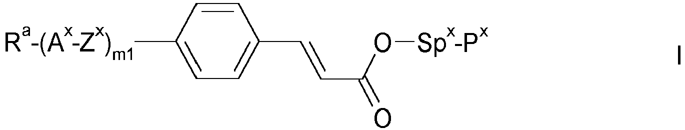 wherein the individual radicals, independently of each other, and on each occurrence identically or differently, have the following meanings
- P^{x}: an acrylate or methacrylate group,
- Sp^{x}: straight chain, branched or cyclic alkylene having 2 to 20 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other,
- R^{a}: H, F, Cl, CN, P^{x}, P^{x}-Sp^{x}-, R^{x}, R^{X}-O-CO-CH=CH-, P^{x}-Sp^{x}-O-CO-CH=CH-, R^{X}-CH=CH-CO-O-, P^{x}-Sp^{x}-CH=CH-CO-O-,
- R^{x}: straight chain, branched or cyclic alkyl having 1 to 25 C atoms, wherein one or more non-adjacent CH₂-groups are optionally replaced by -O-, -S-, -NR⁰⁻, -CO-, -CO-O-, -O-CO-, -O-CO-O-, -C(R°)=C(R°°)- or -C=C- in such a manner that 0- and/or S-atoms are not directly connected with each other, and wherein one or more H atoms are each optionally replaced by F or CI,
- A^{x}: an aromatic, heteroaromatic, alicyclic or heterocyclic group having 4 to 25 ring atoms, which may also contain fused rings, and which is unsubstituted, or mono- or polysubstituted by L,
- Z^{X}: -O-, -S-, -CO-, -CO-O-, -OCO-, -O-CO-O-, -OCH₂-, -CH₂O-, -SCH₂-,-CH₂S-, -CF₂O-, -OCF₂-, -CF₂S-, -SCF₂-, -(CH₂)nn⁻, -CF₂CH₂-,-CH₂CF₂-, -(CF₂)n11-, -CH=CH-, -CF=CF-, -C≡C-, -CH=CH-COO-,-OCO-CH=CH-, CR⁰R⁰⁰ or a single bond,
- L: F, Cl, -CN, -NO₂, -NCO, -NCS, -OCN, -SCN, -C(=O)N(R^{q})₂, -C(=O)Y^{z}, -C(=O)R^{q}, -N(R^{q})₂, optionally substituted silyl, optionally substituted aryl or heteroaryl having 5 to 20 ring atoms, or straight-chain or branched alkyl having 1 to 25 C atoms in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, -CN,
- R^{q}: H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F or Cl,
- R⁰ , R⁰⁰: H or alkyl having 1 to 20 C atoms,
- Y^{z}: halogen, preferably F or Cl,
- m1: 0, 1 or 2,
- n11: 1, 2, 3 or 4.

In a preferred embodiment of the present invention R^{a} is selected from P^{x}, P^{x}-Sp^{x}-, P^{x}-Sp^{x}-O-CO-CH=CH- and P^{x}-Sp^{x}-CH=CH-CO-O-, wherein P^{x} and Sp^{x} are as defined above and below.

In another preferred embodiment of the present invention R^{a} is straight chain, branched or cyclic alkyl having 1 to 25 C atoms, wherein one or more non-adjacent CH₂-groups are optionally replaced by -O-, -S-, -NR⁰-, -CO-, -CO-O-, - O-CO-, -O-CO-O- in such a manner that O- and/or S-atoms are not directly connected with each other, and wherein one or more H atoms are each optionally replaced by F or Cl.

Sp^{x} is preferably selected from -(CH₂)ₚ₁-, -(CH₂)ₚ₁-O-, -(CH₂)ₚ₁-O-CO-, -(CH₂)ₚ₁-CO-O- or -(CH₂)ₚ₁-O-CO-O-, wherein p1 is an integer from 2 to 12, and wherein Sp^{x} is linked to a group P^{x} or to a cinnamate group such that O atoms are not directly connected to each other.

In a preferred embodiment of the present invention m1 is 0. In another preferred embodiment of the present invention m1 is 1 or 2.

A^{X} is preferably selected from,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1]-pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Very preferably A^{x} is selected from 1,4-phenylene, naphthalene-2,6-diyl and cyclohexane-1,4-diyl, which are unsubstituted or mono- or polysubstituted by L as defined above.

Z^{x} is preferably selected from -CO-O-, -OCO-, -OCH₂-, -CH₂O-, -CF₂O-, -OCF₂-, -CF₂S-, -(CH₂)ₙ₁₁-, -CH=CH-, -CF=CF-, -C≡C-, -CH=CH-COO-, -OCO-CH=CH- or a single bond.

Preferred compounds of formula I are selected from the following formulae 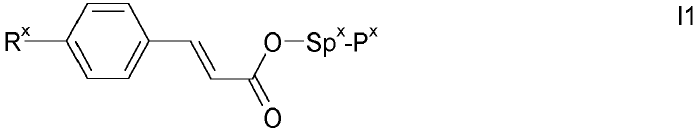 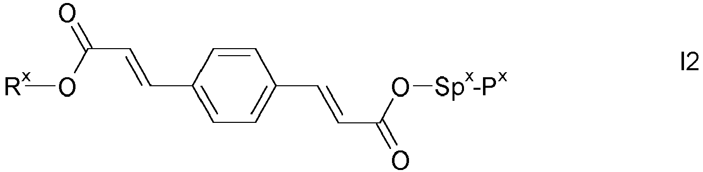 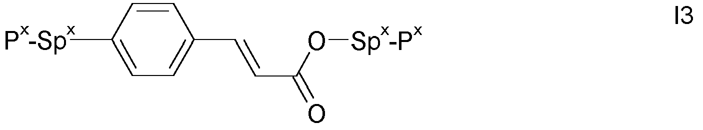 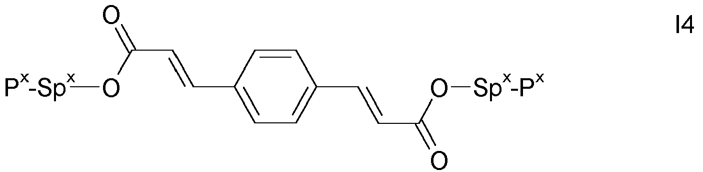 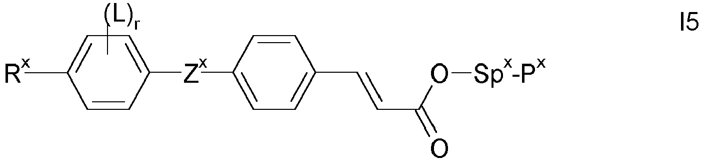 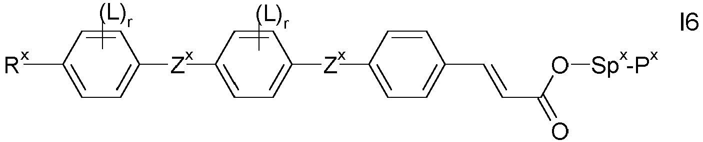 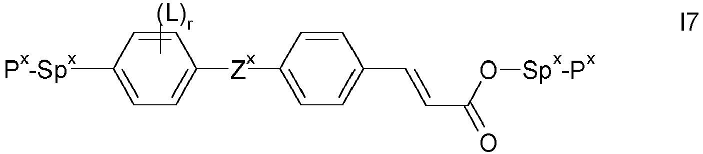 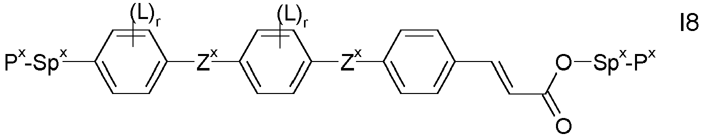 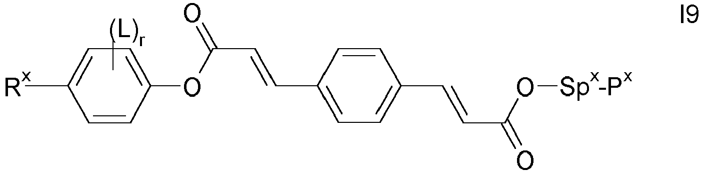 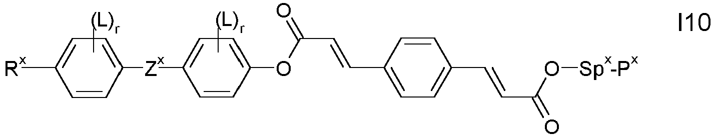 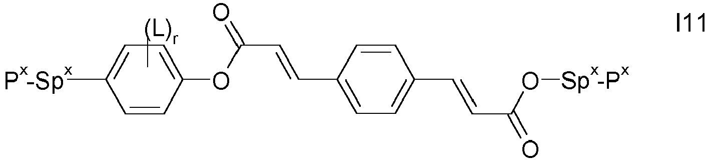 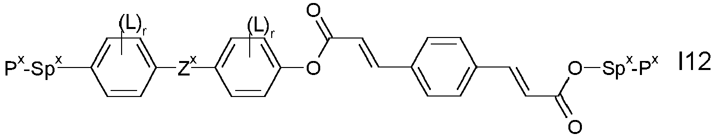 wherein P^{x}, Sp^{x}, R^{x} and L have the meanings given in formula I or one of the preferred meanings given above and below, and r is 0, 1, 2, 3 or 4.

Very preferred are compounds of formula 11-14.

In formula 11-112 R^{x} preferably denotes F, Cl, CN, or straight chain, branched or cyclic alkyl having 1 to 25, preferably 1 to 12, C atoms, wherein one or more non-adjacent CH₂-groups are optionally replaced by -O-, -S-, -CO-, - CO-O-, -O-CO-, -O-CO-O- in such a manner that O- and/or S-atoms are not directly connected with each other, and wherein one or more H atoms are each optionally replaced by F or Cl.

Very preferred compounds of formula I are selected from the following formulae

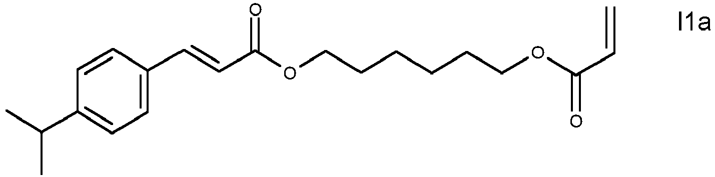

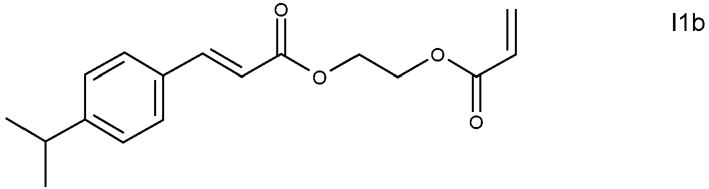

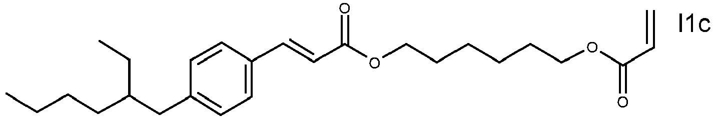

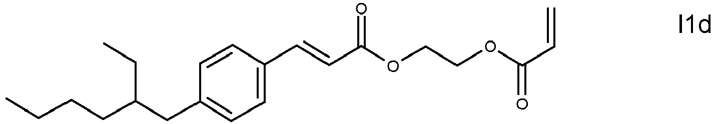

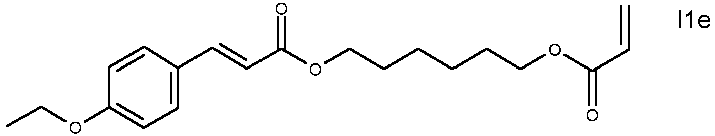

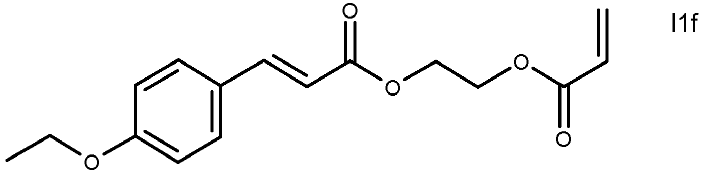

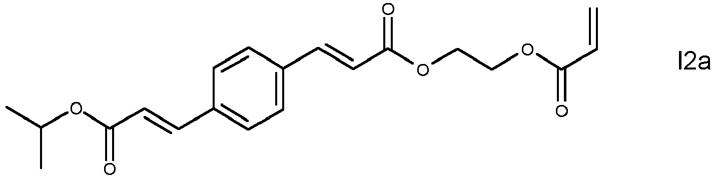

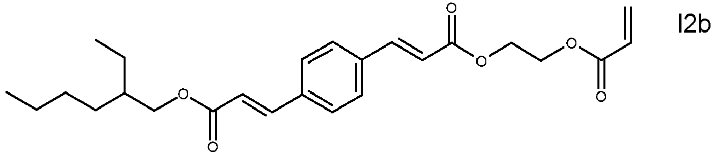

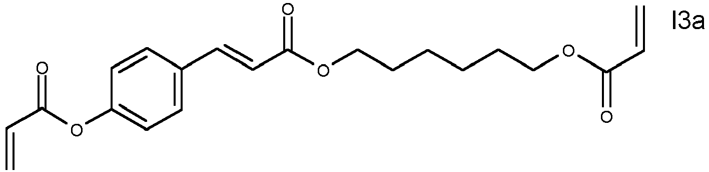

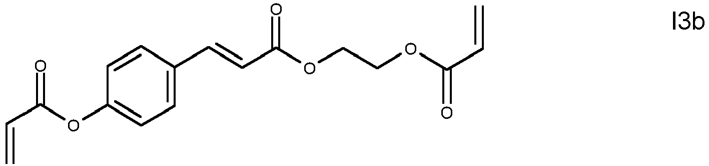

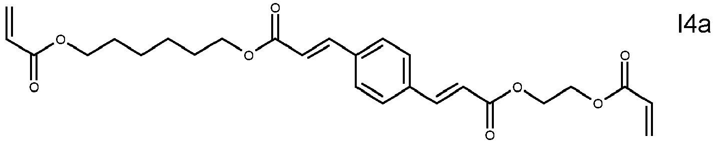

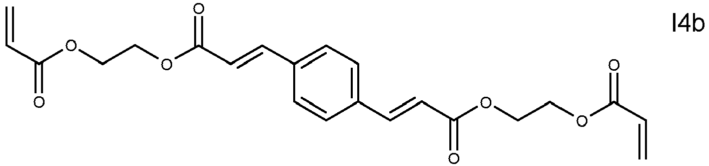

Further preferred are compounds of formula 11-14b wherein the acrylate groups are replaced by methacrylate groups.

Preferably component A) of the LC medium comprises one or more second polymerisable compounds selected from the formulae 113 to 118 below wherein P is a polymerisable group and Sp is a spacer group or a single bond.

P is preferably acrylate, methacrylate or oxetane, very preferably acrylate or methacrylate.

Sp is preferably of the formula Sp"-X", so that the respective radical P-Sp-conforms to the formula P-Sp"-X"-, wherein Sp" and X" are as defined above.

Sp is very preferably -(CH₂)ₚ₁-, -(CH₂)ₚ₁-O-, -(CH₂)ₚ₁-O-CO-, -(CH₂)ₚ1-CO-O-, -(CH₂)ₚ₁-O-CO-O-, in which p1 is an integer from 1 to 12. 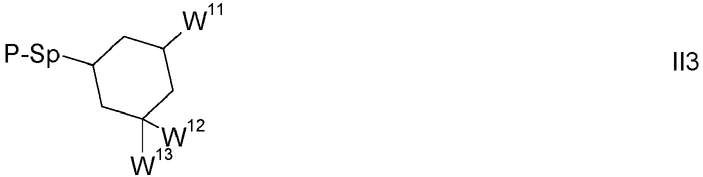 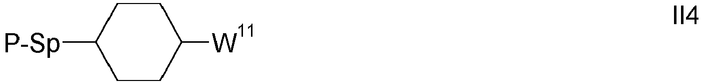 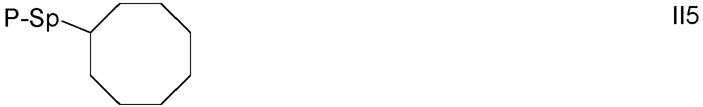 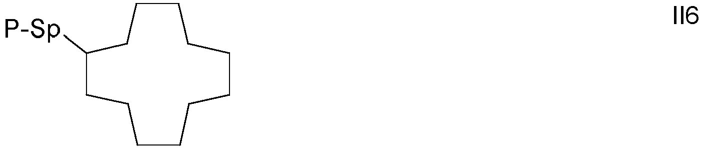 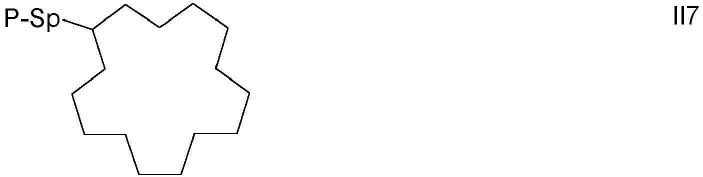 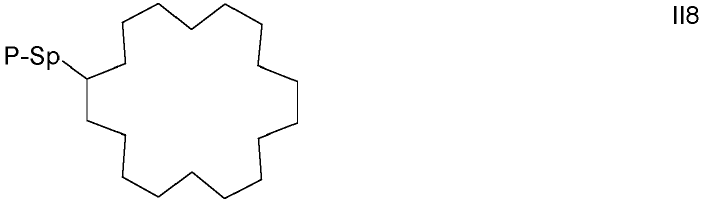 wherein the individual radicals, independently of each other and on each occurrence identically or differently, have the following meanings
- P, Sp: have the meanings given above or one of the preferred meanings given above and below,
- W¹¹, W¹²: are H, F or straight-chain or branched C₁-C₁₂-alkyl,
- W¹³: is H or F.

Very preferred compounds of formula 113 to 118 are selected from the following formulae 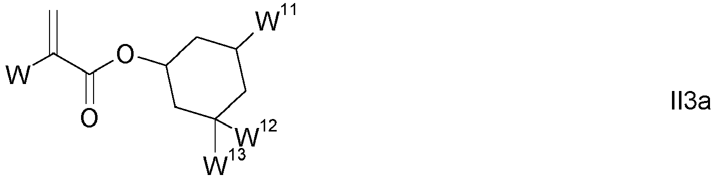 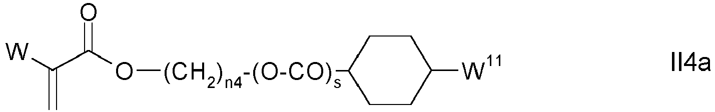 wherein W is H, CH₃ or C₂H₅, W¹¹, W¹², W¹³ are as defined in formula II3, n4 is 0 or an integer from 1 to 15, s is 0 or 1, and if s is 1 then n4 is not 0.

Further preferred compounds of formula II3 to II8 are selected from the following formulae

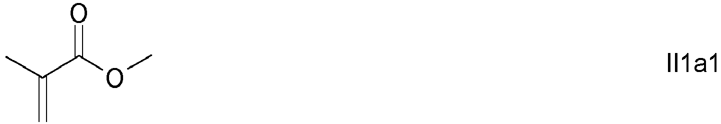

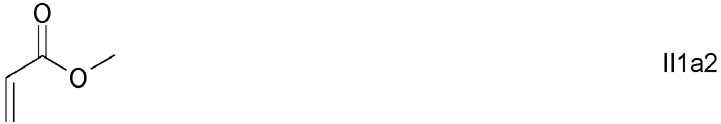

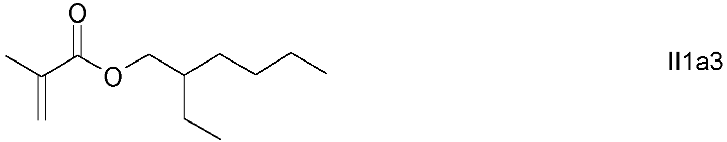

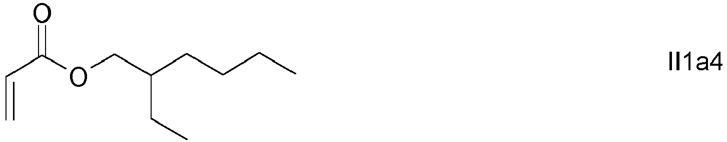

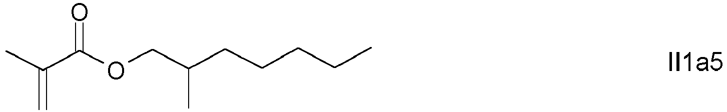

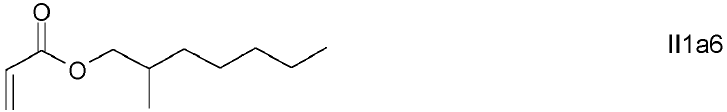

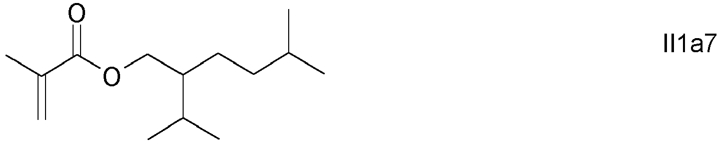

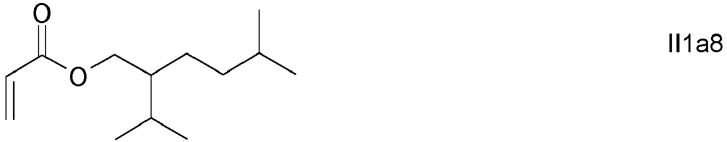

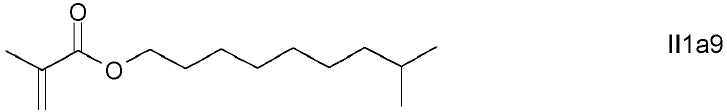

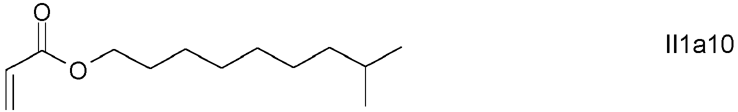

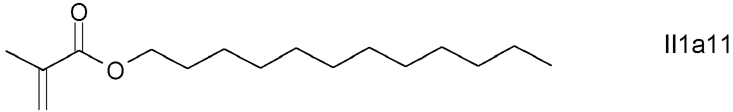

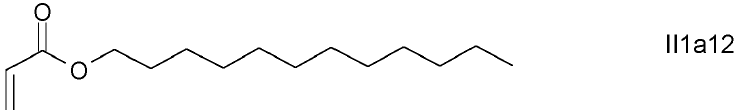

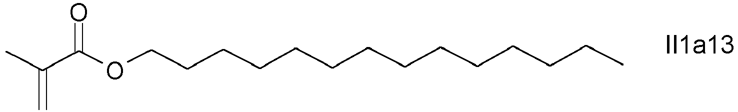

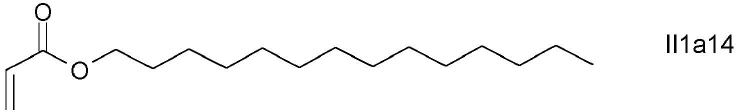

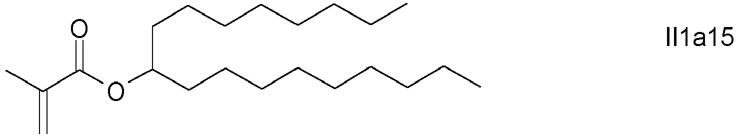

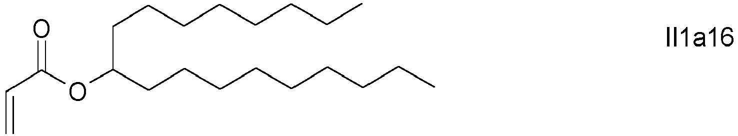

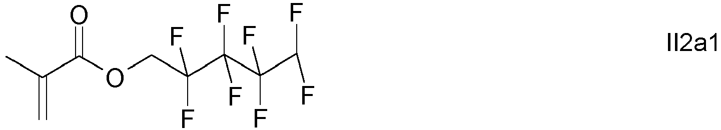

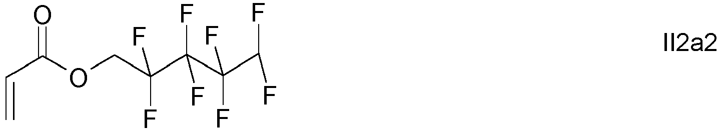

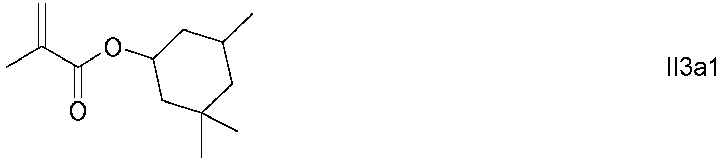

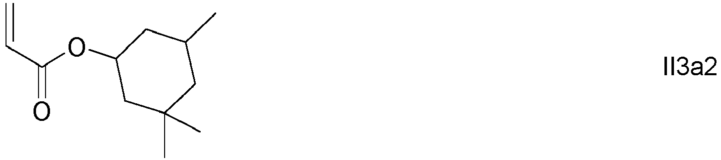

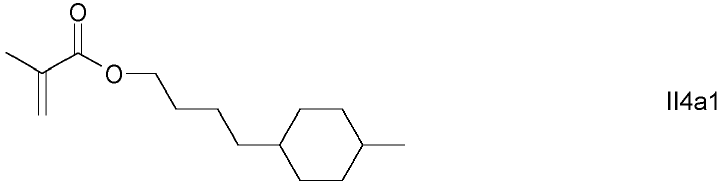

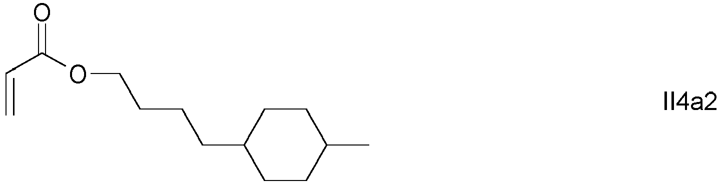

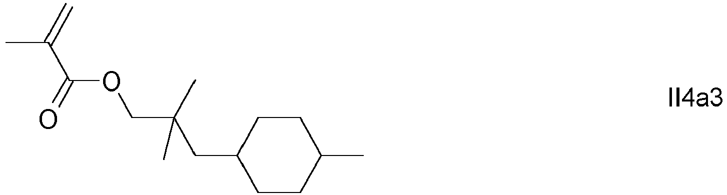

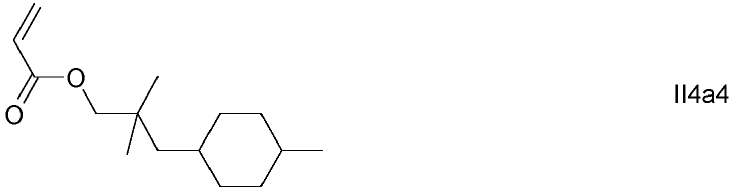

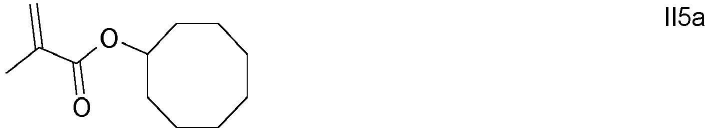

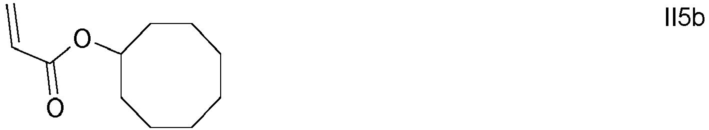

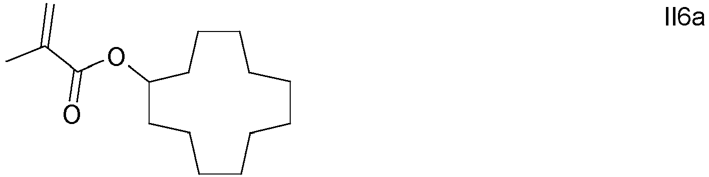

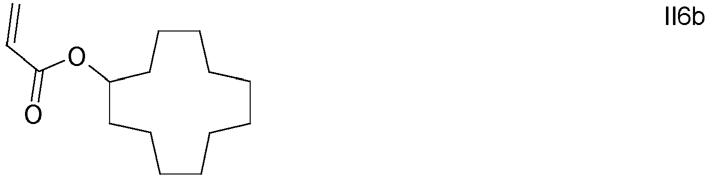

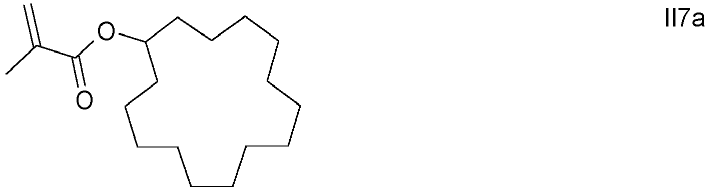

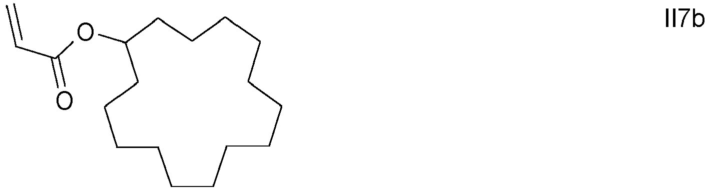

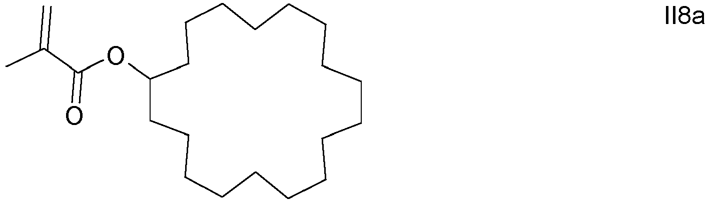

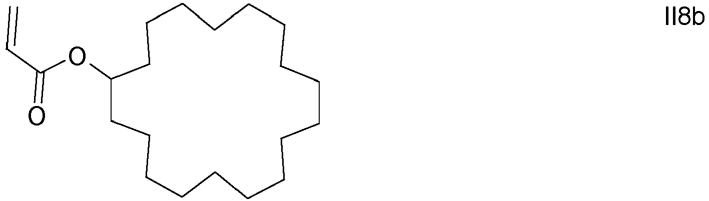

In another preferred embodiment of the present invention component A) of the LC medium comprises one or more second polymerisable compounds comprising a polymerisable group and a bi- or polycylic hydrocarbon group having from 4 to 30 ring atoms, preferably from 6 to 25 ring atoms, which is preferably a non-aromatic hydrocarbon group, which are selected from the following formulae 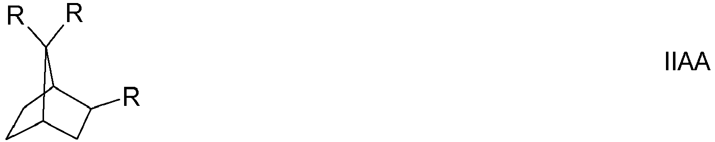 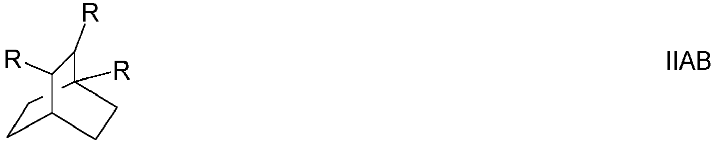 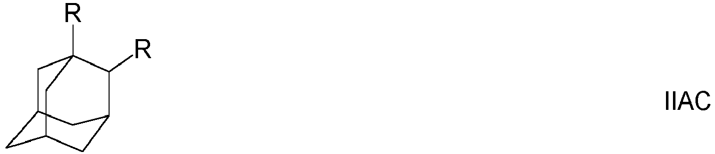 wherein R on each occurrence identically or differently denotes P-Sp- or has one of the meanings given for R^{x} above, and one of the groups R in each of formulae IIAA-IIAC denotes P-Sp-.

Further preferred compounds of formula IIAA to IIAC are selected from the following formulae 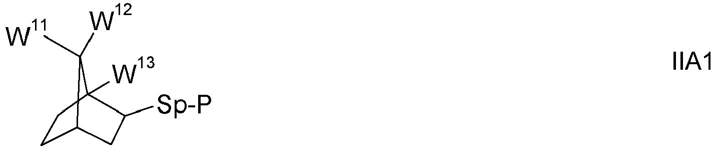 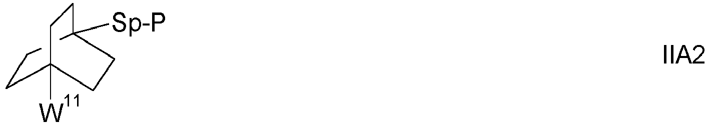 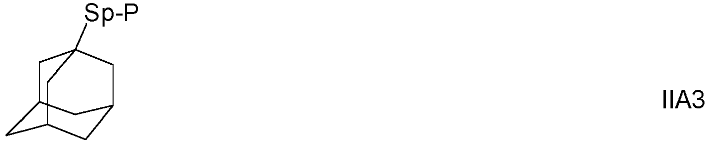 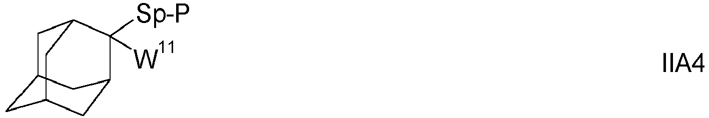 wherein P and Sp have the meanings given in formula 113 or one of the preferred meanings given above, W¹¹, W¹² and W¹³ are independently of each other H, F or C₁-C₁₂-alkyl, preferably methyl, and the cycloalkyl groups are optionally substituted with one or more groups L as defined above.

Very preferred compounds of formula IIAA to IIAC are selected from the following formulae 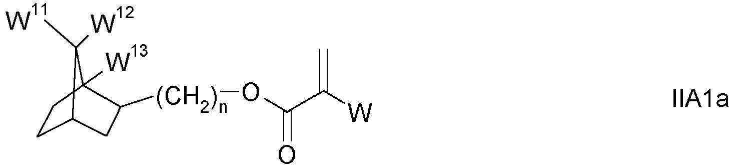 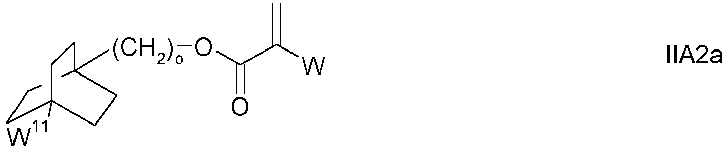 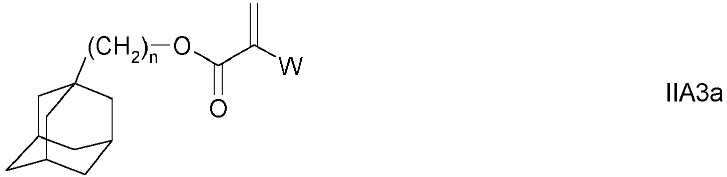 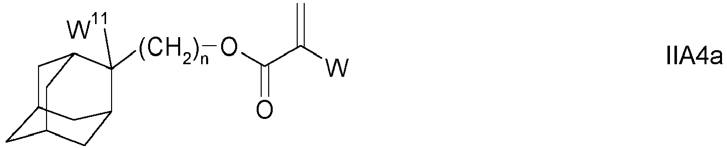 wherein n is 0 or an integer from 1 to 8, W is H, CH₃ or C₂H₅ and W¹¹, W¹² and W¹³ are H, F or C₁-C₁₂-alkyl, preferably methyl.

Further preferred compounds of formula IIAA to IIAC are selected from the following formulae

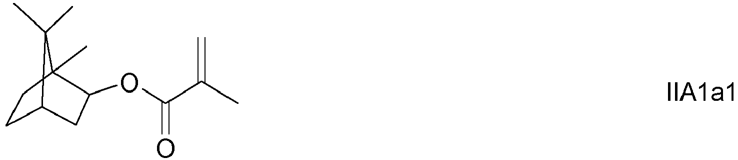

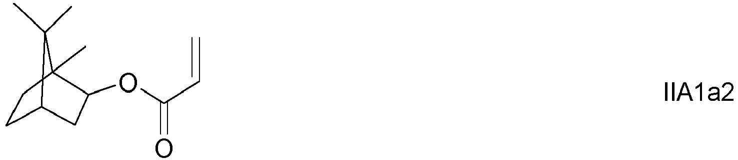

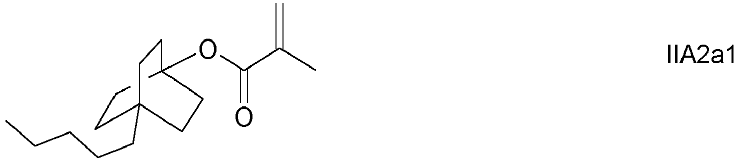

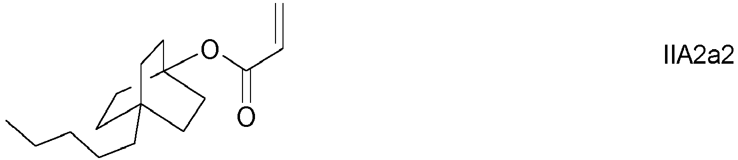

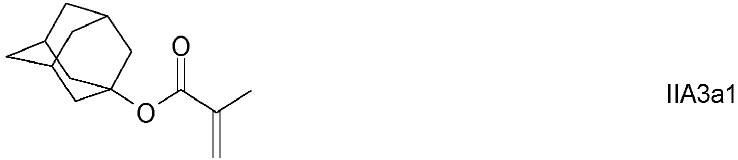

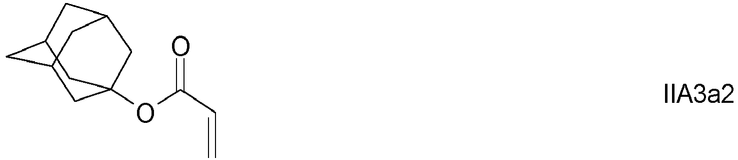

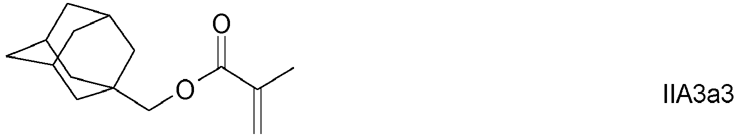

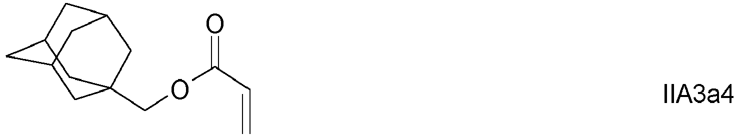

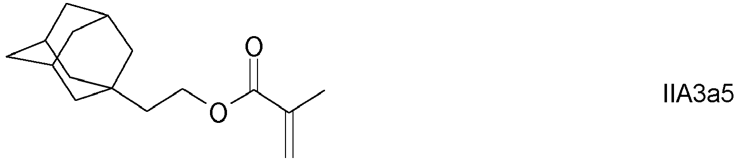

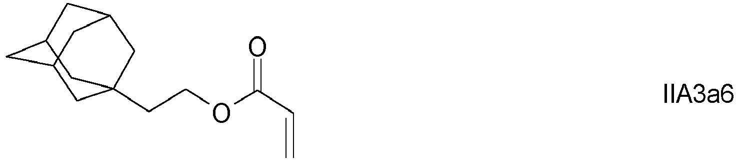

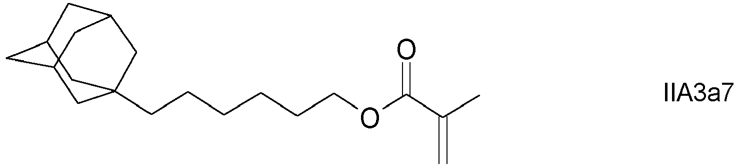

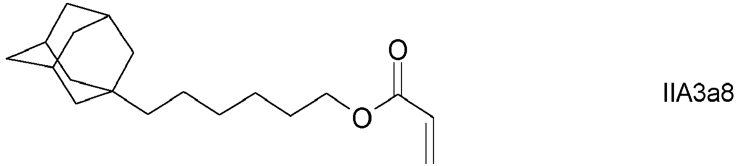

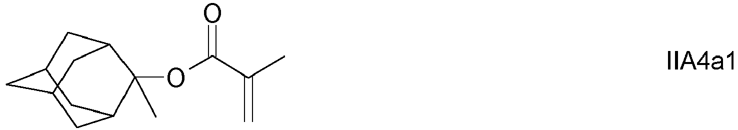

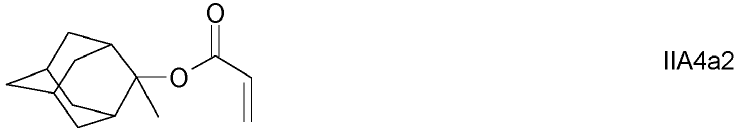

Preferably component A) of the LC medium comprises one or more third polymerisable compounds selected of formula III

P¹-Sp¹-G³-Sp²-P² III

wherein
- P¹ and P²: independently of each other independently of each other, and on each occurrence identically or differently, denote a polymerisable group,
- Sp¹, Sp²: denote independently of each other identical or different spacer groups or a single bond,
- G³: is a straight-chain, branched or cyclic alkyl group with 1 to 20 C atoms that is optionally mono-, poly- or perfluorinated and is optionally substituted by one or more groups P¹-Sp¹- as defined above or L as defined in formula I, and wherein one or more CH₂-groups are optionally replaced by -O-, -CO-, -O-CO- or -CO-O-such that O-atoms are not directly adjacent to one another.

P¹ and P² are preferably selected from acrylate, methacrylate, ethacrylate, and vinyloxy groups.

Sp¹ and Sp² in formula III preferably denote a single bond.

If the hydrocarbon group or group G³ in the third polymerisable compounds is a cyclic group, it is preferably a monocyclic cycloalkyl group, which preferably has from 5 to 7 ring atoms and is optionally substituted by one or more groups L as defined in formula I.

In another preferred embodiment of the present invention the hydrocarbon group or group G³ in the third polymerisable compounds is a bi-, tri- or tetracyclic group, and preferably has from 4 to 30 C atoms, which is optionally substituted by one or more groups L as defined above and below. Preferred bi-, tri- or tetracyclic groups or groups G³ in the third polymerisable compound are those having one of the meanings of group G^{2A} in formula IIA or its preferred meanings given above.

Preferred compounds of formula III are selected from the following formulae

P¹-Sp¹-(CHW¹¹)ₙ₂-(CH₂)ₙ₁-(CHW¹²)n3-Sp²-P² 1111

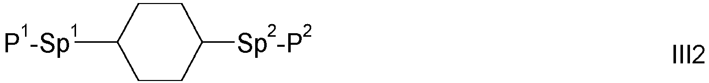

P¹-(CH₂)ₙ₂-(CF₂)ₙ₁-(CH2)ₙ₃-P² 1113

(P¹⁻Sp¹-(CH₂)ₙ₄)ₙ₅CH₄₋ₙ₅ 1114

wherein P¹, P², Sp¹, Sp² are as defined in formula III,
- W¹¹, W¹²: are, on each occurrence identically or differently, H, F or C₁-C₁₂-alkyl,
- n1: is an integer from 2 to 15,
- n2, n3: are independently of each other 0 or an integer from 1 to 3,
- n4: is 0 or an integer from 1 to 15,
- n5: is 3 or 4,

and the cyclohexylene ring in formula 1112 is optionally substituted by one or more identical or different groups W¹¹.

In a preferred embodiment of the present invention the component A) of the LC medium comprises one or more third polymerisable compounds wherein the two polymerisable groups are different from each other. Preferably in this preferred embodiment the component A) of the LC medium comprises one or more compounds of formula III or its subformulae wherein P¹ and P² are different from each other. Preferably in these compounds of formula III one of P¹ and P² is vinyloxy and the other is acrylate, methacrylate or ethacrylate, most preferably methacrylate.

In another preferred embodiment of the present invention the component A) of the LC medium comprises one or more compounds of formula III or its subformulae wherein P¹ and P² are identical groups.

In the third polymerisable compounds, the polymerisable groups are preferably selected from acrylate, methacrylate, ethacrylate and vinyloxy groups. Very preferably one of the polymerisable groups is vinyloxy and the other is acrylate or methacrylate, most preferably methacrylate.

Very preferred compounds of formula III are selected from the following formulae

CH₂=CW-CO-O-(CHW¹¹)ₙ₄-(CH₂)ₙ₋₁-O-CH=CH₂ III1a

CH₂=CH-O-(CHW¹)ₙ₄-(CH₂)ₙ₁-O-CO-CH=CH₂ III1b

CH₂=CW-CO-O-(CHW¹¹)ₙ₂-(CH₂)ₙ₁-(CHW¹² )ₙ₃-O-CO-CW=CH₂ III1c

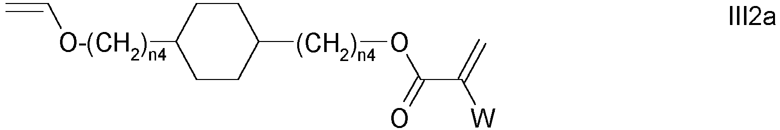

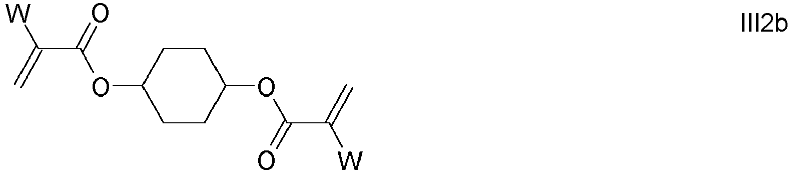

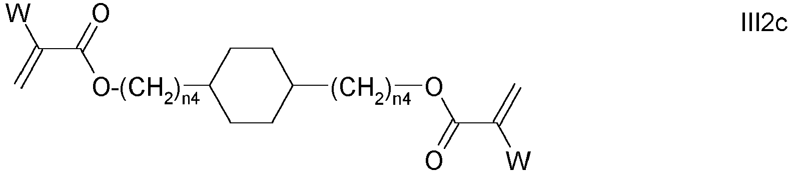

CH₂=CW-CO-O-(CH₂)ₙ₂-(CF₂)ₙ₁-(CH₂)ₙ₃-O-CH=CH₂ III3a

CH₂=CW-CO-O-(CH₂)ₙ₂-(CF₂)ₙ₁-(CH₂)ₙ₃-O-CO-CW=CH₂ III3b

(CH₂=CW-CO-O-(CH₂)ₙ₂)₃CH III4a

(CH₂=CW-CO-O-(CH₂)ₙ₂)₄C III4b

wherein W is H, CH₃ or C₂H₅ and W¹¹, W¹², n1, n2 and n4 are as defined in formula III-III4, and the cyclohexylene ring in formula III2a-c is optionally substituted by one or more identical or different groups W¹¹.

Further preferred compounds of formula III are selected from the following formulae

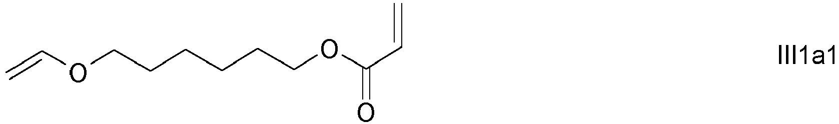

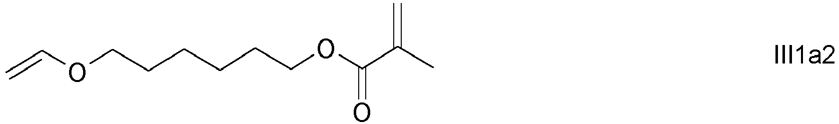

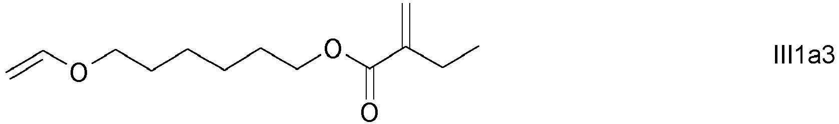

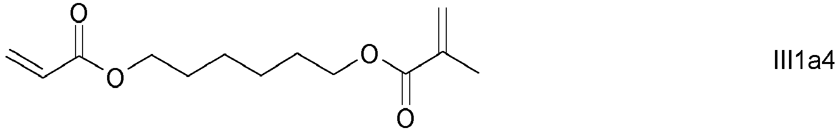

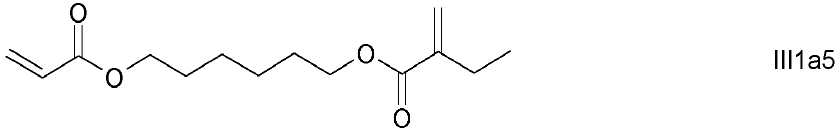

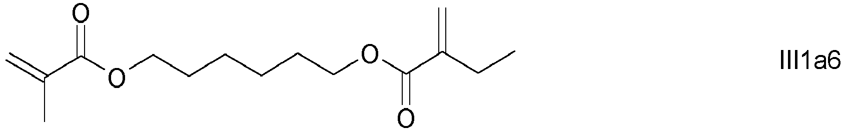

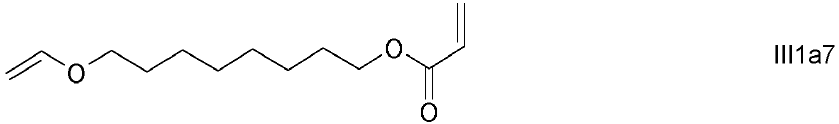

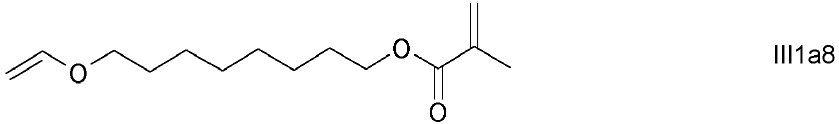

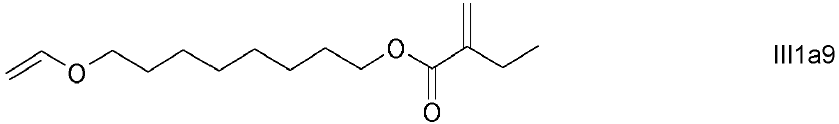

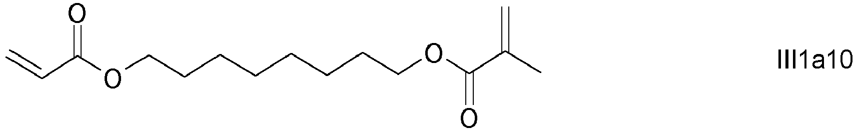

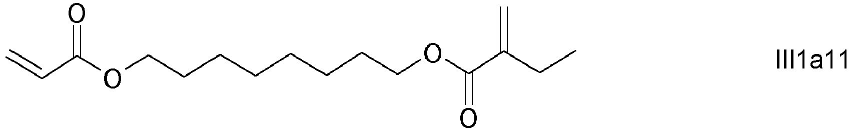

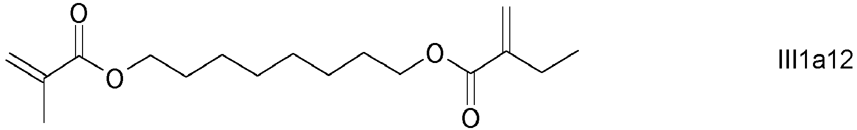

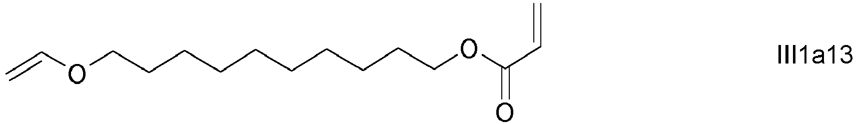

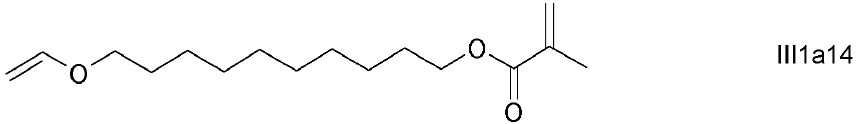

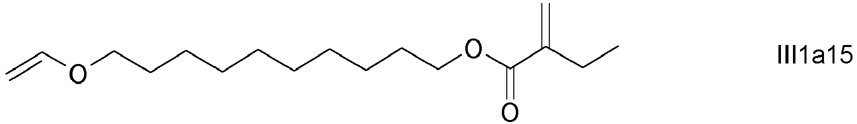

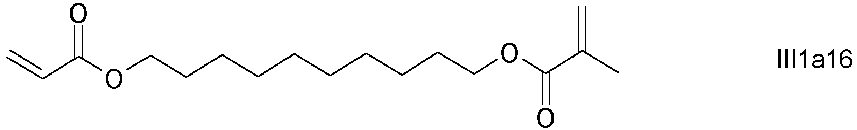

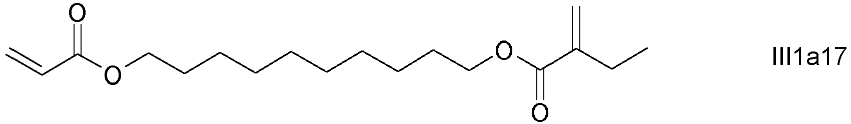

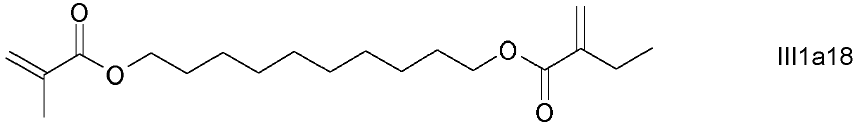

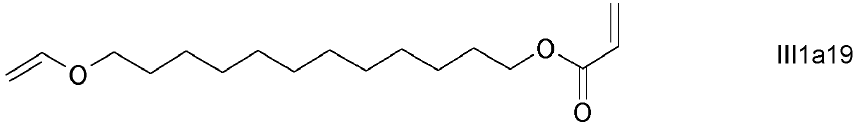

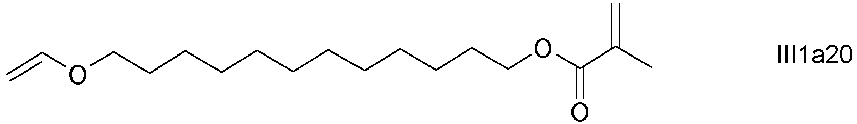

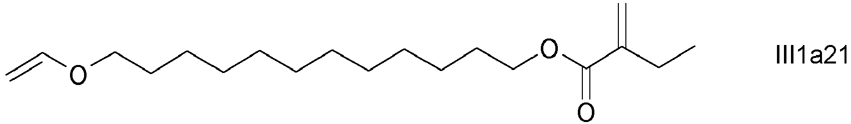

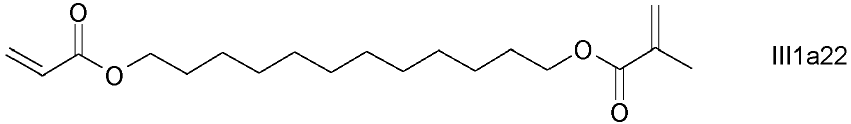

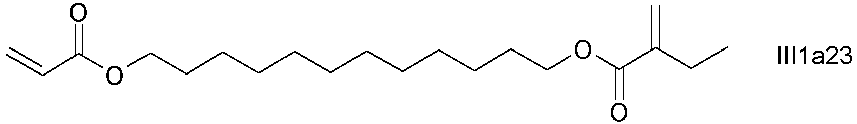

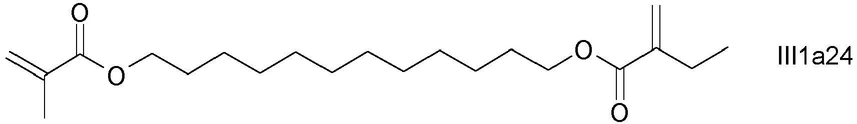

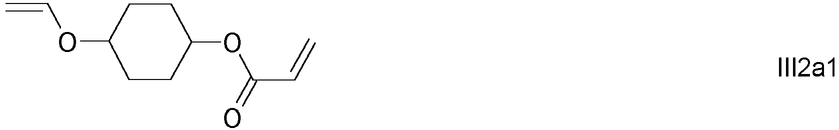

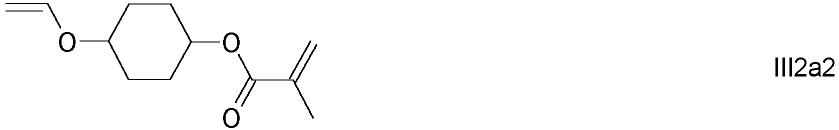

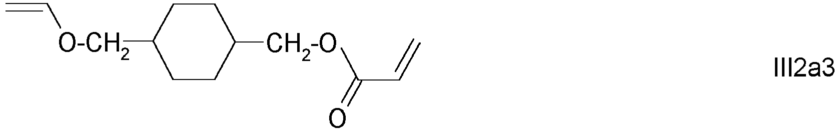

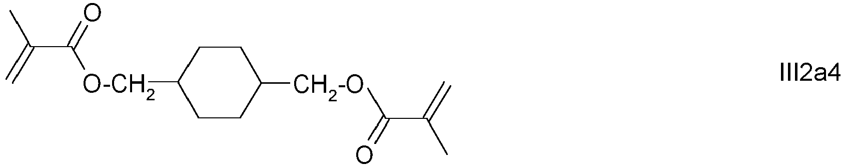

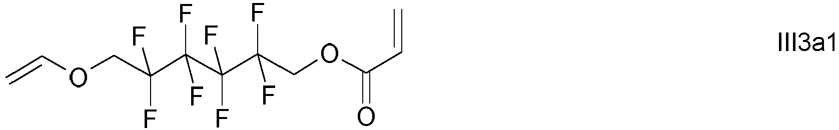

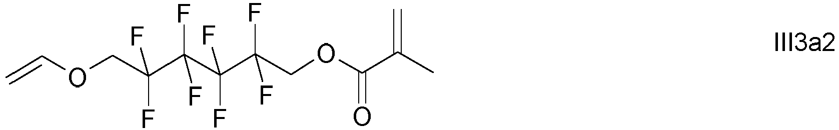

Further preferred compounds of formula III are selected from the following formulae

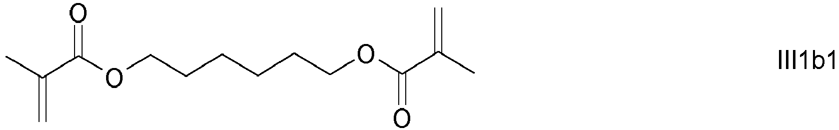

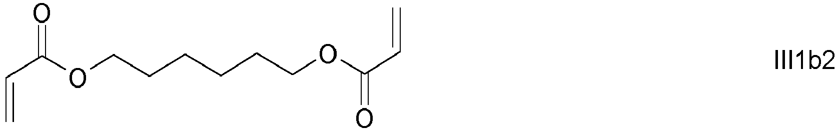

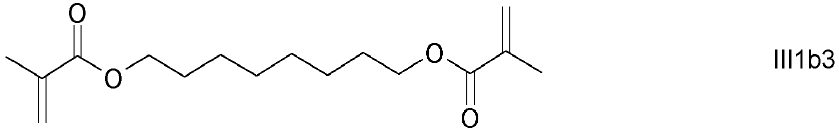

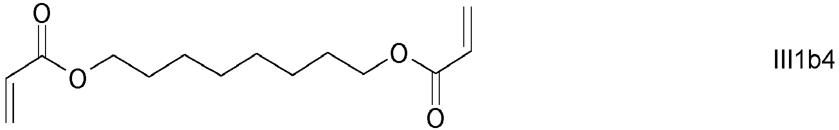

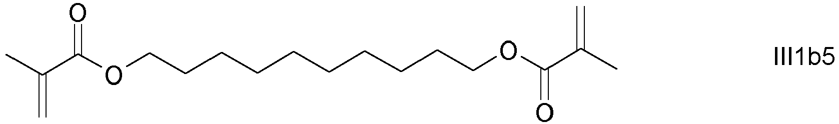

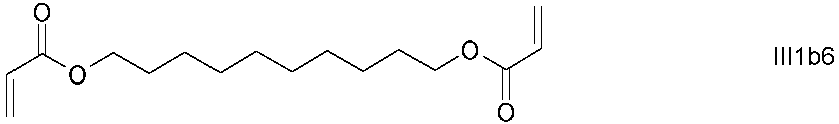

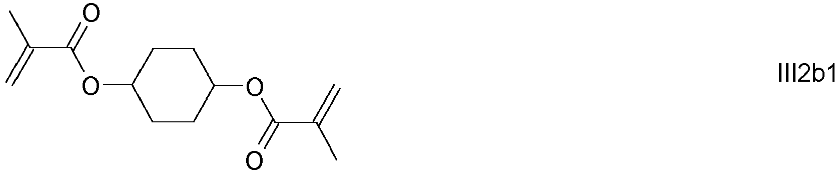

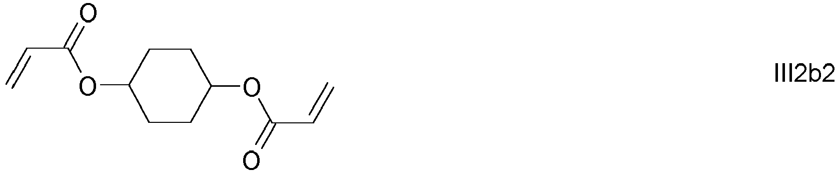

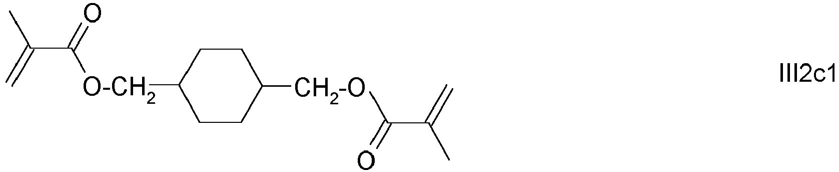

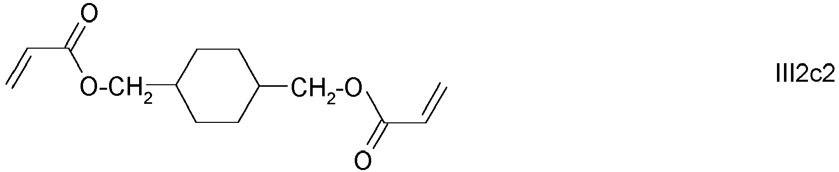

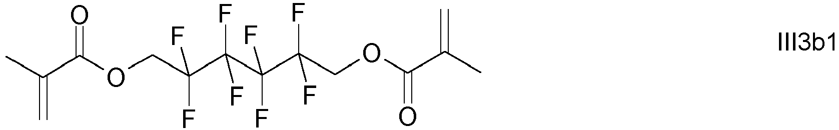

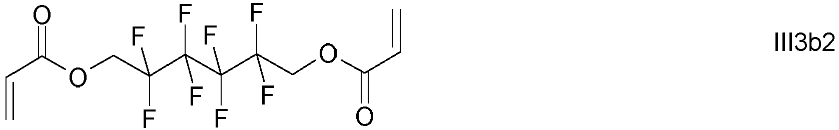

Further preferred compounds of formula III are selected from the following formulae

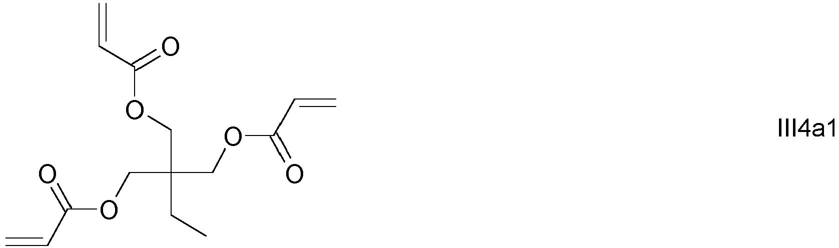

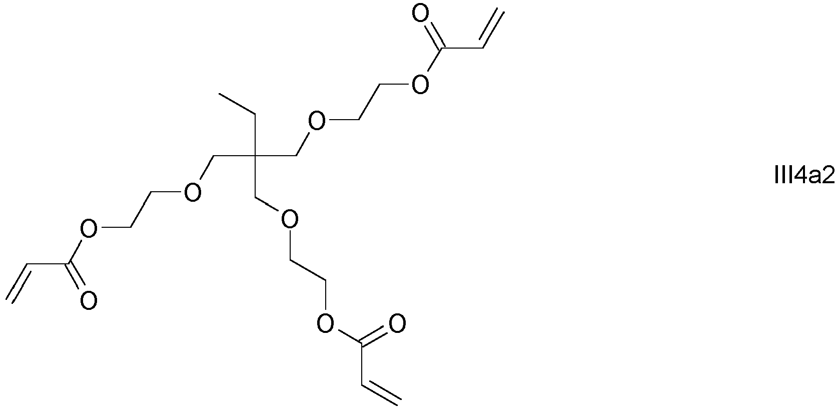

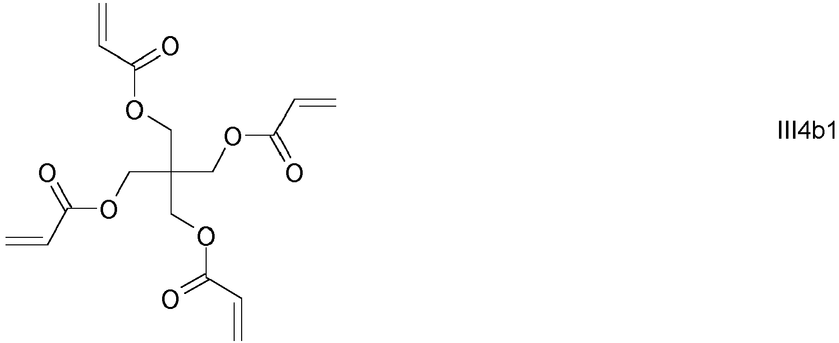

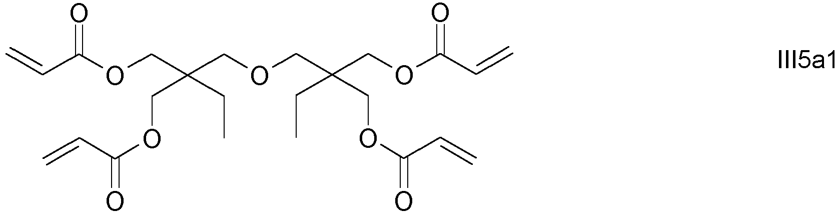

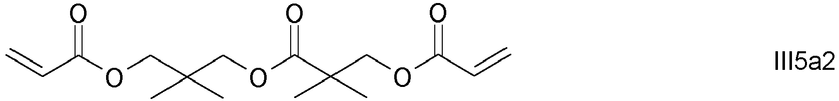

In another preferred embodiment of the present invention component A) of the LC medium additionally comprises, in addition or alternatively to the third polymerisable compounds, one or more fourth polymerisable compounds comprising a ring system containing one or more aromatic or heteroaromatic rings or condensed aromatic or heteroaromatic rings, and attached thereto two polymerisable groups.

These compounds are preferably selected from formula IV

P¹-Sp¹-B¹-(Z^{b}-B²)m-Sp²-P² IV

in which P¹, P², Sp¹, Sp² are as defined in formula III,
- B¹ and B²: are independently of each other, and on each occurrence identically or differently, an aromatic, heteroaromatic, alicyclic or heterocyclic group, preferably having 4 to 25 ring atoms, which may also contain fused rings, and which is unsubstituted, or mono- or polysubstituted by L as defined in formula I, wherein at least one of B¹ and B² denotes an aromatic or heteroaromatic group,
- Z^{b}: is, on each occurrence identically or differently, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁₁-, -CF₂CH₂-, -CH₂CF₂-, -(CF₂)ₙ₁-, -CH=CH-, -CF=CF-, -C≡C-, -CH=CH-COO-, -OCO-CH=CH-, CR⁰R⁰⁰ or a single bond,
- R⁰ and R⁰⁰: each, independently of one another, denote H or alkyl having 1 to 20 C atoms,
- m: denotes 0, 1, 2, 3 or 4,
- n11: denotes 1, 2, 3 or 4,

Particularly preferred compounds of formula IV are those in which B¹ and B² each, independently of one another, denote 1,4-phenylene, 1,3-phenylene, naphthalene-1,4-diyl, naphthalene-2,6-diyl, phenanthrene-2,7-diyl, 9,10-dihydro-phenanthrene-2,7-diyl, anthracene-2,7-diyl, fluorene-2,7-diyl, coumarine, flavone, where, in addition, one or more CH groups in these groups may be replaced by N, cyclohexane-1,4-diyl, in which, in addition, one or more non-adjacent CH₂ groups may be replaced by O and/or S, 1,4-cyclohexenylene, bicyclo[1.1.1 ]pentane-1,3-diyl, bicyclo[2.2.2]octane-1,4-diyl, spiro[3.3]heptane-2,6-diyl, piperidine-1,4-diyl, decahydronaphthalene-2,6-diyl, 1,2,3,4-tetrahydronaphthalene-2,6-diyl, indane-2,5-diyl or octahydro-4,7-methanoindane-2,5-diyl, where all these groups may be unsubstituted or mono- or polysubstituted by L as defined above.

Very particularly preferred compounds of formula IV are those in which B¹ and B² each, independently of one another, denote 1,4-phenylene, 1,3-phenylene, naphthalene-1,4-diyl or naphthalene-2,6-diyl, which are unsubstituted or mono- or polysubstituted by L as defined above.

Further preferred compounds of formula IV are selected from the group consisting of the following formulae: 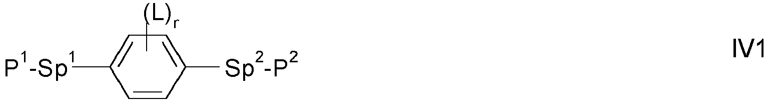 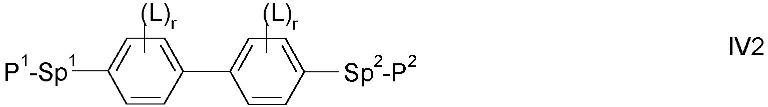 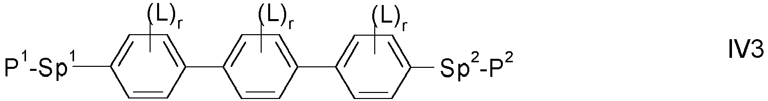 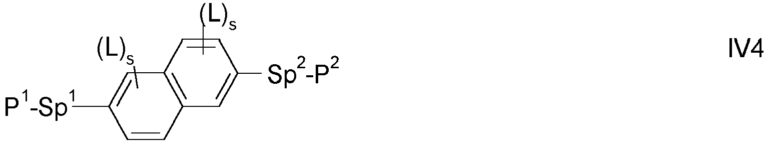 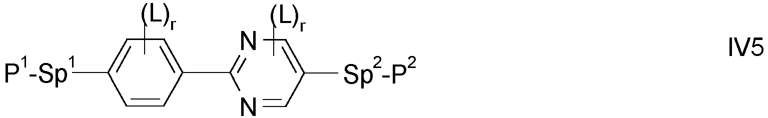 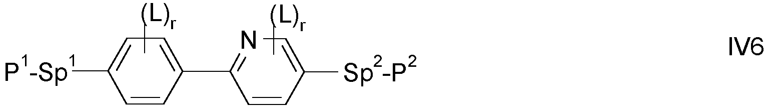 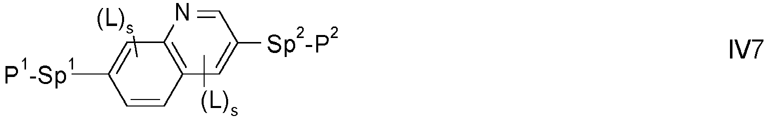 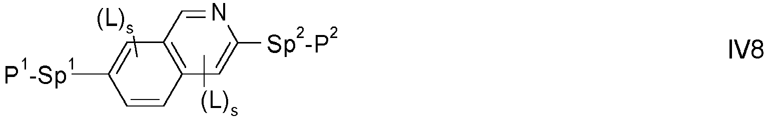 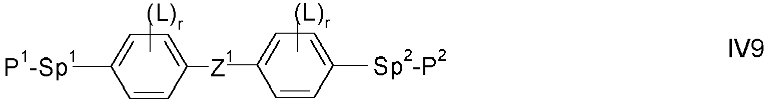 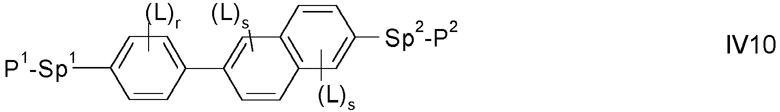 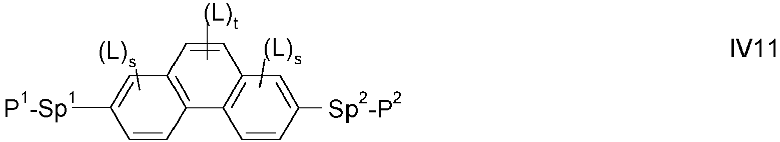 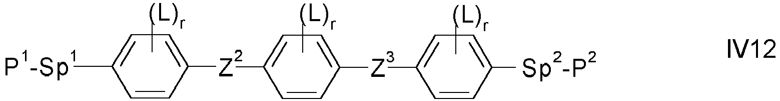 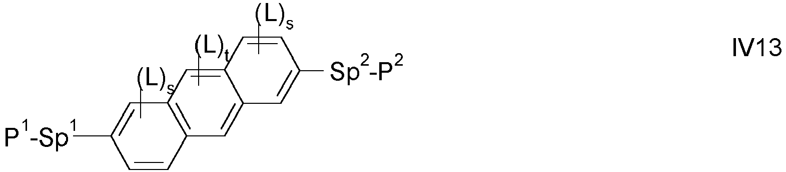 in which P¹, P², Sp¹, Sp² and L are as defined in formula IV,
- Z¹: is -O-, -CO-, -C(R^{y}R^{z})- or -CF₂CF₂-,
- R^{y}, R^{z}: independently of one another, denote H, F, CH₃ or CF₃,
- Z², Z³: are independently of each other -CO-O-, -O-CO-, -CH₂O-,-OCH₂-, -CF₂O-, -OCF₂- or -(CH₂)ₙ₁₁-, where n11 is 2, 3 or 4,
- r: is 0, 1, 2, 3 or 4,
- s: is 0, 1, 2 or 3,
- t: is 0, 1 or 2.

Especially preferred are direactive compounds of formula IV2 and IV3.

In the compounds of formulae IV1 to IV13 the group 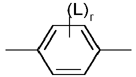 is preferably 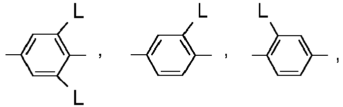 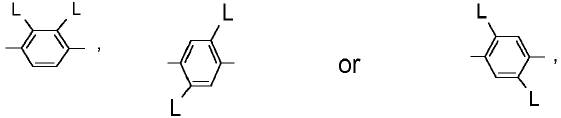 wherein L on each occurrence, identically or differently, has one of the meanings given above or below, and is preferably F, Cl, CN, NO₂, CH₃, C₂H₅, C(CH₃)₃, CH(CH₃)₂, CH₂CH(CH₃)C₂H₅, OCH₃, OC₂H₅, COCH₃, COC₂H₅, COOCH₃, COOC₂H₅, CF₃, OCF₃, OCHF₂, OC₂F₅ or P-Sp-, very preferably F, Cl, CN, CH₃, C₂H₅, OCH₃, COCH₃, OCF₃, more preferably F, Cl, CH₃, OCH₃, COCH₃, CF₃ oder OCF₃, especially F or CH₃.

In a preferred embodiment of the present invention the component A) of the LC medium comprises one or more fourth polymerisable compounds wherein the two polymerisable groups are different from each other. Preferably in this preferred embodiment the component A) of the LC medium comprises one or more compounds of formula IV or its subformulae IV1 to IV13 wherein P¹ and P² are different from each other. Preferably in these compounds of formula IV and IV1 to IV13 one of P¹ and P² is vinyloxy and the other is acrylate, methacrylate or ethacrylate, most preferably methacrylate.

Further preferred compounds of formulae IV1 to IV13 are those wherein Sp¹ and Sp² are a single bond.

Further preferred compounds of formulae IV1 to IV13 are those wherein one of Sp¹ and Sp² is a single bond and the other is different from a single bond.

Further preferred compounds of formulae IV1 to IV13 are those wherein the group Sp¹ and Sp³ that is different from a single bond is -(CH₂)ₛ₁-X"-, wherein s1 is an integer from 1 to 6, preferably 2, 3, 4 or 5, and X" is X" is the linkage to the benzene ring and is -O-, -O-CO-, -CO-O, -O-CO-O- or a single bond.

Very preferred compounds of formula IV are selected from the group consisting of the following formulae:

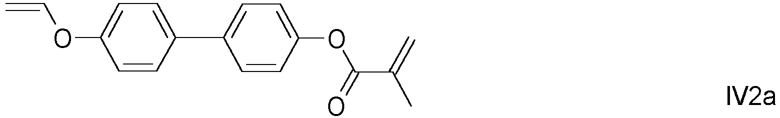

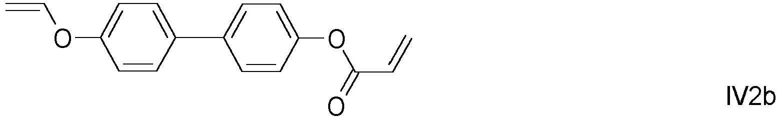

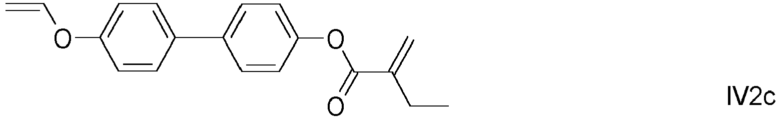

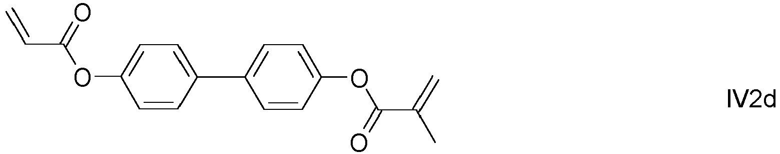

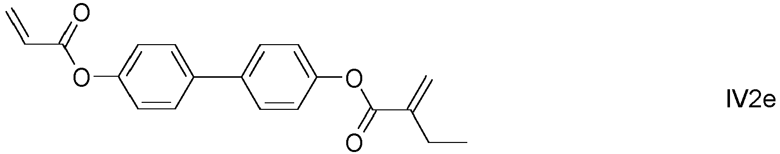

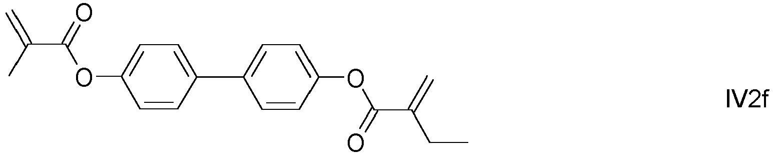

The concentration of the first polymerisable compounds, especially those of formula I, in the LC medium is preferably from 1 to 30%, very preferably from 1 to 25%, most preferably from 5 to 25%.

The concentration of the second polymerisable compounds, especially those of formula II or IIA, in the LC medium is preferably from 0.5 to 30%, very preferably from 1 to 20%, most preferably from 2 to 15%.

The concentration of the third polymerisable compounds, especially those of formula III, in the LC medium is preferably from 0.1 to 20%, very preferably from 0.2 to 10%, most preferably from 0.2 to 5%.

The concentration of the fourth polymerisable compounds, especially those of formula IV, in the LC medium is preferably from 0.05 to 5%, very preferably from 0.1 to 3%, most preferably from 0.2 to 2%.

The total concentration of the first, second, third and fourth polymerisable compounds, especially those of formula I, II, IIA, III and IV, in the LC medium is preferably from 1 to 40% by weight, very preferably from 5 to 30% by weight.

In a first preferred embodiment of the present invention, the total concentrat-ion of the first, second, third and fourth polymerisable compounds, especially those of formula I, II, IIA, III and IV, in the LC medium is from 10 to 40% by weight.

In a second preferred embodiment of the present invention, the total concentration of the first, second, third and fourth polymerisable compounds, especially those of formula I, II, IIA, III and IV, in the LC medium is from 5 to 10% by weight.

In a third preferred embodiment of the present invention, the total concentration of the first, second, third and fourth polymerisable compounds, especially those of formula I, II, IIA, III and IV, in the LC medium is from 1 to 5% by weight.

The ratio of the amount of the first polymerisable compound, or compound of formula I, relative to the combined amount of the second, third and fourth polymerisable compounds, or compounds of formula II, III and IV in the LC medium is preferably from 10:1 to 1:10, very preferably from 5:1 to 1:5, most preferably from 2:1 to 1:2.

The total concentration of first and second polymerisable compounds, or compounds of formula I, II and IIA, with (exactly) one polymerisable group in the LC medium is preferably from 5 to 30% by weight.

The total concentration of first, third and fourth polymerisable compounds, or compounds of formula I, III and IV, with (exactly) two polymerisable groups in the LC medium is preferably from 0.1 to 10%, very preferably from 0.1 to 5%, most preferably from 0.1 to 2% by weight.

Particular preference is given to LC media wherein the polymerisable component A) comprises one, two or three first polymerisable compounds, preferably of formula I, one, two or three second polymerisable compounds, preferably of formula II or IIA, one, two or three third polymerisable compounds, preferably of formula III, and optionally one, two or three fourth polymerisable compounds, preferably of formula IV.

Preferably the polymerisable component A) contains one or more polymerisation initiators. Suitable types and amounts of initiators are known to the person skilled in the art and are described in the literature. Preferably the initiator is a photoinitiator. Suitable initiators for free-radical polymerisation are, for example, the commercially available photoinitiators

Irgacure651®, Irgacure1840, Irgacure907®, Irgacure369® or Darocure11730 (Ciba AG).

Preferably the concentration of the polymerisation initiator in the LC medium is from 0.001 to 10% by weight, very preferably 0.001 to 5% by weight, most preferably 0.001 to 2% by weight.

Further preferably the polymerisable component A) contains one or more photosensitizers. Example of suitable and preferred photosensitizers include isopropylthioxanthone (ITX) and thioxanthone.

Preferably the concentration of the photosensitizer in the LC medium is from 0.001 to 10% by weight, very preferably 0.001 to 5% by weight, most preferably 0.001 to 2% by weight.

Besides the polymerisable component A) as described above, the LC medium according to the present invention comprises an LC component B), or LC host mixture, comprising one or more, preferably two or more LC compounds which are selected from low-molecular-weight compounds that are unpolymerisable. These LC compounds are selected such that they stable and/or unreactive to a polymerisation reaction under the conditions applied to the polymerisation of the polymerisable compounds.

Preference is given to LC media in which the LC component B), or the LC host mixture, has a nematic LC phase, and preferably has no chiral liquid crystal phase. The LC component B), or LC host mixture, is preferably a nematic LC mixture.

Preference is furthermore given to achiral polymerisable compounds, and to LC media in which the compounds of component A) and/or B) are selected exclusively from the group consisting of achiral compounds.

Preferably the proportion of the LC component B) in the LC medium is from 70 to 95% by weight.

The LC media and LC host mixtures of the present invention preferably have a nematic phase range ≥ 80 K, very preferably ≥ 100 K, and preferably a rotational viscosity ≤ 250 mPa·s, very preferably ≤ 200 mPa·s, at 20°C.

The birefringence Δn of LC media and LC host mixtures according to the invention is preferably preferably from 0.07 to 0.15, particularly preferably from 0.08 to 0.15.

In a first preferred embodiment of the present invention, the LC medium contains an component B) or LC host mixture having a positive dielectric anisotropy Δε.

Such LC media are especially suitable for use in TN, OCB-, Posi-VA-, IPS- or FFS-displays or related modes using LC-materials with Δε>0.

The LC media and LC host mixtures according to this first preferred embodiment preferably have a positive dielectric anisotropy Δε from +2 to +30, particularly preferably from +3 to +20, at 20°C and 1 kHz.

Particularly preferred is an LC medium of this first preferred embodiment, wherein the liquid-crystalline component B) or LC host mixture comprises one or more compounds selected from formula A and B 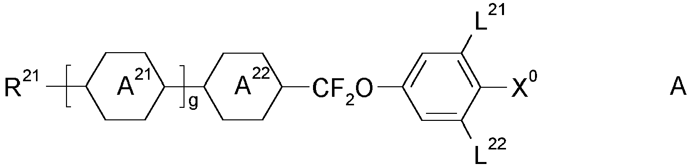 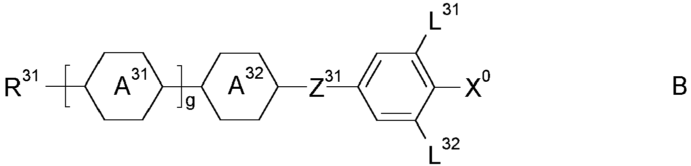 in which the individual radicals have, independently of each other and on each occurrence identically or differently, the following meanings: 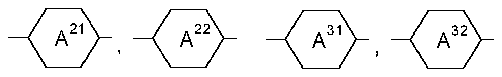 each, independently of one another, and on each occurrence, identically or differently 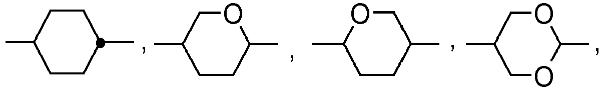 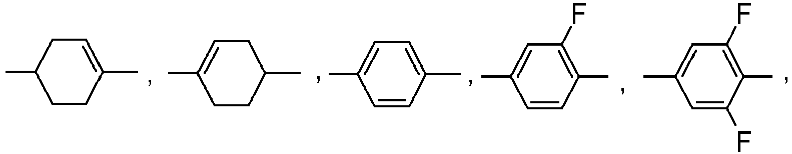
- R²¹, R³¹: each, independently of one another, alkyl, alkoxy, oxaalkyl or alkoxyalkyl having 1 to 9 C atoms or alkenyl or alkenyloxy having 2 to 9 C atoms, all of which are optionally fluorinated,
- X⁰: F, Cl, halogenated alkyl or alkoxy having 1 to 6 C atoms or halogenated alkenyl or alkenyloxy having 2 to 6 C atoms,
- Z³¹: -CH₂CH₂-, -CF₂CF₂-, -COO-, *trans*-CH=CH-, *trans-*CF=CF-, -CH₂O- or a single bond, preferably -CH₂CH₂-,-COO-, *trans*-CH=CH- or a single bond, particularly preferably -COO-, *trans*-CH=CH- or a single bond,
- L²¹, L²², L³¹, L³²: each, independently of one another, H or F,
- g: 0, 1, 2 or 3.

In the compounds of formula A and B, X⁰ is preferably F, Cl, CF₃, CHF₂, OCF₃, OCHF₂, OCFHCF₃, OCFHCHF₂, OCFHCHF₂, OCF₂CH₃, OCF₂CHF₂, OCF₂CHF₂, OCF₂CF₂CHF₂, OCF₂CF₂CHF₂, OCFHCF₂CF₃, OCFHCF₂CHF₂, OCF₂CF₂CF₃, OCF₂CF₂CClF₂, OCClFCF₂CF₃ or CH=CF₂, very preferably F or OCF₃, most preferably F.

In the compounds of formula A and B, R²¹ and R³¹ are preferably selected from straight-chain alkyl or alkoxy with 1, 2, 3, 4, 5 or 6 C atoms, and straight-chain alkenyl with 2, 3, 4, 5, 6 or 7 C atoms.

In the compounds of formula A and B, g is preferably 1 or 2.

In the compounds of formula B, Z³¹ is preferably COO, trans-CH=CH or a single bond, very preferably COO or a single bond.

Preferably component B) of the LC medium comprises one or more compounds of formula A selected from the group consisting of the following formulae: 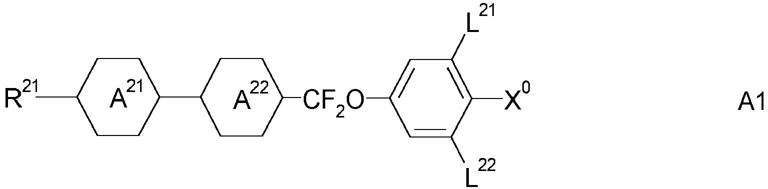 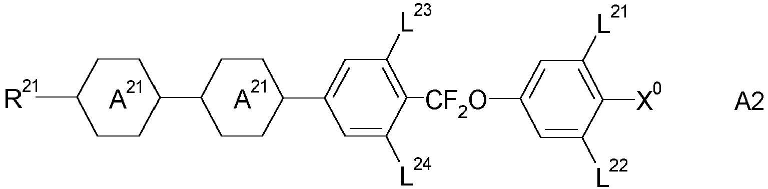 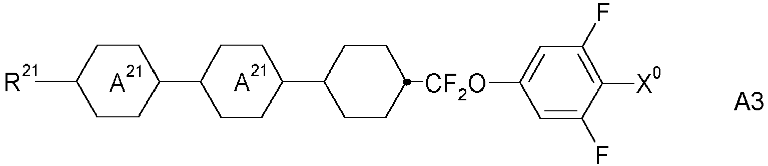 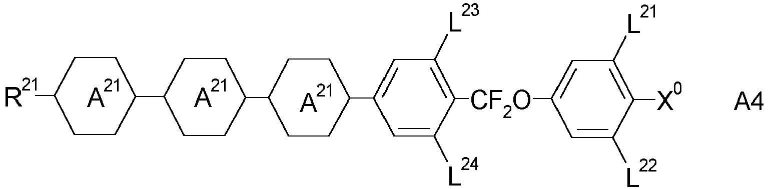 in which A²¹, R²¹, X⁰, L²¹ and L²² have the meanings given in formula A, L²³ and L²⁴ each, independently of one another, are H or F, and X⁰ is preferably F. Particularly preferred are compounds of formulae A1 and A2.

Particularly preferred compounds of formula A1 are selected from the group consisting of the following subformulae: 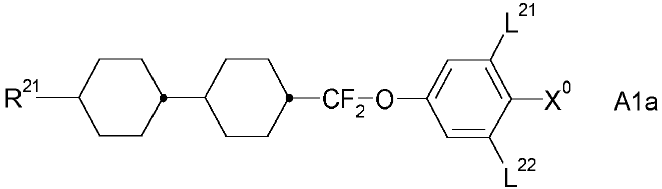 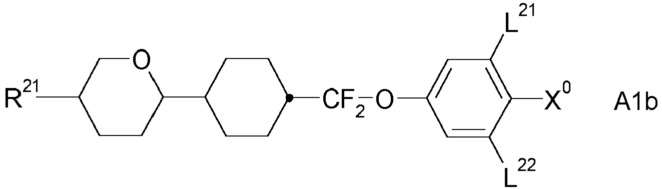 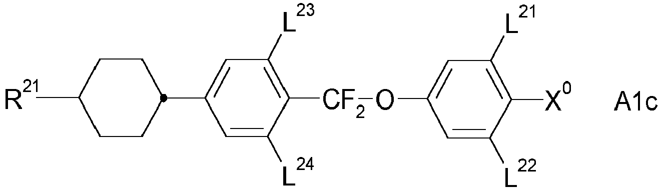 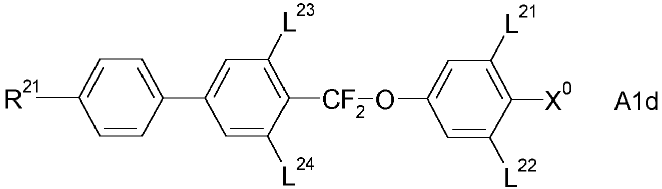 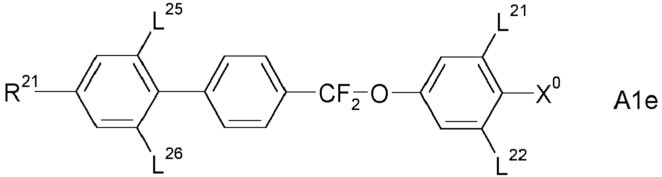 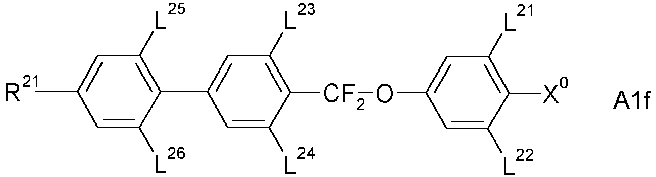 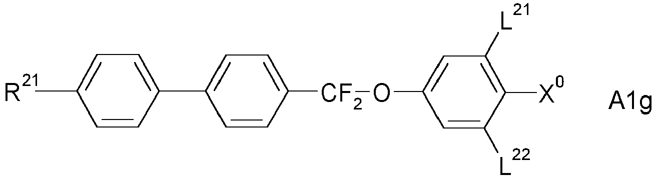 in which R²¹, X⁰, L²¹ and L²² have the meaning given in formula A1, L²³, L²⁴, L²⁵ and L²⁶ are each, independently of one another, H or F, and X⁰ is preferably F.

Very particularly preferred compounds of formula A1 are selected from the group consisting of the following subformulae: 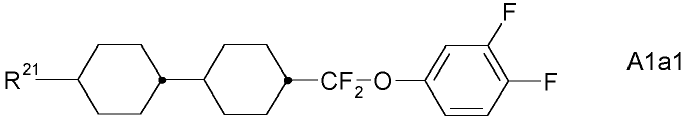 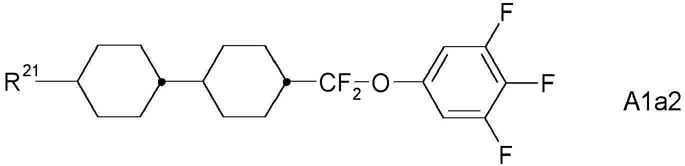 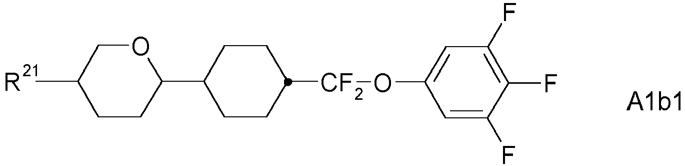 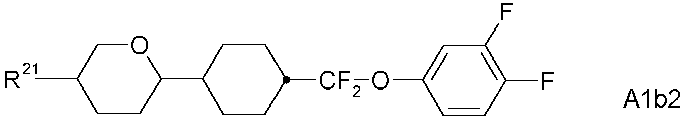 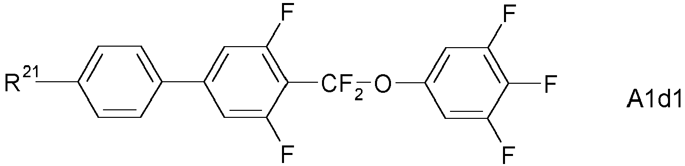 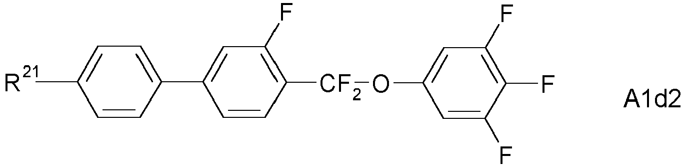 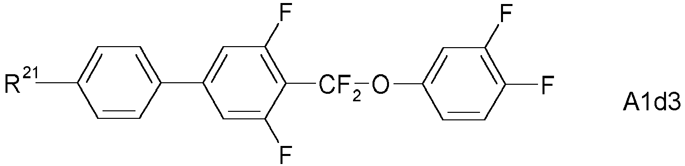 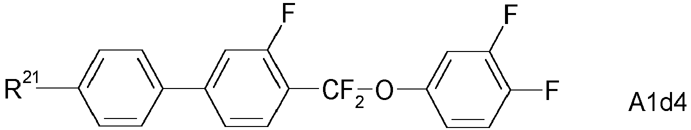 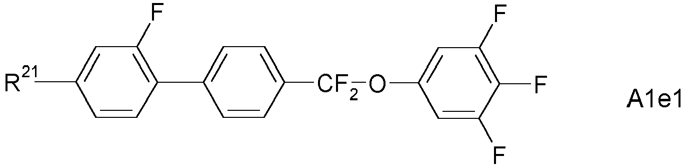 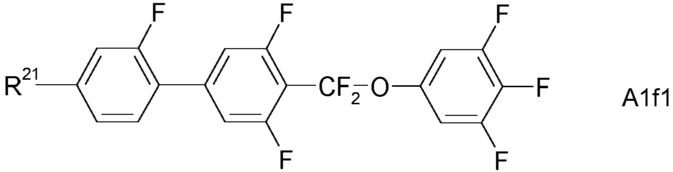 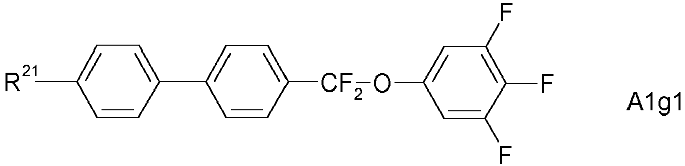 in which R²¹ is as defined in formula A1.

Particularly preferred compounds of formula A2 are selected from the group consisting of the following subformulae: 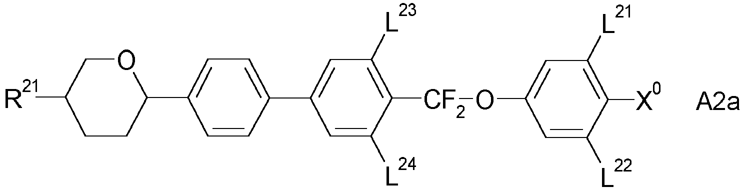 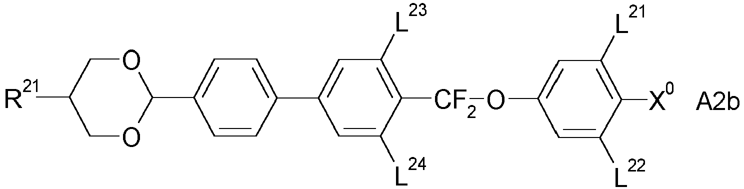 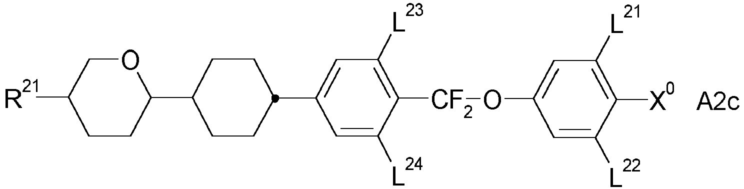 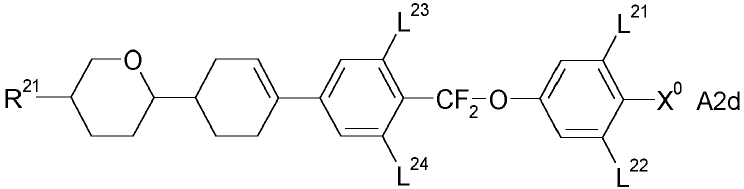 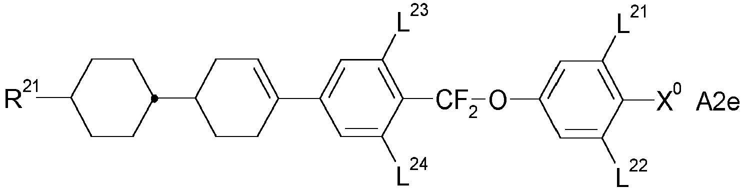 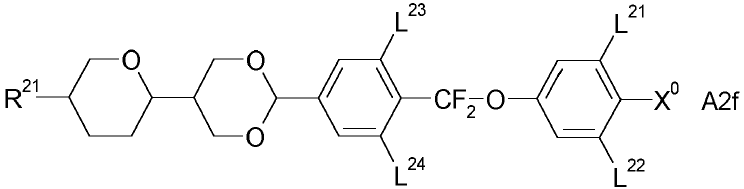 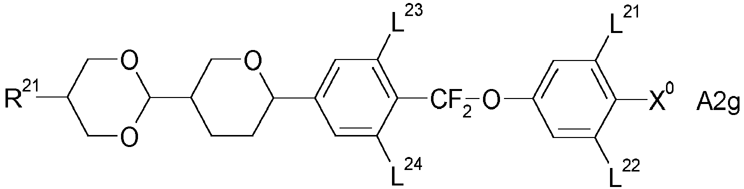 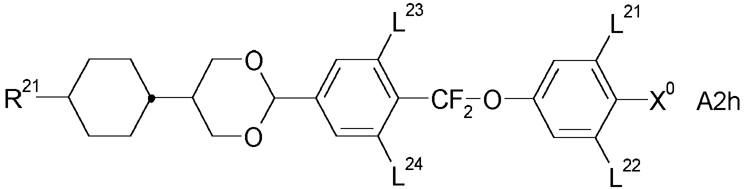 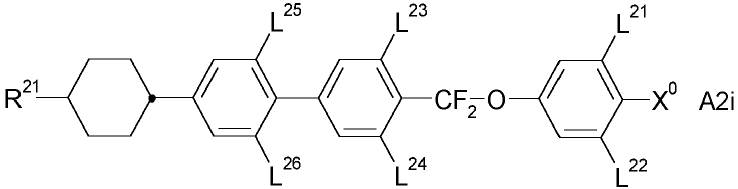 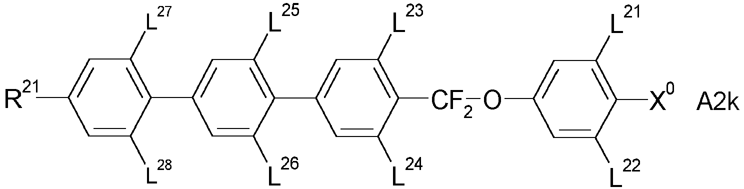 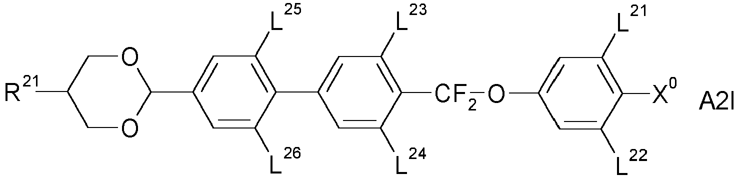 in which R²¹, X⁰, L²¹ and L²² have the meaning given in formula A2, L²³, L²⁴, L²⁵ and L²⁶ each, independently of one another, are H or F, and X⁰ is preferably F.

Very particularly preferred compounds of formula A2 are selected from the group consisting of the following subformulae: 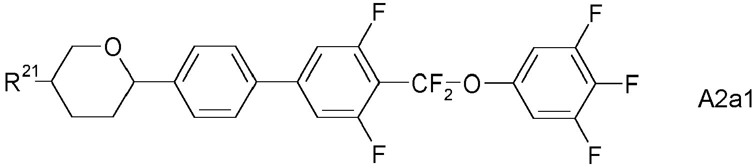 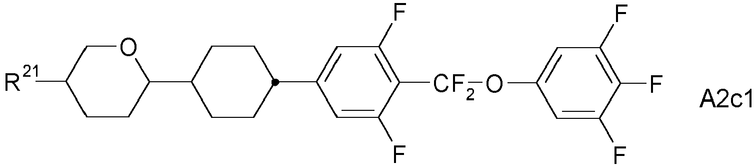 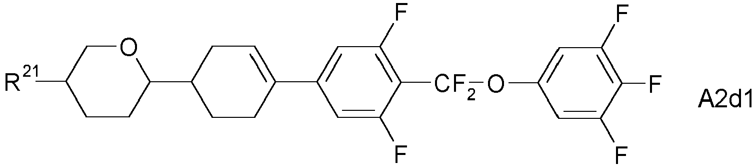 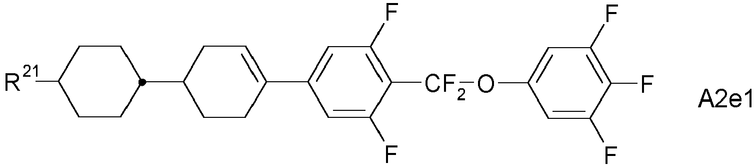 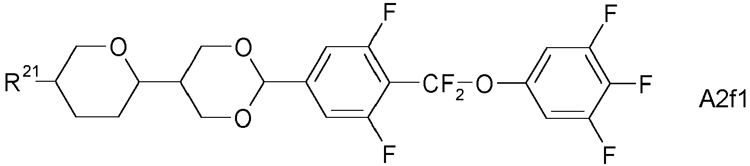 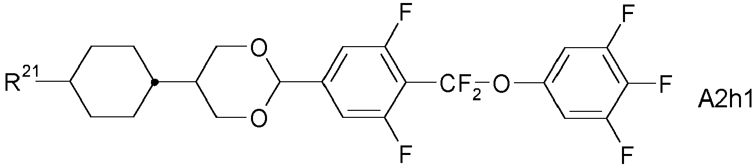 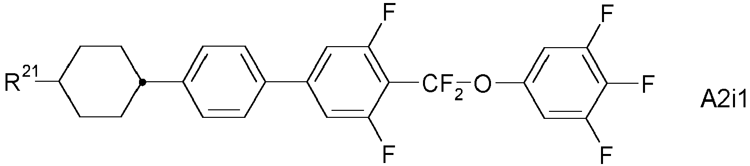 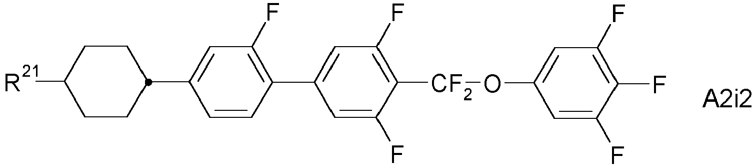 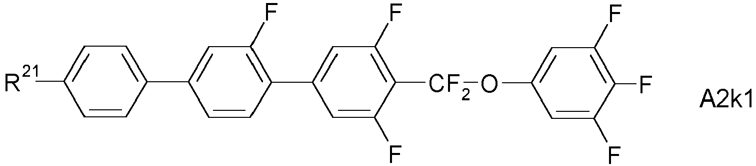 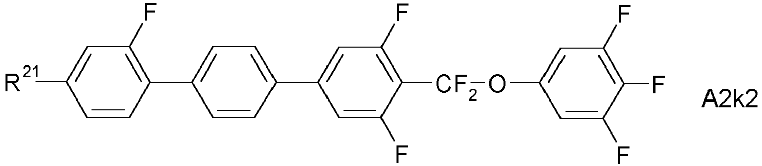 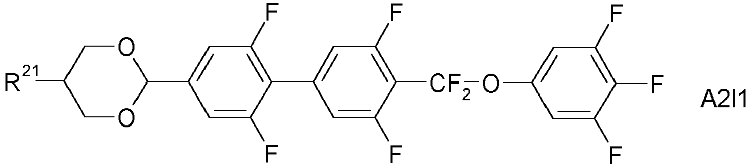 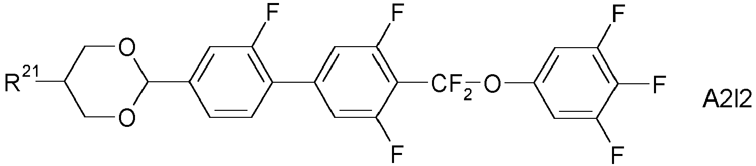 in which R²¹ and X⁰ are as defined in formula A2.

Particularly preferred compounds of formula A3 are selected from the group consisting of the following subformulae: 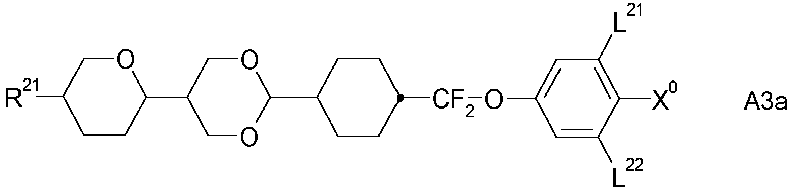 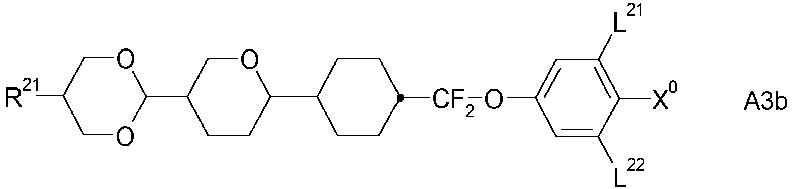 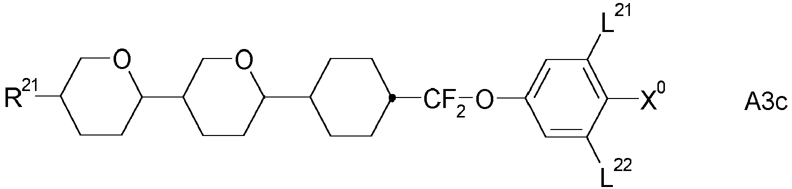 in which R²¹, X⁰, L²¹ and L²² have the meaning given in formula A3, and X⁰ is preferably F.

Particularly preferred compounds of formula A4 are selected from the group consisting of the following subformulae: 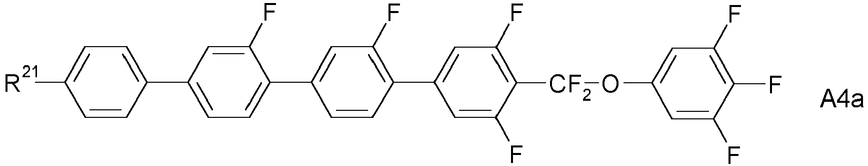 in which R²¹ is as defined in formula A4.

Preferably component B) of the LC medium comprises one or more compounds of formula B selected from the group consisting of the following formulae: 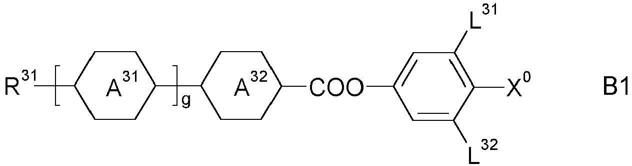 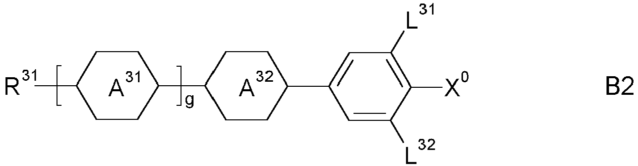 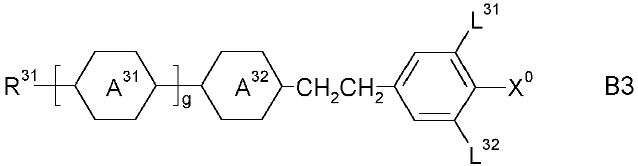 in which g, A³¹, A³², R³¹, X⁰, L³¹ and L³² have the meanings given in formula B, and X⁰ is preferably F. Particularly preferred are compounds of formulae B1 and B2.

Particularly preferred compounds of formula B1 are selected from the group consisting of the following subformulae: 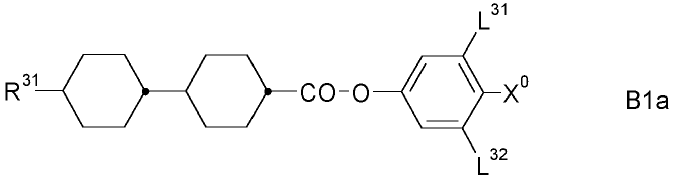 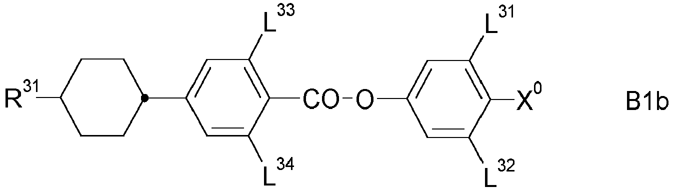 in which R³¹, X⁰, L³¹ and L³² have the meaning given in formula B1, and X⁰ is preferably F.

Very particularly preferred compounds of formula B1a are selected from the group consisting of the following subformulae: 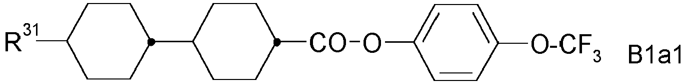 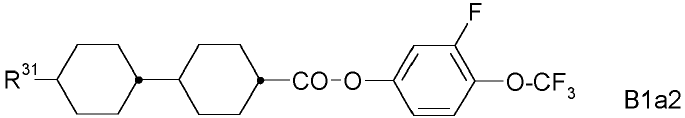 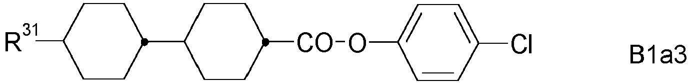 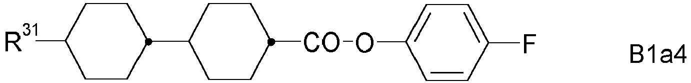 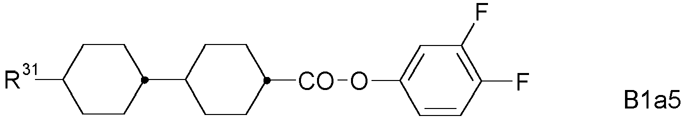 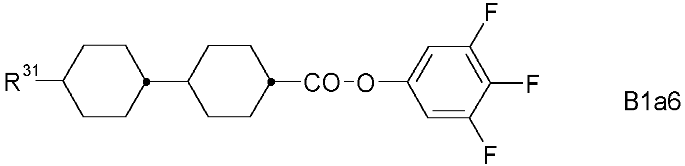 in which R³¹ is as defined in formula B1.

Very particularly preferred compounds of formula B1b are selected from the group consisting of the following subformulae: 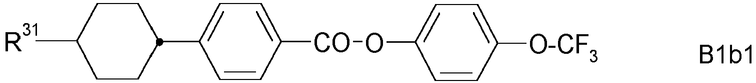 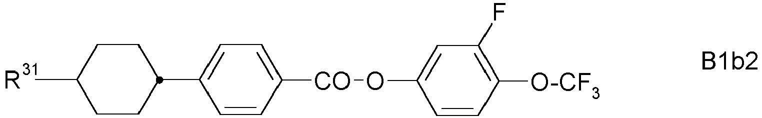 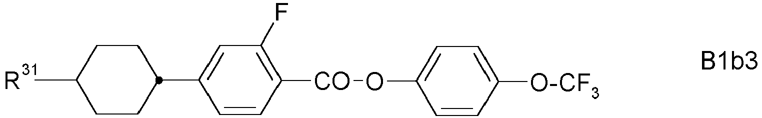 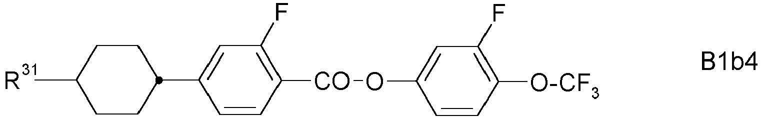 in which R³¹ is as defined in formula B1.

Particularly preferred compounds of formula B2 are selected from the group consisting of the following subformulae: 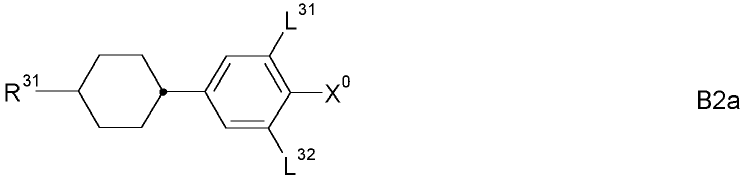 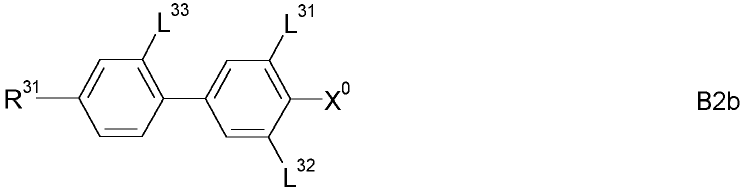 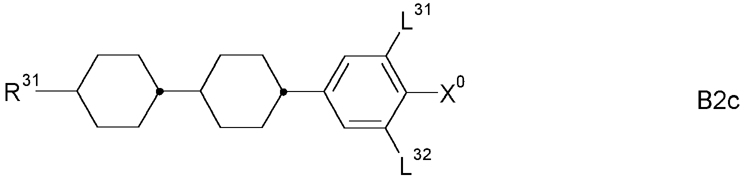 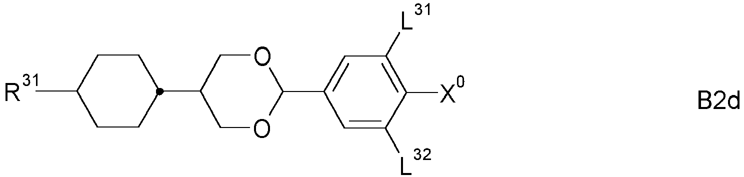 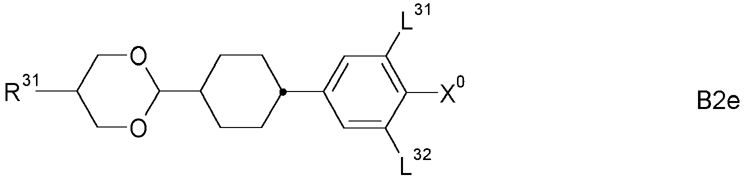 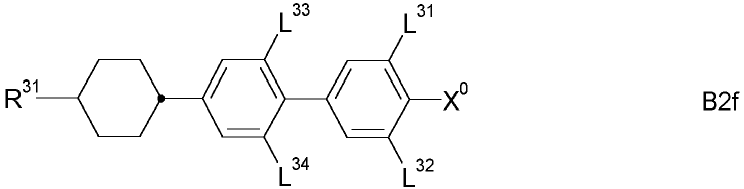 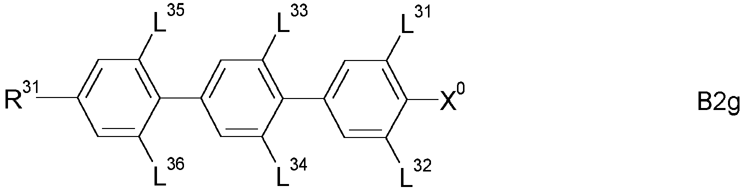 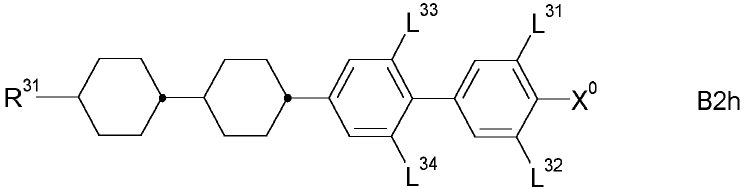 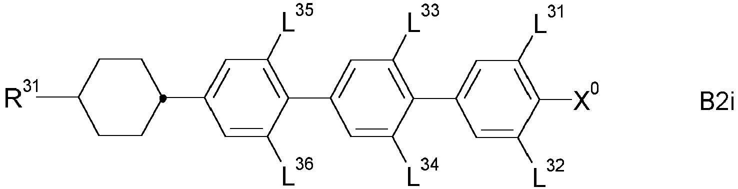 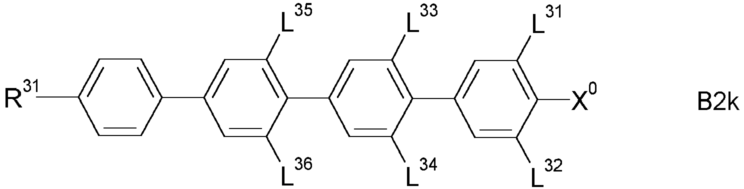 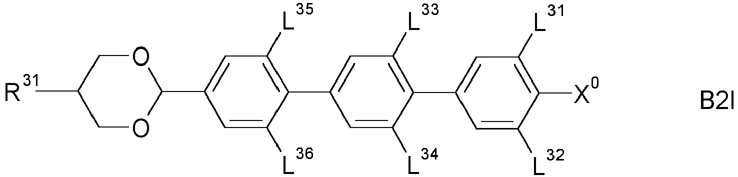 in which R³¹, X⁰, L³¹ and L³² have the meaning given in formula B2, L³³, L³⁴, L³⁵ and L³⁶ are each, independently of one another, H or F, and X⁰ is preferably F.

Very particularly preferred compounds of formula B2 are selected from the group consisting of the following subformulae: 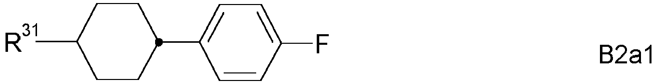 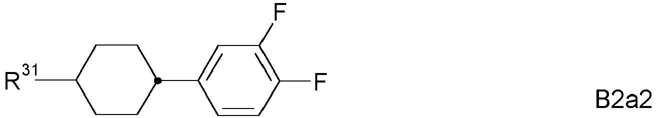 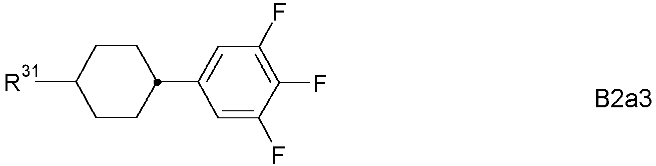 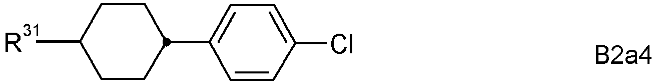 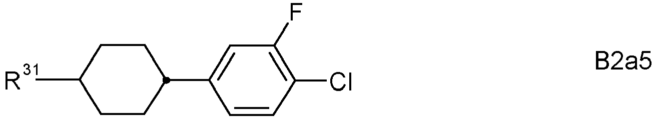 in which R³¹ is as defined in formula B2.

Very particularly preferred compounds of formula B2b are selected from the group consisting of the following subformulae 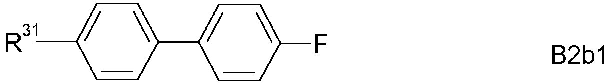 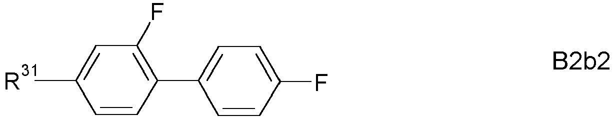 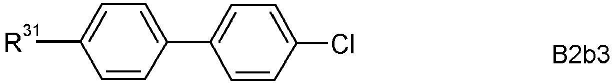 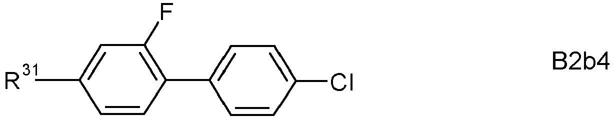 in which R³¹ is as defined in formula B2.

Very particularly preferred compounds of formula B2c are selected from the group consisting of the following subformulae: 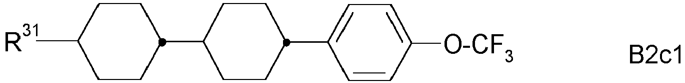 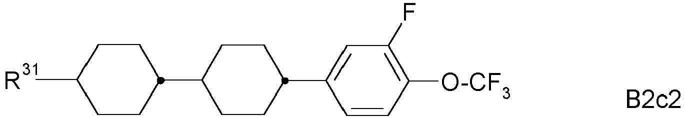 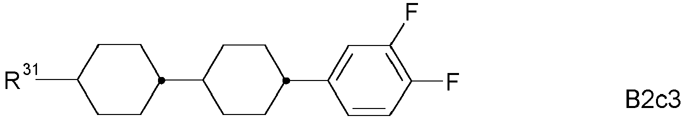 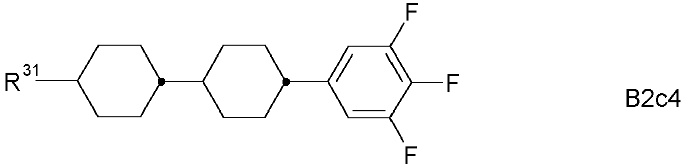 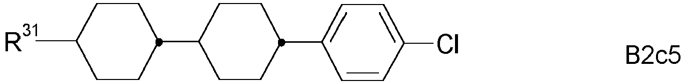 in which R³¹ is as defined in formula B2.

Very particularly preferred compounds of formula B2d and B2e are selected from the group consisting of the following subformulae: 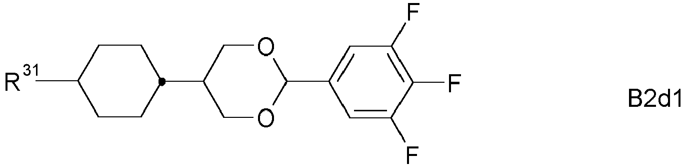 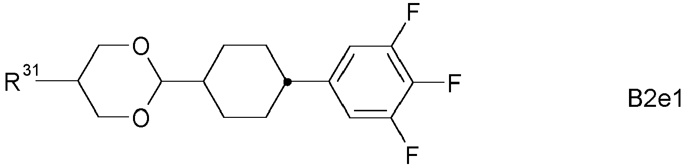 in which R³¹ is as defined in formula B2.

Very particularly preferred compounds of formula B2f are selected from the group consisting of the following subformulae: 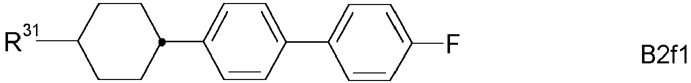 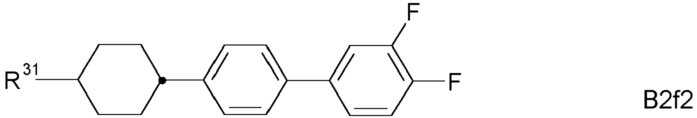 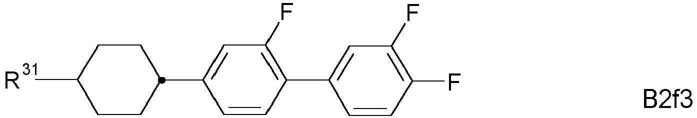 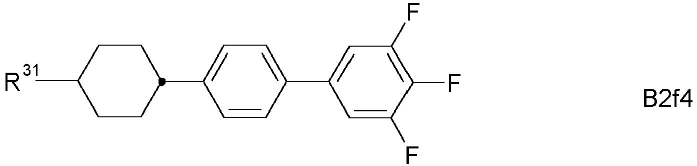 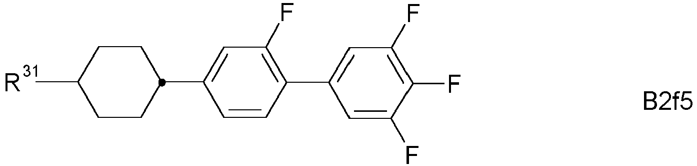 in which R³¹ is as defined in formula B2.

Very particularly preferred compounds of formula B2g are selected from the group consisting of the following subformulae: 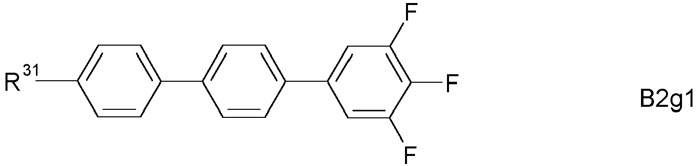 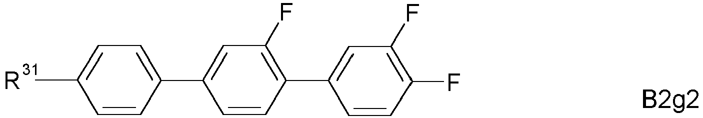 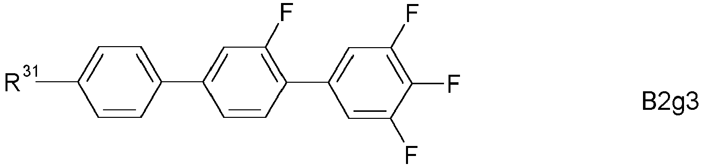 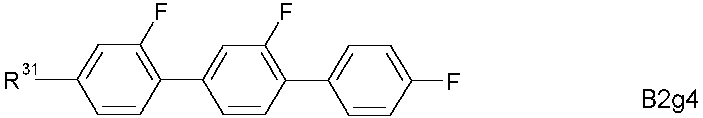 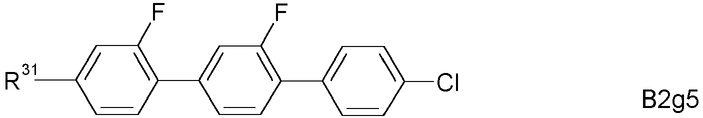 in which R³¹ is as defined in formula B2.

Very particularly preferred compounds of formula B2h are selected from the group consisting of the following subformulae: 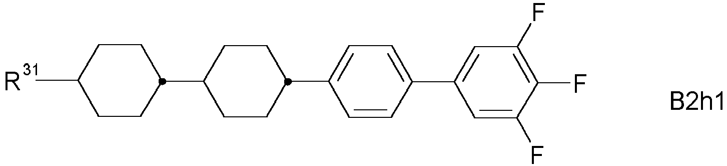 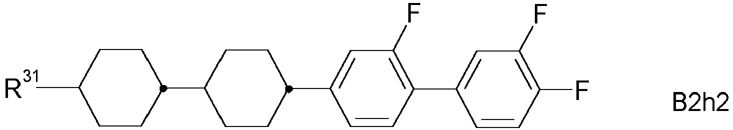 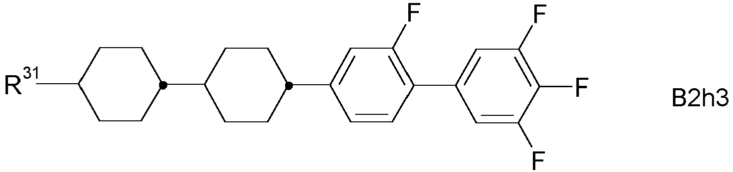 in which R³¹ is as defined in formula B2.

Very particularly preferred compounds of formula B2i are selected from the group consisting of the following subformulae: 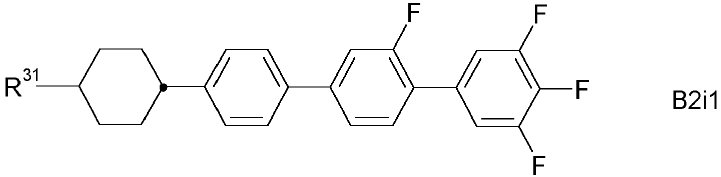 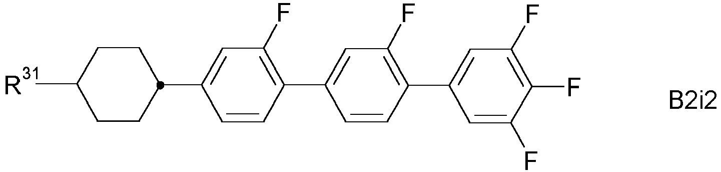 in which R³¹ is as defined in formula B2.

Very particularly preferred compounds of formula B2k are selected from the group consisting of the following subformulae: 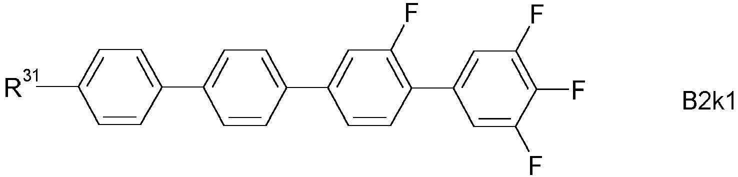 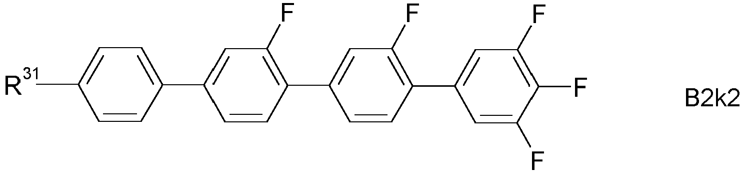 in which R³¹ is as defined in formula B2.

Very particularly preferred compounds of formula B2I are selected from the group consisting of the following subformulae: 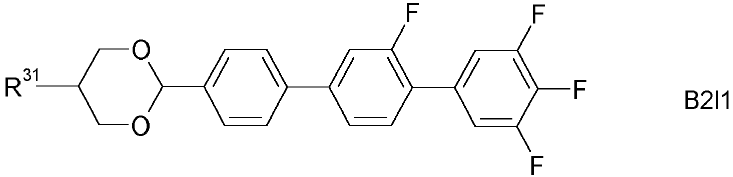 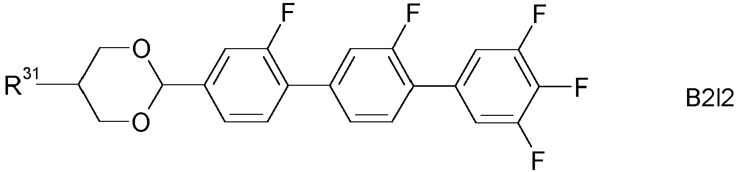 in which R³¹ is as defined in formula B2.

Alternatively to, or in addition to, the compounds of formula B1 and/or B2 component B) of the LC medium may also comprise one or more compounds of formula B3 as defined above.

Particularly preferred compounds of formula B3 are selected from the group consisting of the following subformulae: 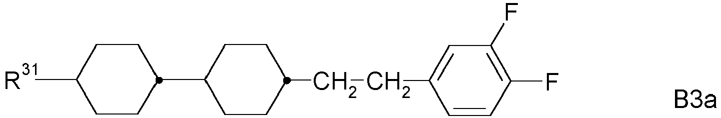 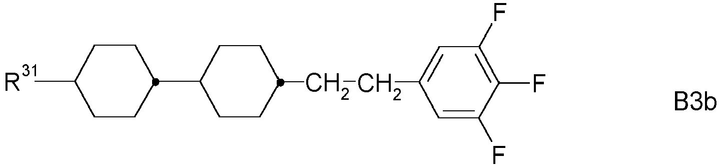 in which R³¹ is as defined in formula B3.

Preferably component B) of the LC medium comprises, in addition to the compounds of formula A and/or B, one or more compounds of formula C 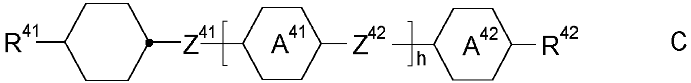 in which the individual radicals have the following meanings: 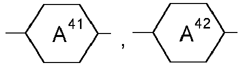 each, independently of one another, and on each occurrence, identically or differently 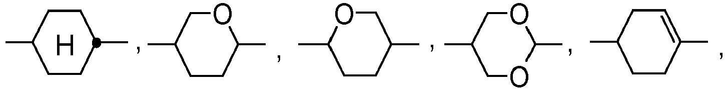 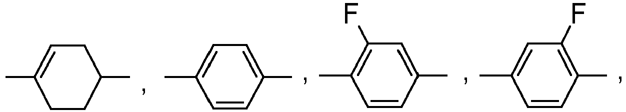
- R⁴¹, R⁴²: each, independently of one another, alkyl, alkoxy, oxaalkyl or alkoxyalkyl having 1 to 9 C atoms or alkenyl or alkenyloxy having 2 to 9 C atoms, all of which are optionally fluorinated,
- Z⁴¹, Z⁴²: each, independently of one another, -CH₂CH₂-, -COO-, *trans-*CH=CH-, *trans*-CF=CF-, -CH₂O-, -CF₂O-, -C≡C- or a single bond, preferably a single bond,
- h: 0, 1, 2 or 3.

In the compounds of formula C, R⁴¹ and R⁴² are preferably selected from straight-chain alkyl or alkoxy with 1, 2, 3, 4, 5 or 6 C atoms, and straight-chain alkenyl with 2, 3, 4, 5, 6 or 7 C atoms.

In the compounds of formula C, h is preferably 0, 1 or 2.

In the compounds of formula C, Z⁴¹ and Z⁴² are preferably selected from COO, trans-CH=CH and a single bond, very preferably from COO and a single bond.

Preferred compounds of formula C are selected from the group consisting of the following subformulae: 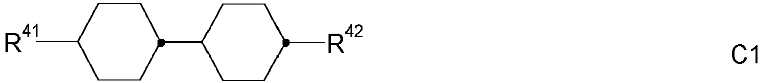 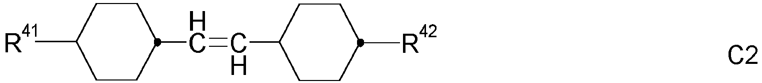 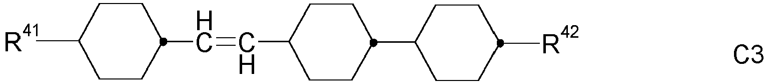 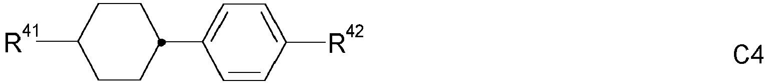 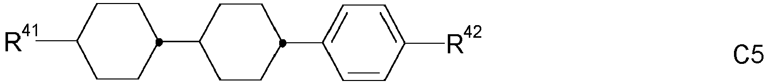 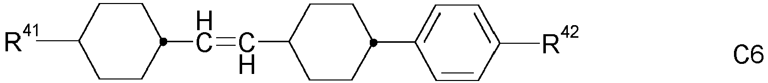 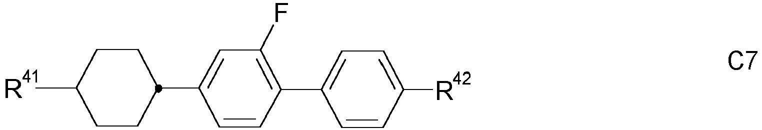 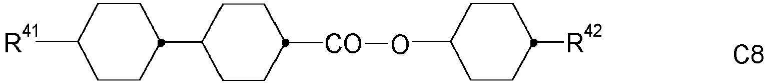 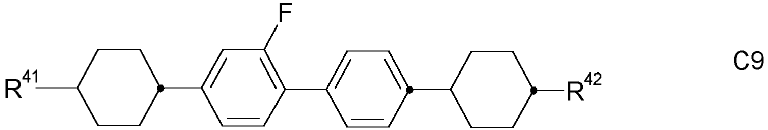 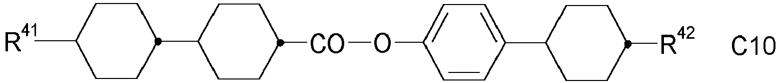 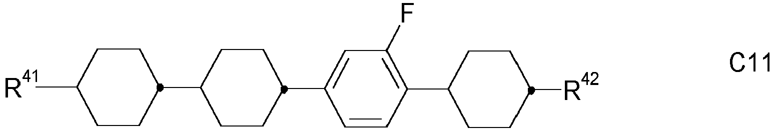 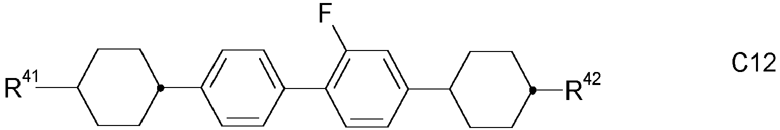 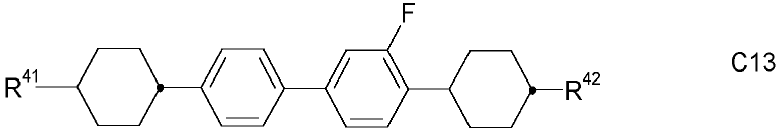 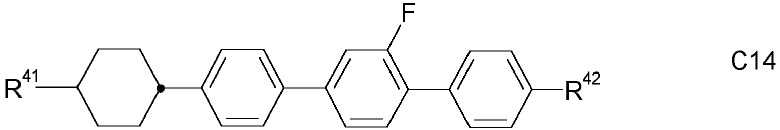 wherein R⁴¹ and R⁴² have the meanings given in formula C, and preferably denote each, independently of one another, alkyl, alkoxy, fluorinated alkyl or fluorinated alkoxy with 1 to 7 C atoms, or alkenyl, alkenyloxy, alkoxyalkyl or fluorinated alkenyl with 2 to 7 C atoms.

In another preferred embodiment of the present invention component B) of the LC medium comprises, in addition to the compounds of formula A and/or B, one or more compounds of formula D 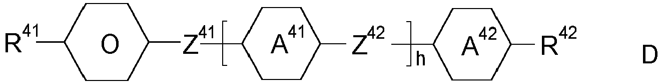 in which A⁴¹, A⁴², Z⁴¹, Z⁴², R⁴¹, R⁴² and h have the meanings given in formula C or one of the preferred meanings given above.

Preferred compounds of formula D are selected from the group consisting of the following subformulae: 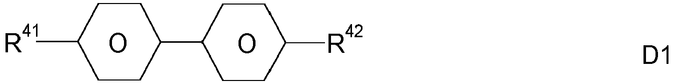 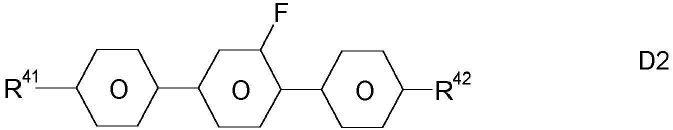 in which R⁴¹ and R⁴² have the meanings given in formula D and R⁴¹ preferably denotes alkyl bedeutet, and in formula D1 R⁴² preferably denotes alkenyl, particularly preferably -(CH₂)₂-CH=CH-CH₃, and in formula D2 R⁴² preferably denotes alkyl, -(CH₂)₂-CH=CH₂ or -(CH₂)₂-CH=CH-CH₃.

In another preferred embodiment of the present invention component B) of the LC medium comprises, in addition to the compounds of formula A and/or B, one or more compounds of formula E containing an alkenyl group 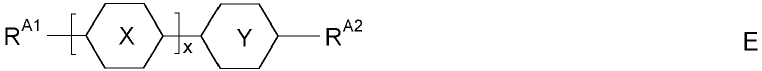 in which the individual radicals, on each occurrence identically or differently, each, independently of one another, have the following meaning: 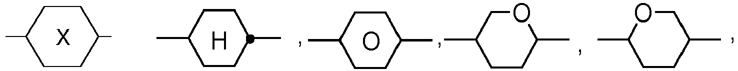 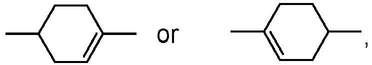 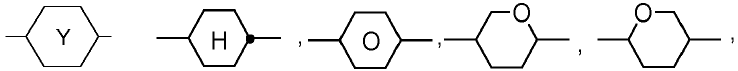 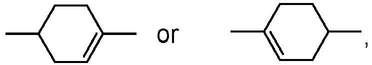
- R^{A1}: alkenyl having 2 to 9 C atoms or, if at least one of the rings X, Y and Z denotes cyclohexenyl, also one of the meanings of R^{A2},
- R^{A2}: alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
- x: 1 or 2.

R^{A2} is preferably straight-chain alkyl or alkoxy having 1 to 8 C atoms or straight-chain alkenyl having 2 to 7 C atoms.

Preferred compounds of formula E are selected from the following sub-formulae: 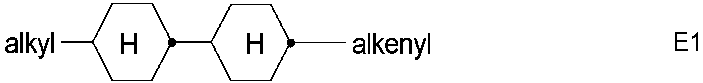 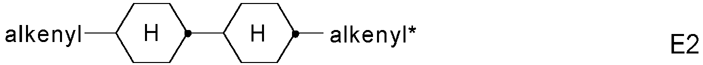 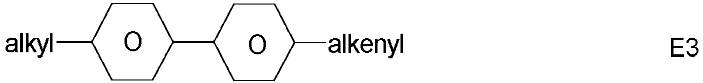 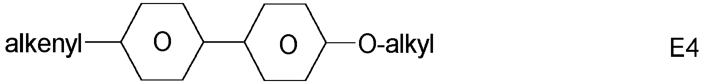 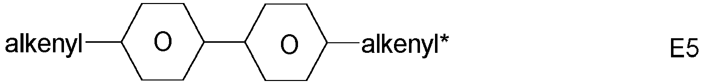 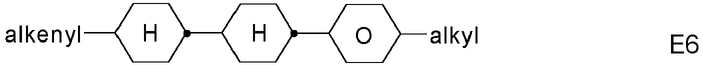 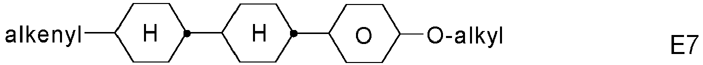 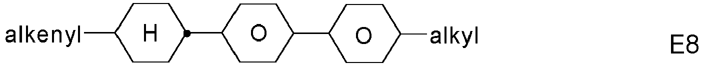 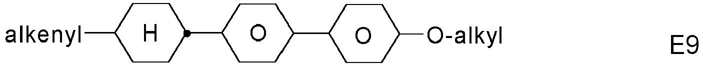 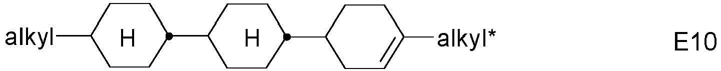 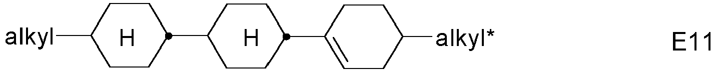 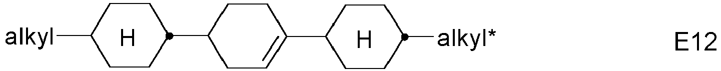 in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.

Very preferred compounds of the formula E are selected from the following sub-formulae: 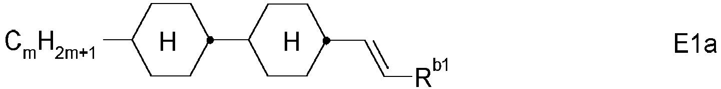 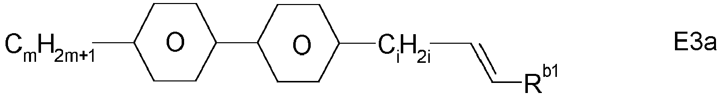 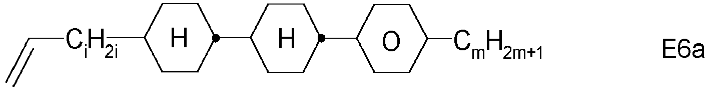 in which m denotes 1, 2, 3, 4, 5 or 6, i denotes 0, 1, 2 or 3, and R^{b1} denotes H, CH₃ or C₂H₅.

Very particularly preferred compounds of the formula E are selected from the following sub-formulae:

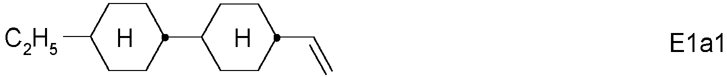

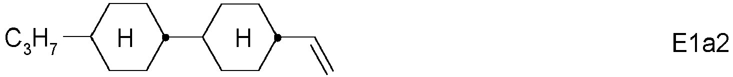

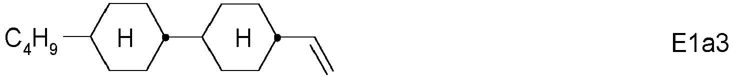

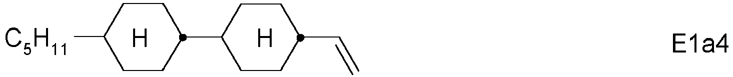

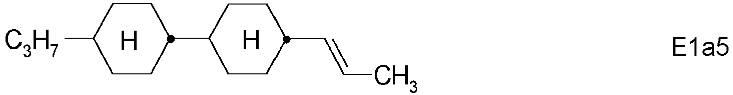

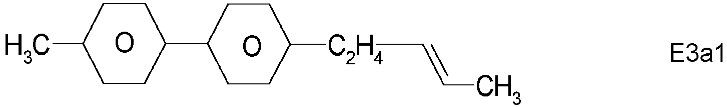

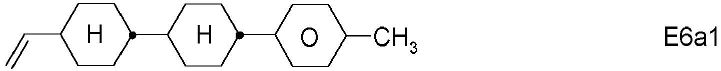

Most preferred are compounds of formula E1a2, E1a5, E3a1 and E6a1.

In another preferred embodiment of the present invention component B) of the LC medium comprises, in addition to the compounds of formula A and/or B, one or more compounds of formula F 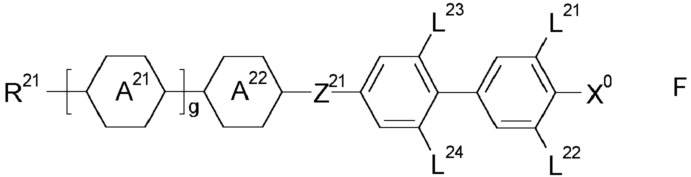 in which the individual radicals have, independently of each other and on each occurrence identically or differently, the following meanings: 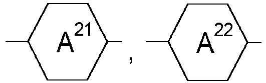 denote 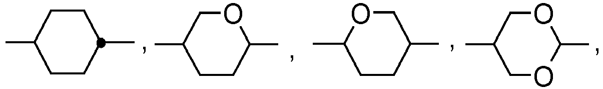 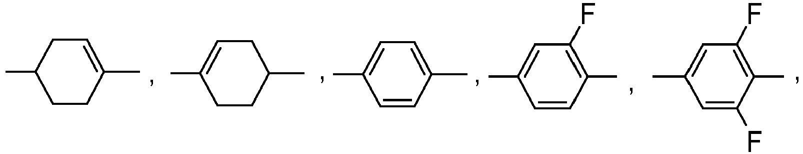
- R²¹, R³¹: each, independently of one another, alkyl, alkoxy, oxaalkyl or alkoxyalkyl having 1 to 9 C atoms or alkenyl or alkenyloxy having 2 to 9 C atoms, all of which are optionally fluorinated,
- X⁰: F, Cl, halogenated alkyl or alkoxy having 1 to 6 C atoms or halogenated alkenyl or alkenyloxy having 2 to 6 C atoms,
- Z²¹: -CH₂CH₂-, -CF₂CF₂-, -COO-, *trans*-CH=CH-, *trans-*CF=CF-, -CH₂O-, -CF₂O-, -C≡C- or a single bond, preferably -CF₂O-,
- L²¹, L²², L²³, L²⁴: each, independently of one another, H or F,
- g: 0, 1, 2 or 3.

Particularly preferred compounds of formula F are selected from the group consisting of the following formulae: 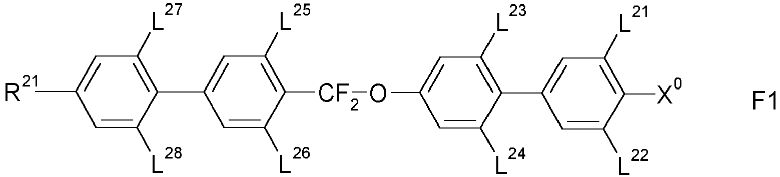 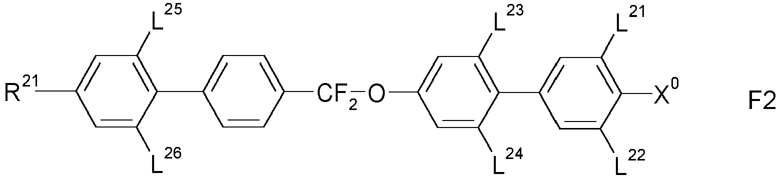 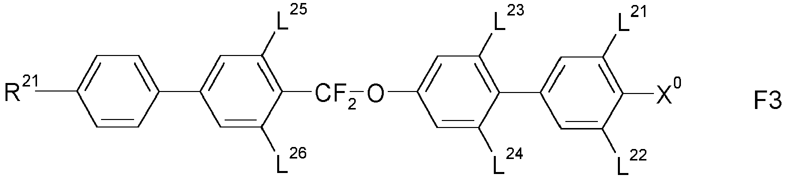 in which R²¹, X⁰, L²¹ and L²² have the meaning given in formula F, L²⁵ and L²⁶ are each, independently of one another, H or F, and X⁰ is preferably F.

Very particularly preferred compounds of formula F1-F3 are selected from the group consisting of the following subformulae: 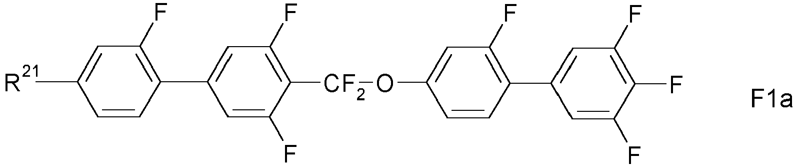 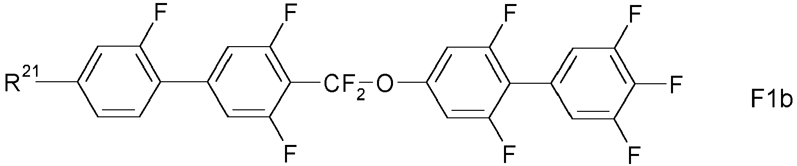 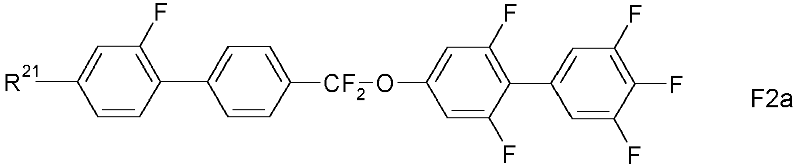 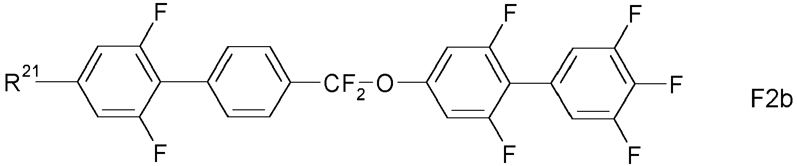 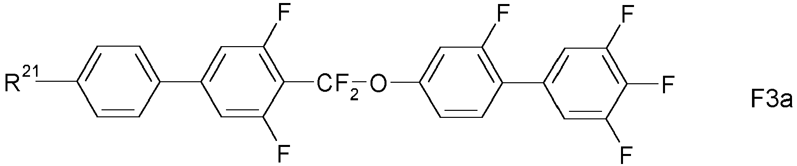 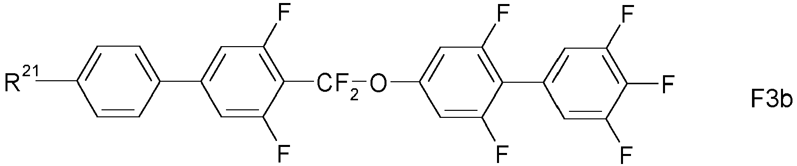 in which R²¹ is as defined in formula F1.

In another preferred embodiment of the present invention component B) of the LC medium comprises, in addition to the compounds of formula A and/or B, one or more compounds of formula G containing a cyano group. 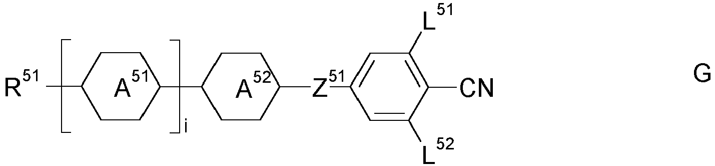 in which the individual radicals have the following meanings: 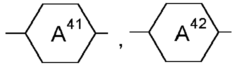 each, independently of one another, and on each occurrence, identically or differently 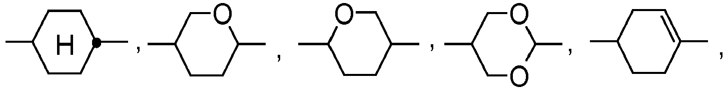 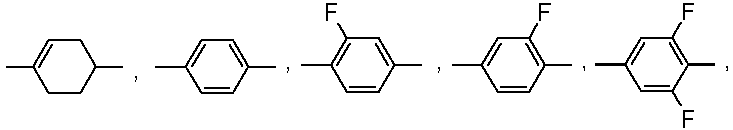
- R⁵¹, R⁵²: each, independently of one another, alkyl, alkoxy, oxaalkyl or alkoxyalkyl having 1 to 9 C atoms or alkenyl or alkenyloxy having 2 to 9 C atoms, all of which are optionally fluorinated,
- Z⁵¹, Z⁴²: -CH₂CH₂-, -COO-, *trans-*CH=CH*-, trans*-CF=CF-, -CH₂O-, -CF₂O-, -C≡C- or a single bond, preferably a single bond,
- L⁵¹, L⁵²: each, independently of one another, H or F,
- i: 0, 1, 2 or 3.

Preferred compounds of formula G are selected from the following subformulae 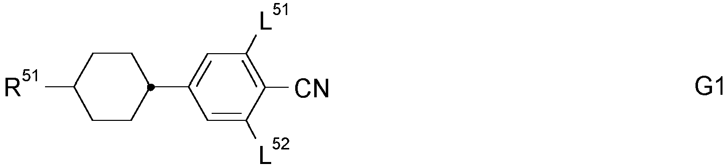 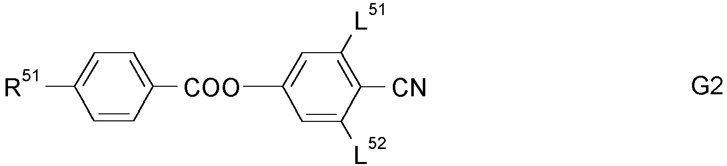 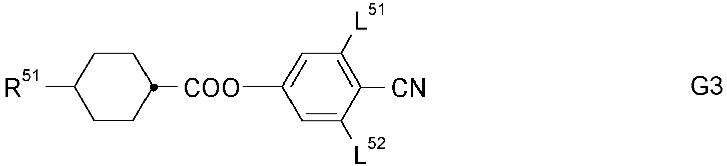 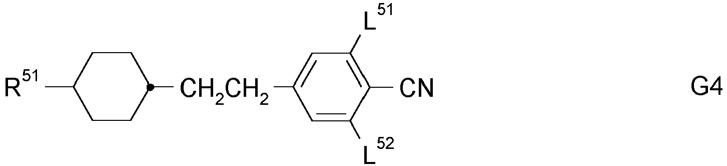 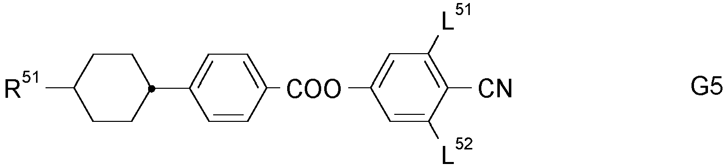 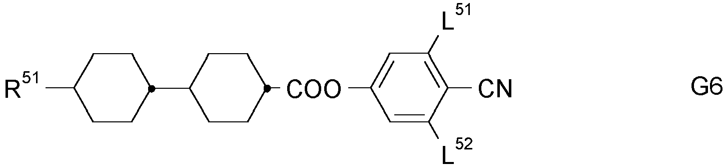 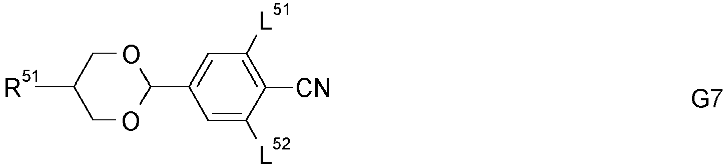 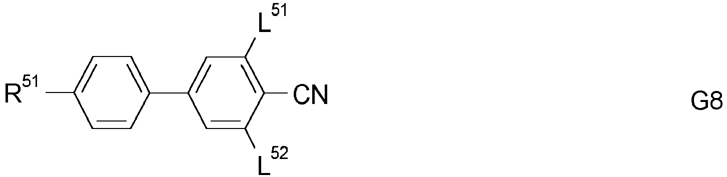 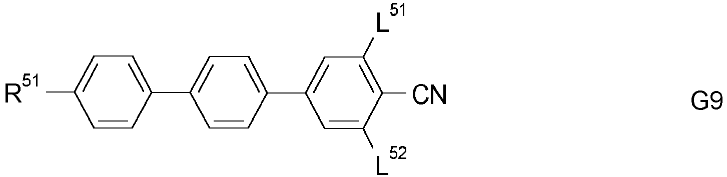 in which R⁵¹ is as defined in formula G and L¹ and L² are each, independently of one another, H or F.

Very preferred are compounds of formula G1, G2 and G5.

Preferred compounds of formula G1-G9 are those wherein L⁵¹ and L⁵² are F.

Further preferred compounds of formula G1-G7 are those wherein L⁵¹ is F and L⁵² is H.

Very preferred compounds of formula G are selected from the group consisting of the following subformulae: 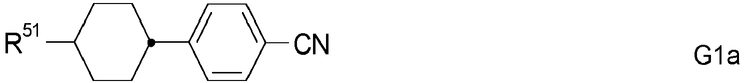 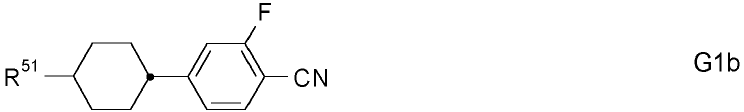 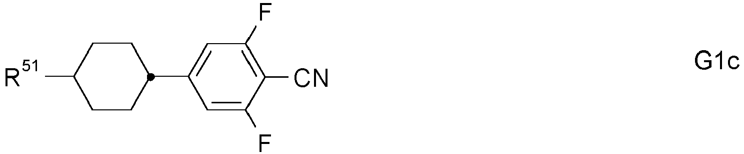 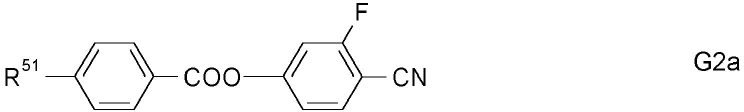 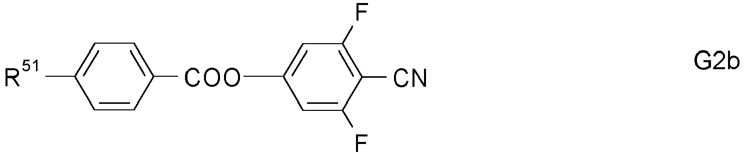 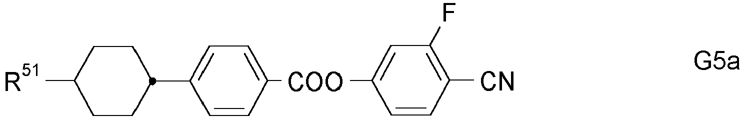 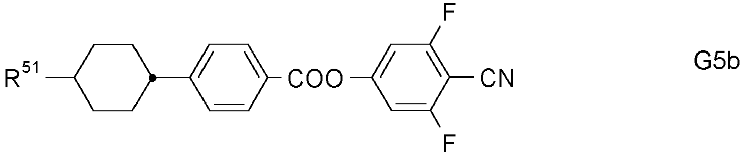 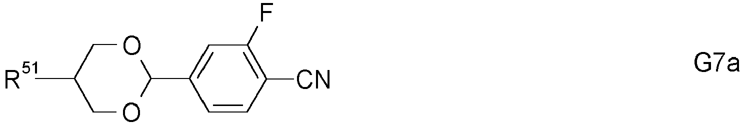 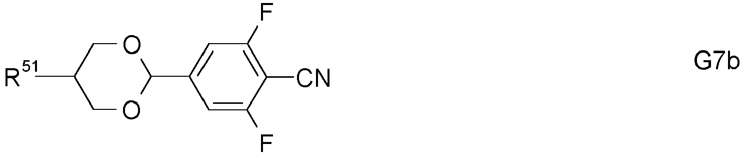 in which R⁵¹ is as defined in formula G.

In the compounds of formula G, G1-G7 and their subformulae, R⁵¹ is particularly preferably alkyl or alkoxy having 1 to 8 carbon atoms, or alkenyl having from 2 to 7 carbon atoms.

The concentration of the compounds of formula A and B in the LC host mixture is preferably from 2 to 60%, very preferably from 3 to 45%, most preferably from 4 to 35%.

The concentration of the compounds of formula C and D in the LC host mixture is preferably from 2 to 70%, very preferably from 5 to 65%, most preferably from 10 to 60%.

The concentration of the compounds of formula E in the LC host mixture is preferably from 5 to 50%, very preferably from 5 to 35%.

The concentration of the compounds of formula F in the LC host mixture is preferably from 2 to 30%, very preferably from 5 to 20%.

Further preferred embodiments of the present invention are listed below, including any combination thereof.
a) The LC host mixture comprises one or more compounds of formula A and/or B with high positive dielectric anisotropy, preferably with Δε > 15.
b) The LC host mixture comprises one or more compounds selected from the group consisting of formulae A1a2, A1b1, A1d1, A1f1, A2a1, A2h1, A2l1, A2l2, A2k1, B2h3, B2l1, F1a. The proportion of these compounds in the LC host mixture is preferably from 4 to 40%, very preferably from 5 to 35%.
c) The LC host mixture comprises one or more compounds selected from the group consisting of formulae C3, C4, C5, C9 and D2. The proportion of these compounds in the LC host mixture is preferably from 8 to 70%, very preferably from 10 to 60%.
d) The LC host mixture comprises one or more compounds selected from the group consisting of formulae G1, G2 and G5, preferably G1a, G2a and G5a. The proportion of these compounds in the LC host mixture is preferably from 4 to 40%, very preferably from 5 to 35%.
e) The LC host mixture comprises one or more compounds selected from the group consisting of formulae E1, E3 and E6, preferably E1a, E3a and E6a, very preferably E1a2, E1a5, E3a1 and E6a1. The proportion of these compounds in the LC host mixture is preferably from 5 to 60%, very preferably from 10 to 50%.

In a second preferred embodiment of the present invention, the LC medium contains an component B) or LC host mixture having a negative dielectric anisotropy Δε.

Such LC media are especially suitable for use in VA, IPS and UB-FFS displays or related modes using LC-materials with Δε<0.

The LC media and LC host mixtures according to this second preferred embodiment preferably have a negative dielectric anisotropy Δε from -0.5 to - 10, very preferably from -2.5 to -7.5, at 20°C and 1 kHz.

Particularly preferred embodiments of an LC medium according to this second preferred embodiment are those of sections a)-z2) below:
a) LC medium wherein the component B) or LC host mixture comprises one or more compounds selected from formulae CY and PY: 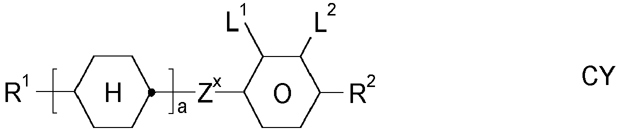 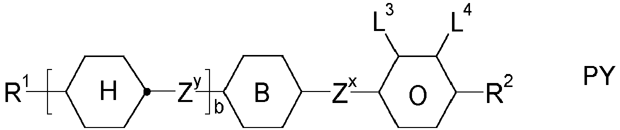 wherein
   - a: denotes 1 or 2,
   - b: denotes 0 or 1, 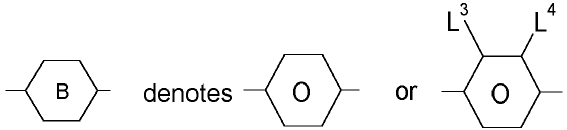
   - R¹ and R²: each, independently of one another, denote alkyl having 1 to 12 C atoms, where, in addition, one or two non-adjacent CH₂ groups may be replaced by -O-, -CH=CH-, -CO-, -OCO-or -COO- in such a way that O atoms are not linked directly to one another, preferably alkyl or alkoxy having 1 to 6 C atoms,
   - Z^{x} and Z^{y}: each, independently of one another, denote -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
   - L¹⁻⁴: each, independently of one another, denote F, Cl, OCF₃, CF₃, CH₃, CH₂F, CHF₂.

   Preferably, both L¹ and L² denote F or one of L¹ and L² denotes F and the other denotes Cl, or both L³ and L⁴ denote F or one of L³ and L⁴ denotes F and the other denotes Cl. The compounds of the formula CY are preferably selected from the group consisting of the following sub-formulae: 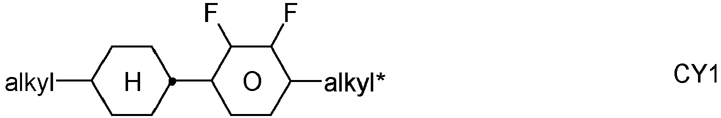 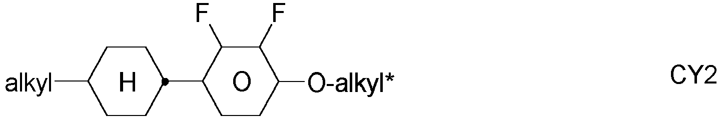 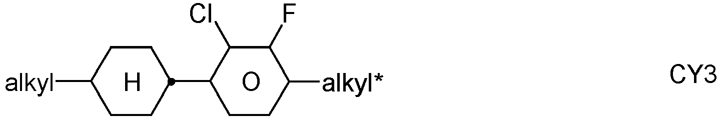 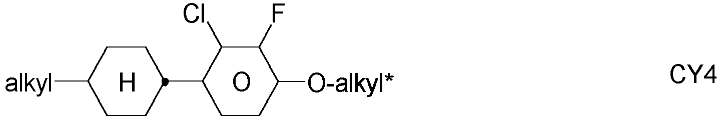 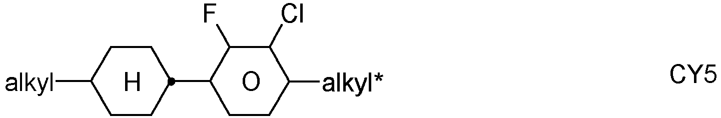 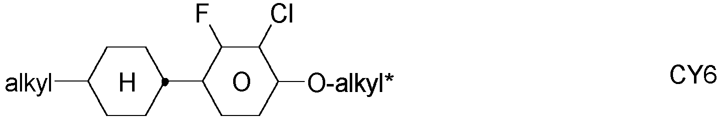 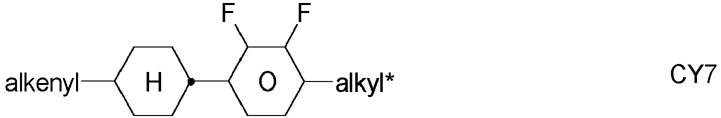 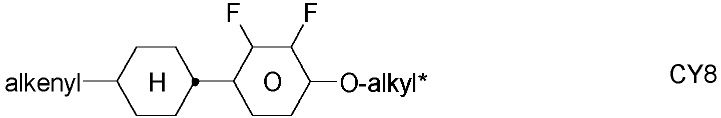 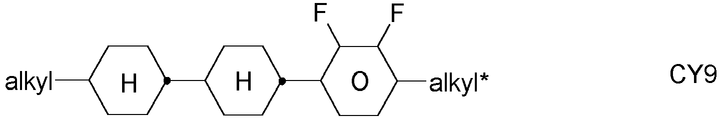 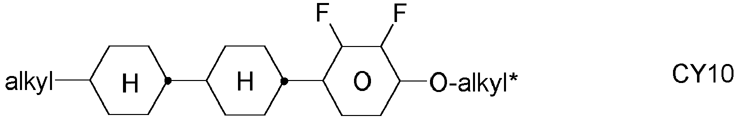 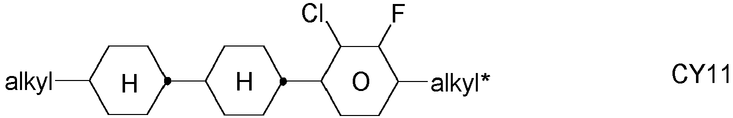 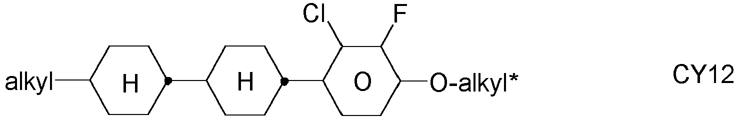 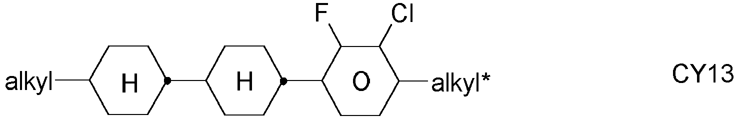 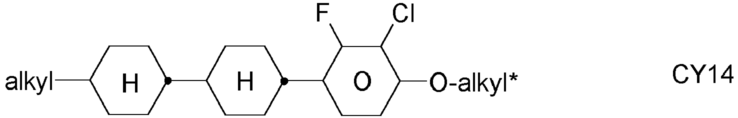 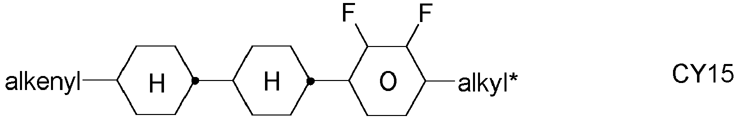 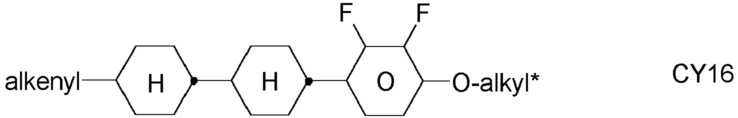 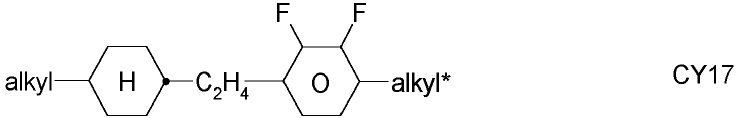 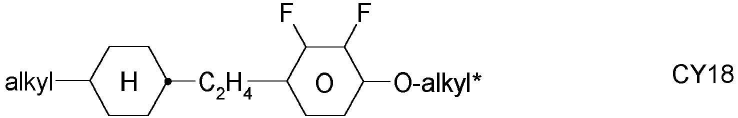 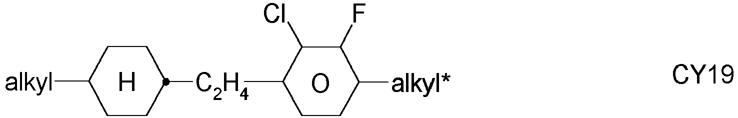 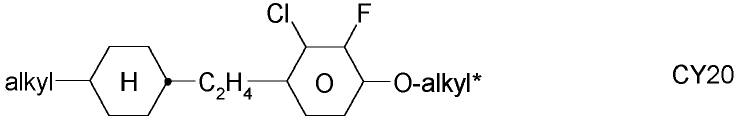 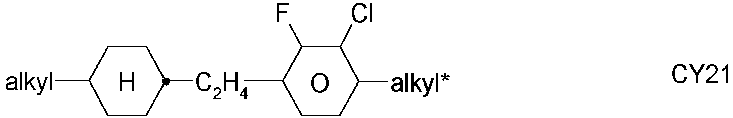 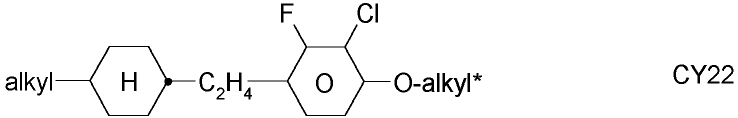 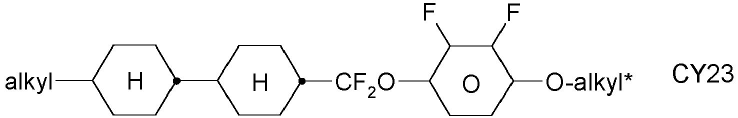 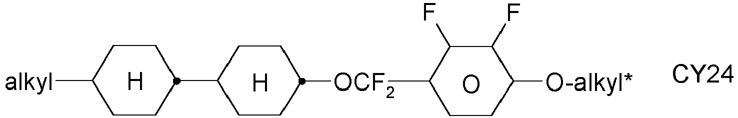 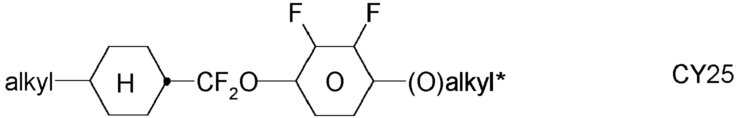 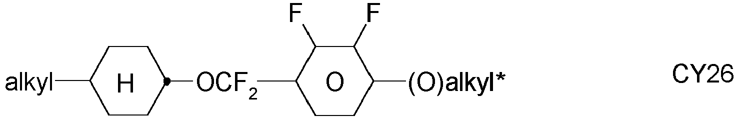 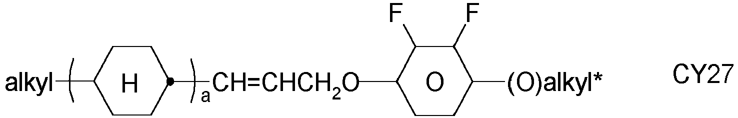 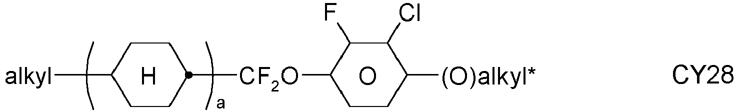 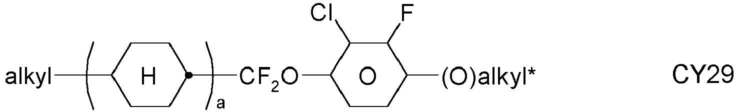 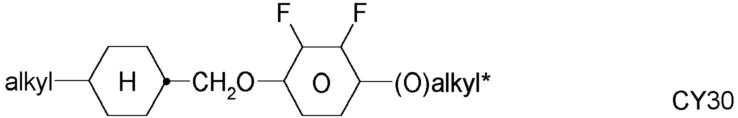 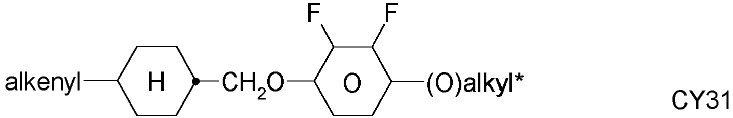 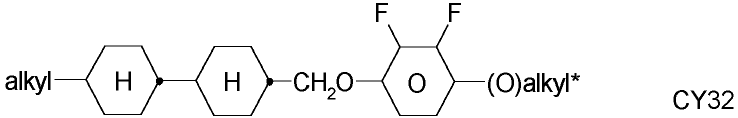 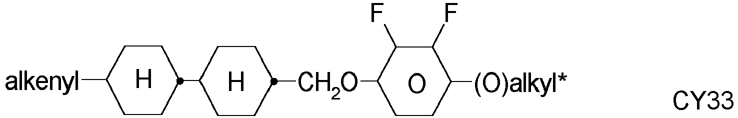 in which a denotes 1 or 2, alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Especially preferred are compounds selected from formulae CY2, CY8, CY10 and CY16. The compounds of the formula PY are preferably selected from the group consisting of the following sub-formulae: 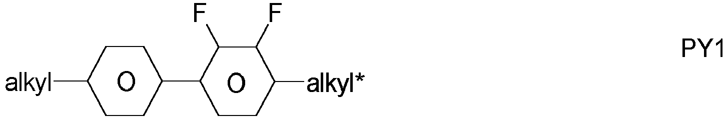 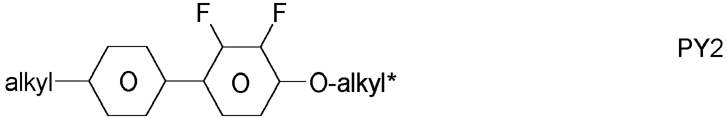 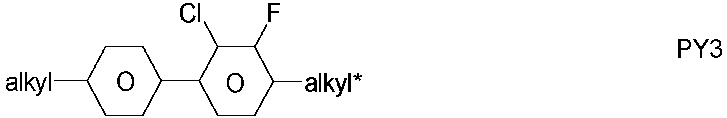 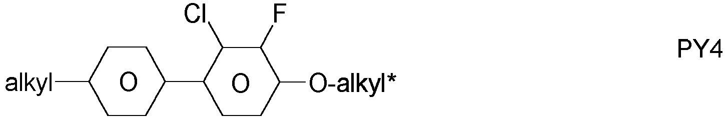 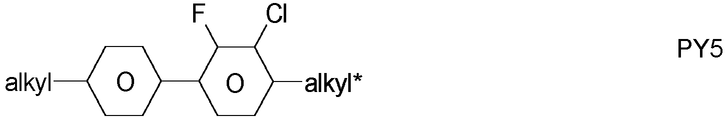 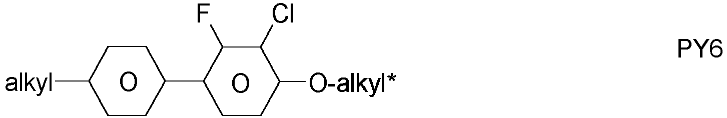 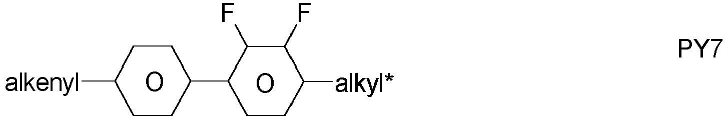 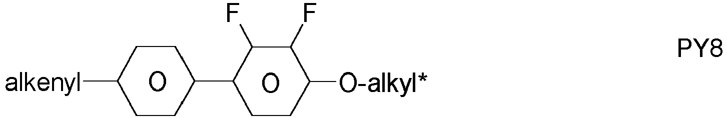 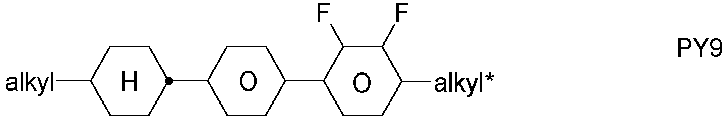 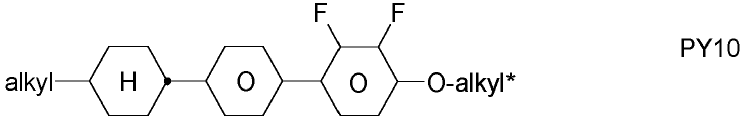 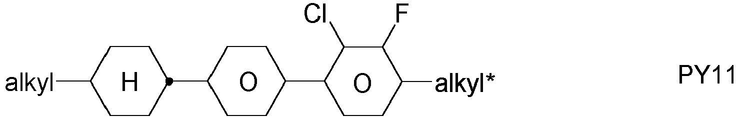 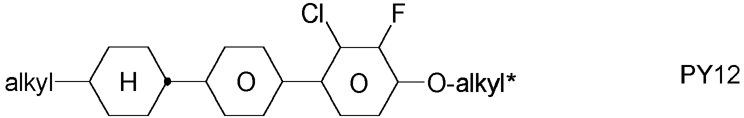 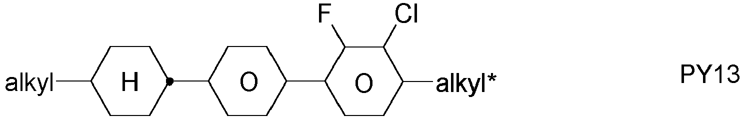 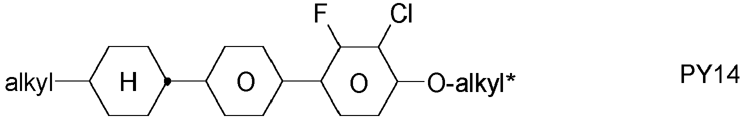 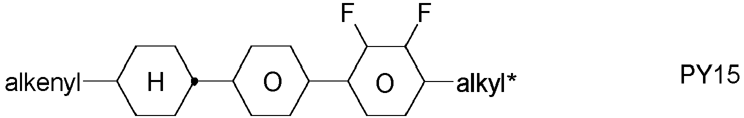 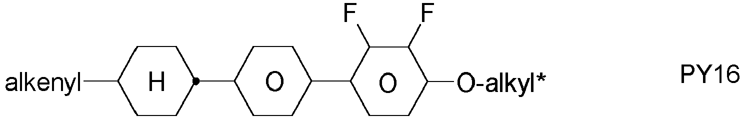 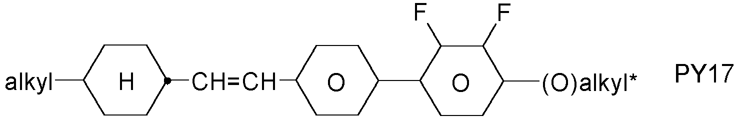 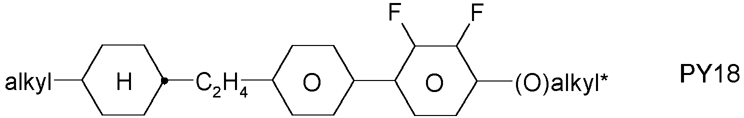 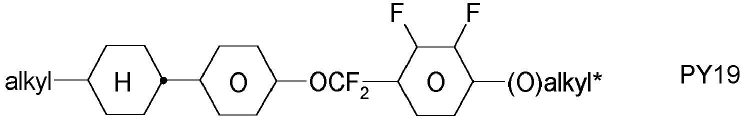 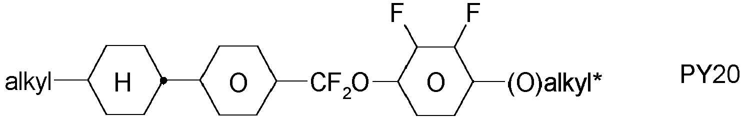 in which alkyl and alkyl* each, independently of one another, denote a straight-chain alkyl radical having 1-6 C atoms, and alkenyl denotes a straight-chain alkenyl radical having 2-6 C atoms, and (O) denotes an oxygen atom or a single bond. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Especially preferred are compounds selected from formulae PY2, PY8, PY10 and PY16.
   Preferably the concentration of the compounds of formula CY and PY and their subformulae in the LC medium is from 10 to 70% by weight, very preferably from 15 to 50% by weight.
   Preferably the concentration of the compounds of formula CY and its subformulae in the LC medium is from 2 to 40% by weight, very preferably from 3 to 30% by weight.
   Preferably the concentration of the compounds of formula PY and its subformulae in the LC medium is from 2 to 50% by weight, very preferably from 3 to 40% by weight.
b) LC medium wherein the component B) or LC host mixture comprises one or more mesogenic or LC compounds comprising an alkenyl group (hereinafter also referred to as "alkenyl compounds"), wherein said alkenyl group is stable to a polymerisation reaction under the conditions used for polymerisation of the polymerisable compounds contained in the LC medium.
   Preferably the component B) or LC host mixture comprises one or more alkenyl compounds selected from formulae AN and AY 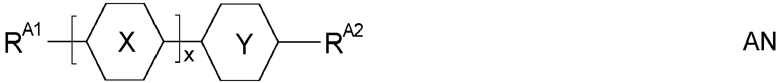 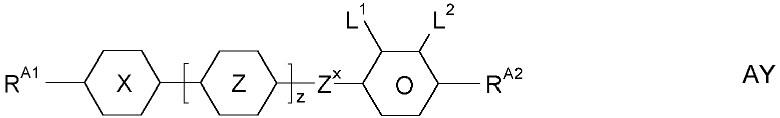 in which the individual radicals, on each occurrence identically or differently, and each, independently of one another, have the following meaning: 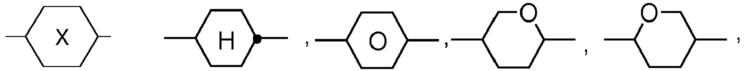 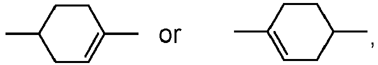 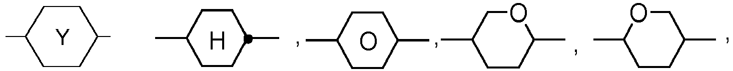 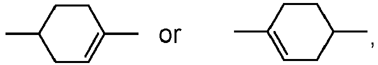 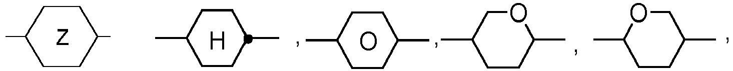 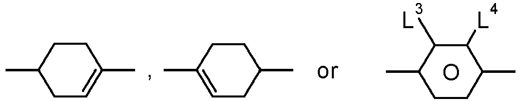
   - R^{A1}: alkenyl having 2 to 9 C atoms or, if at least one of the rings X, Y and Z denotes cyclohexenyl, also one of the meanings of R^{A2},
   - R^{A2}: alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
   - Z^{x}: -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-, or a single bond, preferably a single bond,
   - L¹⁻⁴: H, F, Cl, OCF₃, CF₃, CH₃, CH₂F or CHF₂, preferably H, F or Cl,
   - x: 1 or 2,
   - z: 0 or 1.

   Preferred compounds of formula AN and AY are those wherein R^{A2} is selected from ethenyl, propenyl, butenyl, pentenyl, hexenyl and heptenyl. In a preferred embodiment the component B) or LC host mixture comprises one or more compounds of formula AN selected from the following sub-formulae: 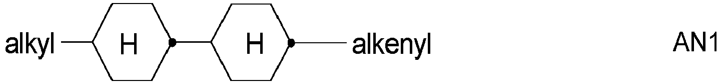 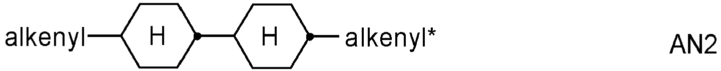 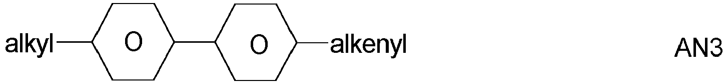 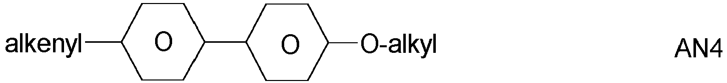 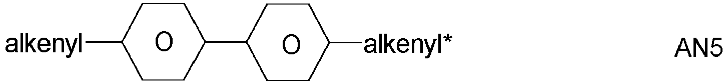 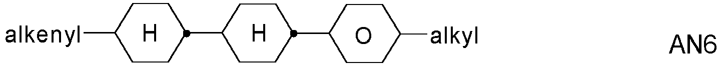 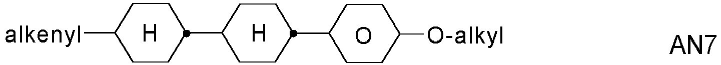 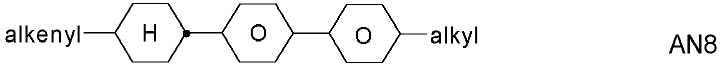 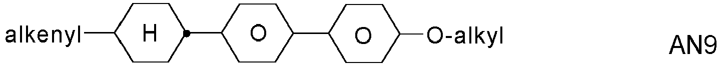 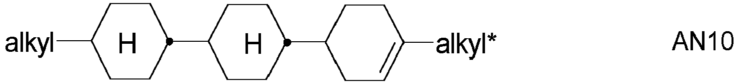 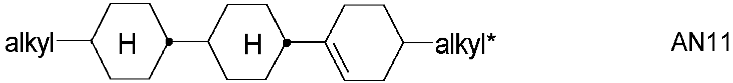 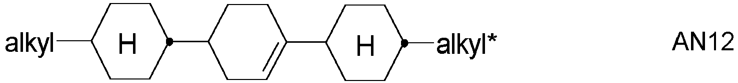 in which alkyl and alkyl* each, independently of one another, denote a straight-chain alkyl radical having 1-6 C atoms, and alkenyl and alkenyl* each, independently of one another, denote a straight-chain alkenyl radical having 2-7 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Preferably the the component B) or LC host mixture comprises one or more compounds selected from formulae AN1, AN2, AN3 and AN6, very preferably one or more compounds of formula AN1. In another preferred embodiment the component B) or LC host mixture comprises one or more compounds of formula AN selected from the following sub-formulae: 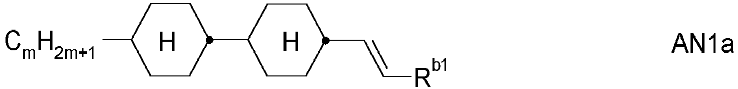 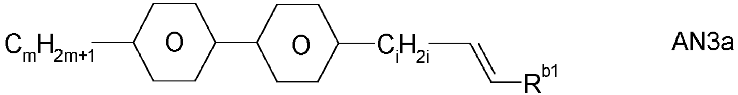 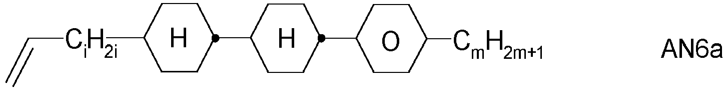 in which m denotes 1, 2, 3, 4, 5 or 6, i denotes 0, 1, 2 or 3, and R^{b1} denotes H, CH₃ or C₂H₅.
   In another preferred embodiment the component B) or LC host mixture comprises one or more compounds selected from the following sub-formulae: 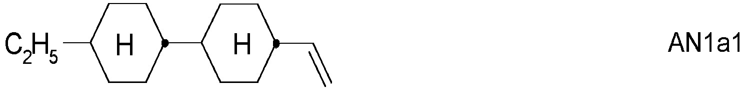 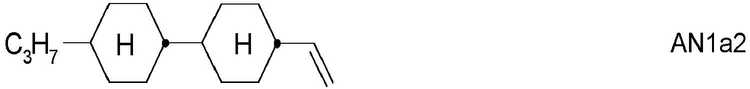 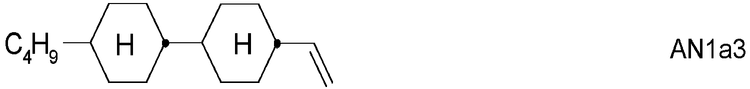 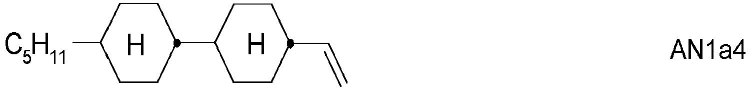 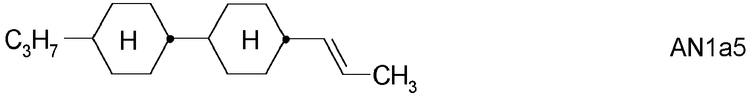
   Most preferred are compounds of formula AN1a2 and AN1a5. In another preferred embodiment the component B) or LC host mixture comprises one or more compounds of formula AY selected from the following sub-formulae: 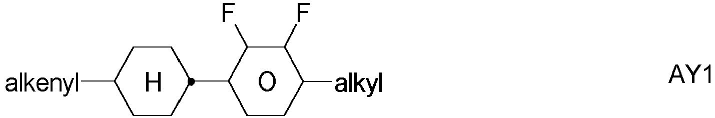 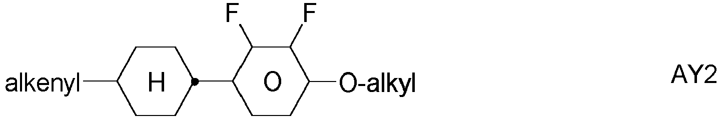 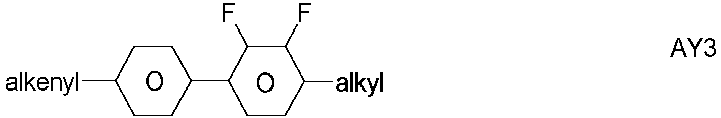 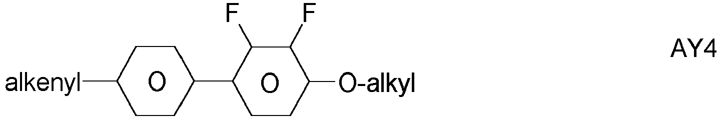 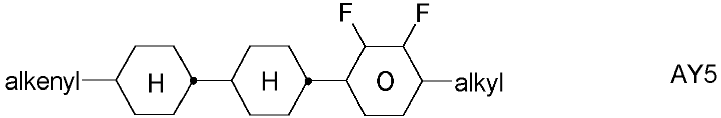 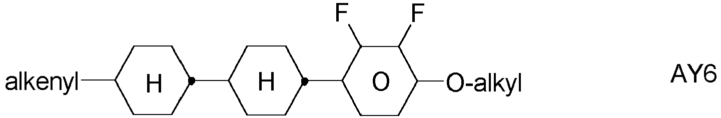 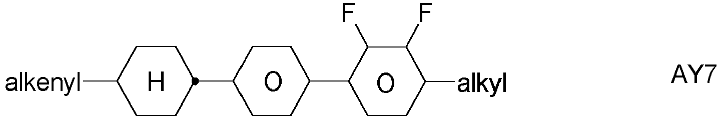 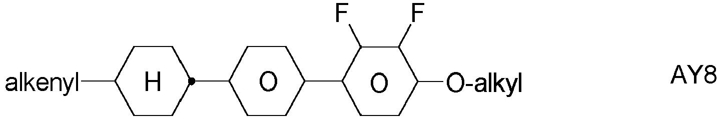 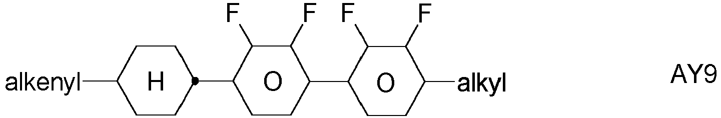 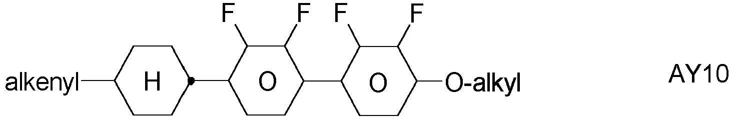 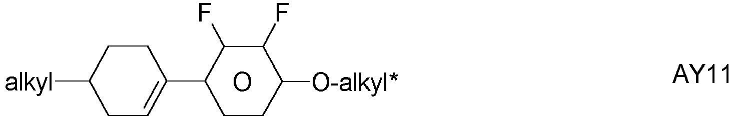 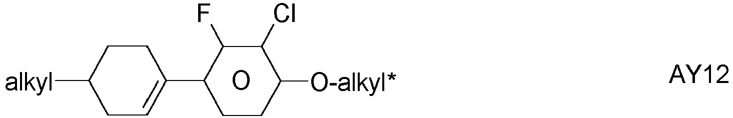 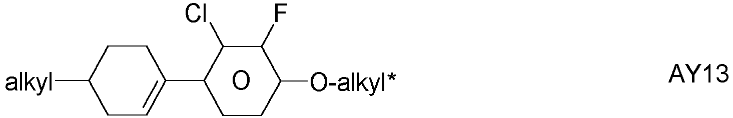 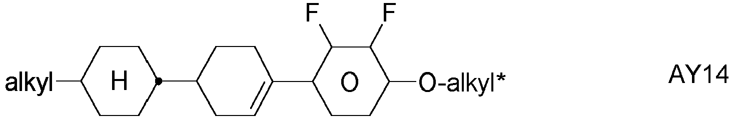 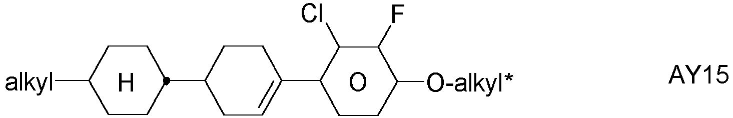 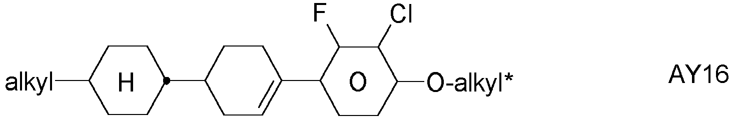 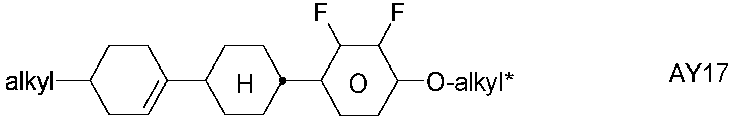 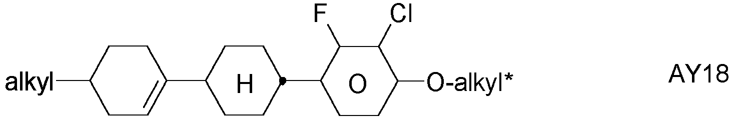 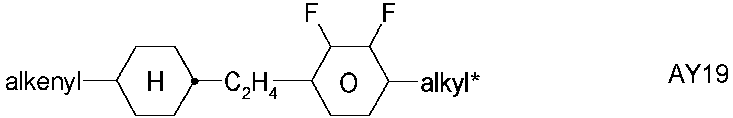 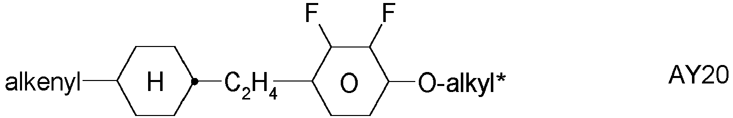 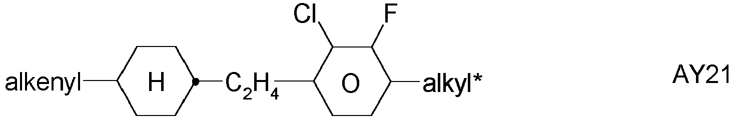 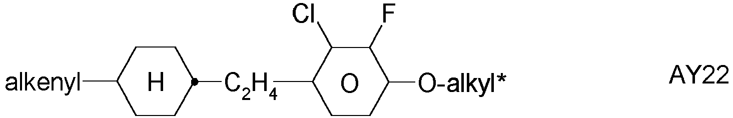 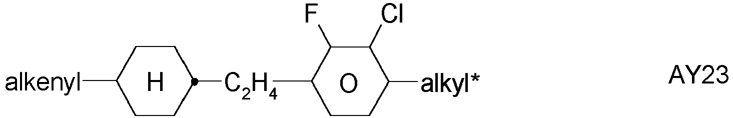 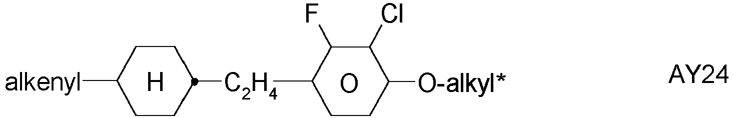 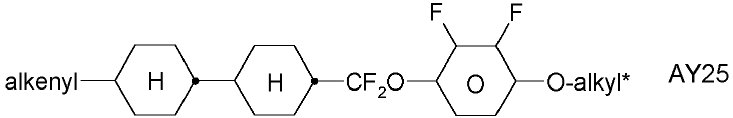 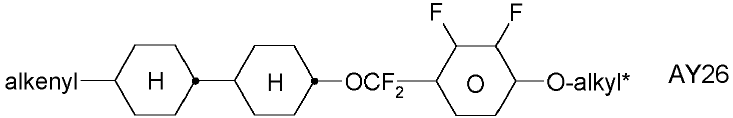 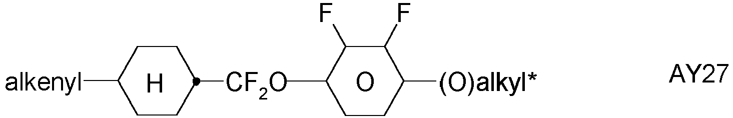 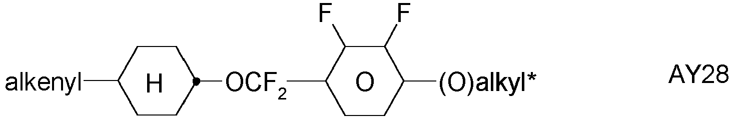 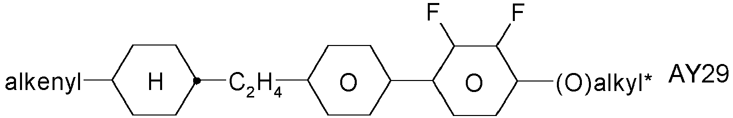 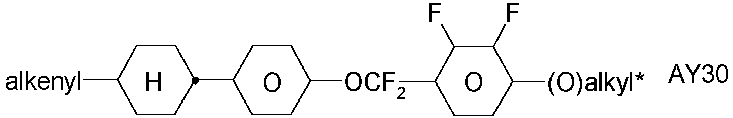 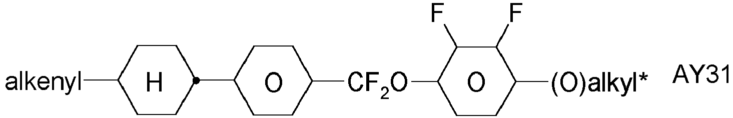 in which alkyl and alkyl* each, independently of one another, denote a straight-chain alkyl radical having 1-6 C atoms, "(O)" denotes an O-atom or a single bond, and alkenyl and alkenyl* each, independently of one another, denote a straight-chain alkenyl radical having 2-7 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   In another preferred embodiment the component B) or LC host mixture comprises one or more compounds of formula AY selected from the following sub-formulae: 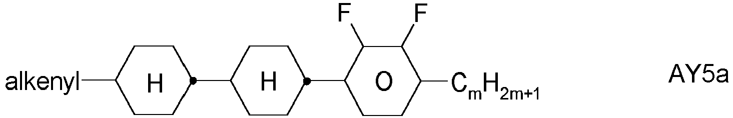 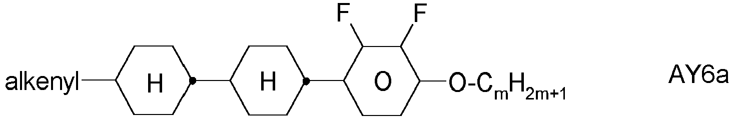 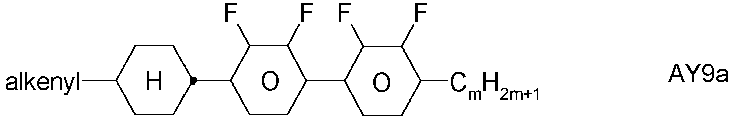 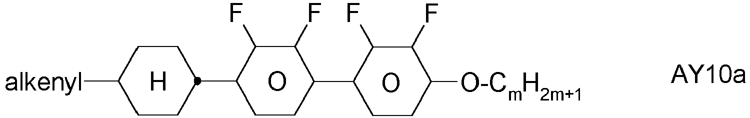 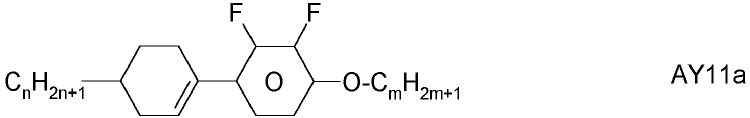 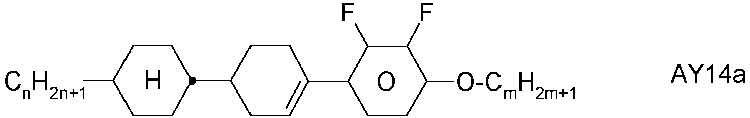 in which m and n each, independently of one another, denote 1, 2, 3, 4, 5 or 6, and alkenyl denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Preferably the proportion of compounds of formula AN and AY in the LC medium is from 2 to 70% by weight, very preferably from 5 to 60% by weight, most preferably from 10 to 50% by weight.
   Preferably the LC medium or LC host mixture contains 1 to 5, preferably 1, 2 or 3 compounds selected from formulae AN and AY.
   In another preferred embodiment of the present invention the LC medium comprises one or more compounds of formula AY14, very preferably of AY14a. The proportion of compounds of formula AY14 or AY14a in the LC medium is preferably 3 to 20% by weight.
   The addition of alkenyl compounds of formula AN and/or AY enables a reduction of the viscosity and response time of the LC medium.
c) LC medium wherein the component B) or LC host mixture comprises one or more compounds of the following formula: 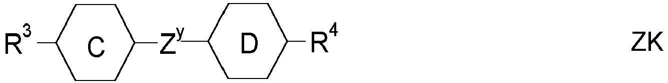 in which the individual radicals have the following meanings: 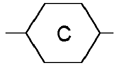 denotes 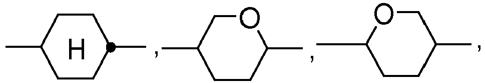 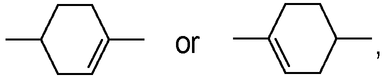 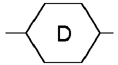 denotes 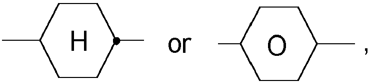
   - R³ and R⁴: each, independently of one another, denote alkyl having 1 to 12 C atoms, in which, in addition, one or two non-adjacent CH₂ groups may be replaced by -O-, -CH=CH-, -CO-, -O-CO-or -CO-O- in such a way that O atoms are not linked directly to one another,
   - Z^{y}: denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O-or a single bond, preferably a single bond.
   The compounds of the formula ZK are preferably selected from the group consisting of the following sub-formulae: 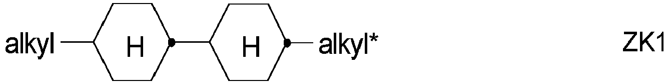 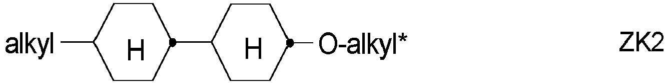 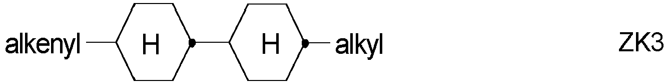 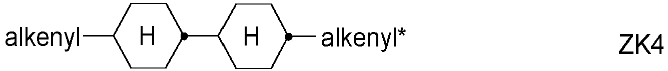 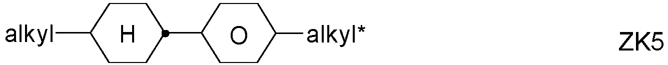 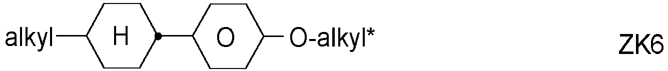 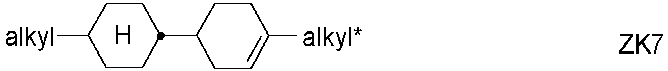 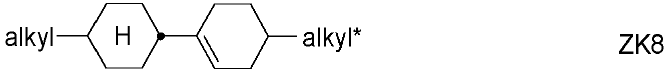 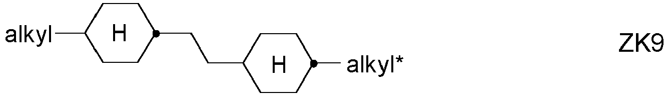 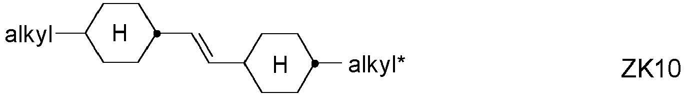 in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Especially preferred are compounds of formula ZK1. Particularly preferred compounds of formula ZK are selected from the following sub-formulae: 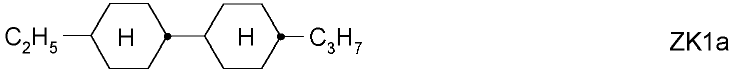 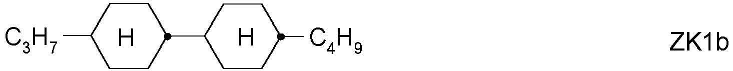 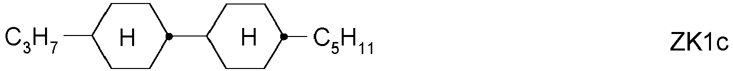 wherein the propyl, butyl and pentyl groups are straight-chain groups.
   Most preferred are compounds of formula ZK1a.
d) LC medium wherein component B) or the LC host mixture additionally comprises one or more compounds of the following formula: 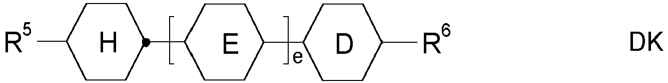 in which the individual radicals on each occurrence, identically or differently, have the following meanings:
   - R⁵ and R⁶: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms, 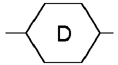 denotes 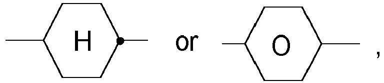 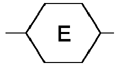 denotes 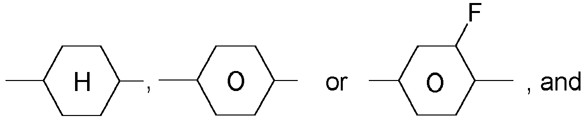
   - e: denotes 1 or 2.
   The compounds of the formula DK are preferably selected from the group consisting of the following sub-formulae: 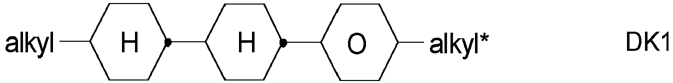 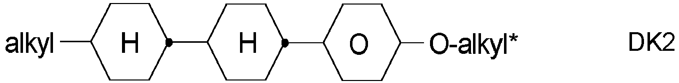 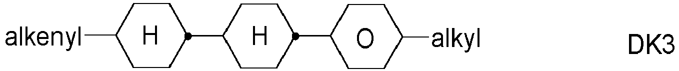 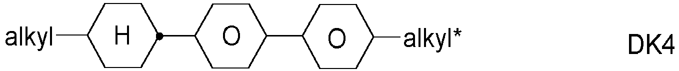 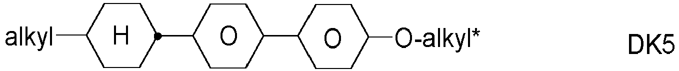 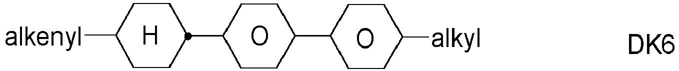 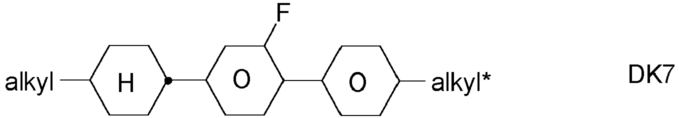 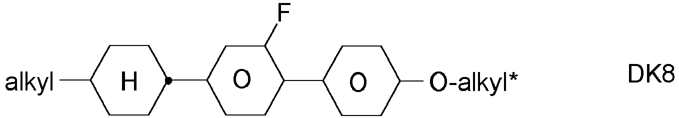 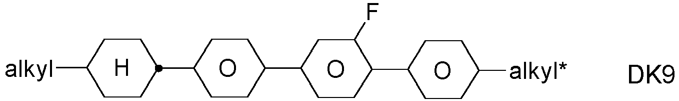 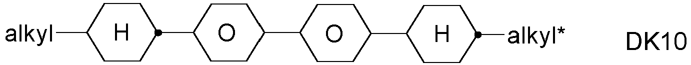 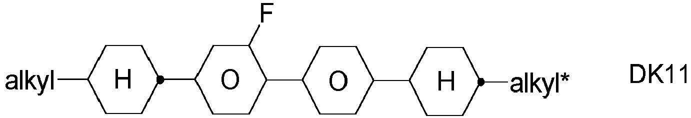 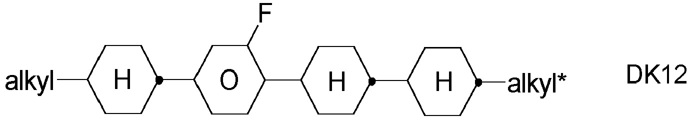 in which alkyl and alkyl* each, independently of one another, denote a straight-chain alkyl radical having 1-6 C atoms, and alkenyl denotes a straight-chain alkenyl radical having 2-6 C atoms. Alkenyl preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
e) LC medium wherein component B) or the LC host mixture additionally comprises one or more compounds of the following formula: 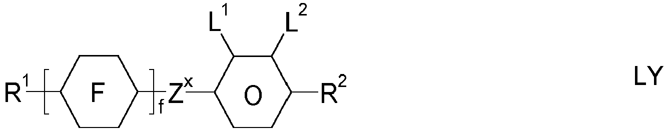 in which the individual radicals have the following meanings: 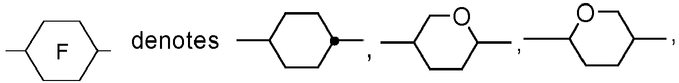 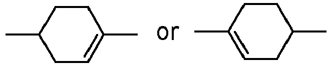 with at least one ring F being different from cyclohexylene,
   - f: denotes 1 or 2,
   - R¹ and R²: each, independently of one another, denote alkyl having 1 to 12 C atoms, where, in addition, one or two non-adjacent CH₂ groups may be replaced by -O-, -CH=CH-, -CO-, -OCO-or -COO- in such a way that O atoms are not linked directly to one another,
   - Z^{x}: denotes -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond, preferably a single bond,
   - L¹ and L²: each, independently of one another, denote F, Cl, OCF₃, CF₃, CH₃, CH₂F, CHF₂.

   Preferably, both radicals L¹ and L² denote F or one of the radicals L¹ and L² denotes F and the other denotes CI. The compounds of the formula LY are preferably selected from the group consisting of the following sub-formulae: 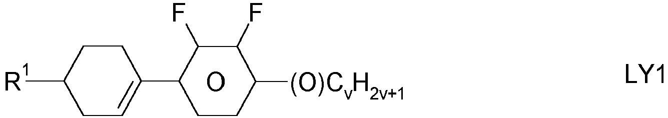 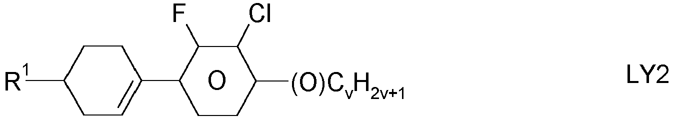 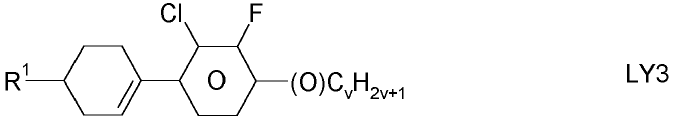 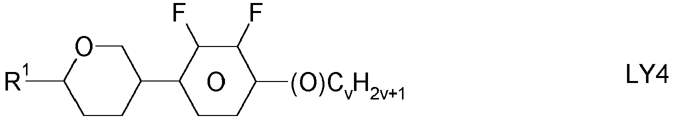 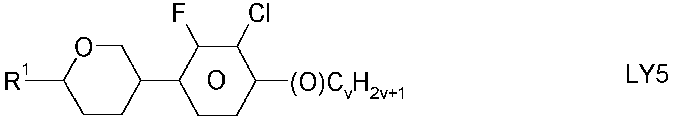 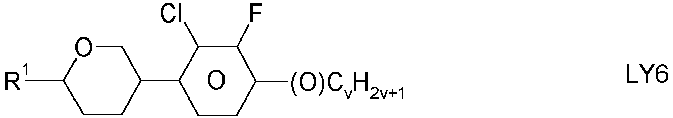 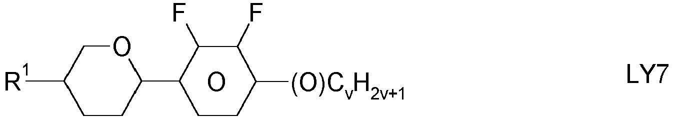 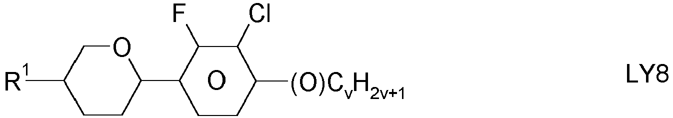 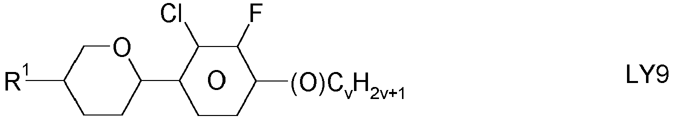 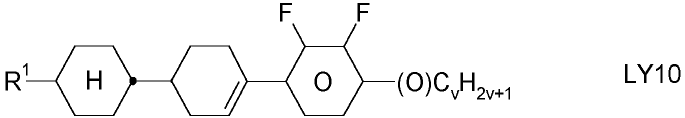 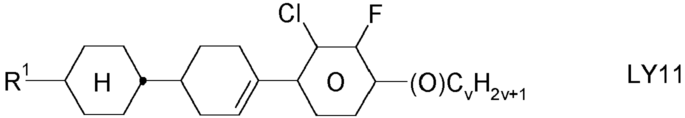 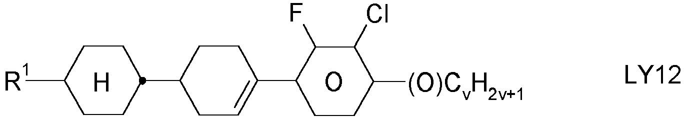 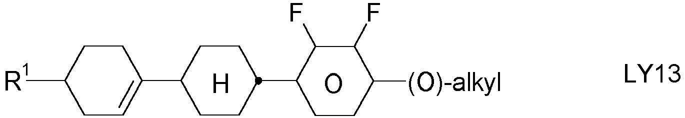 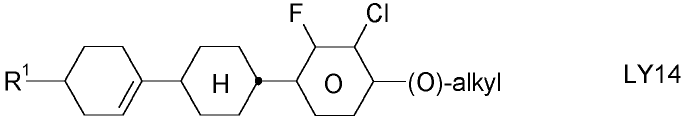 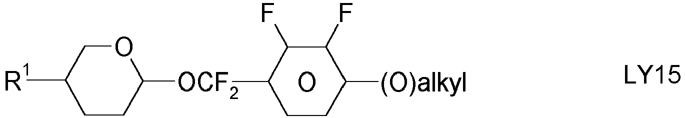 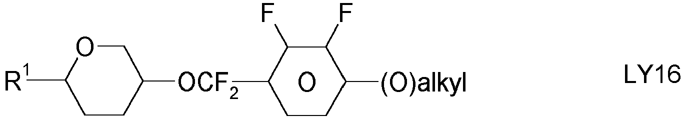 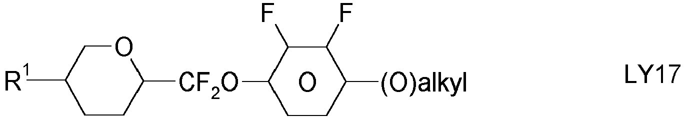 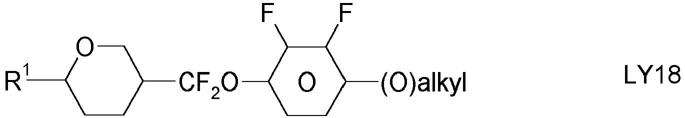 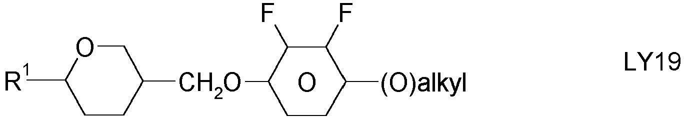 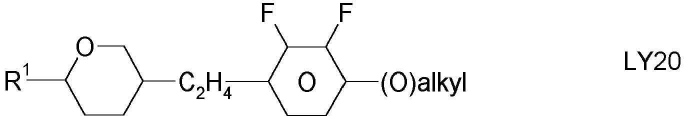 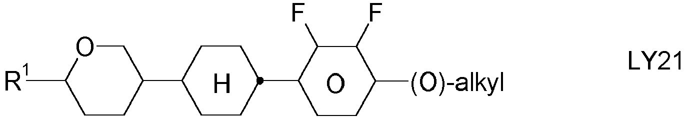 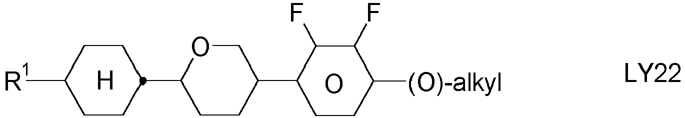 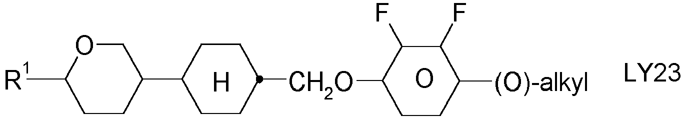 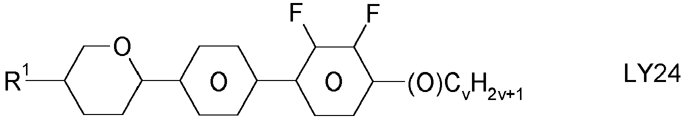 in which R¹ has the meaning indicated above, alkyl denotes a straight-chain alkyl radical having 1-6 C atoms, (O) denotes an oxygen atom or a single bond, and v denotes an integer from 1 to 6. R¹ preferably denotes straight-chain alkyl having 1 to 6 C atoms or straight-chain alkenyl having 2 to 6 C atoms, in particular CH₃, C₂H₅, n-C₃H₇, n-C₄H₉, n-C₅H₁₁, CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
f) LC medium wherein component B) or the LC host mixture additionally comprises one or more compounds selected from the group consisting of the following formulae: 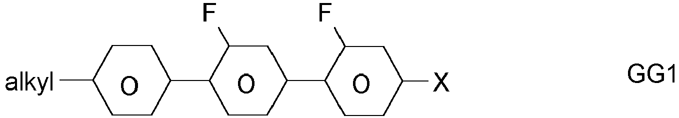 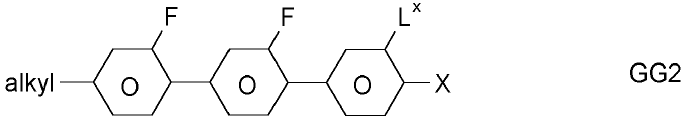 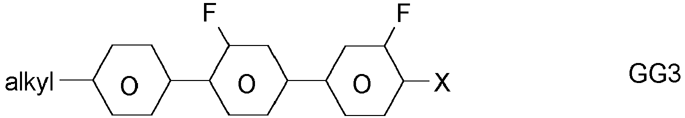 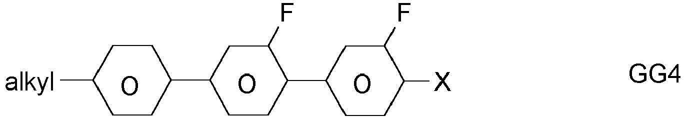 in which alkyl denotes C₁₋₆-alkyl, L^{x} denotes H or F, and X denotes F, Cl, OCF₃, OCHF₂ or OCH=CF₂. Particular preference is given to compounds of the formula GG1 in which X denotes F.
g) LC medium wherein component B) or the LC host mixture additionally comprises one or more compounds selected from the group consisting of the following formulae: 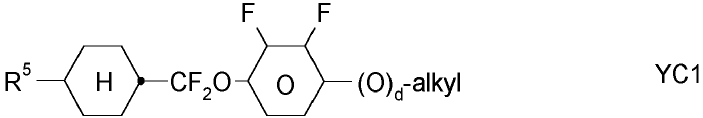 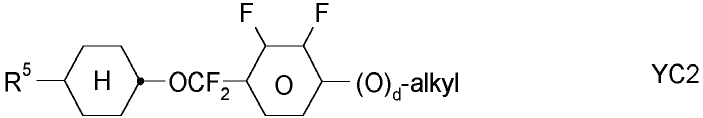 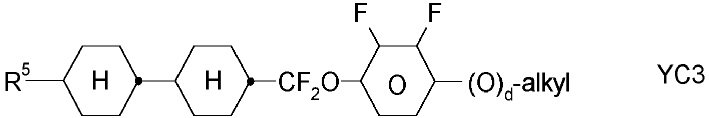 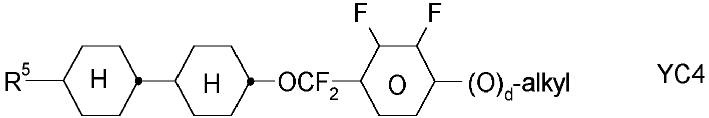 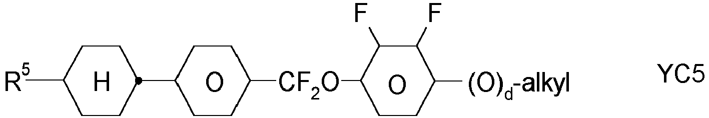 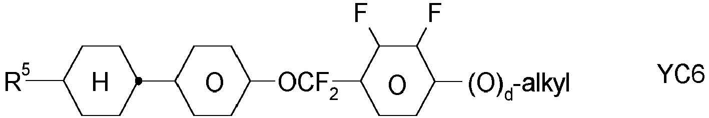 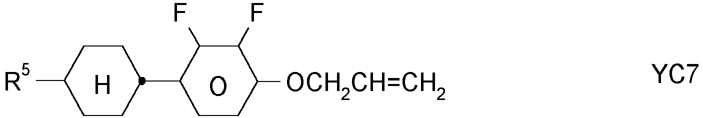 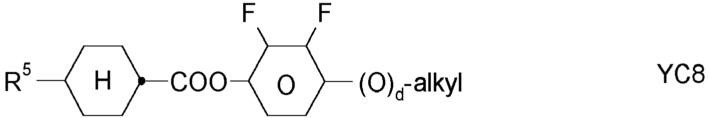 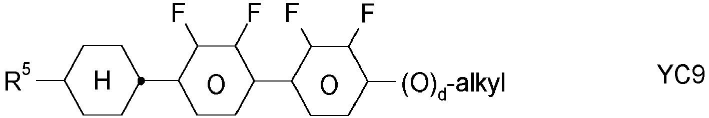 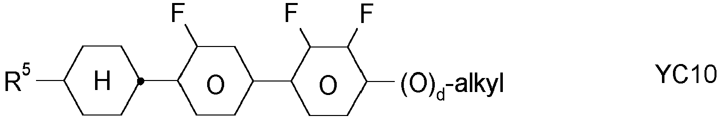 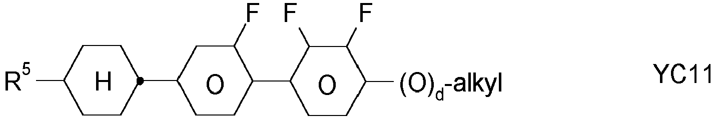 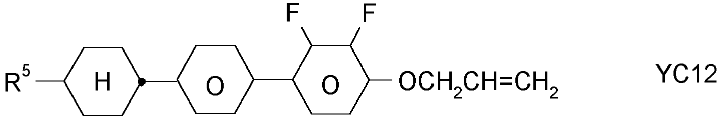 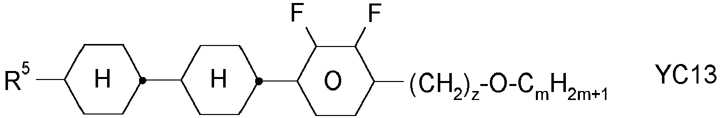 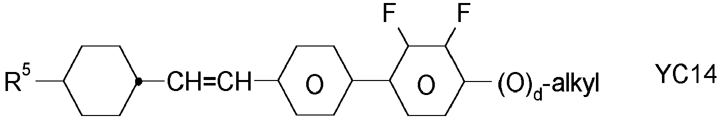 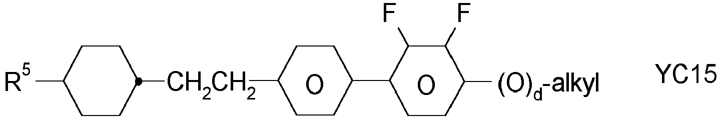 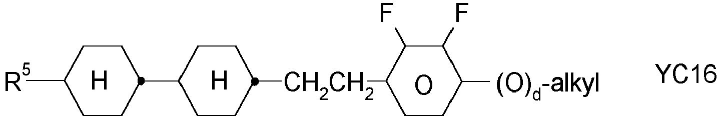 in which R⁵ has one of the meanings indicated above for R¹, alkyl denotes C₁₋₆-alkyl, d denotes 0 or 1, and z and m each, independently of one another, denote an integer from 1 to 6. R⁵ in these compounds is particularly preferably C₁₋₆-alkyl or -alkoxy or C₂₋₆-alkenyl, d is preferably 1. The LC medium according to the invention preferably comprises one or more compounds of the above-mentioned formulae in amounts of ≥ 5% by weight.
h) LC medium wherein component B) or the LC host mixture additionally comprises one or more biphenyl compounds selected from the group consisting of the following formulae: 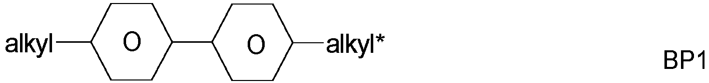 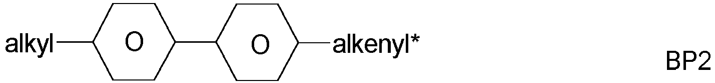 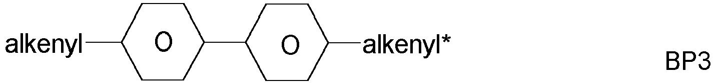 in which alkyl and alkyl* each, independently of one another, denote a straight-chain alkyl radical having 1-6 C atoms, and alkenyl and alkenyl* each, independently of one another, denote a straight-chain alkenyl radical having 2-6 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   The proportion of the biphenyls of the formulae BP1 to BP3 in the LC host mixture is preferably at least 3% by weight, in particular ≥ 5% by weight.
   The compounds of the formula BP2 are particularly preferred. The compounds of the formulae BP1 to BP3 are preferably selected from the group consisting of the following sub-formulae: 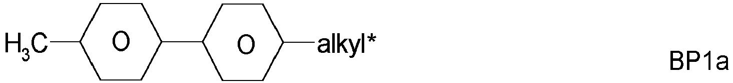 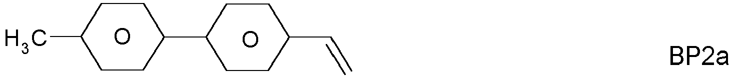 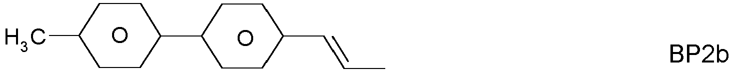 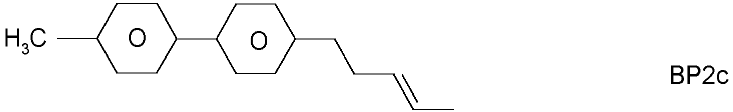 in which alkyl* denotes an alkyl radical having 1-6 C atoms. The medium according to the invention particularly preferably comprises one or more compounds of the formulae BP1a and/or BP2c.
i) LC medium wherein component B) or the LC host mixture additionally comprises one or more terphenyl compounds of the following formula: 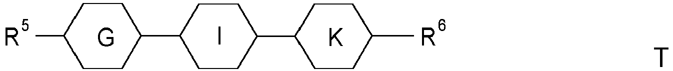 in which R⁵ and R⁶ each, independently of one another, have one of the meanings indicated above, and 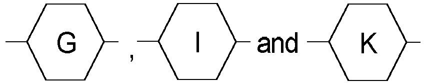 each, independently of one another, denote 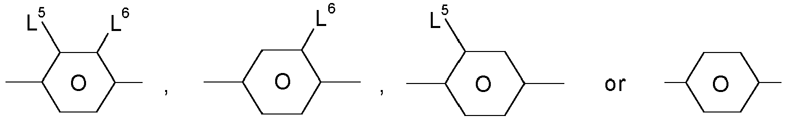 in which L⁵ denotes F or Cl, preferably F, and L⁶ denotes F, Cl, OCF₃, CF₃, CH₃, CH₂F or CHF₂, preferably F.
   The compounds of the formula T are preferably selected from the group consisting of the following sub-formulae: 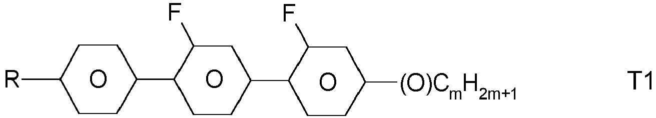 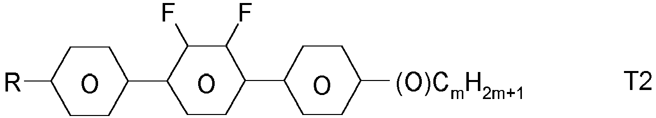 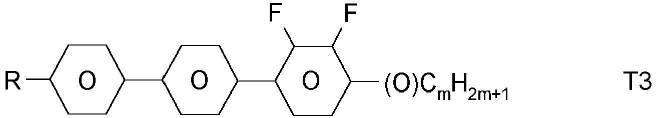 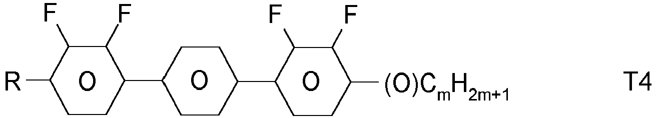 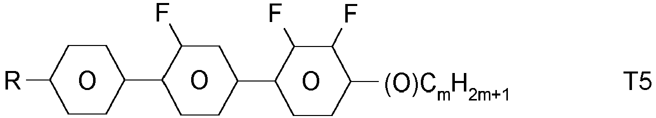 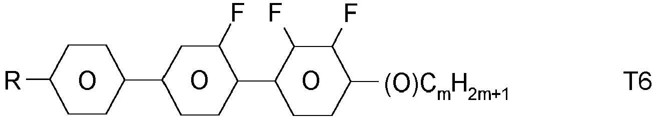 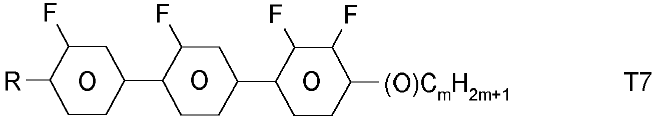 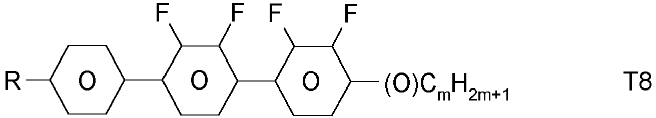 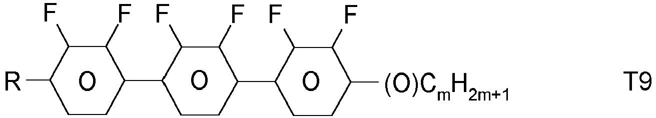 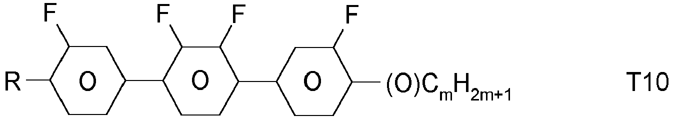 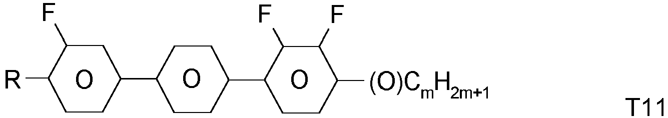 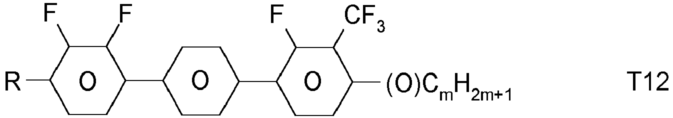 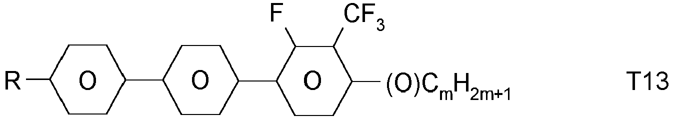 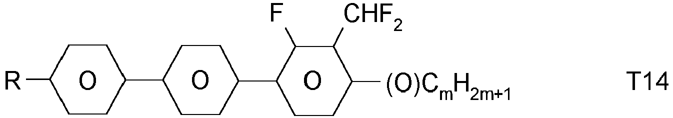 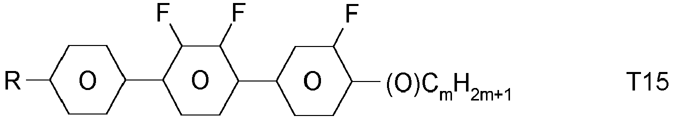 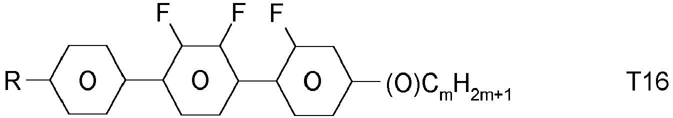 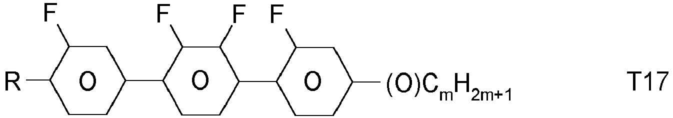 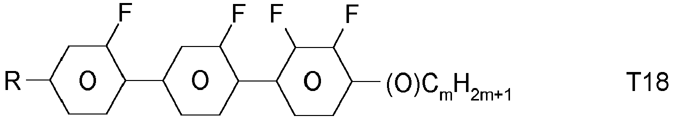 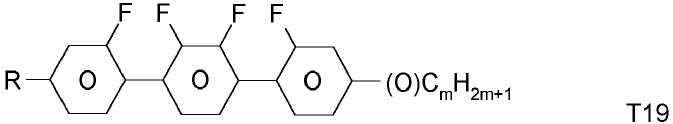 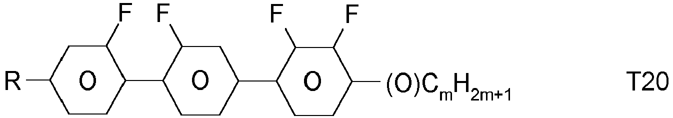 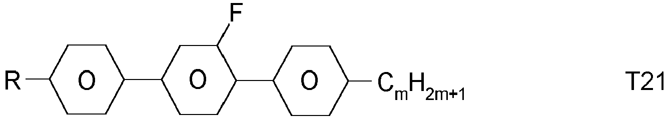 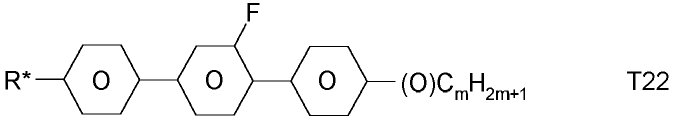 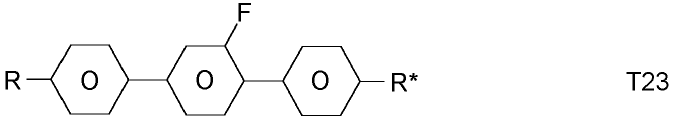 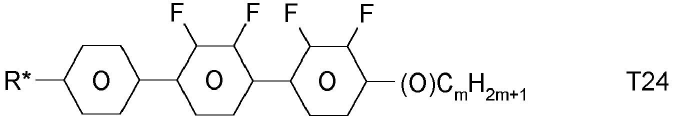 in which R denotes a straight-chain alkyl or alkoxy radical having 1-7 C atoms, R* denotes a straight-chain alkenyl radical having 2-7 C atoms, (O) denotes an oxygen atom or a single bond, and m denotes an integer from 1 to 6. R* preferably denotes CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   R preferably denotes methyl, ethyl, propyl, butyl, pentyl, hexyl, methoxy, ethoxy, propoxy, butoxy or pentoxy.
   The LC host mixture according to the invention preferably comprises the terphenyls of the formula T and the preferred sub-formulae thereof in an amount of 0.5-30% by weight, in particular 1-20% by weight.
   Particular preference is given to compounds of the formulae T1, T2, T3 and T21. In these compounds, R preferably denotes alkyl, furthermore alkoxy, each having 1-5 C atoms.
   The terphenyls are preferably employed in LC media according to the invention if the Δn value of the mixture is to be ≥ 0.1. Preferred LC media comprise 2-20% by weight of one or more terphenyl compounds of the formula T, preferably selected from the group of compounds T1 to T22.
k) LC medium wherein component B) or the LC host mixture additionally comprises one or more quaterphenyl compounds selected from the group consisting of the following formulae: 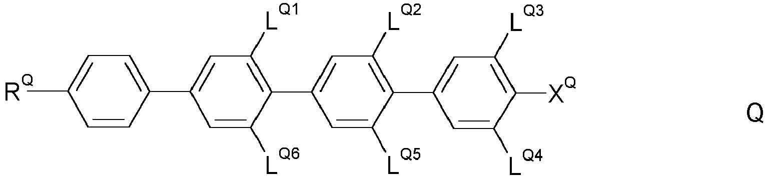 wherein
   - R^{Q}: is alkyl, alkoxy, oxaalkyl or alkoxyalkyl having 1 to 9 C atoms or alkenyl or alkenyloxy having 2 to 9 C atoms, all of which are optionally fluorinated,
   - X^{Q}: is F, CI, halogenated alkyl or alkoxy having 1 to 6 C atoms or halogenated alkenyl or alkenyloxy having 2 to 6 C atoms,
   - L^{Q1} to L^{Q6}: independently of each other are H or F, with at least one of L^{Q1} to L^{Q6} being F.

   Preferred compounds of formula Q are those wherein R^{Q} denotes straight-chain alkyl with 2 to 6 C-atoms, very preferably ethyl, n-propyl or n-butyl.
   Preferred compounds of formula Q are those wherein L^{Q3} and L^{Q4} are F. Further preferred compounds of formula Q are those wherein L^{Q3}, L^{Q4} and one or two of L^{Q1} and L^{Q2} are F.
   Preferred compounds of formula Q are those wherein X^{Q} denotes F or OCF₃, very preferably F. The compounds of formula Q are preferably selected from the following subformulae 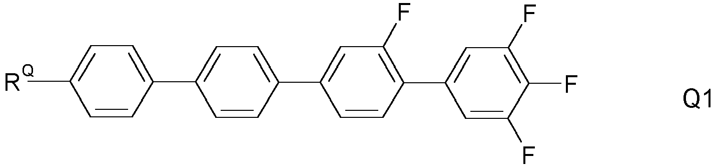 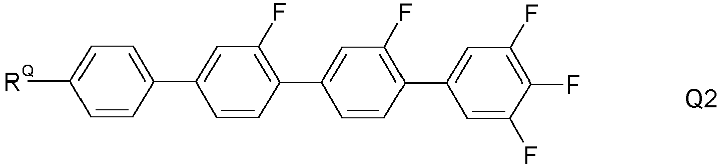 wherein R^{Q} has one of the meanings of formula Q or one of its preferred meanings given above and below, and is preferably ethyl, n-propyl or n-butyl.
   Especially preferred are compounds of formula Q1, in particular those wherein R^{Q} is n-propyl.
   Preferably the proportion of compounds of formula Q in the LC host mixture is from >0 to ≤5% by weight, very preferably from 0.1 to 2% by weight, most preferably from 0.2 to 1.5% by weight.
   Preferably the LC host mixture contains 1 to 5, preferably 1 or 2 compounds of formula Q.
   The addition of quaterphenyl compounds of formula Q to the LC host mixture enables to reduce ODF mura, whilst maintaining high UV absorption, enabling quick and complete polymerisation, enabling strong and quick tilt angle generation, and increasing the UV stability of the LC medium.
   Besides, the addition of compounds of formula Q, which have positive dielectric anisotropy, to the LC medium with negative dielectric anisotropy allows a better control of the values of the dielectric constants ε_{||} and ε_{⊥}, and in particular enables to achieve a high value of the dielectric constant ε_{||} while keeping the dielectric anisotropy Δε constant, thereby reducing the kick-back voltage and reducing image sticking.
I) LC medium wherein component B) or the LC host mixture additionally comprises one or more compounds of formula CC: 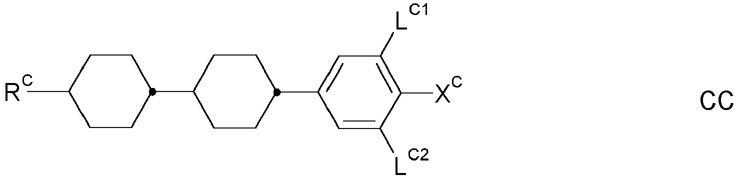 wherein
   - R^{C}: denotes alkyl, alkoxy, oxaalkyl or alkoxyalkyl having 1 to 9 C atoms or alkenyl or alkenyloxy having 2 to 9 C atoms, all of which are optionally fluorinated,
   - X^{C}: denotes F, CI, halogenated alkyl or alkoxy having 1 to 6 C atoms or halogenated alkenyl or alkenyloxy having 2 to 6 C atoms,
   - L^{C1}, L^{C2}: independently of each other denote H or F, with at least one of L^{C1} and L^{C2} being F.

   Preferred compounds of formula CC are those wherein R^{C} denotes straight-chain alkyl with 2 to 6 C-atoms, very preferably ethyl, n-propyl or n-butyl.
   Preferred compounds of formula CC are those wherein L^{C1} and L^{C2} are F.
   Preferred compounds of formula CC are those wherein X^{c} denotes F or OCF₃, very preferably F. Preferred compounds of formula CC are selected from the following formula 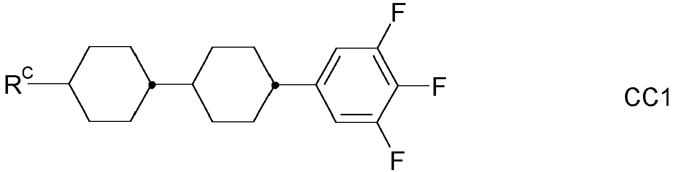 wherein R^{c} has one of the meanings of formula CC or one of its preferred meanings given above and below, and is preferably ethyl, n-propyl or n-butyl, very preferably n-propyl.
   Preferably the proportion of compounds of formula CC in the LC host mixture is from >0 to ≤ 10% by weight, very preferably from 0.1 to 8% by weight, most preferably from 0.2 to 5% by weight.
   Preferably the LC host mixture contains 1 to 5, preferably 1, 2 or 3 compounds of formula CC.
   The addition of compounds of formula CC, which have positive dielectric anisotropy, to the LC medium with negative dielectric anisotropy allows a better control of the values of the dielectric constants ε_{∥} and ε_{⊥}, and in particular enables to achieve a high value of the dielectric constant ε_{∥} while keeping the dielectric anisotropy Δε constant, thereby reducing the kick-back voltage and reducing image sticking. Besides, the addition of compounds of formula CC enables to reduce the viscosity and the response time of the LC medium.
m) LC medium wherein component B) or the LC host mixture additionally comprises one or more compounds selected from the group consisting of the following formulae: 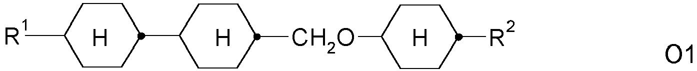 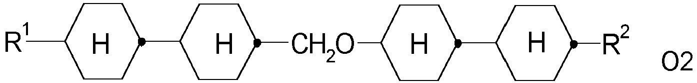 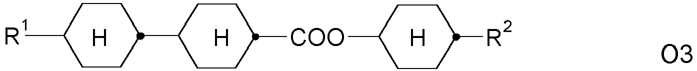 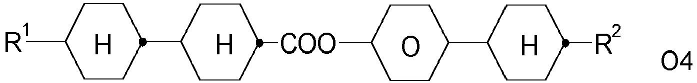 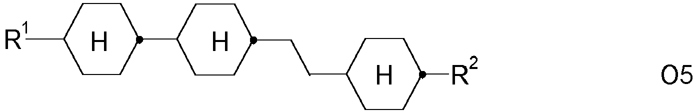 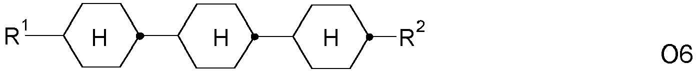 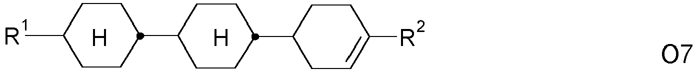 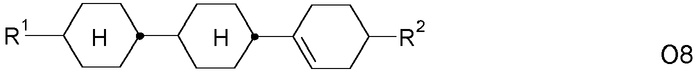 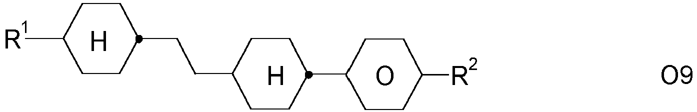 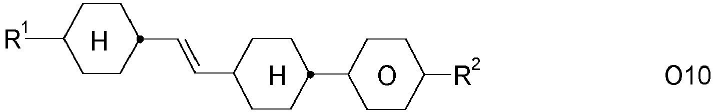 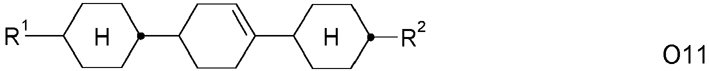 in which R¹ and R² have the meanings indicated above and preferably each, independently of one another, denote straight-chain alkyl having 1 to 6 C atoms or straight-chain alkenyl having 2 to 6 C atoms.
   Preferred media comprise one or more compounds selected from the formulae O1, O3 and O4.
n) LC medium wherein component B) or the LC host mixture additionally comprises one or more compounds of the following formula: 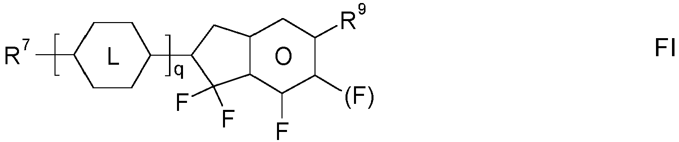 in which 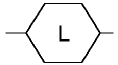 denotes 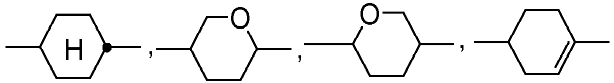 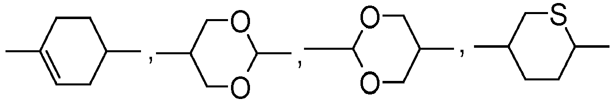 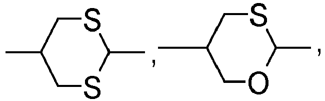 R⁹ denotes H, CH₃, C₂H₅ or n-C₃H₇, (F) denotes an optional fluorine substituent, and q denotes 1, 2 or 3, and R⁷ has one of the meanings indicated for R¹, preferably in amounts of > 3% by weight, in particular ≥ 5% by weight and very particularly preferably 5-30% by weight.
   Particularly preferred compounds of the formula FI are selected from the group consisting of the following sub-formulae: 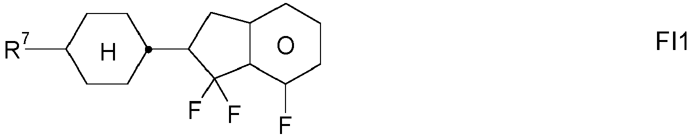 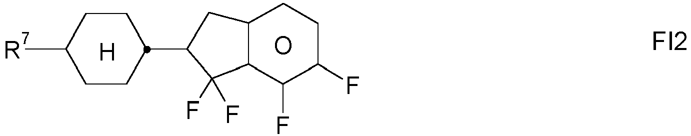 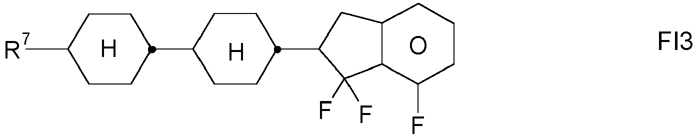 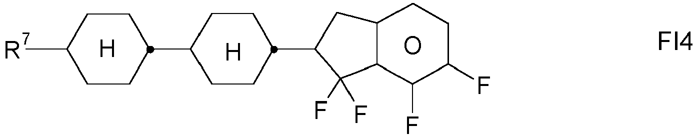 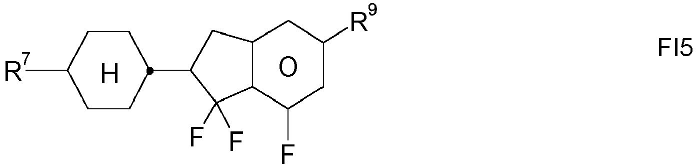 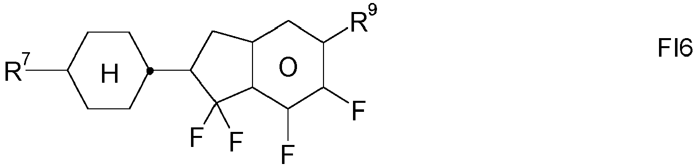 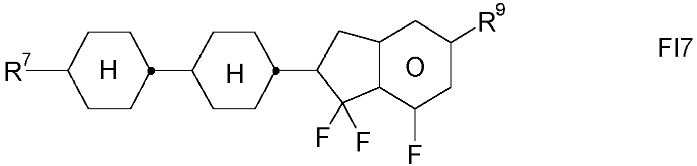 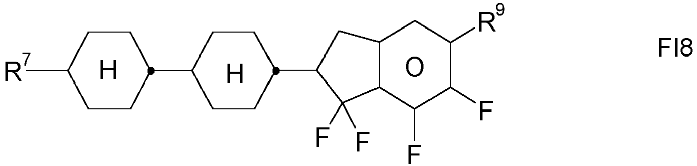 in which R⁷ preferably denotes straight-chain alkyl, and R⁹ denotes CH₃, C₂H₅ or n-C₃H₇. Particular preference is given to the compounds of the formulae FI1, FI2 and FI3.
o) LC medium wherein component B) or the LC host mixture additionally comprises one or more compounds selected from the group consisting of the following formulae: 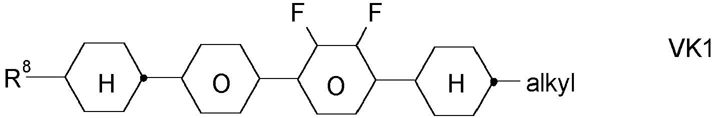 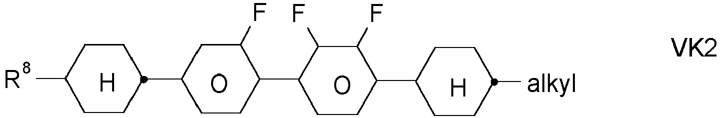 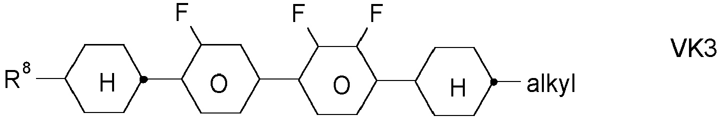 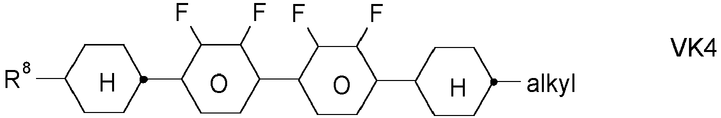 in which R⁸ has the meaning indicated for R¹, and alkyl denotes a straight-chain alkyl radical having 1-6 C atoms.
p) LC medium wherein component B) or the LC host mixture additionally comprises one or more compounds which contain a tetrahydronaphthyl or naphthyl unit, such as, for example, the compounds selected from the group consisting of the following formulae: 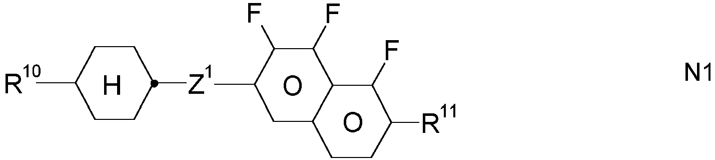 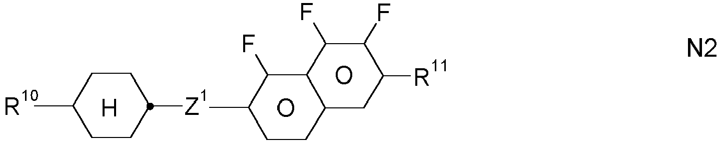 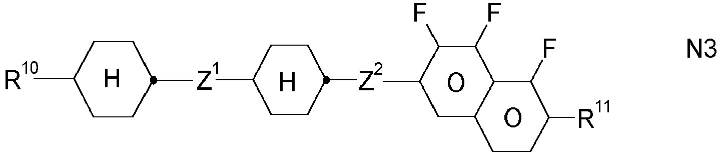 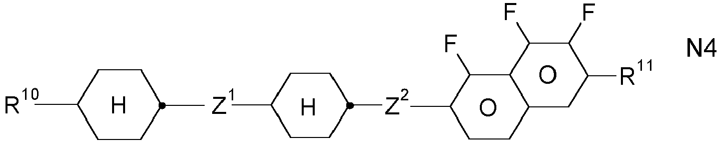 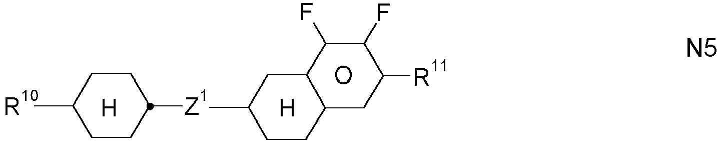 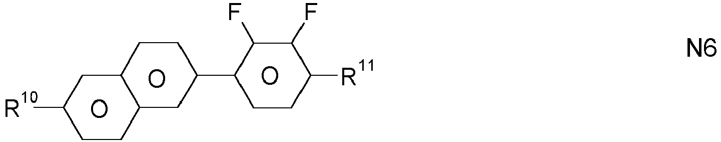 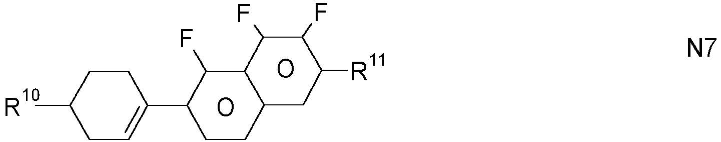 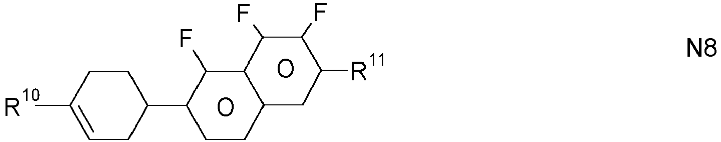 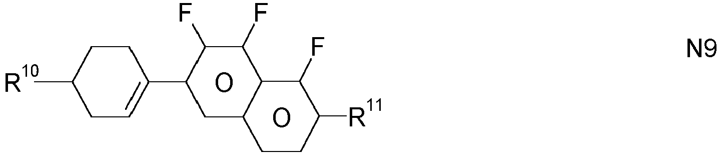 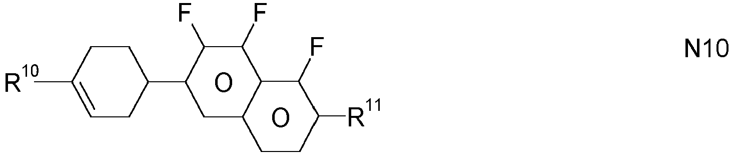 in which
   R¹⁰ and R¹¹ each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
   and R¹⁰ and R¹¹ preferably denote straight-chain alkyl or alkoxy having 1 to 6 C atoms or straight-chain alkenyl having 2 to 6 C atoms, and
   Z¹ and Z² each, independently of one another, denote -C₂H₄-, -CH=CH-, -(CH₂)₄-, -(CH₂)₃O-, -O(CH₂)₃-, -CH=CH-CH₂CH₂-, -CH₂CH₂CH=CH-, -CH₂O-, -OCH₂-, -CO-O-, -O-CO-, -C₂F₄-, -CF=CF-, -CF=CH-, -CH=CF-, -CH₂- or a single bond.
q) LC medium wherein component B) or the LC host mixture additionally comprises one or more difluorodibenzochromans and/or chromans of the following formulae: 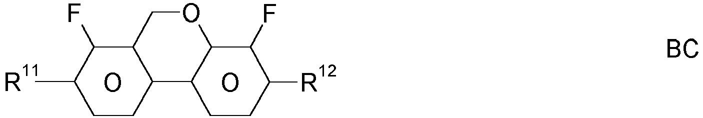 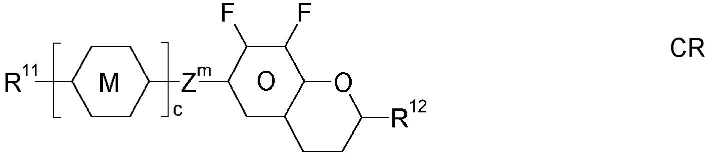 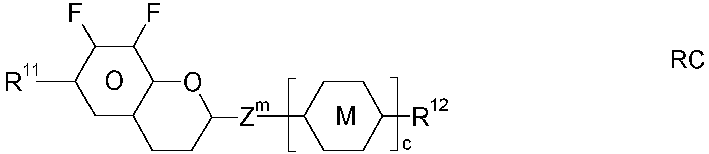 in which
   - R¹¹ and R¹²: each, independently of one another, have one of the meanings indicated above for R¹¹,
   - ring M: is trans-1,4-cyclohexylene or 1,4-phenylene,
   - z^{m}: -C₂H₄-, -CH₂O-, -OCH₂-, -CO-O- or -O-CO-,
   - c: is 0, 1 or 2,
   preferably in amounts of 3 to 20% by weight, in particular in amounts of 3 to 15% by weight.
   Particularly preferred compounds of the formulae BC, CR and RC are selected from the group consisting of the following sub-formulae: 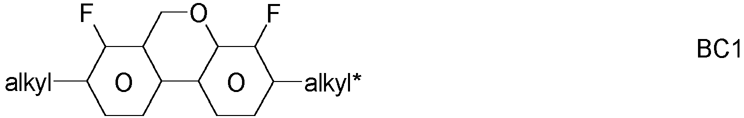 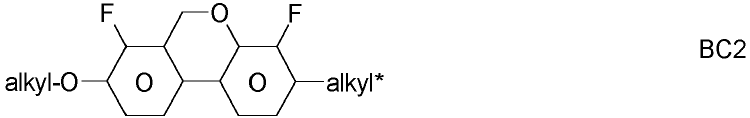 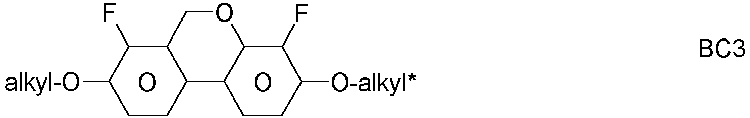 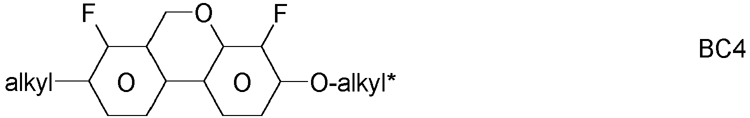 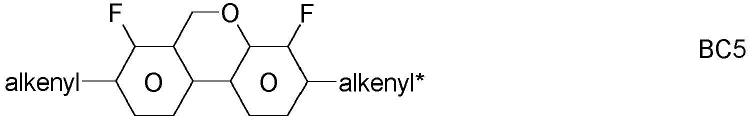 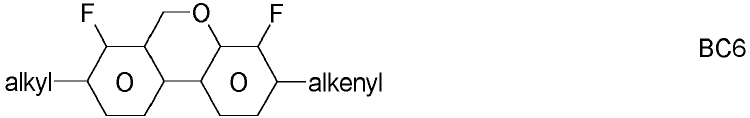 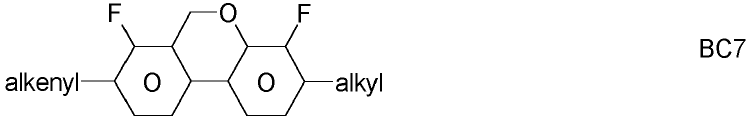 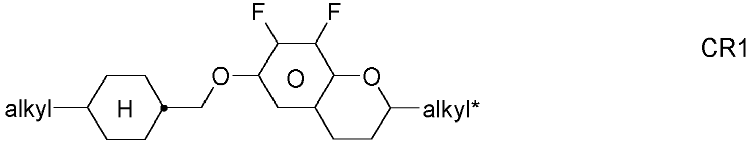 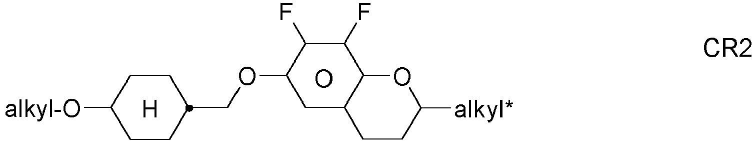 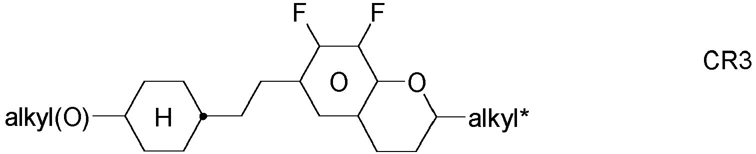 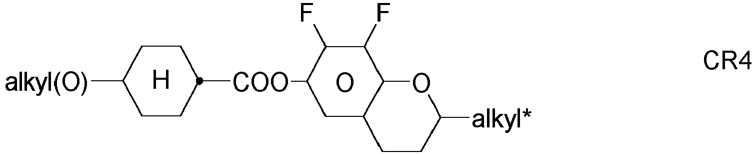 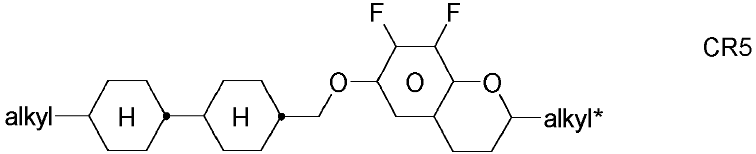 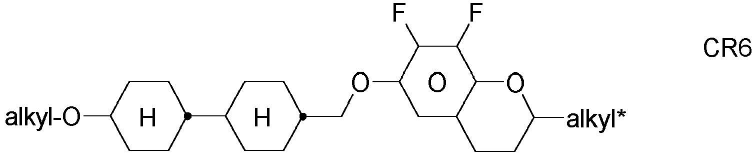 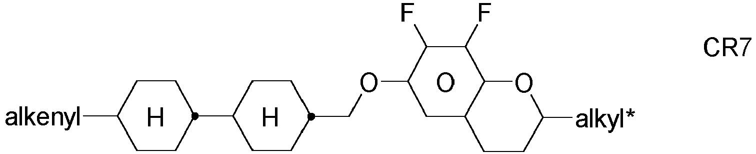 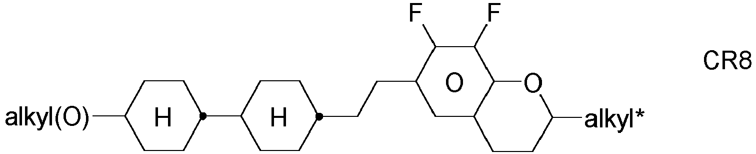 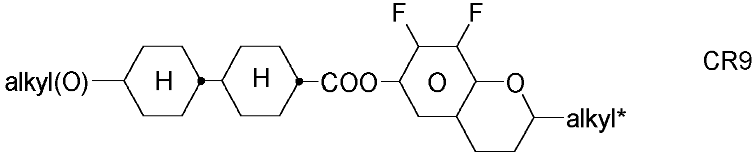 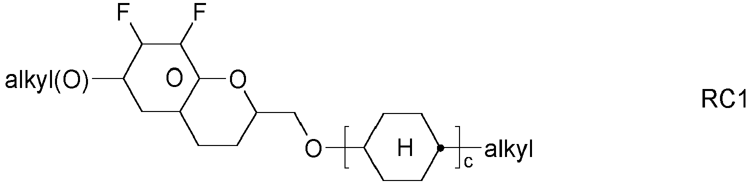 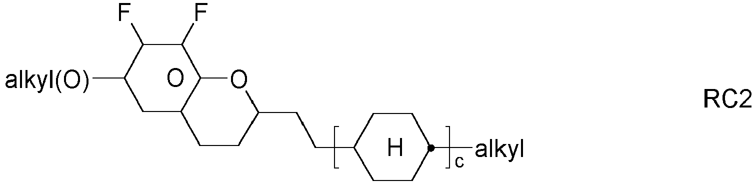 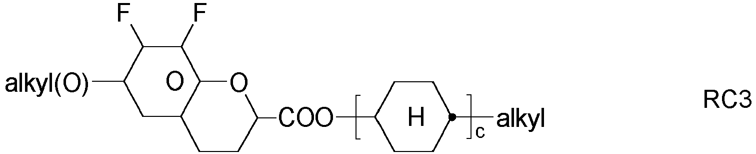 in which alkyl and alkyl* each, independently of one another, denote a straight-chain alkyl radical having 1-6 C atoms, (O) denotes an oxygen atom or a single bond, c is 1 or 2, and alkenyl and alkenyl* each, independently of one another, denote a straight-chain alkenyl radical having 2-6 C atoms. Alkenyl and alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Very particular preference is given to LC host mixtures comprising one, two or three compounds of the formula BC-2.
r) LC medium wherein component B) or the LC host mixture additionally comprises one or more fluorinated phenanthrenes and/or dibenzofurans of the following formulae: 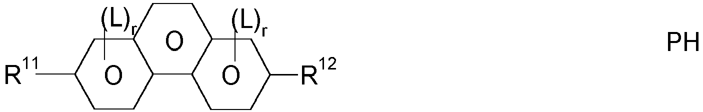 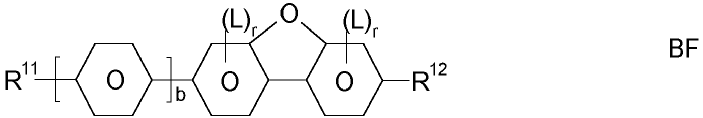 in which R¹¹ and R¹² each, independently of one another, have one of the meanings indicated above for R¹¹, b denotes 0 or 1, L denotes F, and r denotes 1, 2 or 3.
   Particularly preferred compounds of the formulae PH and BF are selected from the group consisting of the following sub-formulae: 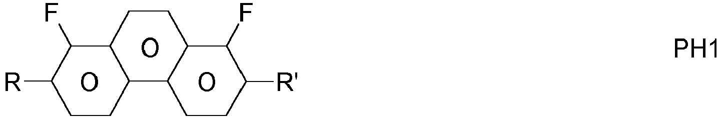 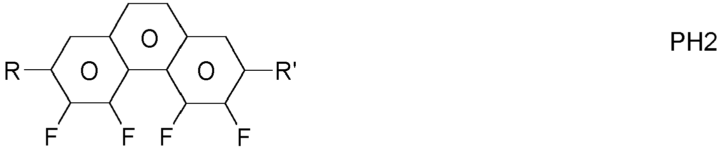 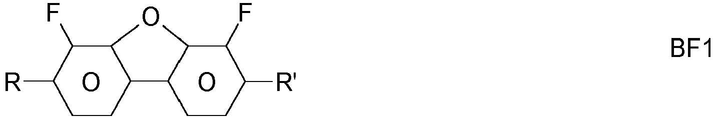 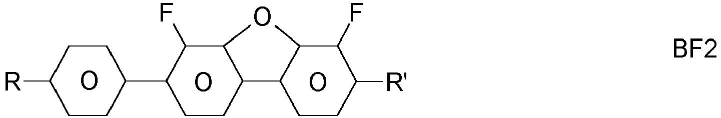 in which R and R' each, independently of one another, denote a straight-chain alkyl or alkoxy radical having 1-7 C atoms.
s) LC medium wherein component B) or the LC host mixture additionally comprises one or more monocyclic compounds of the following formula 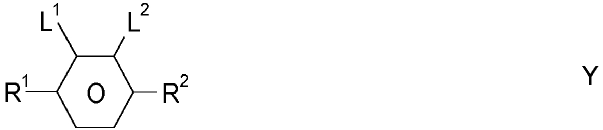 wherein
   - R¹ and R²: each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another, preferably alkyl or alkoxy having 1 to 6 C atoms,
   - L¹ and L²: each, independently of one another, denote F, CI, OCF₃, CF₃, CH₃, CH₂F, CHF₂.
   Preferably, both L¹ and L² denote F or one of L¹ and L² denotes F and the other denotes CI,
   The compounds of the formula Y are preferably selected from the group consisting of the following sub-formulae: 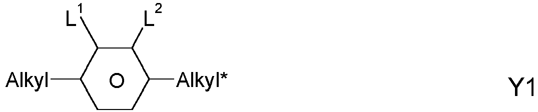 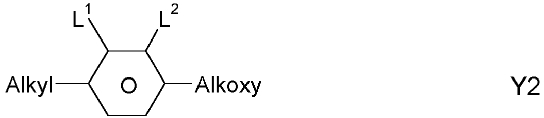 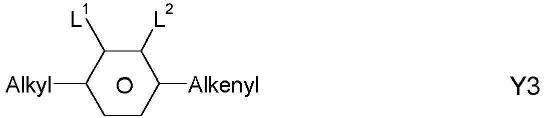 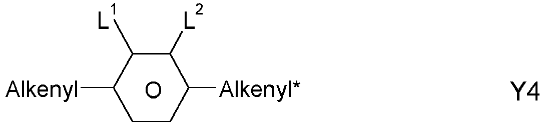 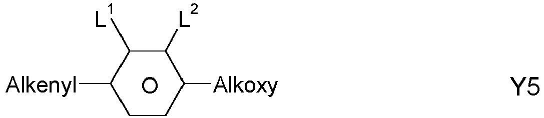 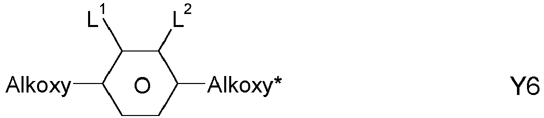 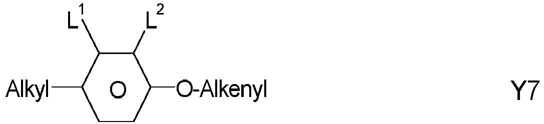 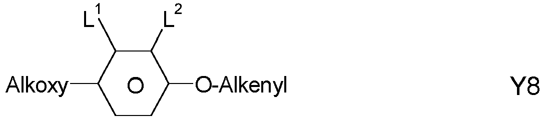 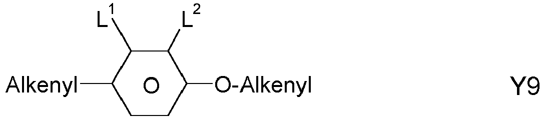 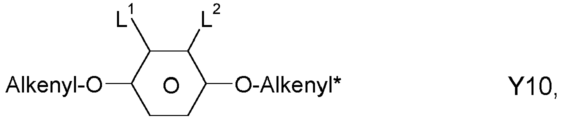 in which, Alkyl and Alkyl* each, independently of one another, denote a straight-chain alkyl radical having 1-6 C atoms, Alkoxy denotes a straight-chain alkoxy radical having 1-6 C atoms, Alkenyl and Alkenyl* each, independently of one another, denote a straight-chain alkenyl radical having 2-6 C atoms. Alkenyl and Alkenyl* preferably denote CH₂=CH-, CH₂=CHCH₂CH₂-, CH₃-CH=CH-, CH₃-CH₂-CH=CH-, CH₃-(CH₂)₂-CH=CH-, CH₃-(CH₂)₃-CH=CH- or CH₃-CH=CH-(CH₂)₂-.
   Particularly preferred compounds of the formula Y are selected from the group consisting of the following sub-formulae: 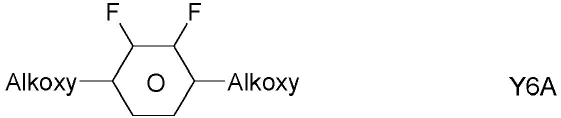 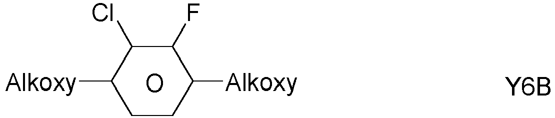 wherein Alkoxy preferably denotes straight-chain alkoxy with 3, 4, or 5 C atoms.
t) LC medium which, apart from the polymerisable compounds as described above and below, does not contain a compound which contains a terminal vinyloxy group (-O-CH=CH₂).
u) LC medium wherein component B) or the LC host mixture comprises 1 to 8, preferably 1 to 5, compounds of the formulae CY1, CY2, PY1 and/or PY2. The proportion of these compounds in the LC host mixture as a whole is preferably 5 to 60%, particularly preferably 10 to 35%. The content of these individual compounds is preferably in each case 2 to 20%.
v) LC medium wherein component B) or the LC host mixture comprises 1 to 8, preferably 1 to 5, compounds of the formulae CY9, CY10, PY9 and/or PY10. The proportion of these compounds in the LC host mixture as a whole is preferably 5 to 60%, particularly preferably 10 to 35%. The content of these individual compounds is preferably in each case 2 to 20%.
w) LC medium wherein component B) or the LC host mixture comprises 1 to 10, preferably 1 to 8, compounds of the formula ZK, in particular compounds of the formulae ZK1, ZK2 and/or ZK6. The proportion of these compounds in the LC host mixture as a whole is preferably 3 to 25%, particularly preferably 5 to 45%. The content of these individual compounds is preferably in each case 2 to 20%.
x) LC medium in which the proportion of compounds of the formulae CY, PY and ZK in the LC host mixture as a whole is greater than 70%, preferably greater than 80%.
y) LC medium in which the LC host mixture contains one or more compounds containing an alkenyl group, preferably selected from formulae AN and AY, very preferably selected from formulae AN1, AN3, AN6 and AY14, most preferably from formulae AN1a, AN3a, AN6a and AY14. The concentration of these compounds in the LC host mixture is preferably from 2 to 70%, very preferably from 3 to 55%.
z) LC medium wherein component B) or the LC host mixture contains one or more, preferably 1 to 5, compounds selected of formula PY1-PY8, very preferably of formula PY2. The proportion of these compounds in the LC host mixture as a whole is preferably 1 to 30%, particularly preferably 2 to 20%. The content of these individual compounds is preferably in each case 1 to 20%.
z1) LC medium wherein component B) or the LC host mixture contains one or more, preferably 1, 2 or 3, compounds selected from formulae T1, T2, T3 and T21, very preferably from formula T2. The content of these compounds in the LC host mixture as a whole is preferably 1 to 20%.
z2) LC medium in which the LC host mixture contains one or more, preferably 1, 2 or 3, compounds of formula BF1, and one or more, preferably 1, 2 or 3, compounds selected from formulae AY14, AY15 and AY16, very preferably of formula AY14. The proportion of the compounds of formula AY14-AY16 in the LC host mixture is preferably from 2 to 35%, very preferably from 3 to 30%. The proportion of the compounds of formula BF1 in the LC host mixture is preferably from 0.5 to 20%, very preferably from 1 to 15%. Further preferably the LC host mixture according to this preferred embodiment contains one or more, preferably 1, 2 or 3 compounds of formula T, preferably selected from formula T1, T2 and T3, very preferably from formula T2. The proportion of the compounds of formula T in the LC host mixture medium is preferably from 0.5 to 15%, very preferably from 1 to 10%.

In the LC medium according to the present invention, the use of an LC host mixture together with the use of a polymerisable component comprising a combination of a first, second and third polymerisable compound as described above leads to advantageous properties in LC displays. In particular, one or more of the following advantages could be achieved:
- easy and quick formation of polymer walls by polymerisation-induced phase separation of the polymer formed by the first and second polymerisable compounds,
- formation of polymer walls with highly defined shape and constant thickness,
- constant cell gap,
- high flexibility of the display cell in case plastic substrates are used,
- high resistance of the display cell against mechanical pressure, and low variation of the cell gap under pressure,
- good adhesion of the polymer walls to the substrates,
- low number of defects,
- reduced formation of domains with different electrooptical properties like response time or contrast,
- high transparency,
- good contrast,
- fast response times.

The display manufacture process is known to the skilled person and is described in the literature, for example in US6130738 and EP2818534 A1.

The present invention also relates to a process for the production of an LC display as described above and below, comprising the steps of providing an LC medium as described above and below into the display, and polymerising the polymerisable compounds in defined regions of the display.

Preferably the polymerisable compounds are photopolymerised by exposure to UV irradiation.

Further preferably the polymerisable compounds are photopolymerised by exposure to UV irradiation through a photomask. The UV radiation can be generated by a variety of light sources which are known to the skilled person, including but not limited to arc lamps, led lights, laser light sources, or others.

The photomask is preferably designed such that it comprises regions that are transparent to the UV radiation used for photopolymerisation, and regions that are not transparent to the UV radiation used for photopolymerisation, and wherein the transparent regions form a pattern or image that corresponds to the desired shape of the polymer walls. As a result the polymerisable compounds are only polymerised in those parts of the display that are covered by the transparent regions of the photomask, thus forming polymer walls of the desired shape.

Alternatively to using a photomask, a light source can be used that emits light with an already shaped profile. Such profile can for example be generated by interference of two laser beams.

In a preferred embodiment of the present invention, the display is subjected to a second UV irradiation step, preferably without a photomask applied, after the first UV irradiation step as described above. Thereby it is possible to complete polymerisation of monomers that were not or only partially polymerised in the first step. The second UV step can have an emission spectrum and/or intensity which is the same as that of the first step, or which is different from the first step.

Alternatively two applying two separate irradiation steps, the intensity is changed during UV exposure. Preferably, the intensity is gradually increased during UV exposure.

For example, an LC display according to the present invention can be manufactured as follows. Polymerisable compounds as described above and below are combined with a suitable LC host mixture. This resulting LC medium can then be included into the display by using conventional manufacturing processes. The resulting LC medium can be filled for example using capillary forces into the cell gap formed by two substrates.

Alternatively, the LC medium can be deposited as a layer onto a substrate, and another substrate is placed on top of the LC layer under vacuum in order to prevent inclusion of air bubbles. The LC medium is in either case located in the cell gap formed by the two substrates, as exemplarily illustrated in **Fig. 1a****.** These substrates usually are covered by an alignment layer which is in direct contact with the LC medium. The substrates itself can carry other functional components like TFTs, black matrix, colour filter, or similar.

Subsequently, polymerization induced phase separation is initiated by exposure of the LC medium, which is either in the nematic or the isotropic phase, to UV radiation with collimated light through a photomask, as exemplarily illustrated in **Fig. 1b**. This leads to the formation of polymer wall structures, restoration of the LC host, and alignment of the LC phase with the alignment layer, as exemplarily illustrated in **Fig. 1c****.**

This process can advantageously utilize display manufacturing processes that are established in the industry. Thus, both the display filling process, for example by one-drop-filling (ODF), and the radiation initiated polymerization step after sealing the display, which is known for example from polymer stabilised or PS-type display modes like PS-VA, are established techniques in conventional LCD manufacturing.

A preferred LC display of the present invention comprises:
- a first substrate including a pixel electrode defining pixel areas, the pixel electrode being connected to a switching element disposed in each pixel area and optionally including a micro-slit pattern, and optionally a first alignment layer disposed on the pixel electrode,
- a second substrate including a common electrode layer, which may be disposed on the entire portion of the second substrate facing the first substrate, and optionally a second alignment layer,
- an LC layer disposed between the first and second substrates and including an LC medium comprising a polymerisable component A) and a liquid-crystalline component B) as described above and below, wherein the polymerisable component A) is polymerised.

The LC display may comprise further elements, like a colour filter, a black matrix, a passivation layer, optical retardation layers, transistor elements for addressing the individual pixels, etc., all of which are well known to the person skilled in the art and can be employed without inventive skill.

The electrode structure can be designed by the skilled person depending on the individual display type. For example for VA displays a multi-domain orientation of the LC molecules can be induced by providing electrodes having slits and/or bumps or protrusions in order to create two, four or more different tilt alignment directions.

The first and/or second alignment layer controls the alignment direction of the LC molecules of the LC layer. For example, in TN displays the alignment layer is selected such that it imparts to the LC molecules an orientation direction parallel to the surface, while in VA displays the alignment layer is selected such that it imparts to the LC molecules a homeotropic alignment, i.e. an orientation direction perpendicular to the surface. Such an alignment layer may for example comprise a polyimide, which may also be rubbed, or may be prepared by a photoalignment method.

The substrate can be a glass substrate, for example in case of a curved display. The use of an LC medium according to the present invention in an LC display with glass substrates can provide several advantages. For example, the formation of polymer wall structures in the LC medium helps to prevent the so-called "pooling effect" where pressure applied on the glass substrates causes unwanted optical defects. The stabilizing effect of the polymer wall structures also allows to further minimize the panel thickness. Moreover, in bent panels with glass substrates the polymer wall structures enable a smaller radius of curvature.

For flexible LC displays preferably plastic substrates are used. These plastic substrates preferably have a low birefringence. Examples are polycarbonate (PC), polyethersulfone (PES), polycyclic olefine (PCO), polyarylate (PAR), polyetheretherketone (PEEK), or colourless polyimide (CPI) substrates.

The LC layer with the LC medium can be deposited between the substrates of the display by methods that are conventionally used by display manufacturers, for example the one-drop-filling (ODF) method. The polymerisable component of the LC medium is then polymerised for example by UV photopolymerisation.

In case the polymerisable compounds are used as a replacement for spacer particles, the display manufacturing process preferably comprises the following steps:
In a first step, the LC medium containing the LC host and monomer precursor is applied to one of the two substrates, preferably by using one of the following deposition methods: one drop filling, ink jet printing, spin coating, slit coating, flexo printing, or a comparable method. The substrate in that instance may carry a colour filter, TFT devices, a black matrix, a polyimide coating, or other components typically found on a display substrate. The applied LC medium forms a thin, uniform film with the thickness of the targeted cell gap of the final device.
In a second step, the applied film is subjected to UV radiation having an intensity profile. This profile is generated for example by irradiating through a photomask, using laser interference, direct laser writing, or a comparable method. Irradiation of the film can either occour from either side of the substrate. In case of using a photomask, the mask can either placed on the substrate and the LC film is cured by the light passing through the substrate, or the mask is directly brought in close proximity to the LC film and the LC medium is cured directly.
   In this second step, polymer wall structures are created that function as spacer.

Subsequently, the second substrate, which may also carry colour filter, TFT devices, a black matrix, a polyimide coating, or other components typically found on a display substarte, is place ontop of the first substrate so that the LC film comes to rest in between the two substrates.

A further irradiation is now optionally possible to convert unreacted monomers, generate adhesion between the two substartes, and/or seal the edges of the display.

The polymerisation of the polymerisable compounds can be carried out in one step or in two or more steps. It is also possible to carry out the polymerisation in a sequence of several UV irradiation and/or heating or cooling steps. For example, a display manufacturing process may include a first UV irradiation step at room temperature to produce a pretilt angle, and subsequently, in a second polymerisation step to polymerise or crosslink the compounds which have not reacted in the first step ("end curing").

Upon polymerisation the polymerisable compounds react with each other to a polymer which undergoes macroscopical phase-separation from the LC host mixture and forms polymer walls in the LC medium.

Suitable and preferred polymerisation methods are, for example, thermal or photopolymerisation, preferably photopolymerisation, in particular UV induced photopolymerisation, which can be achieved by exposure of the polymerisable compounds to UV radiation.

Preferably the LC medium contains one or more polymerisation initiators.

The polymerisable compounds according to the invention are also suitable for polymerisation without an initiator, which is accompanied by considerable advantages, such, for example, lower material costs and in particular less contamination of the LC medium by possible residual amounts of the initiator or degradation products thereof. The polymerisation can thus also be carried out without the addition of an initiator. In a preferred embodiment, the LC medium contains a polymerisation initiator.

The LC medium may also comprise one or more stabilisers or inhibitors in order to prevent undesired spontaneous polymerisation of the RMs, for example during storage or transport. Suitable types and amounts of stabilisers are known to the person skilled in the art and are described in the literature. Particularly suitable are, for example, the commercially available stabilisers from the Irganox® series (Ciba AG), such as, for example, Irganox® 1076. If stabilisers are employed, their proportion, based on the total amount of RMs or the polymerisable component (component A), is preferably 10-500,000 ppm, particularly preferably 50-50,000 ppm.

Preferably the LC medium according to the present invention does essentially consist of a polymerisable component A) and an LC component B) (or LC host mixture) as described above and below. However, the LC medium may additionally comprise one or more further components or additives.

The LC media according to the invention may also comprise further additives which are known to the person skilled in the art and are described in the literature, such as, for example, polymerisation initiators, inhibitors, stabilisers, sensitizers, surface-active substances or chiral dopants. These may be polymerisable or non-polymerisable. Polymerisable additives, polymerisation initiators and sensitizers are ascribed to the polymerisable component or component A). Other non-polymerisable additives are ascribed to the non-polymerisable component or component B).

Preferred additives are selected from the list including but not limited to comonomers, chiral dopants, polymerisation initiators, inhibitors, stabilizers, surfactants, wetting agents, lubricating agents, dispersing agents, hydrophobing agents, adhesive agents, flow improvers, defoaming agents, deaerators, diluents, reactive diluents, auxiliaries, colourants, dyes, pigments and nanoparticles.

In a preferred embodiment the LC media contain one or more chiral dopants, preferably in a concentration from 0.01 to 1% by weight, very preferably from 0.05 to 0.5% by weight. The chiral dopants are preferably selected from the group consisting of compounds from Table B below, very preferably from the group consisting of R- or S-1011, R- or S-2011, R- or S-3011, R- or S-4011, and R-or S-5011.

In another preferred embodiment the LC media contain a racemate of one or more chiral dopants, which are preferably selected from the chiral dopants mentioned in the previous paragraph.

Furthermore, it is possible to add to the LC media, for example, 0 to 15% by weight of pleochroic dyes, furthermore nanoparticles, conductive salts, preferably ethyldimethyldodecylammonium 4-hexoxybenzoate, tetrabutylammonium tetraphenylborate or complex salts of crown ethers (cf., for example, Haller et al., Mol. Cryst. Liq. Cryst. 24, 249-258 (1973)), for improving the conductivity, or substances for modifying the dielectric anisotropy, the viscosity and/or the alignment of the nematic phases. Substances of this type are described, for example, in DE-A 22 09 127, 22 40 864, 23 21 632, 23 38 281, 24 50 088, 26 37 430 and 28 53 728.

The LC media which can be used in accordance with the invention are prepared in a manner conventional per se, for example by mixing one or more of the above-mentioned compounds with one or more polymerisable compounds as defined above, and optionally with further liquid-crystalline compounds and/or additives. In general, the desired amount of the components used in lesser amount is dissolved in the components making up the principal constituent, advantageously at elevated temperature. It is also possible to mix solutions of the components in an organic solvent, for example in acetone, chloroform or methanol, and to remove the solvent again, for example by distillation, after thorough mixing. The invention furthermore relates to the process for the preparation of the LC media according to the invention.

It goes without saying to the person skilled in the art that the LC media according to the invention may also comprise compounds in which, for example, H, N, O, Cl, F have been replaced by the corresponding isotopes like deuterium etc.

The following examples explain the present invention without restricting it. However, they show the person skilled in the art preferred mixture concepts with compounds preferably to be employed and the respective concentrations thereof and combinations thereof with one another. In addition, the examples illustrate which properties and property combinations are accessible.

Preferred mixture components are shown in Tables A1 and A2 below. The compounds shown in Table A1 are especially suitable for use in LC mixtures with positive dielectric anisotropy. The compounds shown in Table A2 are especially suitable for use in LC mixtures with negative dielectric anisotropy.

**Table A1**

| | |
|---|---|
| In Table A1, m and n are independently of each other an integer from 1 to 12, preferably 1, 2, 3, 4, 5 or 6, k is 0, 1, 2, 3, 4, 5 or 6, and (O)CₘH₂ₘ₊₁ means CₘH₂ₘ₊₁ or OCₘH₂ₘ₊₁. | |
| 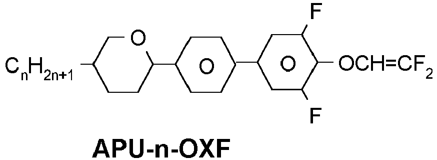 | 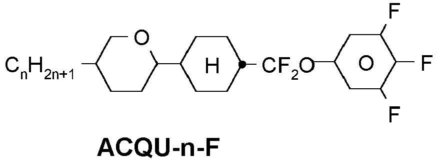 |
| 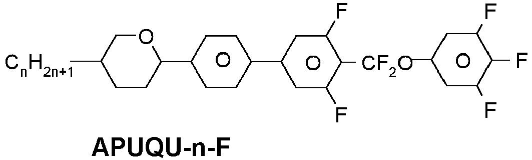 | |
| 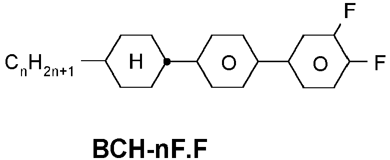 | 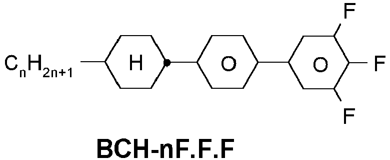 |
| 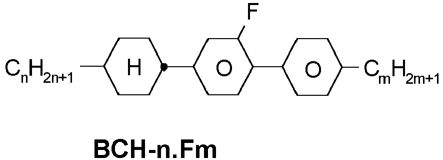 | 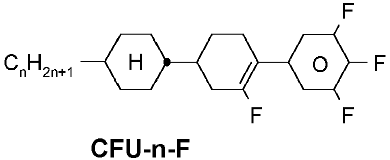 |
| 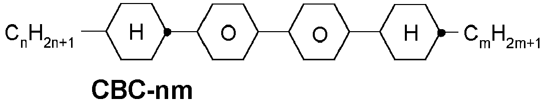 | |
| 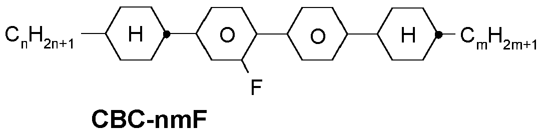 | |
| 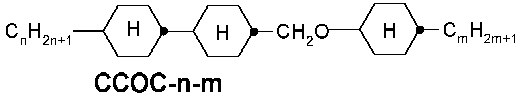 | |
| 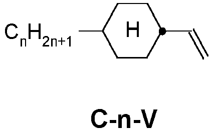 | 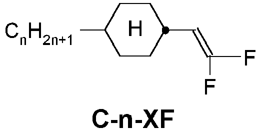 |
| 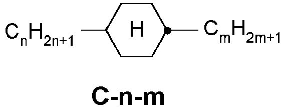 | 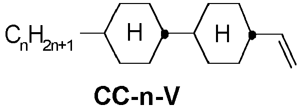 |
| 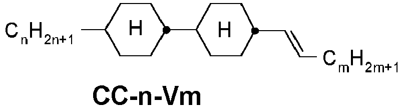 | 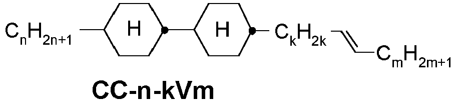 |
| 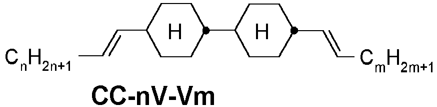 | 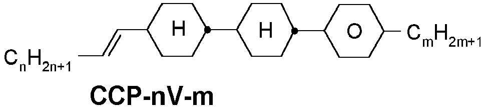 |
| 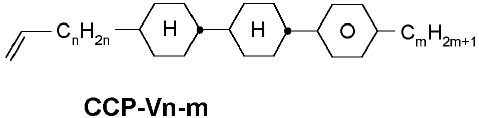 | 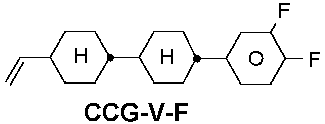 |
| 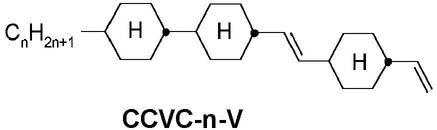 | 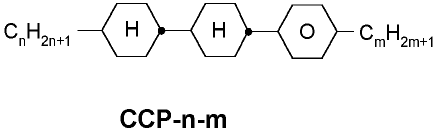 |
| 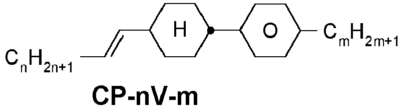 | 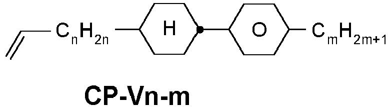 |
| 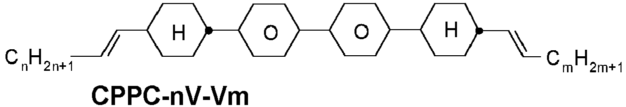 | |
| 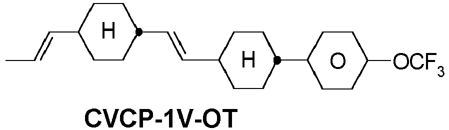 | |
| 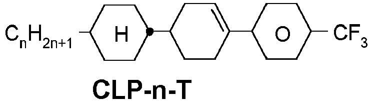 | 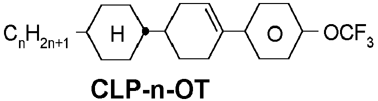 |
| 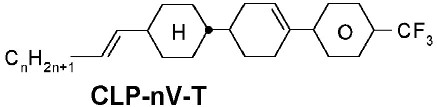 | 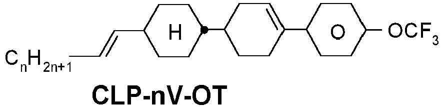 |
| 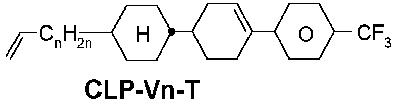 | 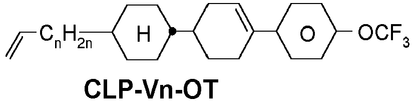 |
| 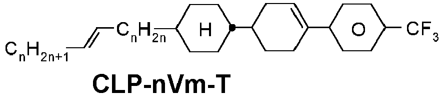 | 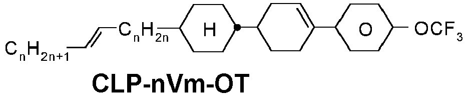 |
| 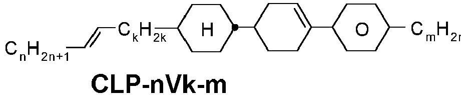 | |
| 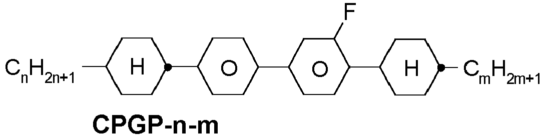 | |
| 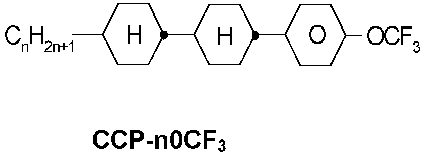 | 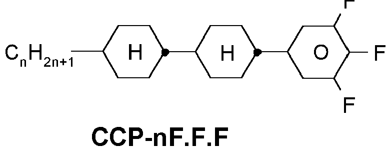 |
| 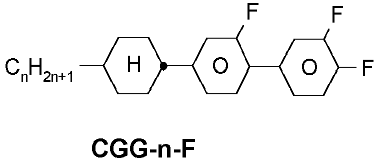 | 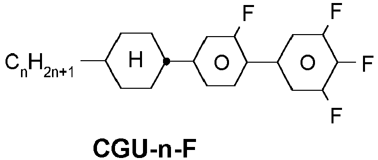 |
| 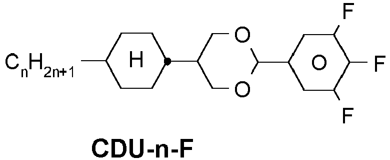 | 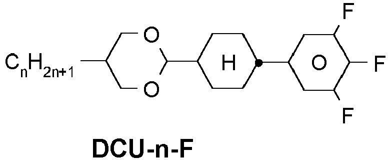 |
| 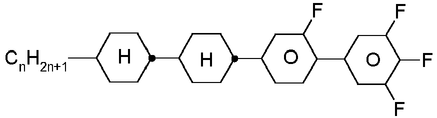 | 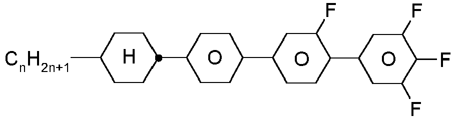 |
| 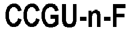 | 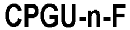 |
| 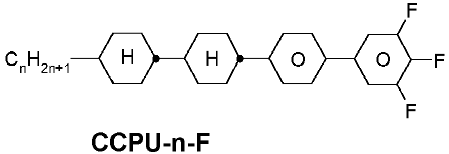 | 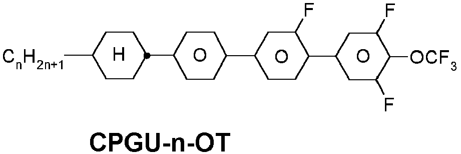 |
| 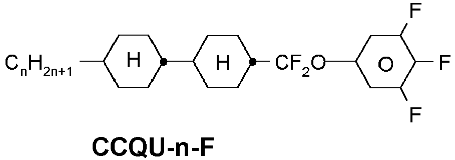 | 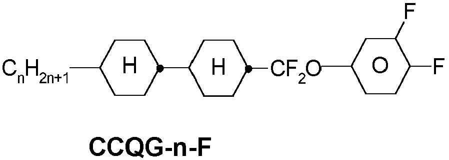 |
| 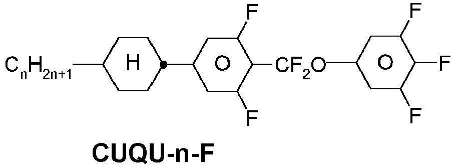 | 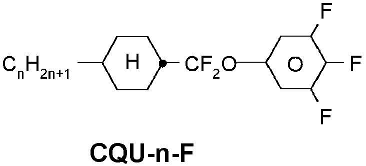 |
| 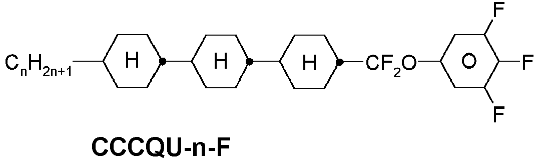 | |
| 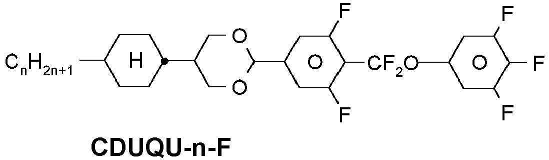 | |
| 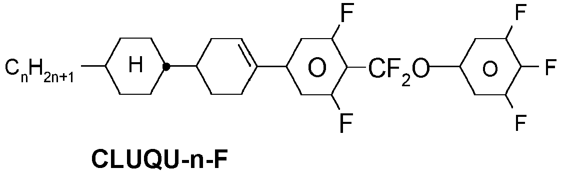 | |
| 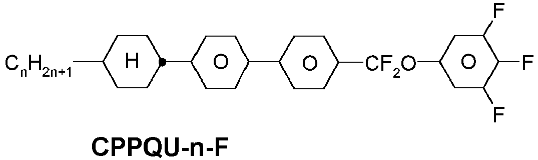 | |
| 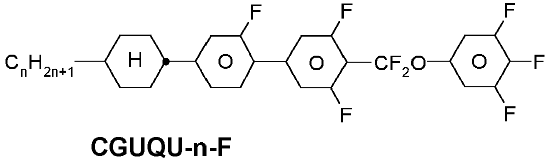 | |
| 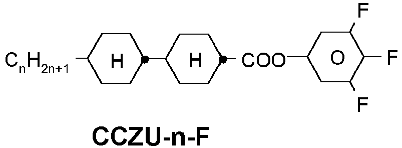 | 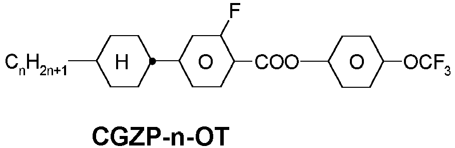 |
| 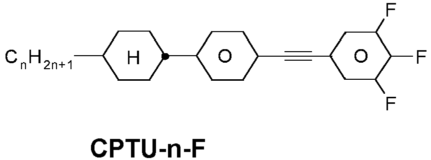 | 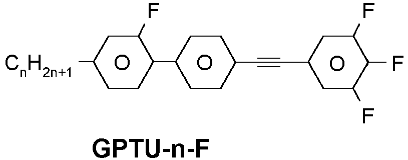 |
| 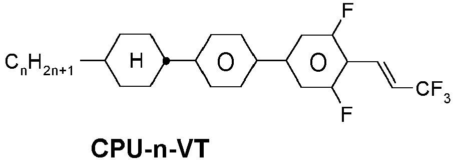 | 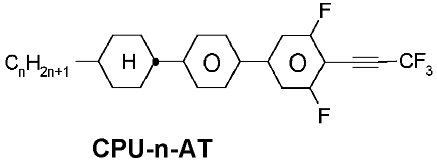 |
| 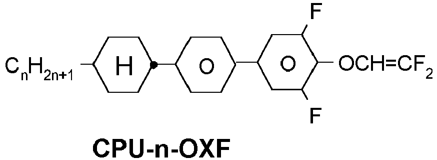 | |
| 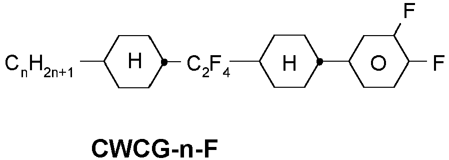 | 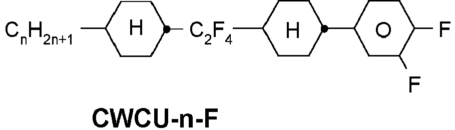 |
| 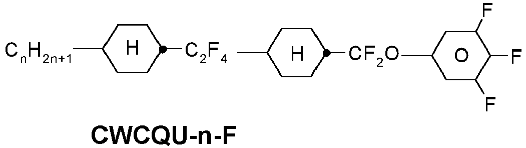 | |
| 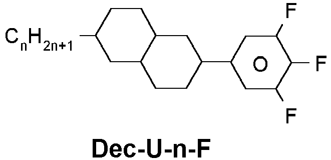 | 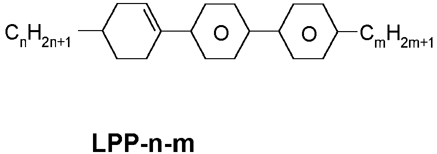 |
| 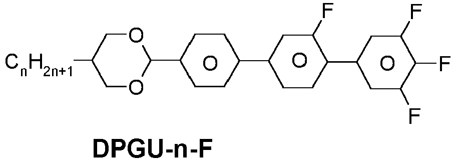 | 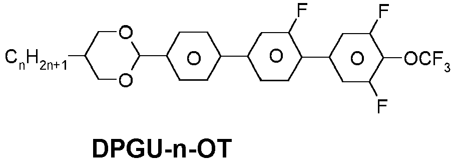 |
| 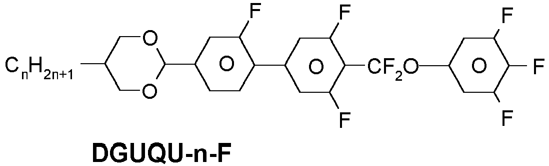 | |
| 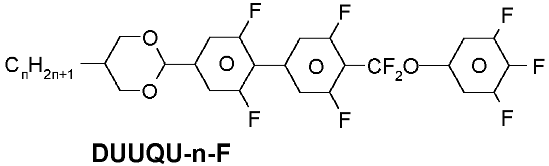 | |
| 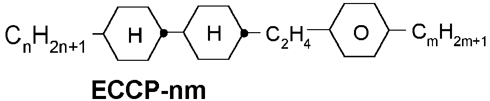 | 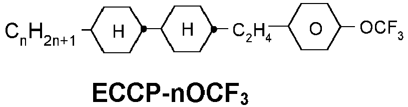 |
| 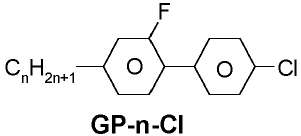 | 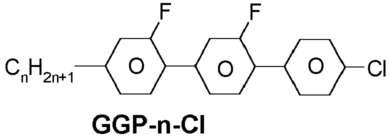 |
| 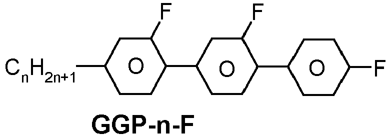 | 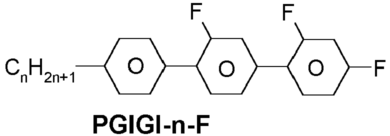 |
| 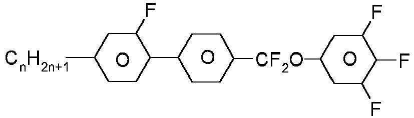 | 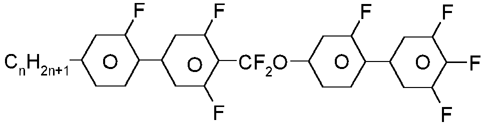 |
| 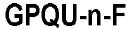 | 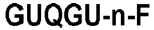 |
| 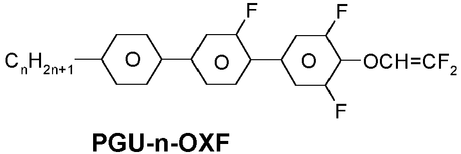 | 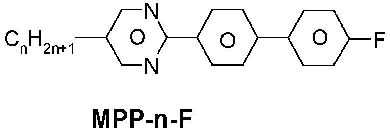 |
| 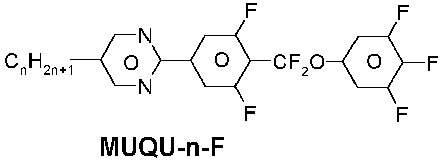 | 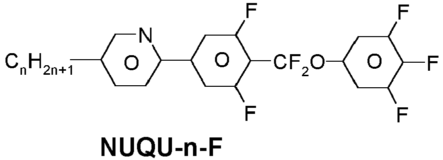 |
| 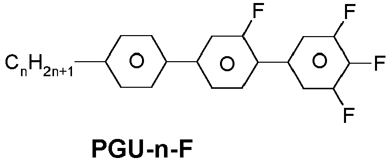 | 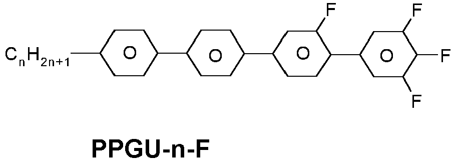 |
| 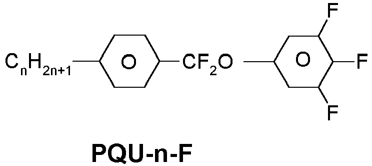 | 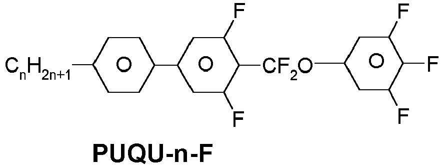 |
| 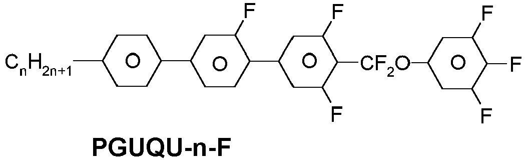 | |
| 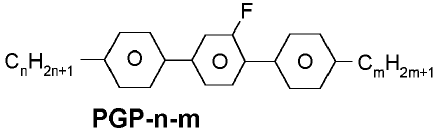 | 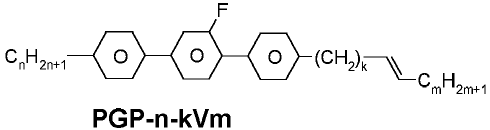 |
| 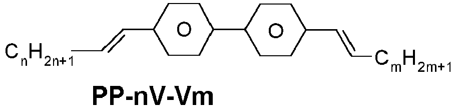 | 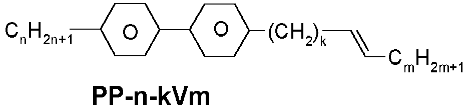 |
| 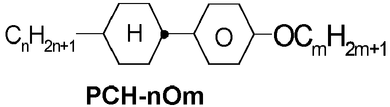 | 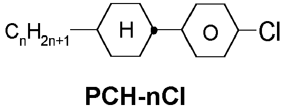 |
| 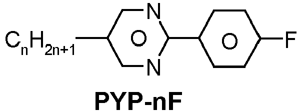 | |

**Table A2**

| |
|---|
| In Table A2, m and n are independently of each other an integer from 1 to 12, preferably 1, 2, 3, 4, 5 or 6, k is 0, 1, 2, 3, 4, 5 or 6, and (O)CₘH₂ₘ₊₁ means CₘH₂ₘ₊₁ or OCₘH₂ₘ₊₁. |
| 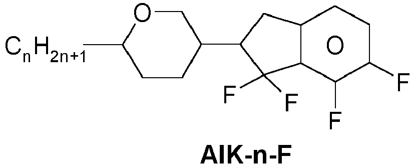 |
| 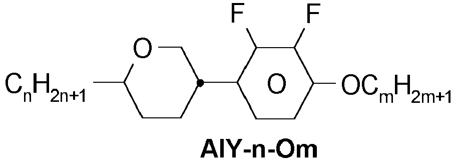 |
| 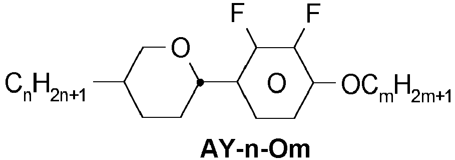 |
| 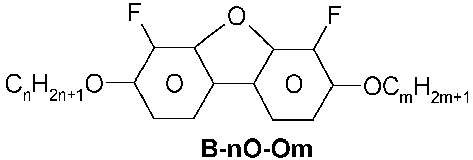 |
| 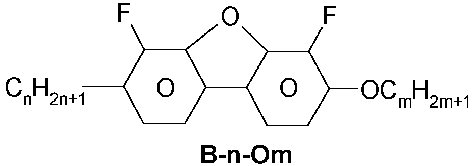 |
| 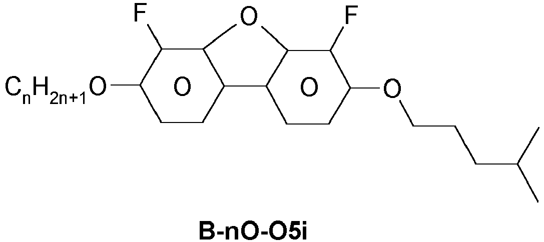 |
| 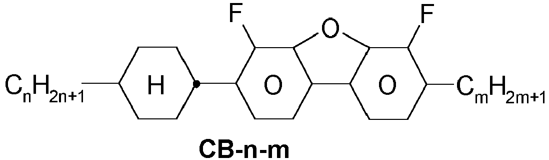 |
| 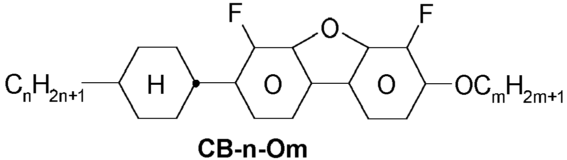 |
| 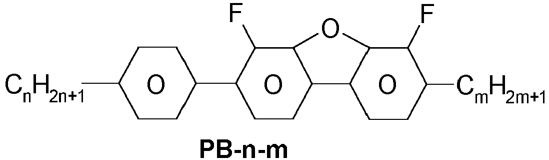 |
| 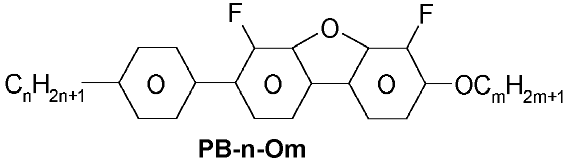 |
| 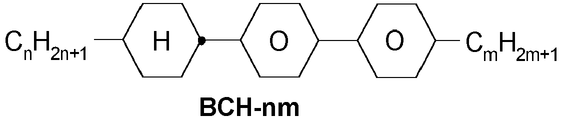 |
| 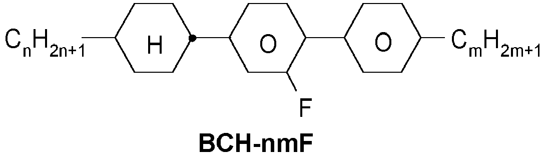 |
| 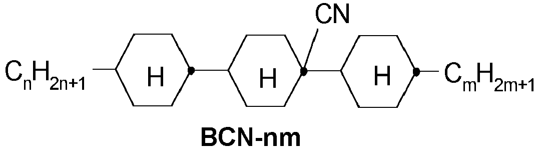 |
| 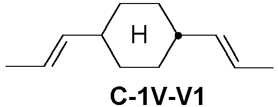 |
| 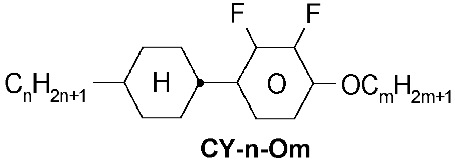 |
| 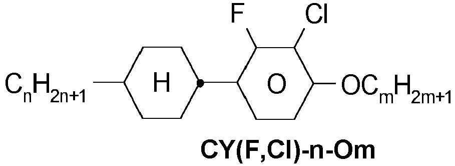 |
| 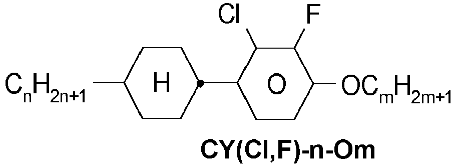 |
| 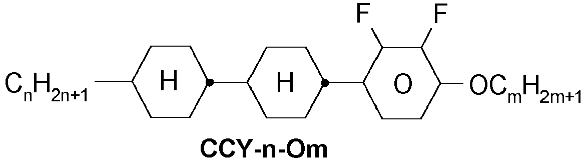 |
| 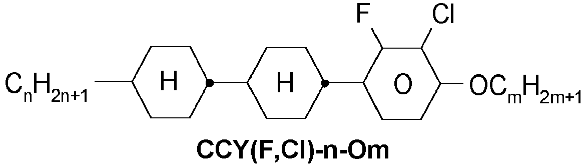 |
| 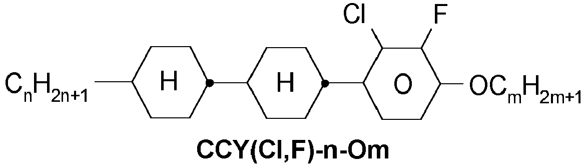 |
| 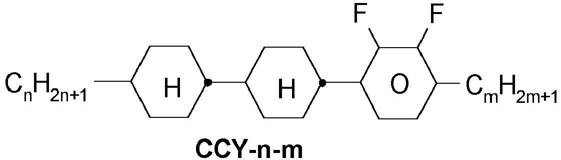 |
| 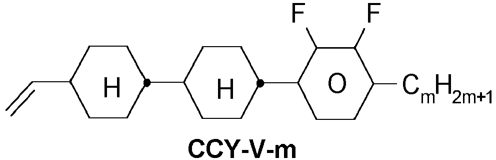 |
| 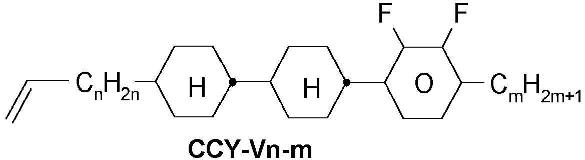 |
| 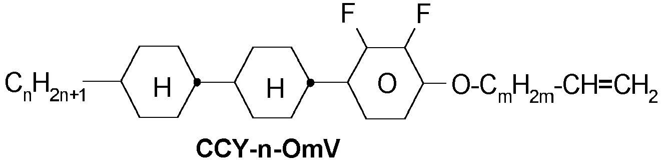 |
| 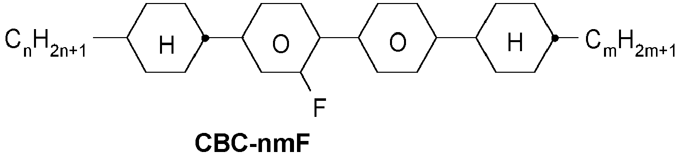 |
| 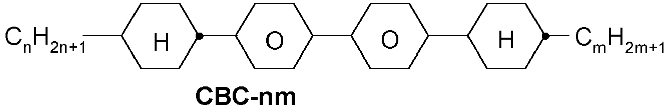 |
| 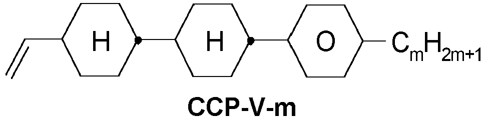 |
| 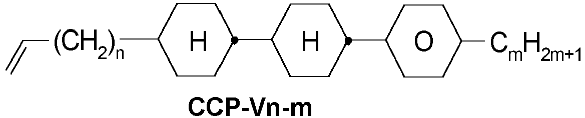 |
| 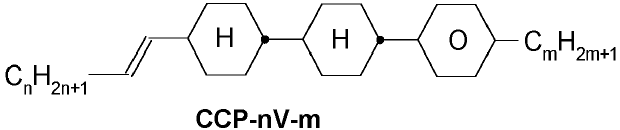 |
| 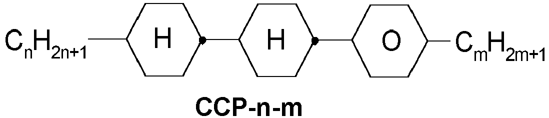 |
| 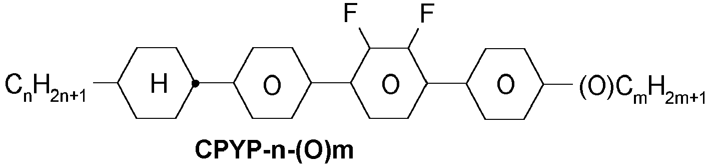 |
| 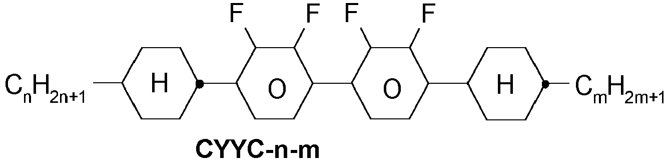 |
| 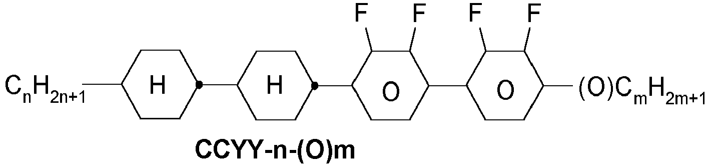 |
| 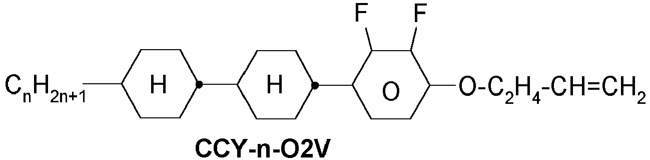 |
| 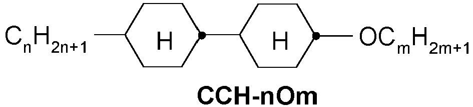 |
| 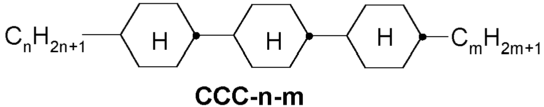 |
| 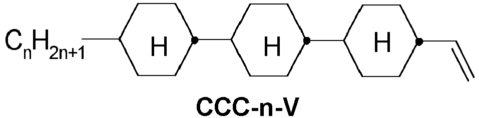 |
| 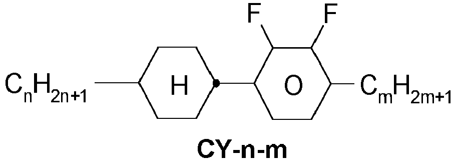 |
| 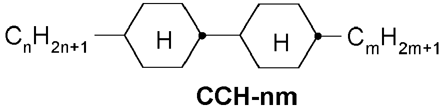 |
| 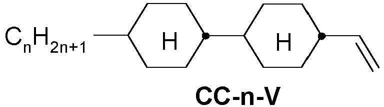 |
| 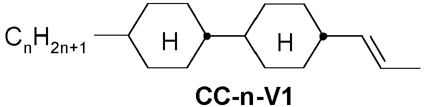 |
| 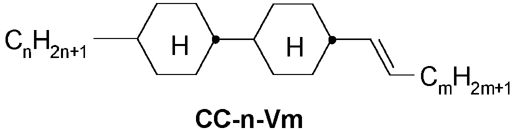 |
| 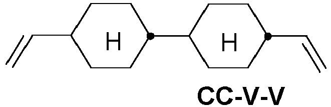 |
| 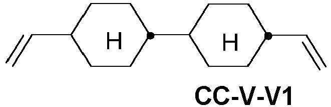 |
| 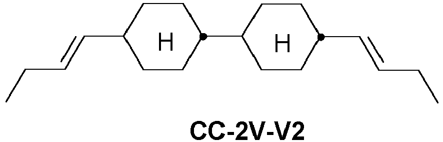 |
| 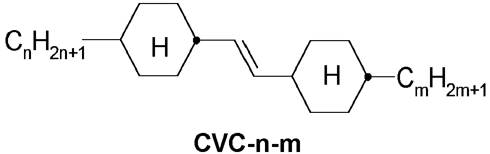 |
| 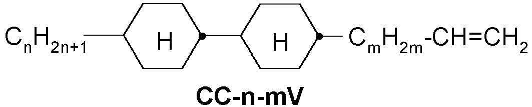 |
| 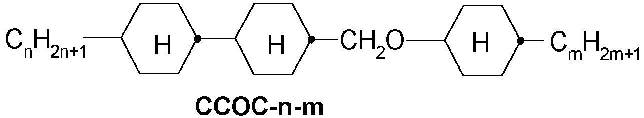 |
| 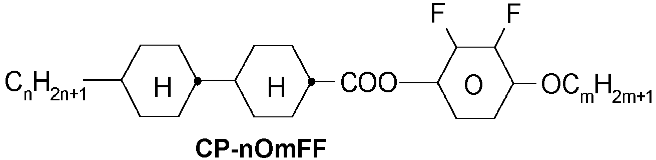 |
| 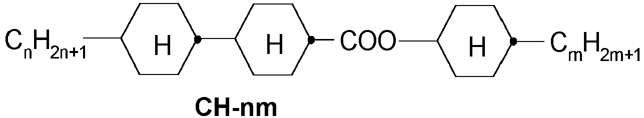 |
| 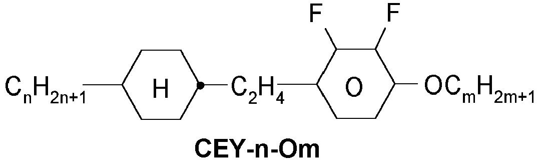 |
| 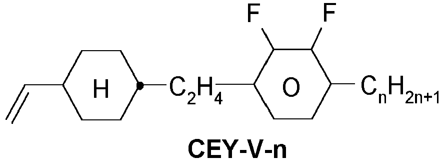 |
| 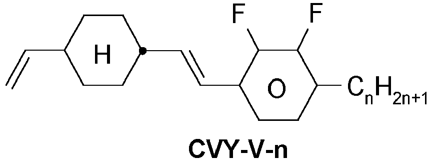 |
| 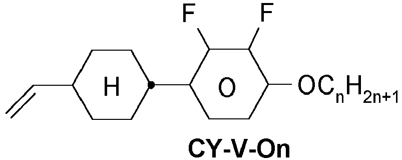 |
| 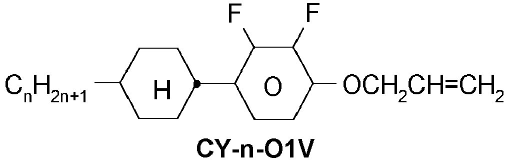 |
| 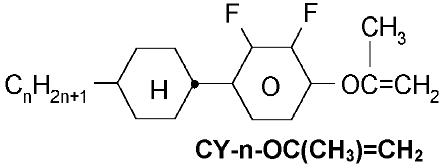 |
| 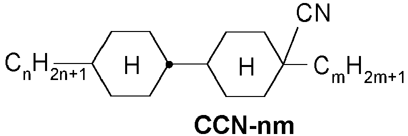 |
| 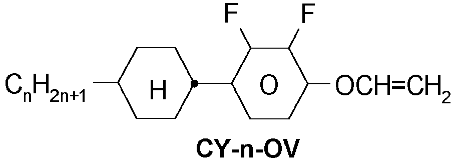 |
| 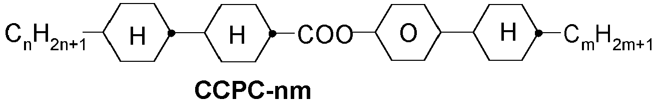 |
| 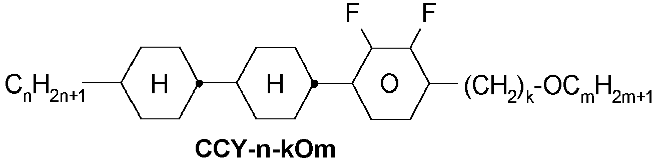 |
| 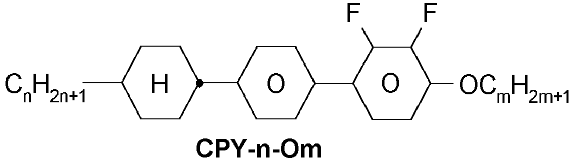 |
| 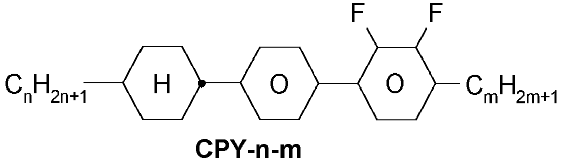 |
| 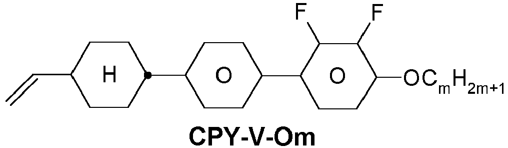 |
| 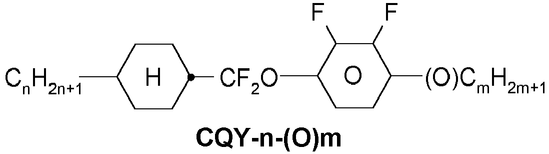 |
| 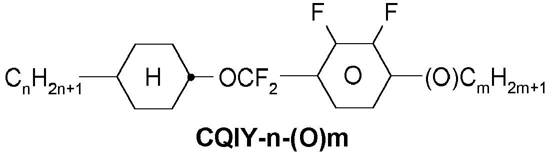 |
| 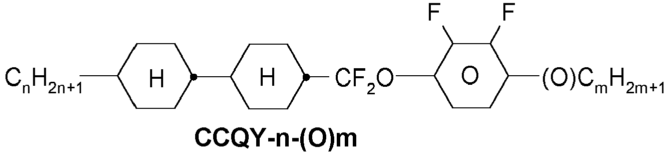 |
| 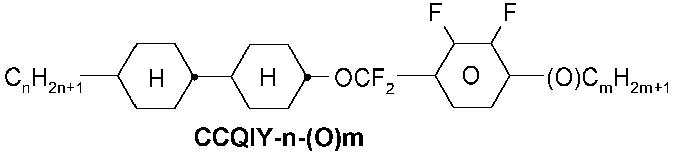 |
| 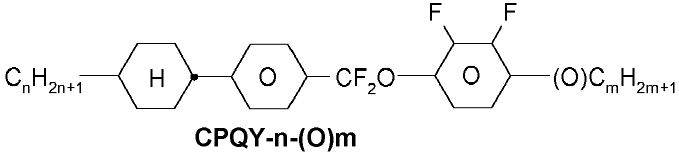 |
| 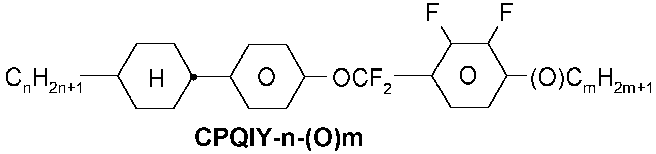 |
| 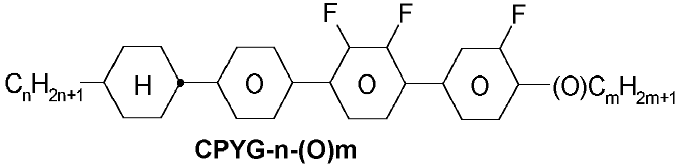 |
| 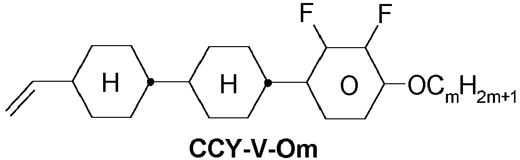 |
| 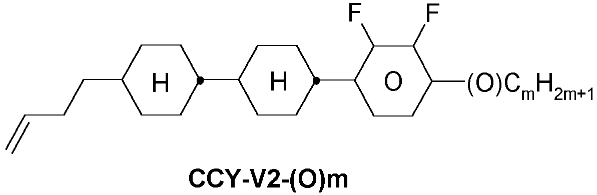 |
| 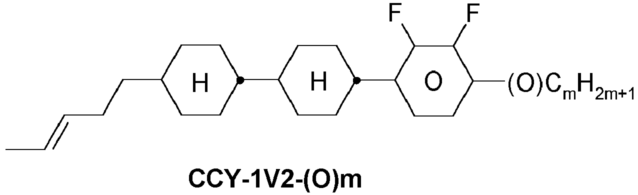 |
| 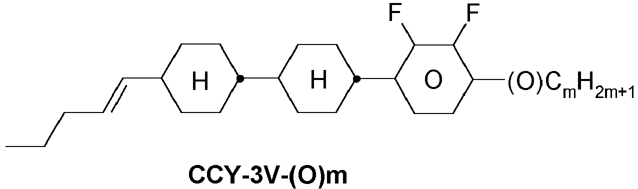 |
| 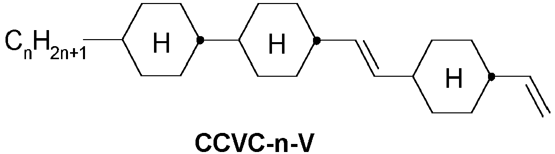 |
| 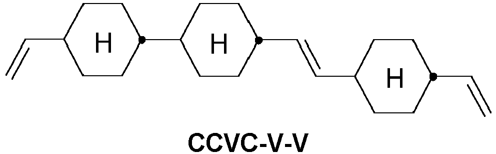 |
| 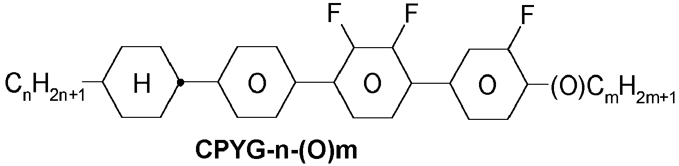 |
| 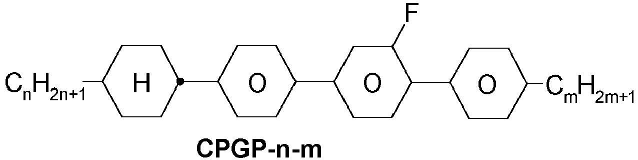 |
| 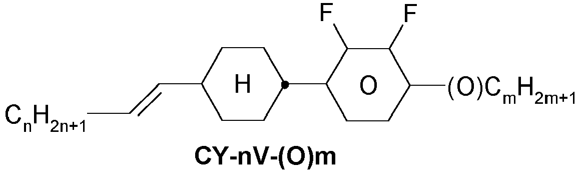 |
| 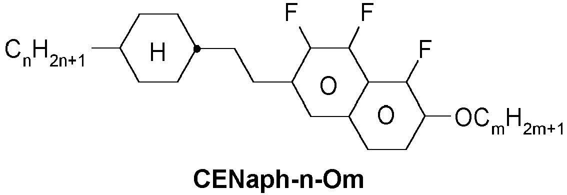 |
| 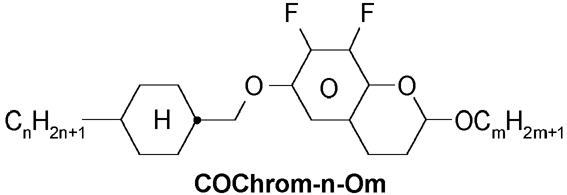 |
| 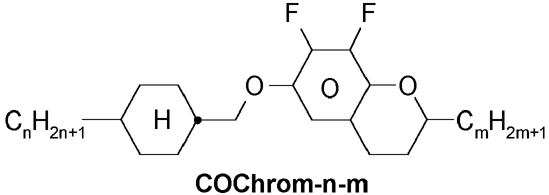 |
| 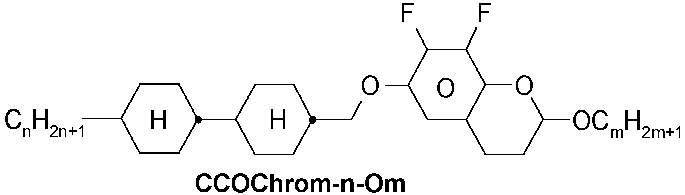 |
| 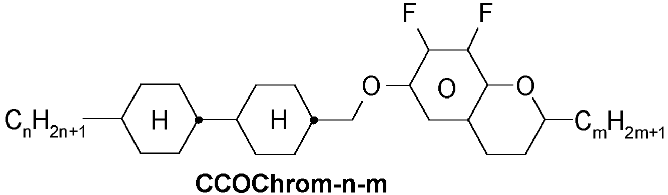 |
| 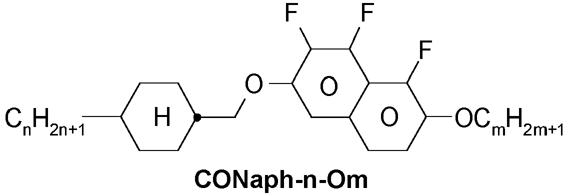 |
| 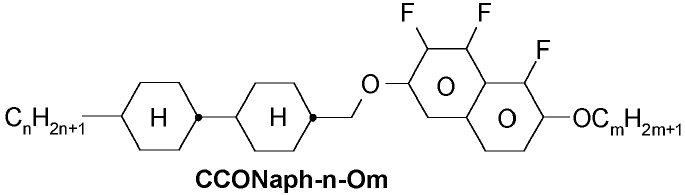 |
| 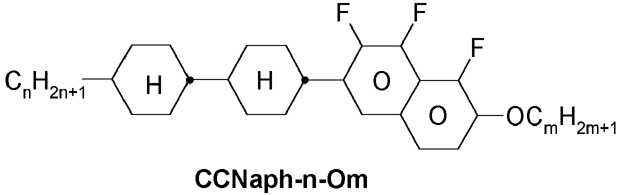 |
| 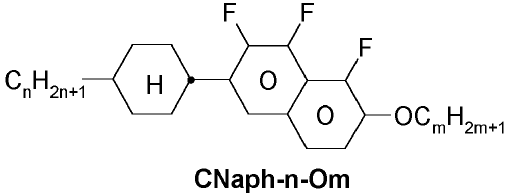 |
| 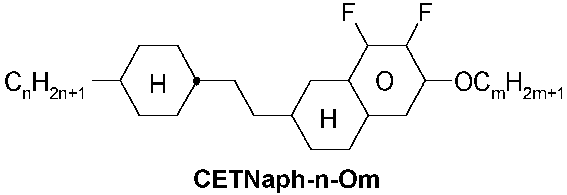 |
| 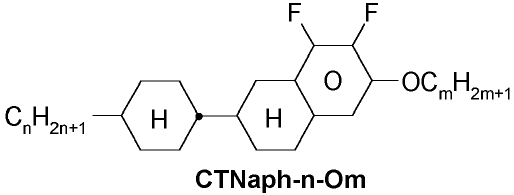 |
| 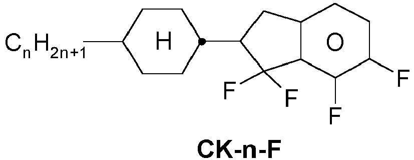 |
| 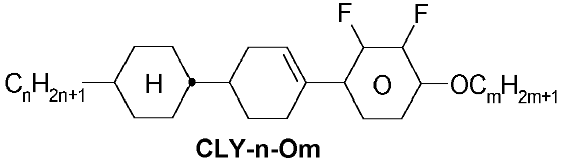 |
| 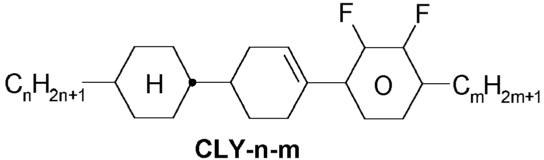 |
| 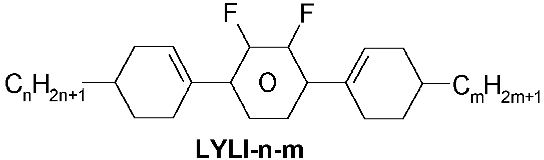 |
| 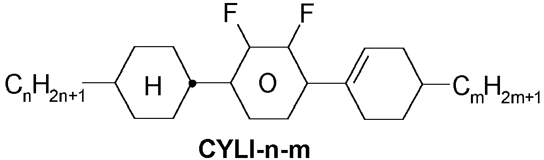 |
| 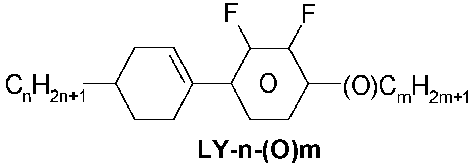 |
| 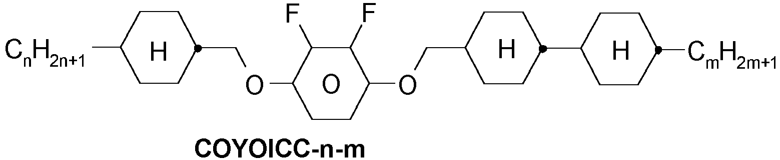 |
| 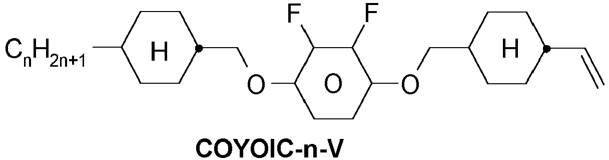 |
| 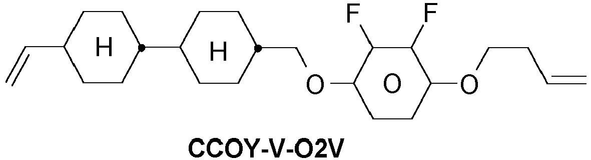 |
| 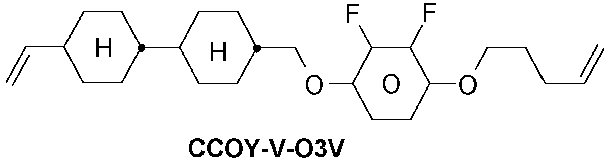 |
| 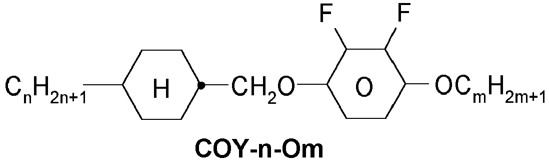 |
| 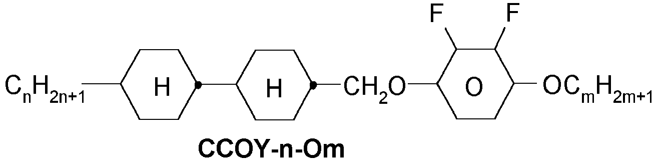 |
| 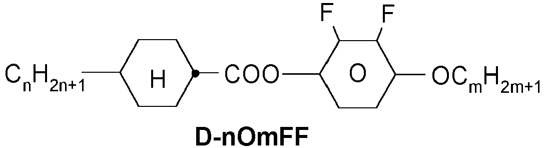 |
| 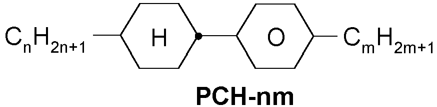 |
| 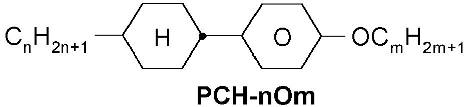 |
| 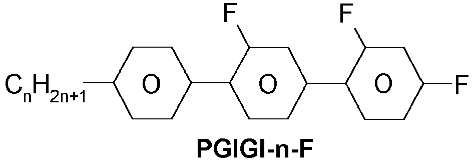 |
| 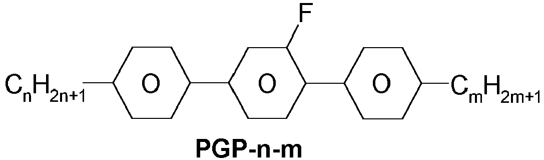 |
| 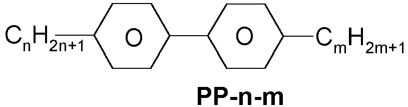 |
| 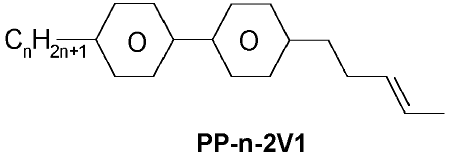 |
| 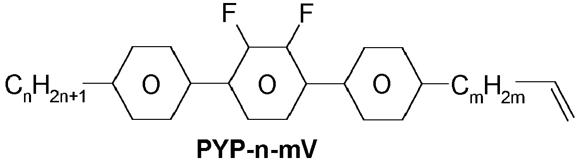 |
| 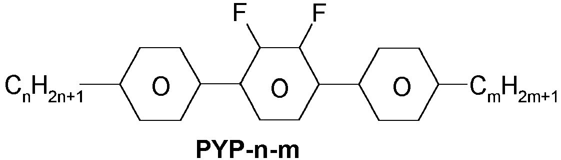 |
| 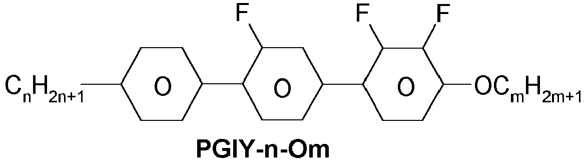 |
| 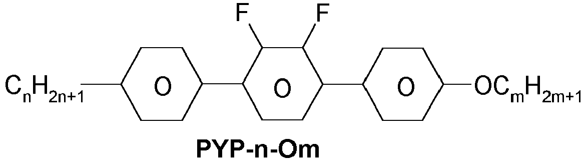 |
| 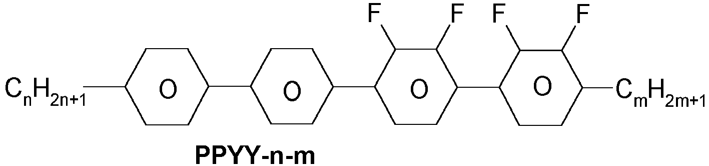 |
| 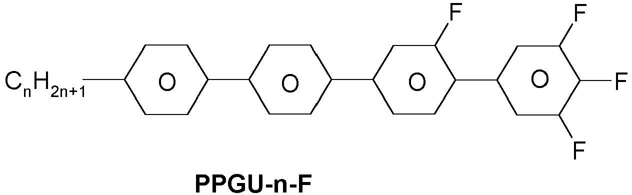 |
| 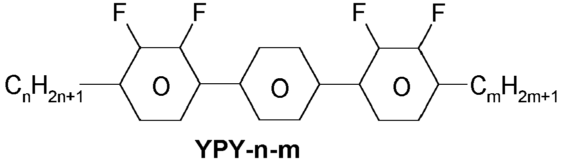 |
| 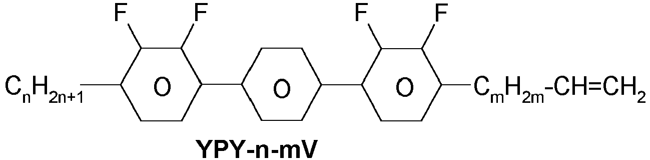 |
| 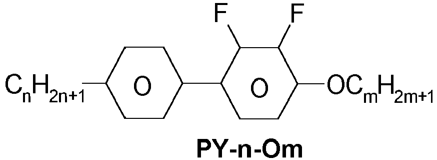 |
| 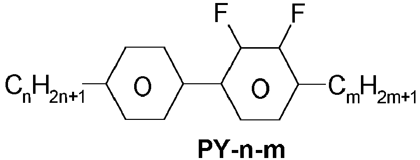 |
| 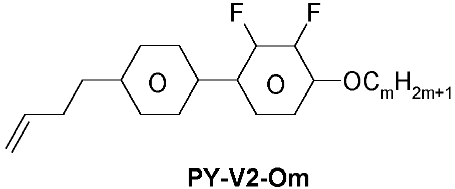 |
| 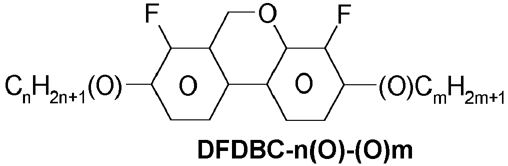 |
| 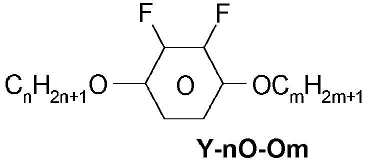 |
| 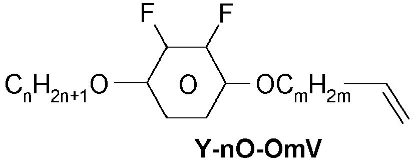 |
| 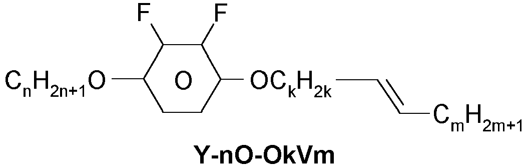 |
| 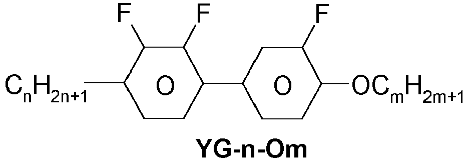 |
| 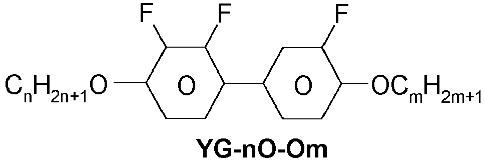 |
| 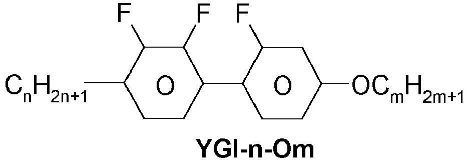 |
| 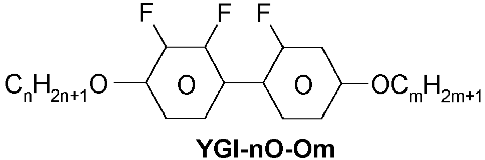 |
| 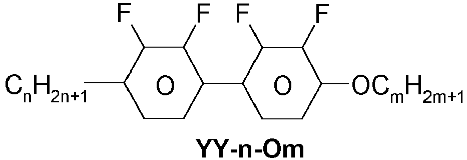 |
| 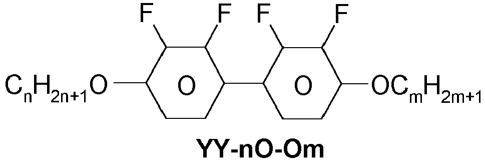 |

In a first preferred embodiment of the present invention, the LC media according to the invention, especially those with positive dielectric anisotropy, comprise one or more compounds selected from the group consisting of compounds from Table A1.

In a second preferred embodiment of the present invention, the LC media according to the invention, especially those with negative dielectric anisotropy, comprise one or more compounds selected from the group consisting of compounds from Table A2.

**Table B**

| | |
|---|---|
| Table B shows possible chiral dopants which can be added to the LC media according to the invention. | |
| 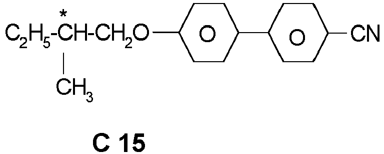 | 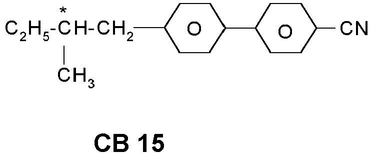 |
| 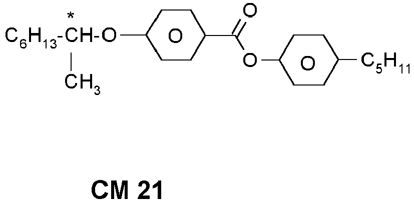 | 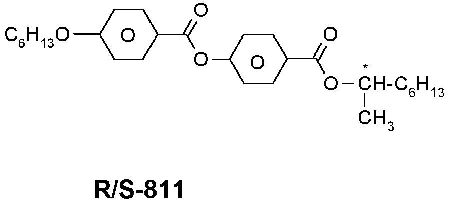 |
| 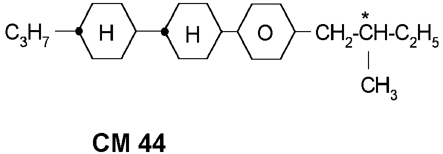 | 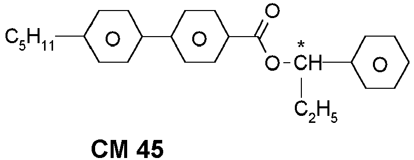 |
| 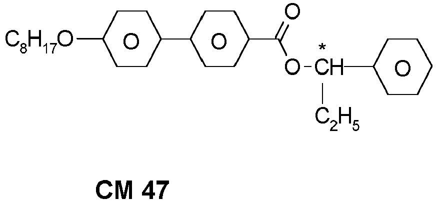 | 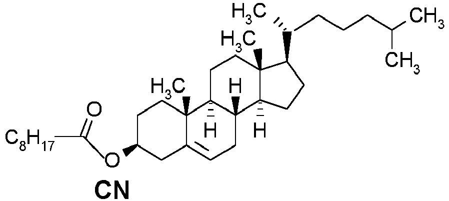 |
| 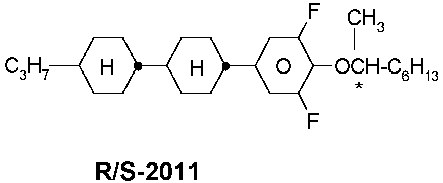 | 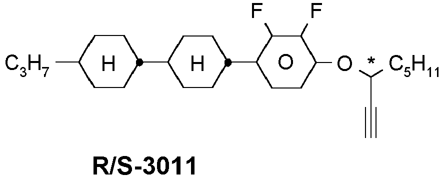 |
| 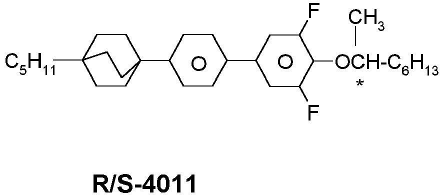 | 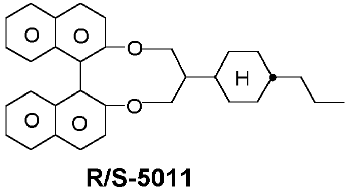 |
| 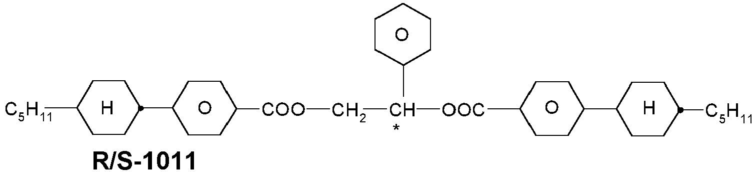 | |

The LC media preferably comprise 0 to 10% by weight, in particular 0.01 to 5% by weight, particularly preferably 0.1 to 3% by weight, of dopants. The LC media preferably comprise one or more dopants selected from the group consisting of compounds from Table B.

**Table C**

| | |
|---|---|
| Table C shows possible stabilisers which can be added to the LC media according to the invention. Therein n denotes an integer from 1 to 12, preferably 1, 2, 3, 4, 5, 6, 7 or 8, and terminal methyl groups are not shown. | |
| 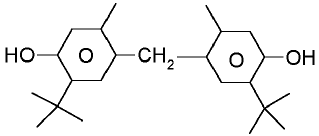 | 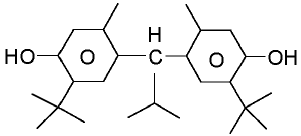 |
| 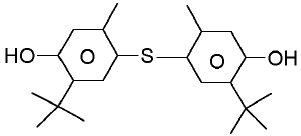 | 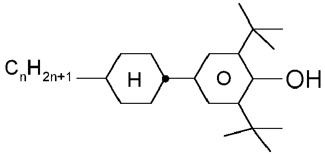 |
| 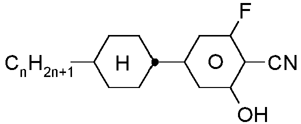 | 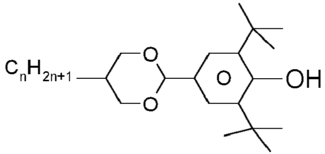 |
| 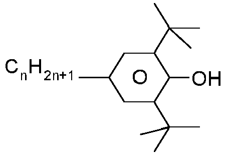 | 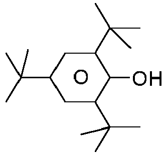 |
| 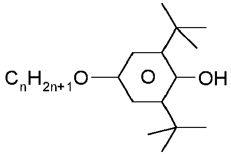 | 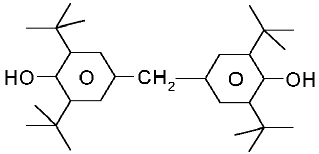 |
| 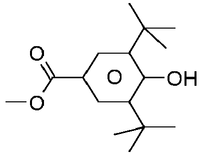 | 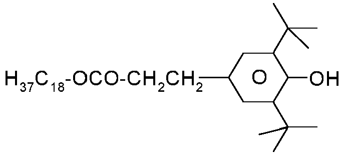 |
| 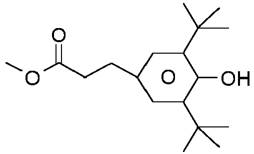 | 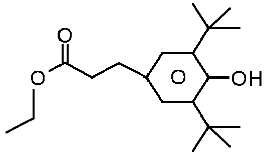 |
| 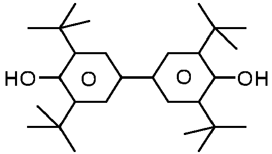 | 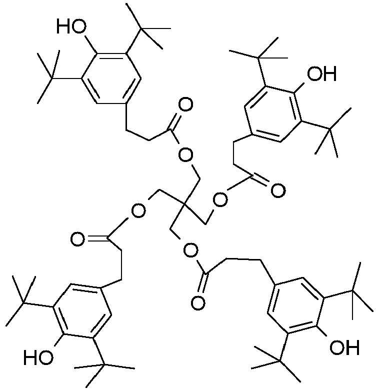 |
| 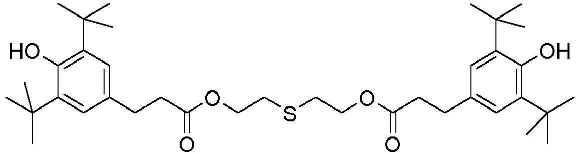 | |
| 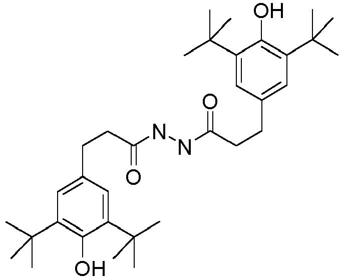 | 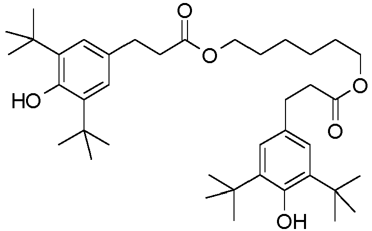 |
| 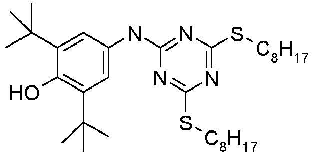 | 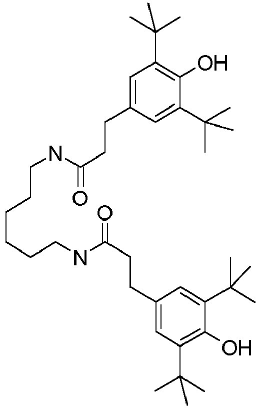 |
| 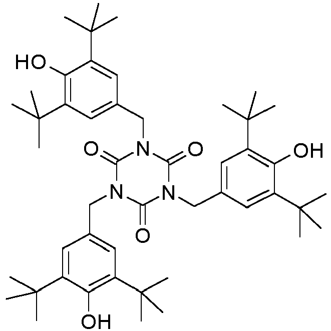 | 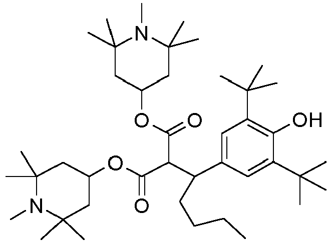 |
| 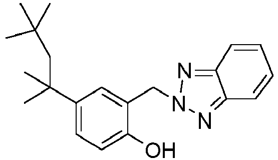 | 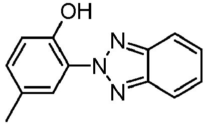 |
| 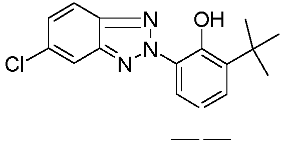 | 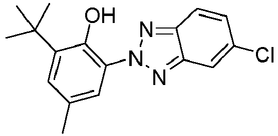 |
| 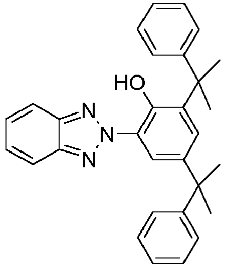 | 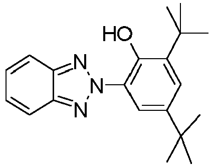 |
| 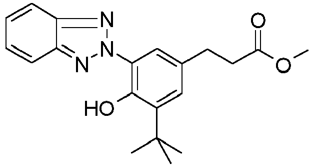 | 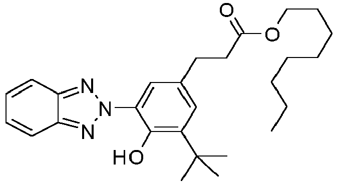 |
| 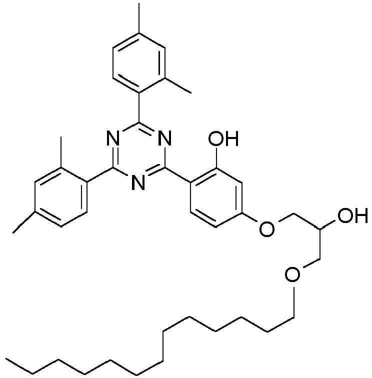 | 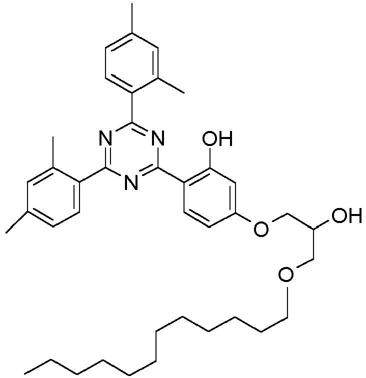 |
| 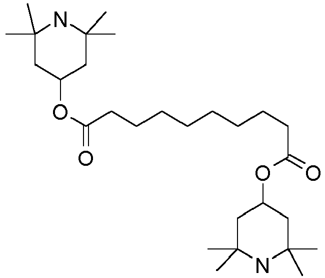 | 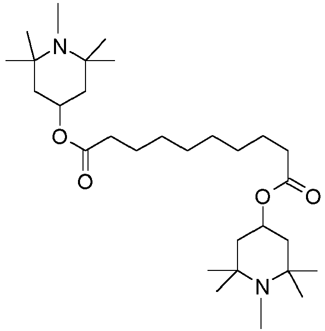 |
| 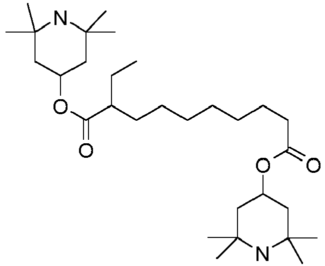 | 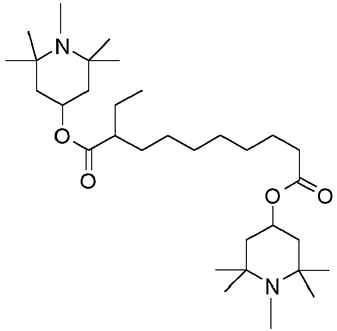 |
| 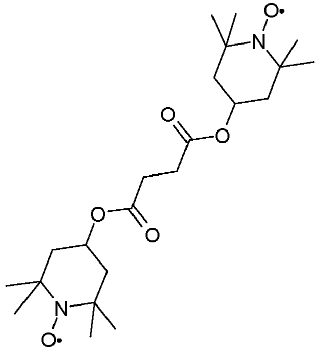 | 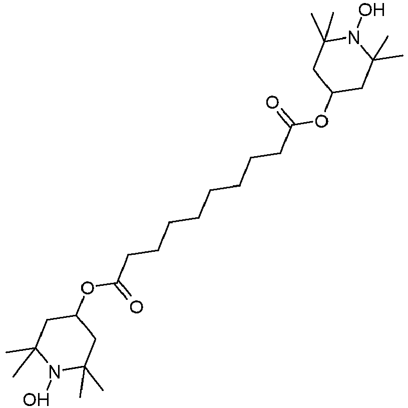 |
| 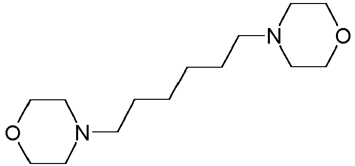 | |
| 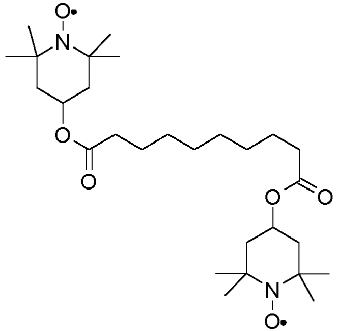 | 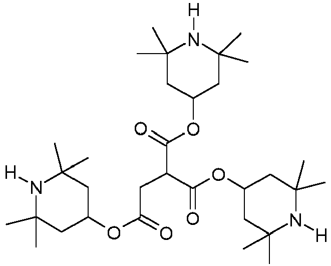 |
| 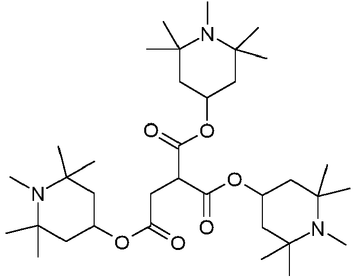 | 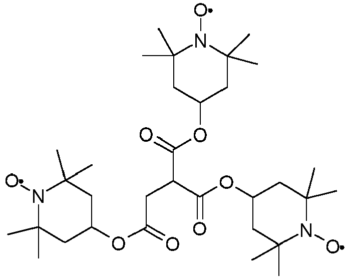 |
| 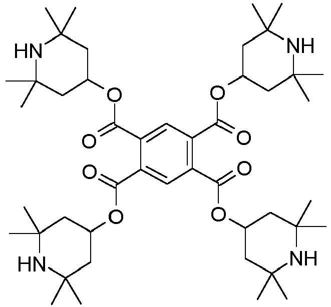 | 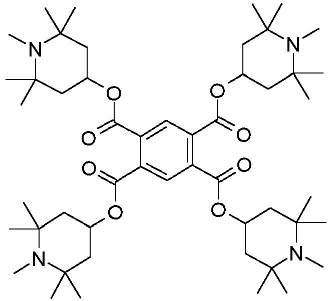 |
| 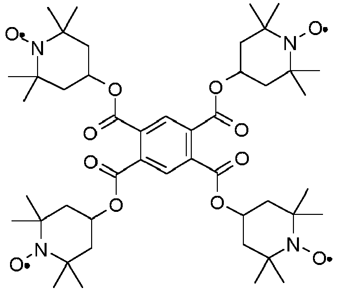 | 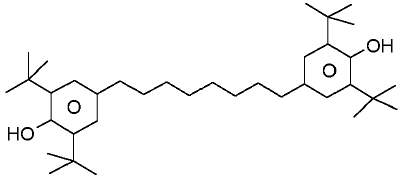 |

The LC media preferably comprise 0 to 10% by weight, in particular 1 ppm to 5% by weight, particularly preferably 1 ppm to 1% by weight, of stabilisers. The LC media preferably comprise one or more stabilisers selected from the group consisting of compounds from Table C.

In addition, the following abbreviations and symbols are used:
- V₀: threshold voltage, capacitive [V] at 20°C,
- nₑ: extraordinary refractive index at 20°C and 589 nm,
- nₒ: ordinary refractive index at 20°C and 589 nm,
- Δn: optical anisotropy at 20°C and 589 nm,
- ε_{⊥}: dielectric permittivity perpendicular to the director at 20°C and 1 kHz,
- ε||: dielectric permittivity parallel to the director at 20°C and 1 kHz,
- Δε: dielectric anisotropy at 20°C and 1 kHz,
- cl.p., T(N,I): clearing point [°C],
- γ₁: rotational viscosity at 20°C [mPa·s],
- K₁: elastic constant, "splay" deformation at 20°C [pN],
- K₂: elastic constant, "twist" deformation at 20°C [pN],
- K₃: elastic constant, "bend" deformation at 20°C [pN].

Unless explicitly noted otherwise, all concentrations and ratios in the present application are quoted in per cent by weight, and preferably relate to the corresponding mixture as a whole, comprising all solid or liquid-crystalline components, without solvents.

Unless explicitly noted otherwise, all temperature values indicated in the present application, such as, for example, for the melting point T(C,N), the transition from the smectic (S) to the nematic (N) phase T(S,N) and the clearing point T(N,I), are quoted in degrees Celsius (°C). M.p. denotes melting point, cl.p. = clearing point. Furthermore, C = crystalline state, N = nematic phase, S = smectic phase and I = isotropic phase. The data between these symbols represent the transition temperatures.

All physical properties are and have been determined in accordance with "Merck Liquid Crystals, Physical Properties of Liquid Crystals", Status Nov. 1997, Merck KGaA, Germany, and apply for a temperature of 20°C, and Δn is determined at 589 nm and Δε at 1 kHz, unless explicitly indicated otherwise in each case.

The term "threshold voltage" for the present invention relates to the capacitive threshold (V₀), also known as the Freedericks threshold, unless explicitly indicated otherwise. In the examples, the optical threshold may also, as generally usual, be quoted for 10% relative contrast (V₁₀).

### Example 1

The nematic LC host mixture N1 is formulated as follows.

| | | | |
|---|---|---|---|
| CC-3-V | 40.00 | cl.p. | 81.5°C |
| CC-3-V1 | 8.00 | Δn | 0.0827 |
| PUQU-2-F | 3.00 | Δε | 9.4 |
| PUQU-3-F | 8.00 | ε_{\|\|} | 12.8 |
| APUQU-2-F | 7.00 | γ₁ | 75 mPa·s |
| APUQU-3-F | 7.00 | | |
| CCP-3-1 | 7.00 | | |
| CCOC-3-3 | 5.00 | | |
| CCOC-4-3 | 5.00 | | |
| CDUQU-3-F | 10.00 | | |

### Polymerisable Mixture Examples

**Polymerisable mixture preparation:** Polymerisable LC media for polymer wall formation are prepared by mixing LC host, monomers and photoinitiator and then homogenizing the resulting mixture by heating above the clearing point.

The structures of the monomers are listed below.

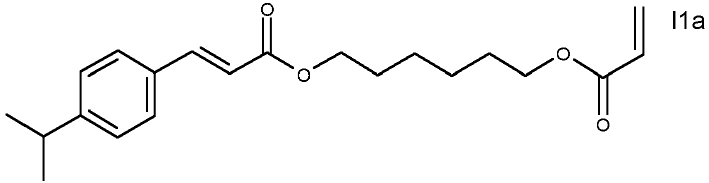

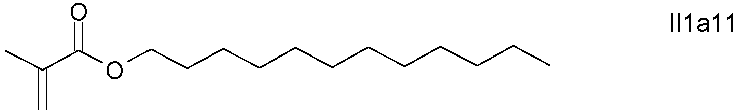

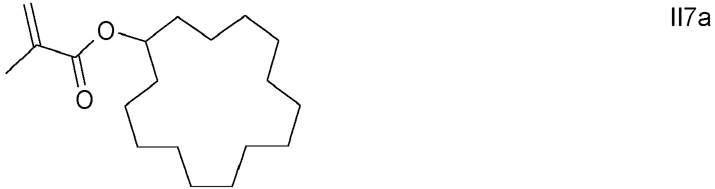

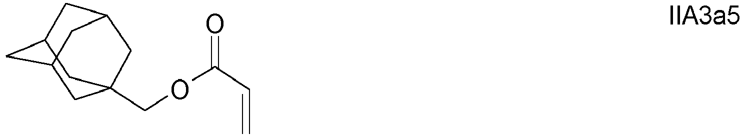

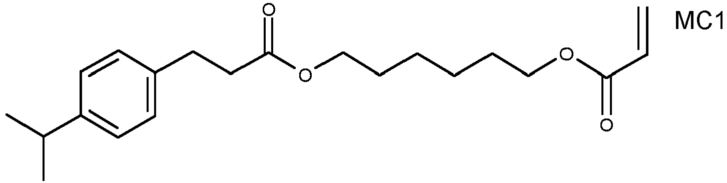

Monomer MC1 is the structure-analogous compound to the compound of formula I1a according to the invention, which does not contain a cinnamate moiety and is used as comparison example.

The mixture compositions are shown in Table 1 below. Mixtures 1-4 are mixtures according to the present invention. Mixture C1 is a comparison mixture.

**Table 1 - Polymerisable Mixture Compositions**

| **No.** | **Host** | **[Host] (%)** | **Monomer 1** | **[Monomer 1] (%)** | **Monomer 2** | **[Monomer 2] (%)** | **Monomer 3** | **[Monomer 3] (%)** | **IRG-651 [%]** |
|---|---|---|---|---|---|---|---|---|---|
| 1¹⁾ | N1 | 74.75 | I1a | 12.50 | IIA3a5 | 12.50 | - | - | 0.25 |
| C1¹⁾ | N1 | 74.75 | MC1 | 12.50 | IIA3a5 | 12.50 | - | - | 0.25 |
| 2²⁾ | N1 | 74.75 | I1a | 12.50 | II7a | 12.50 | - | - | 0.25 |
| 3²⁾ | N1 | 74.75 | I1a | 12.50 | IIA3a5 | 6.25 | II1a11 | 6.25 | 0.25 |
| 4²⁾ | N1 | 74.75 | I1a | 12.50 | II7a | 6.25 | II1a11 | 6.25 | 0.25 |

**Test Cells:** The test cells comprise two glass substrates coated with ITO, which are kept apart by spacer particles or foils at a layer thickness of 3-4 microns and glued together by an adhesive (usually Norland, NEA 123). On top of the electrode layers polyimide alignment layers (Nissan SE-6514 or SE2414) are applied which are rubbed parallel or antiparallel.

### Wall formation:

¹⁾ The test cells are filled with the LC medium and placed on a black, non-reflecting surface. A photomask is placed on top of the test cells and the sample is subjected for 30min to UV radiation (Hg/Xe arch lamp, LOT QuantumDesign Europe, LS0205, intensity at sample 4mW/cm² measured at 365+/-10nm FWHM). Radiation of the emission spectrum below 320nm is removed by a dichroic mirror. The photomask usually has a pattern of equidistant lines of the same thickness. The line thickness is 140microns, the distance between the lines is 9 microns.
²⁾ Wall formation is carried out as described above, but wherein UV radation is applied in a first step for 30min with 4mW/cm² intensity, and a second step for 30min with 10mW/cm² intensity (both steps at 365+/-10nm FWHM).

**Characterization:** Samples are analyzed under a polarization microscope. The isotropic polymer walls can clearly be distinguished from areas containing birefringend LC. The width of the walls and inclusions of LC into the polymer walls, and defects in the pixel area caused by contamination of polymer, or misalignment of the LC caused by the wall formation process can be observed.

**Mechanical stress test:** Test cells are subjected to a mechanical stress by applying pressure to the top substrate by a 0.5mm² tip with a force of 10N for 10s. Damages to the polymer wall structure are evaluated with the polarization microscope.

It was observed that the polymer wall structure did not show significant damages caused by mechanical stress.

**Electron micrographs:** The structure of the polymer walls and contamination of the pixel area by polymer are investigated by taking electron micrographs. The samples are prepared by either lifting off the top substrate for top-view images, or breaking the glass slides in half for viewing the cross section of the walls. The LC is removed by flushing the sample with ethanol, subsequently the substrates is dried in an air flow and sputter coated with a conductive layer (gold).

**Electro-optical characterization:** The electro-optical properties of the liquid crystal host are characterized by applying an electrical potential between 0 and 10V in steps of 0.05V. The resulting response is recorded by measuring the transmission change of the sample in between crossed polarizers (DMS 301 equipped with integration sphere).

It was observed that the electrooptical properties of the liquid crystal host were not significantly affected by the polymer wall structures.

### Device Examples

Polymerisable LC mixtures 1-4 and C1 are each filled into a test cell and subjected to UV irradiation under a photomask as described above.

**Fig.2** shows polarization microscope images of test cells prepared from polymerisable mixture 1 after polymerization (a) and after thermal stress test (b) by exposure to 60°C for 1h. The formed polymer walls can be seen as dark lines.

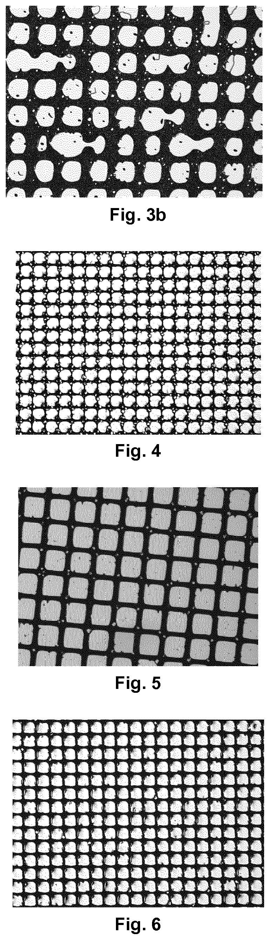

**Fig.3** shows polarization microscope images of test cells prepared from polymerisable mixture C1 after polymerization (a) and after thermal stress test (b) by exposure to 60°C for 1h. The formed polymer walls can be seen as dark lines.

When comparing **Fig. 2b** and **Fig.3b** it can be seen that the polymer walls formed by mixture 1 show higher stability after thermal stress by maintaining their defined shape, whereas the polymer walls formed by mixture C1 after thermal stress show degradation by losing their defined shape.

**Fig. 4, 5 and 6** show the polarization microscope images of the test cells prepared from polymerisable mixture 2, 3 and 4, respectively, after polymerization. The formed polymer walls can be seen as dark lines.

## Claims

1. A liquid crystal (LC) medium comprising a polymerisable component A) which comprises one or more polymerisable compounds, and a liquid-crystalline component B) which comprises one or more mesogenic or liquid-crystalline compounds, **characterized in that** polymerisable component A) comprises one or more first polymerisable compounds comprising a cinnamate group of which the O atom is connected to an acrylate or methacrylate group via a hydrocarbon spacer group having from 2 to 20 C atoms,
**characterized in that** component A) comprises one or more first polymerisable compounds selected from formula I 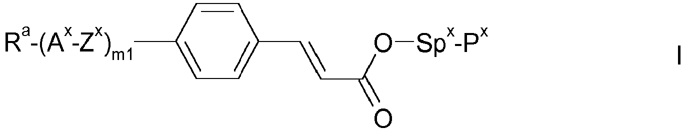 wherein the individual radicals, independently of each other, and on each occurrence identically or differently, have the following meanings
P^{x} an acrylate or methacrylate group,
Sp^{x} straight chain, branched or cyclic alkylene having 2 to 20 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other,
R^{a} H, F, Cl, CN, P^{x}, P^{x}-Sp^{x}-, R^{x}, R^{x}-O-CO-CH=CH-, P^{x}-Sp^{x}-O-CO-CH=CH-, R^{x}-CH=CH-CO-O-, P^{x}-Sp^{x}-CH=CH-CO-O-,
R^{x} straight chain, branched or cyclic alkyl having 1 to 25 C atoms, wherein one or more non-adjacent CH₂-groups are optionally replaced by -O-, -S-, -NR⁰-, -CO-, -CO-O-, -O-CO-, -O-CO-O-, -C(R⁰)=C(R⁰⁰)- or -C≡C-, in such a manner that O- and/or S-atoms are not directly connected with each other, and wherein one or more H atoms are each optionally replaced by F or Cl,
A^{x} an aromatic, heteroaromatic, alicyclic or heterocyclic group having 4 to 25 ring atoms, which may also contain fused rings, and which is unsubstituted, or mono- or polysubstituted by L,
Z^{x} -O-, -S-, -CO-, -CO-O-, -OCO-, -O-CO-O-, -OCH₂-, -CH₂O-,-SCH₂-, -CH₂S-, -CF₂O-, -OCF₂-, -CF₂S-, -SCF₂-, -(CH₂),₁₁-,-CF₂CH₂-, -CH₂CF₂-, -(CF₂),₁₁-, -CH=CH-, -CF=CF-, -C≡C-,-CH=CH-COO-, -OCO-CH=CH-, CR⁰R⁰⁰ or a single bond,
L F, Cl, -CN, -NO₂, -NCO, -NCS, -OCN, -SCN, -C(=O)N(R^{q})₂, -C(=O)Y^{z}, -C(=O)R^{q}, -N(R^{q})₂, optionally substituted silyl, optionally substituted aryl or heteroaryl having 5 to 20 ring atoms, or straight-chain or branched alkyl having 1 to 25 C atoms in which, in addition, one or more non-adjacent CH₂ groups may each be replaced, independently of one another, by -C(R⁰)=C(R⁰⁰)-, -C≡C-, -N(R⁰)-, -O-, -S-, -CO-, -CO-O-, -O-CO-, -O-CO-O- in such a way that O and/or S atoms are not linked directly to one another, and in which, in addition, one or more H atoms may be replaced by F, Cl, -CN,
R^{q} H, F, Cl, CN, or straight chain, branched or cyclic alkyl having 1 to 25 C atoms, wherein one or more non-adjacent CH₂-groups are optionally replaced by -O-, -S-, -CO-, -CO-O-, -O-CO-, -O-CO-O- in such a manner that O- and/or S-atoms are not directly connected with each other, and wherein one or more H atoms are each optionally replaced by F or Cl,
R⁰, R⁰⁰ H or alkyl having 1 to 20 C atoms,
Y^{z} halogen,
m1 0, 1 or 2,
n11 1, 2, 3 or 4, and
component A) comprises one or more second polymerisable compounds selected from the following formulae 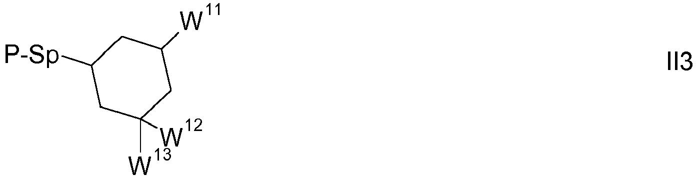 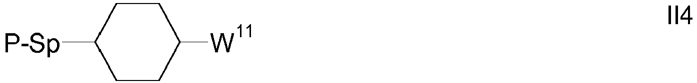 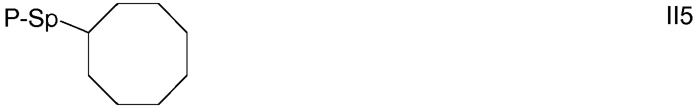 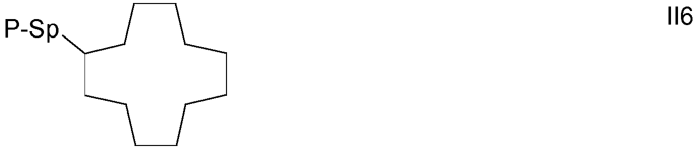 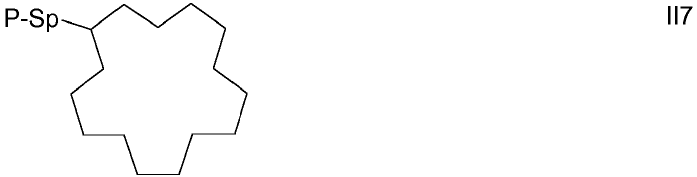 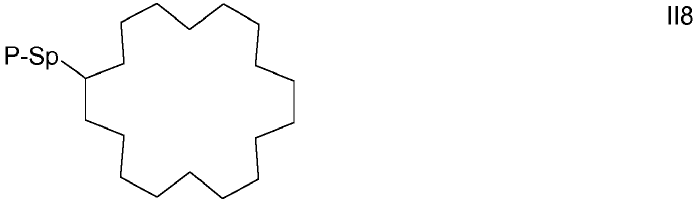 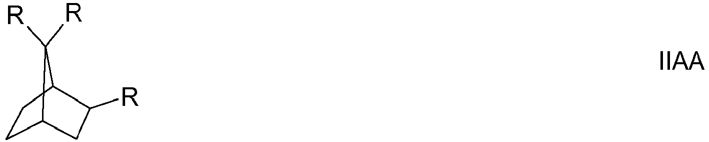 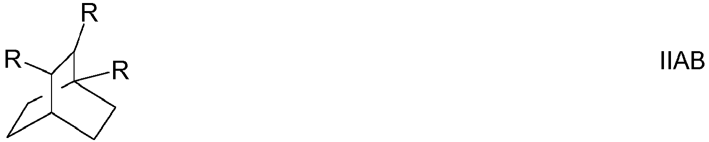 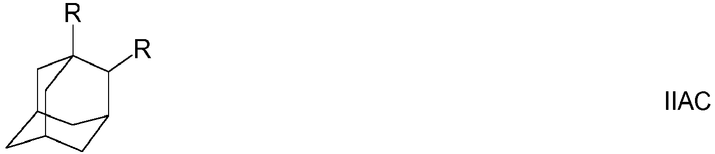 wherein the individual radicals, independently of each other and on each occurrence identically or differently, have the following meanings
P, Sp have the meanings given in claim 7,
W¹¹, W¹² are H, F or straight-chain or branched C₁-C₁₂-alkyl,
W¹³, W¹⁴ are H or F,
n1 is an integer from 2 to 15,
n2, n3 are 0 or an integer from 1 to 3,
R on each occurrence identically or differently denotes P-Sp- or has one of the meanings given for R^{x}, and one of the groups R in each of formulae IIAA-IIAC denotes P-Sp-.

2. The LC medium according to claim 1, **characterized in that** component A) comprises one or more first polymerisable compounds selected from the following formulae 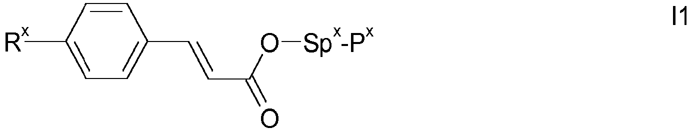 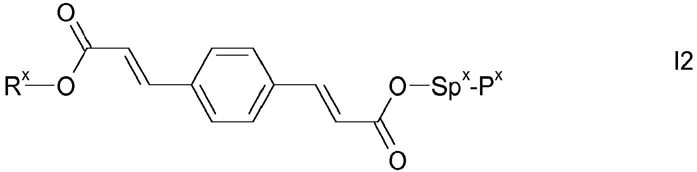 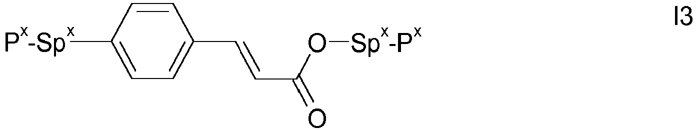 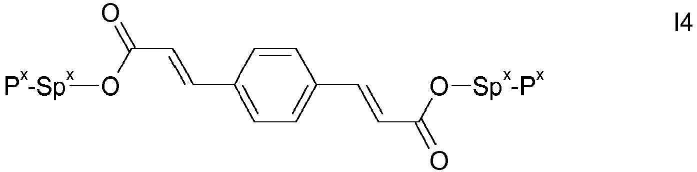 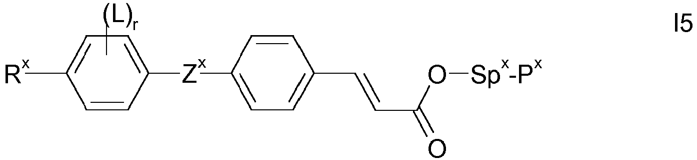 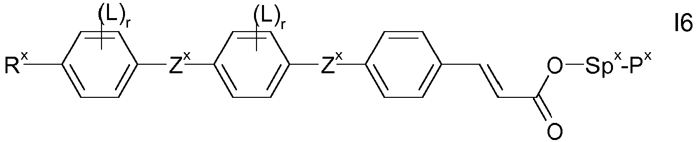 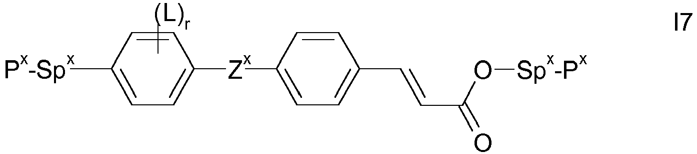 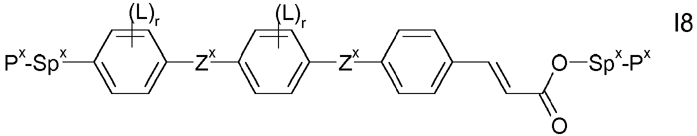 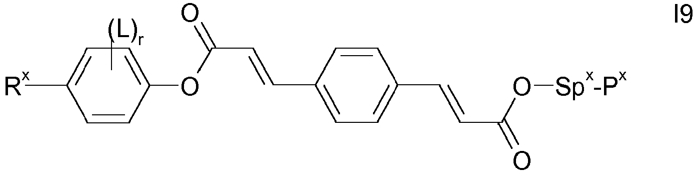 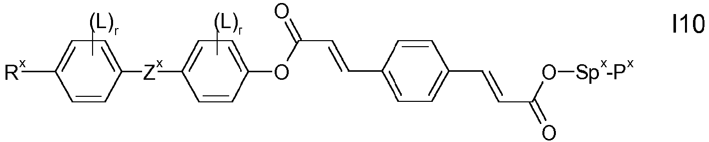 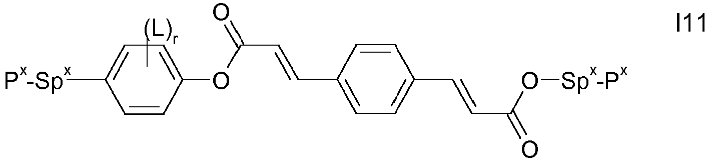 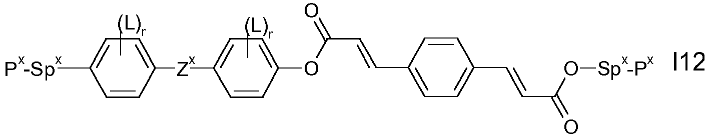 wherein P^{x}, Sp^{x}, R^{x} and L have the meanings given in claim 1, and r is 0, 1, 2, 3 or 4.

3. The LC medium according to claim 1 or 2, **characterized in that** component A) comprises one or more first polymerisable compounds selected from the following formulae

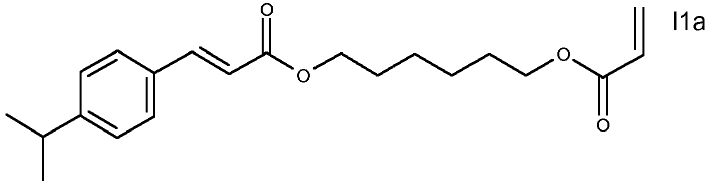

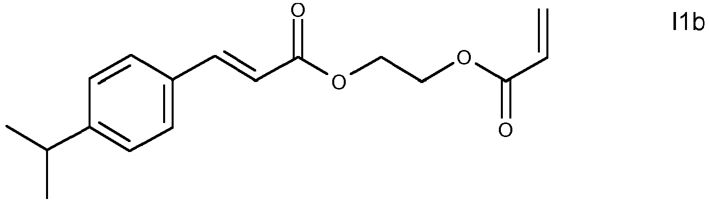

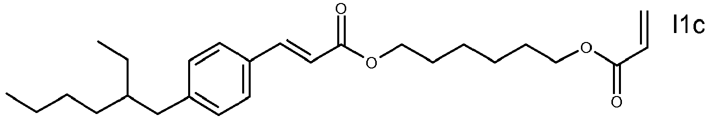

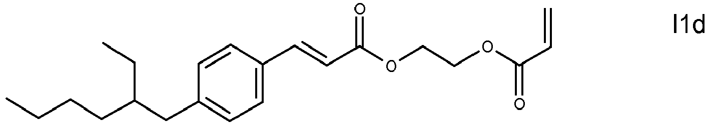

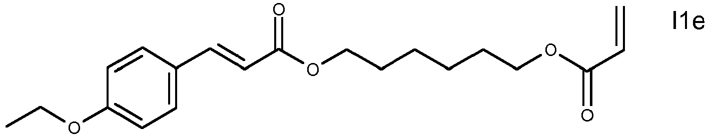

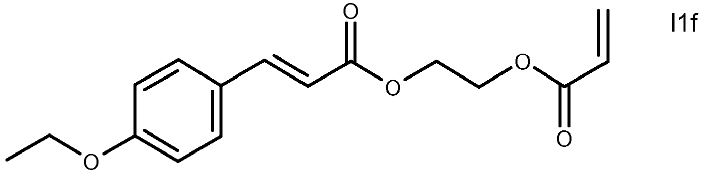

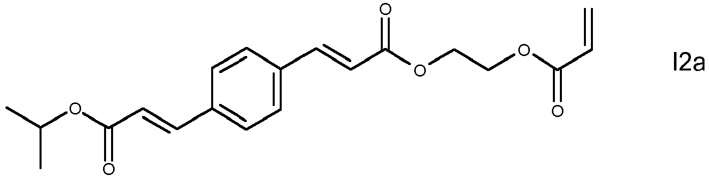

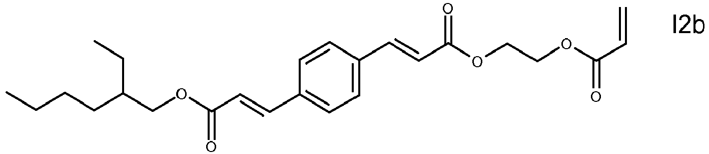

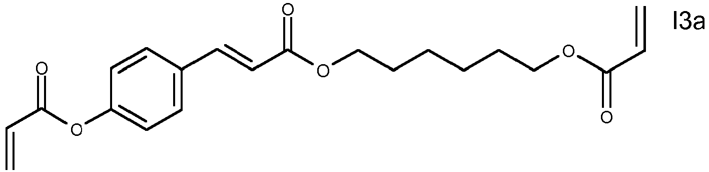

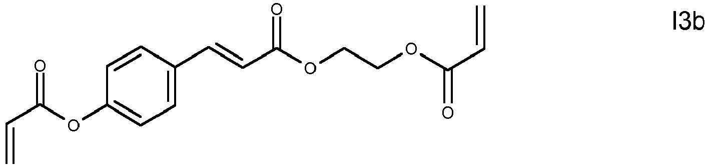

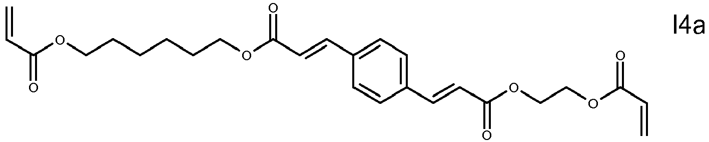

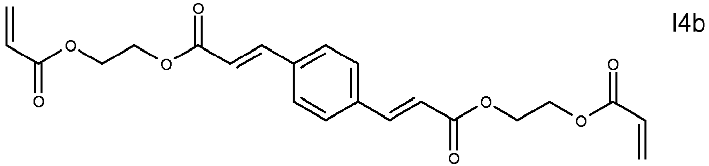

4. The LC medium according to any one of claims 1 to 3, **characterized in that** component A) comprises one or more second polymerisable compounds selected from the following formulae 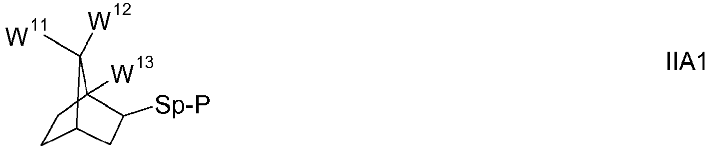 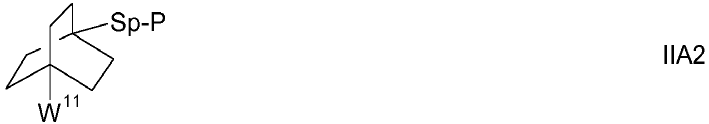 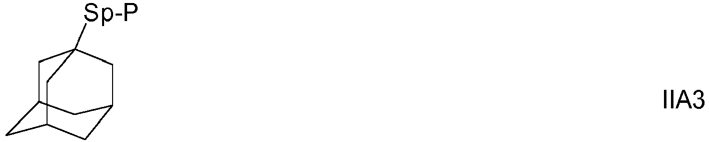 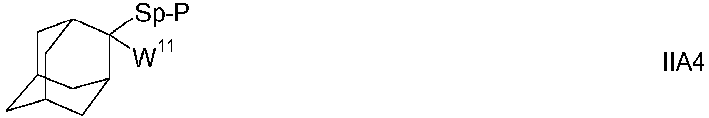 wherein P and Sp have the meanings given in claim 7, W¹¹, W¹² and W¹³ are independently of each other H, F or C₁-C₁₂-alkyl, and the cycloalkyl groups are optionally substituted with one or more groups L as defined in claim 1.

5. The LC medium according to any one of claims 1 to 4, **characterized in that** component A) comprises one or more second polymerisable compounds selected from the following formulae 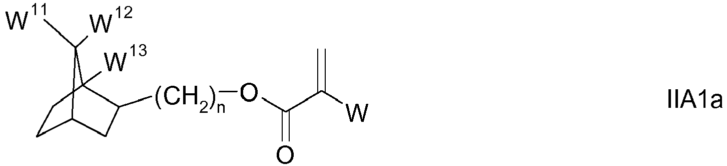 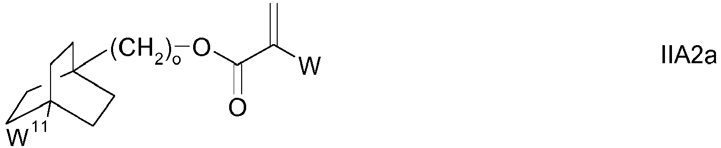 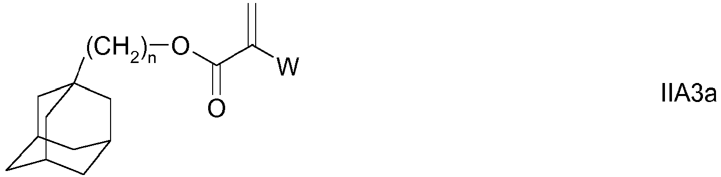 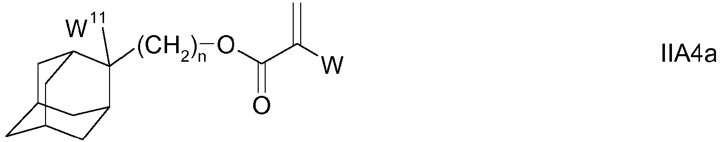 wherein n is 0 or an integer from 1 to 8, W is H, CH₃ or C₂H₅ and W¹¹, W¹² and W¹³ are H, F or C₁-C₁₂-alkyl.

6. The LC medium according to any one of claims 1 to 5, **characterized in that** component A) comprises one or more third polymerisable compounds selected of formula III
P¹-Sp¹-G³-Sp²-P² III
wherein
P¹ and P² independently of each other and on each occurrence identically or differently denote a polymerisable group,
Sp¹, Sp² denote independently of each other identical or different spacer groups or a single bond,
G³ is a straight-chain, branched or cyclic alkyl group with 1 to 20 C atoms that is optionally mono-, poly- or perfluorinated and is optionally substituted by one or more groups P¹-Sp¹- or L as defined in claim 1, and wherein one or more CH₂-groups are optionally replaced by -O-, -CO-, -O-CO- or -CO-O- such that O-atoms are not directly adjacent to one another.

7. The LC medium according to any one of claims 1 to 6, **characterized in that** component A) comprises one or more third polymerisable compounds wherein the two polymerisable groups, or groups P¹ and P², are different from each other.

8. The LC medium according to any one of claims 1 to 7, **characterized in that** component A) comprises one or more third polymerisable compounds selected from the following formulae
P¹-Sp¹-(CHW¹¹)ₙ₂-(CH₂)ₙ₁-(CHW¹²)ₙ₃-Sp²-P² III1 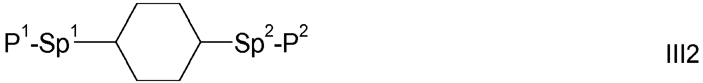
P¹--(CH₂)ₙ₂-(CF₂)ₙ₁-(CH₂)ₙ₃--P² III3
(P¹-Sp¹-(CH₂)ₙ₄)ₙ₅CH₄₋ₙ₅ III4
wherein P¹, P², Sp¹, Sp² are as defined in claim 6,
W¹¹, W¹² are, on each occurrence identically or differently, H, F or C₁-C₁₂-alkyl,
n1 is an integer from 2 to 15,
n2, n3 are independently of each other 0 or an integer from 1 to 3,
n4 is 0 or an integer from 1 to 15,
n5 is 3 or 4,
and the cyclohexylene ring in formula III2 is optionally substituted by one or more identical or different groups W¹¹.

9. The LC medium according to any one of claims 1 to 8, **characterized in that** component A) comprises one or more third polymerisable compounds selected from the following formulae
CH₂=CW-CO-O-(CHW¹¹)ₙ₄-(CH₂)ₙ₁-O-CH=CH₂ III1a
CH₂=CH-O-(CHW¹)ₙ₄-(CH₂)ₙ₁-O-CO-CH=CH₂ III1b
CH₂=CW-CO-O-(CHW¹¹)ₙ₂-(CH₂)ₙ₁-(CHW¹²)ₙ₃-O-CO-CW=CH₂ III1c 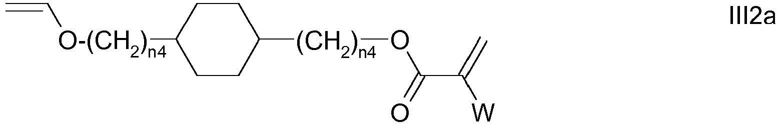 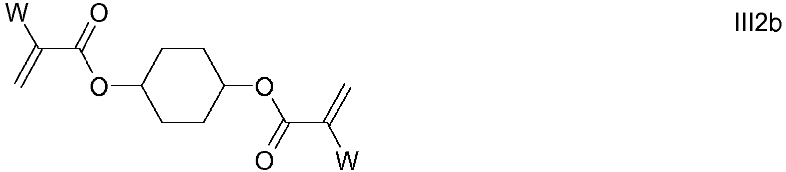 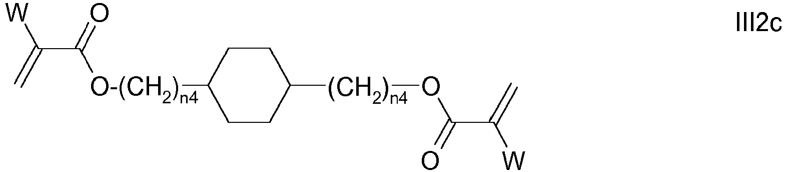
CH₂=CW-CO-O-(CH₂)ₙ₂-(CF₂)ₙ₁-(CH₂)ₙ₃-O-CH=CH₂ III3a
CH₂=CW-CO-O-(CH₂)ₙ₂-(CF₂)ₙ₁-(CH₂)ₙ₃-O-CO-CW=CH₂ III3b
(CH₂=CW-CO-O-(CH₂)ₙ₂)₃CH III4a
(CH₂=CW-CO-O-(CH₂)ₙ₂)₄C III4b
wherein W is H, CH₃ or C₂H₅ and W¹¹, W¹², n1, n2 and n4 are as defined in claim 8, and the cyclohexylene ring in formula III2a-c is optionally substituted by one or more identical or different groups W¹¹.

10. The LC medium according to any one of claims 1 to 9, **characterized in that** component A) comprises one or more fourth polymerisable compounds comprising a ring system containing one or more aromatic or heteroaromatic rings or condensed aromatic or heteroaromatic rings, and attached thereto two polymerisable groups that are identical or different from each other.

11. The LC medium according to any one of claims 1 to 10, **characterized in that** component A) comprises one or more fourth polymerisable compounds selected from the following formula
P¹-Sp¹-B¹-(Z^{b}-B²)ₘ-Sp²-P² IV
in which P¹, P², Sp¹, Sp² are as defined in claim 6,
B¹ and B² are independently of each other, and on each occurrence identically or differently, an aromatic, heteroaromatic, alicyclic or heterocyclic group having 4 to 25 ring atoms, which may also contain fused rings, and which is unsubstituted, or mono- or polysubstituted by L as defined in claim 4, wherein at least one of B¹ and B² denotes an aromatic or heteroaromatic group,
Z^{b} is, on each occurrence identically or differently, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁₁-,-CF₂CH₂-, -CH₂CF₂-, -(CF₂)ₙ₁₁-, -CH=CH-, -CF=CF-, -C≡C-, -CH=CH-COO-, -OCO-CH=CH-, CR⁰R⁰⁰ or a single bond,
R⁰ and R⁰⁰ each, independently of one another, denote H or alkyl having 1 to 20 C atoms,
m denotes 0, 1, 2, 3 or 4,
n11 denotes 1, 2, 3 or 4.

12. The LC medium according to any one of claims 1 to 11, **characterized in that** component A) comprises a photoinitiator.

13. The LC medium according to any one of claims 1 to 11, **characterized in that** component A) comprises a photosensitizer.

14. The LC medium according to any one of claims 1 to 13, **characterized in that** the concentration of the first polymerisable compound in the LC medium is from 1 to 30% by weight.

15. The LC medium according to any one of claims 1 to 14, **characterized in that** the ratio of the amount of the first polymerisable compound, or compound of formula I, relative to the combined amount of the second, third and fourth polymerisable compounds, or compounds of formula II, II and IV in the LC medium is from 10:1 to 1:10.

16. The LC medium according to any one of claims 1 to 14, **characterized in that** the total concentration of the first, second, third and fourth polymerisable compounds in the LC medium is from 10 to 40% by weight.

17. The LC medium according to any one of claims 1 to 16, **characterized in that** component B) comprises one or more compounds selected from formulae A and B 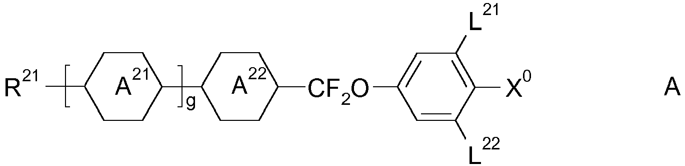 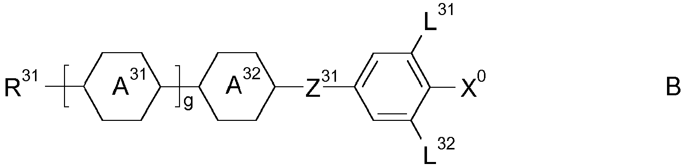 in which the individual radicals have, independently of each other and on each occurrence identically or differently, the following meanings: 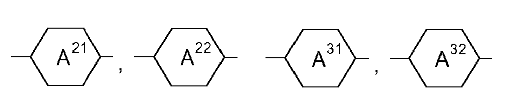 each, independently of one another, and on each occurrence, identically or differently 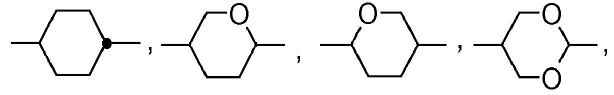 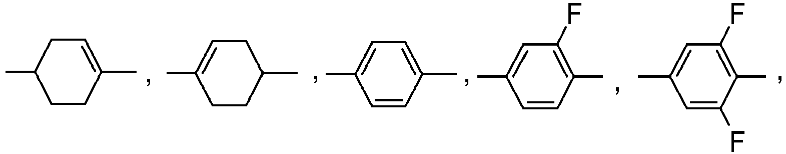
R²¹, R³¹ each, independently of one another, alkyl, alkoxy, oxaalkyl or alkoxyalkyl having 1 to 9 C atoms or alkenyl or alkenyloxy having 2 to 9 C atoms, all of which are optionally fluorinated,
X⁰ F, Cl, halogenated alkyl or alkoxy having 1 to 6 C atoms or halogenated alkenyl or alkenyloxy having 2 to 6 C atoms,
Z³¹ -CH₂CH₂-, -CF₂CF₂-, -COO-, *trans-*CH=CH-*, trans-*CF=CF-, -CH₂O- or a single bond,
L²¹, L²², L³¹, L³² each, independently of one another, H or F,
g 0, 1, 2 or 3.

18. The LC medium according to claim 17, **characterized in that** component B) comprises, in addition to the compounds of formula A and/or B, one or more compounds of formula E containing an alkenyl group 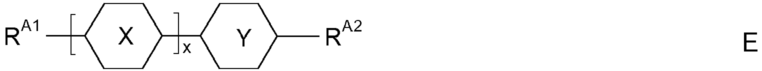 in which the individual radicals, on each occurrence identically or differently, each, independently of one another, have the following meaning: 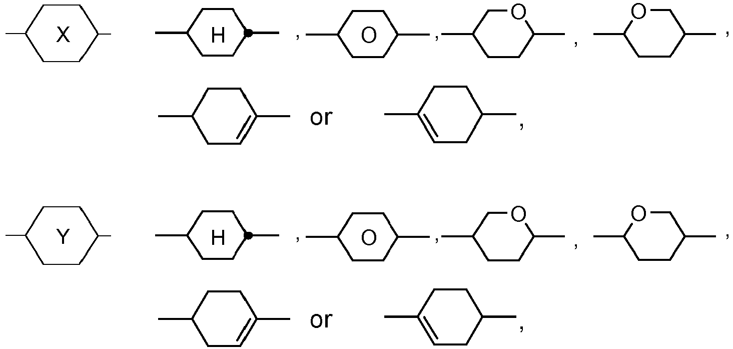
R^{A1} alkenyl having 2 to 9 C atoms or, if at least one of the rings X, Y and Z denotes cyclohexenyl, also one of the meanings of R^{A2},
R^{A2} alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
x 1 or 2.

19. The LC medium according to any one of claims 1 to 16, **characterized in that** component B) comprises one or more compounds selected from formulae CY and PY: 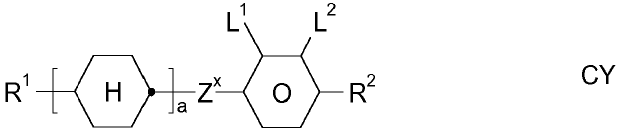 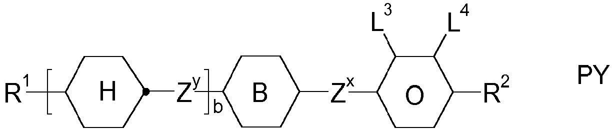 wherein
a denotes 1 or 2,
b denotes 0 or 1, 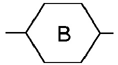 denotes 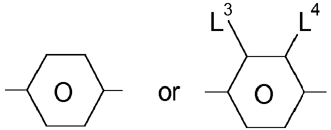
R¹ and R² each, independently of one another, denote alkyl having 1 to 12 C atoms, where, in addition, one or two non-adjacent CH₂ groups may be replaced by -O-, -CH=CH-, -CO-, -OCO- or -COO- in such a way that O atoms are not linked directly to one another,
Z^{x} and Z^{y} each, independently of one another, denote -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond,
L¹⁻⁴ each, independently of one another, denote F, Cl, OCF₃, CF₃, CH₃, CH₂F, CHF₂.

20. The LC medium according to claim 19, **characterized in that** component B) comprises one or more alkenyl compounds selected from formulae AN and AY 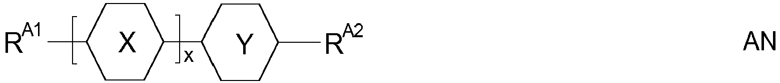 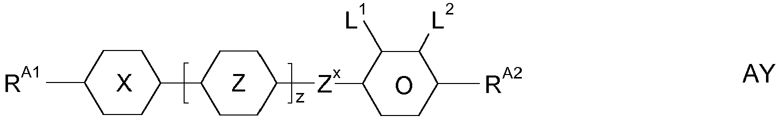 in which the individual radicals, on each occurrence identically or differently, and each, independently of one another, have the following meaning: 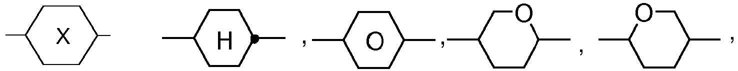 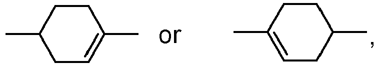 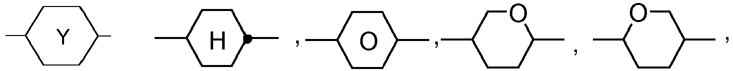 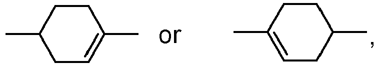 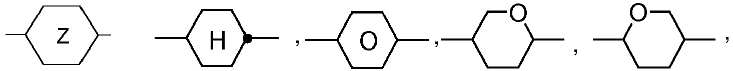 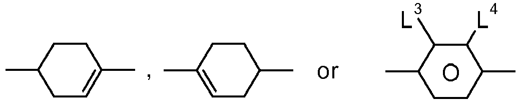
R^{A1} alkenyl having 2 to 9 C atoms or, if at least one of the rings X, Y and Z denotes cyclohexenyl, also one of the meanings of R^{A2},
R^{A2} alkyl having 1 to 12 C atoms, in which, in addition, one or two non-adjacent CH₂ groups may be replaced by -O-, -CH=CH-, -CO-, -OCO- or -COO- in such a way that O atoms are not linked directly to one another,
Z^{x} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- or a single bond,
L¹⁻⁴ H, F, Cl, OCF₃, CF₃, CH₃, CH₂F or CHF₂,
x 1 or 2,
z 0 or 1.

21. The LC medium according to any one of claims 1 to 20 **characterized in that** the polymerisable compounds are polymerised.

22. An LC display comprising an LC medium according to any one of claims 1 to 21.

23. The LC display of claim 22, which is a flexible or curved display.

24. The LC display of claim 22 or 23, which is a TN, OCB, IPS, FFS, posi-VA, VA or UB-FFS display.

25. A process for the production of an LC display according to any one of claims 22 to 24, comprising the steps of providing an LC medium as defined in any one of claims 1 to 20 into the display, and polymerising the polymerisable compounds in defined regions of the display.

26. The process of claim 25, wherein the polymerisable compounds are photopolymerised by exposure to UV irradiation.

27. The process of claim 26, wherein the polymerisable compounds are photopolymerised by exposure to UV irradiation through a photomask.

28. A process of preparing an LC medium according to any one of claims 1 to 20, comprising the steps of mixing a liquid-crystalline component B) as defined in any one of claims 1 and 17 to 20, with one or more polymerisable compounds, or with component A), as defined in any one of claims 1 to 16, and optionally with further LC compounds and/or additives.

## Patentansprüche

1. Flüssigkristall(FK)-Medium enthaltend eine polymerisierbare Komponente A), die eine oder mehrere polymerisierbare Verbindungen enthält, und eine flüssigkristalline Komponente B), die eine oder mehrere mesogene oder flüssigkristalline Verbindungen enthält, **dadurch gekennzeichnet, dass** die polymerisierbare Komponente A) eine oder mehrere erste polymerisierbare Verbindungen enthaltend eine Cinnamatgruppe, deren O-Atom über eine Kohlenwasserstoff-Spacergruppe mit 2 bis 20 C-Atomen mit einer Acrylat- oder Methacrylatgruppe verbunden ist, enthält,
**dadurch gekennzeichnet, dass** die Komponente A) eine oder mehrere erste polymerisierbare Verbindungen enthält, die ausgewählt sind aus der Formel I 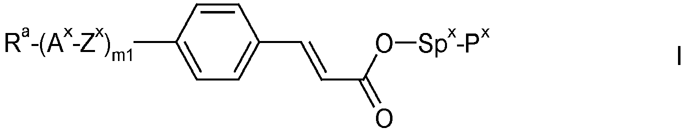 bei der die einzelnen Reste, unabhängig voneinander und bei jedem Auftreten gleich oder verschieden, die folgenden Bedeutungen besitzen
P^{x} eine Acrylat- oder Methacrylatgruppe,
Sp^{x} geradkettiges, verzweigtes oder cyclisches Alkylen mit 2 bis 20 C-Atomen, bei dem eine oder mehrere nicht benachbarte CH₂-Gruppen gegebenenfalls so durch -O-, -S-, -CO-, -CO-O-, -O-CO-, -O-CO-O- ersetzt sind, dass O- und/oder S-Atome nicht direkt miteinander verbunden sind,
R^{a} H, F, Cl, CN, P^{x}, P^{x}-Sp^{x}-, R^{x}, R^{x}-O-CO-CH=CH-, P^{x}-Sp^{x}-O-CO-CH=CH-, R^{x}-CH=CH-CO-O-, P^{x}-Sp^{x}-CH=CH-CO-O-,
R^{x} geradkettiges, verzweigtes oder cyclisches Alkyl mit 1 bis 25 C-Atomen, bei dem eine oder mehrere nicht benachbarte CH₂-Gruppen gegebenenfalls so durch -O-, -S-, -NR⁰-, -CO-, -CO-O-, -O-CO-, -O-CO-O-, -C(R⁰)=C(R⁰⁰)- oder -C≡C- ersetzt sind, dass O- und/oder S-Atome nicht direkt miteinander verbunden sind, und bei dem gegebenenfalls ein oder mehrere H-Atome jeweils durch F oder Cl ersetzt sind,
A^{x} eine aromatische, heteroaromatische, alicyclische oder heterocyclische Gruppe mit 4 bis 25 Ringatomen, die auch anellierte Ringe enthalten kann und die unsubstituiert oder ein- oder mehrfach durch L substituiert ist,
Z^{x} -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁₁-, -CF₂CH₂-, -CH₂CF₂-, -(CF₂)ₙ₁₁- , -CH=CH-, -CF=CF-, -C≡C-, -CH=CH-COO-, -OCO-CH=CH-, CR⁰R⁰⁰ oder eine Einfachbindung,
L F, Cl, -CN, -NO₂, -NCO, -NCS, -OCN, -SCN, -C(=O)N(R^{q})₂, -C(=O)Y^{z}, -C(=O)R^{q}, -N(R^{q})₂, gegebenenfalls substituiertes Silyl, gegebenenfalls substituiertes Aryl oder Heteroaryl mit 5 bis 20 Ringatomen oder geradkettiges oder verzweigtes Alkyl mit 1 bis 25 C-Atomen, worin zusätzlich eine oder mehrere nicht benachbarte CH₂-Gruppen jeweils unabhängig voneinander so durch -C(R⁰)=C(R⁰⁰)-, -C≡C-, -N(R⁰)-, -O-, -S-, -CO-, -CO-O-, -O-CO-, -O-CO-O- ersetzt sein können, dass O- und/oder S-Atome nicht direkt miteinander verknüpft sind, und worin zusätzlich ein oder mehrere H-Atome durch F, Cl, -CN ersetzt sein können,
R^{q} H, F, Cl, CN oder geradkettiges, verzweigtes oder cyclisches Alkyl mit 1 bis 25 C-Atomen, bei dem eine oder mehrere nicht benachbarte CH₂-Gruppen gegebenenfalls so durch -O-, -S-, -CO-, -CO-O-, -O-CO-, -O-CO-O- ersetzt sind, dass O- und/ oder S-Atome nicht direkt miteinander verbunden sind, und bei dem gegebenenfalls ein oder mehrere H-Atome jeweils durch F oder Cl ersetzt sind,
R⁰, R⁰⁰ H oder Alkyl mit 1 bis 20 C-Atomen,
Y^{z} Halogen,
m1 0, 1 oder 2,
n11 1, 2, 3 oder 4, und
die Komponente A) eine oder mehrere zweite polymerisierbare Verbindungen enthält, die ausgewählt sind aus den folgenden Formeln 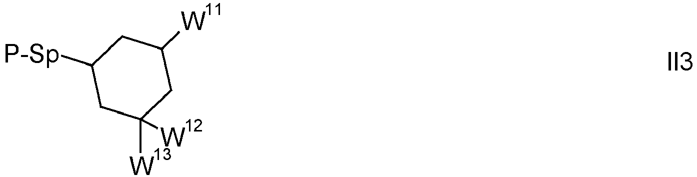 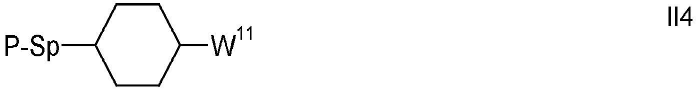 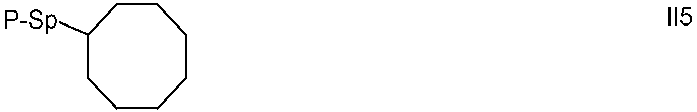 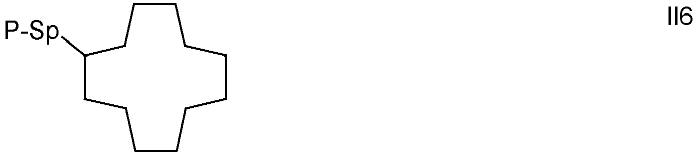 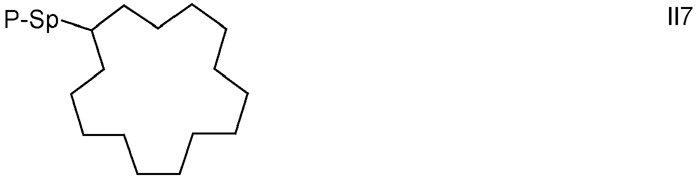 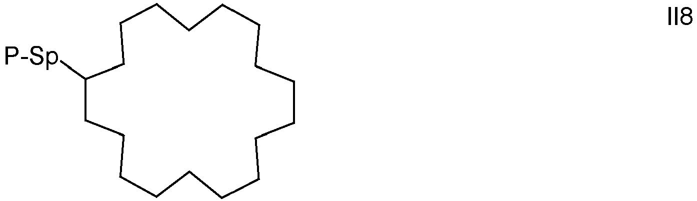 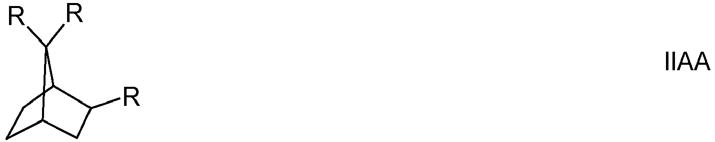 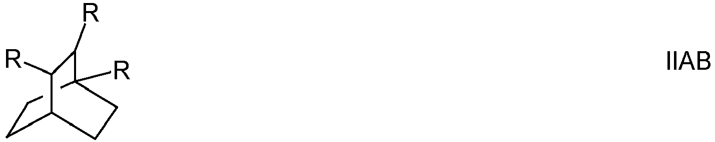 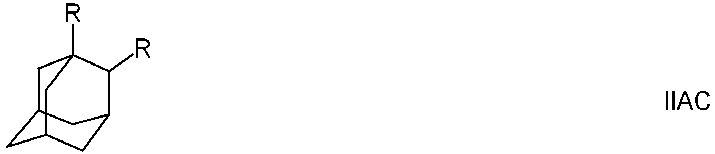 bei denen die einzelnen Reste, unabhängig voneinander und bei jedem Auftreten gleich oder verschieden, die folgenden Bedeutungen besitzen
P, Sp besitzen die in Anspruch 7 gegebenen Bedeutungen,
W¹¹, W¹² sind H, F oder geradkettiges oder verzweigtes C₁-C₁₂-Alkyl,
W¹³, W¹⁴ sind H oder F,
n1 ist eine ganze Zahl von 2 bis 15,
n2, n3 sind 0 oder eine ganze Zahl von 1 bis 3,
R bedeutet bei jedem Auftreten gleich oder verschieden P-Sp- oder besitzt eine der für R^{x} gegebenen Bedeutungen und eine der Gruppen R in jeder der Formeln IIAA-IIAC bedeutet P-Sp-.

2. FK-Medium nach Anspruch 1, **dadurch gekennzeichnet, dass** die Komponente A) eine oder mehrere erste polymerisierbare Verbindungen enthält, die ausgewählt sind aus den folgenden Formeln 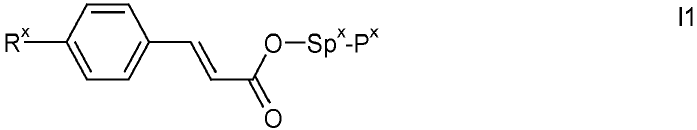 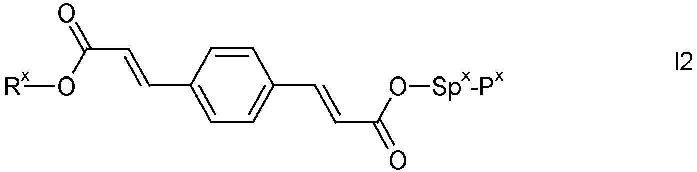 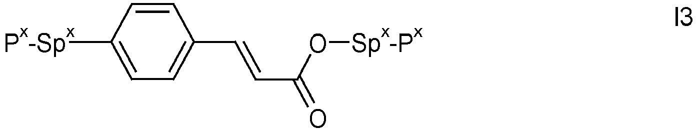 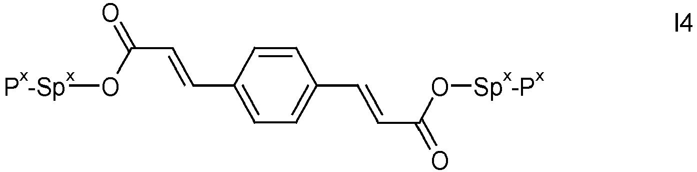 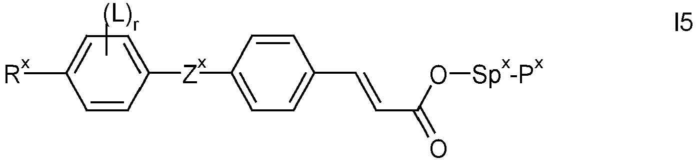 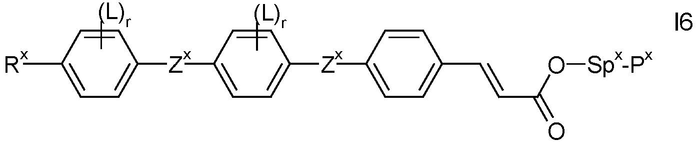 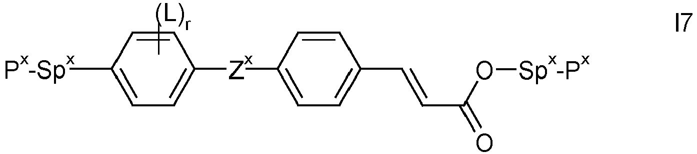 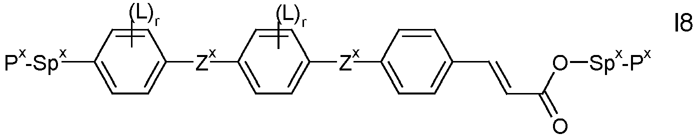 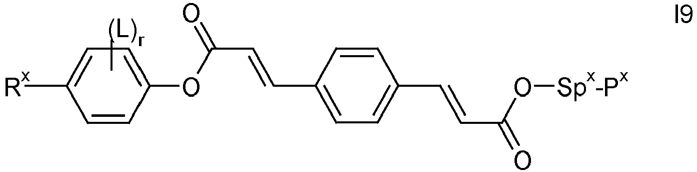 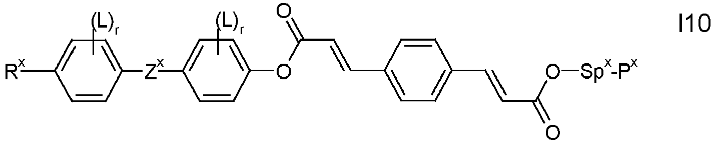 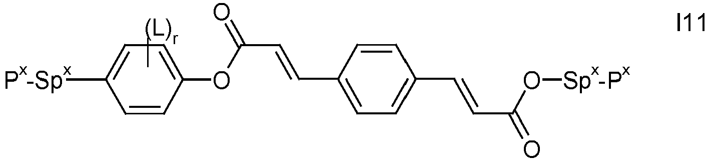 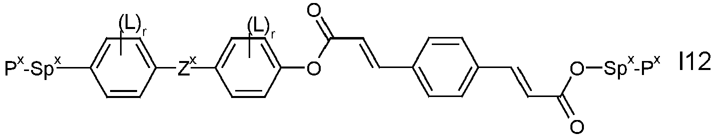 bei denen P^{x}, Sp^{x}, R^{x} und L die in Anspruch 1 gegebenen Bedeutungen besitzen und r 0, 1, 2, 3 oder 4 ist.

3. FK-Medium nach Anspruch 1 oder 2, **dadurch gekennzeichnet, dass** die Komponente A) eine oder mehrere erste polymerisierbare Verbindungen enthält, die ausgewählt sind aus den folgenden Formeln

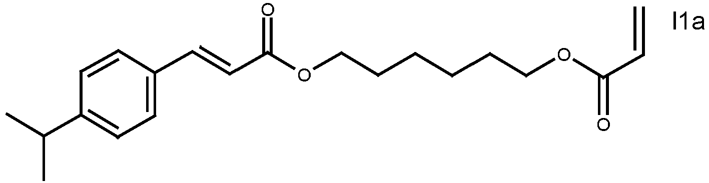

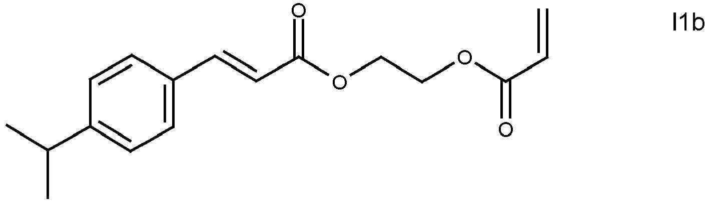

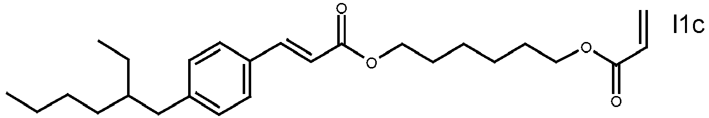

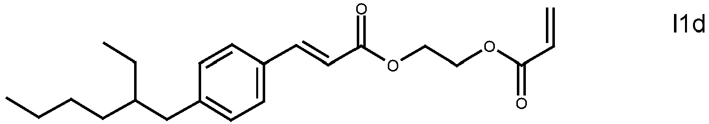

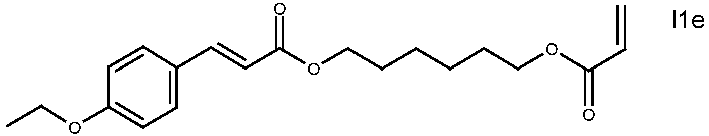

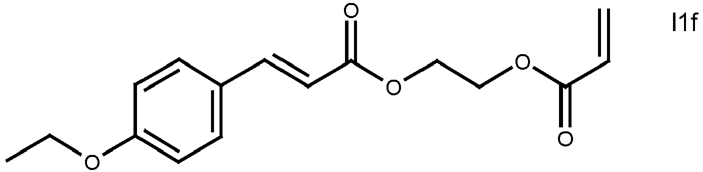

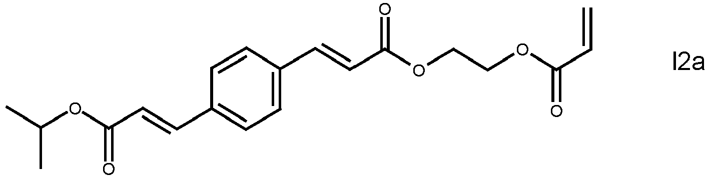

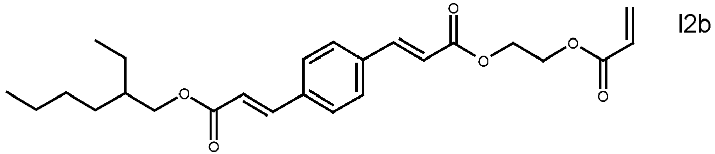

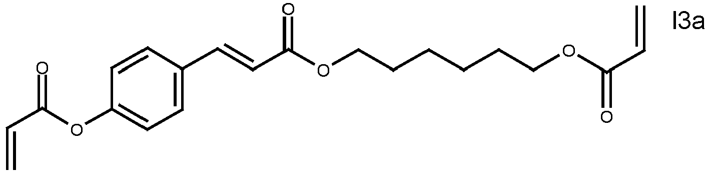

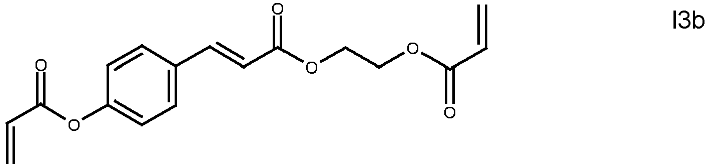

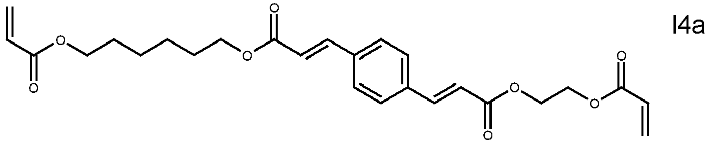

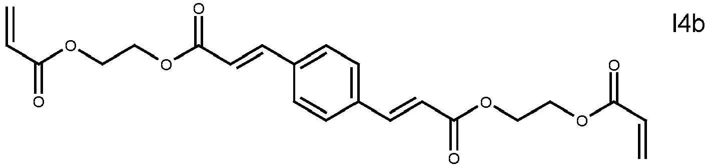

4. FK-Medium nach irgendeinem der Ansprüche 1 bis 3, **dadurch gekennzeichnet, dass** die Komponente A) eine oder mehrere zweite polymerisierbare Verbindungen enthält, die ausgewählt sind aus den folgenden Formeln 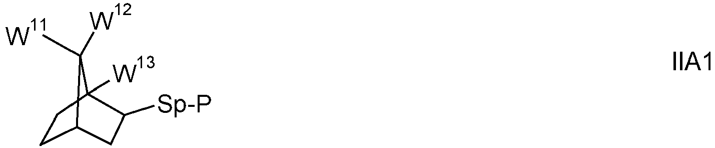 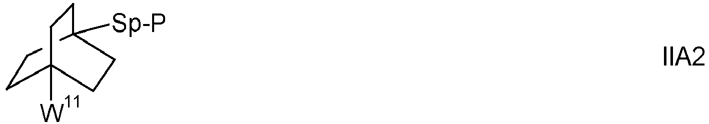 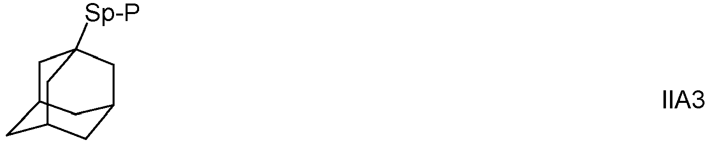 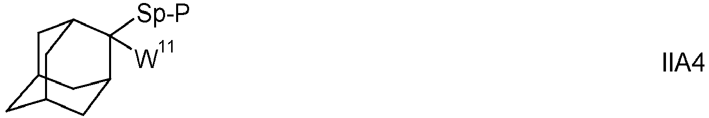 bei denen P und Sp die in Anspruch 7 gegebenen Bedeutungen besitzen, W¹¹, W¹² und W¹³ unabhängig voneinander H, F oder C₁-C₁₂-Alkyl sind und die Cycloalkylgruppen gegebenenfalls mit einer oder mehreren Gruppen L wie in Anspruch 1 definiert substituiert sind.

5. FK-Medium nach irgendeinem der Ansprüche 1 bis 4, **dadurch gekennzeichnet, dass** die Komponente A) eine oder mehrere zweite polymerisierbare Verbindungen enthält, die ausgewählt sind aus den folgenden Formeln 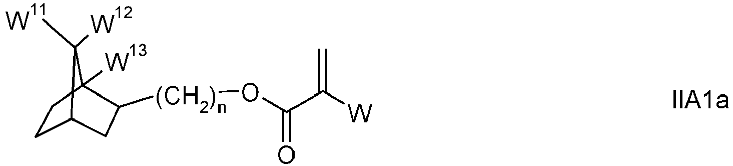 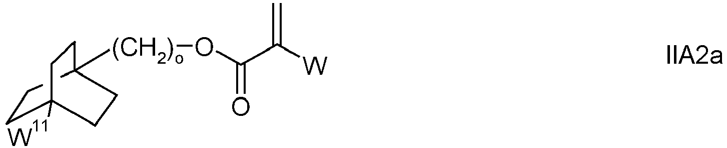 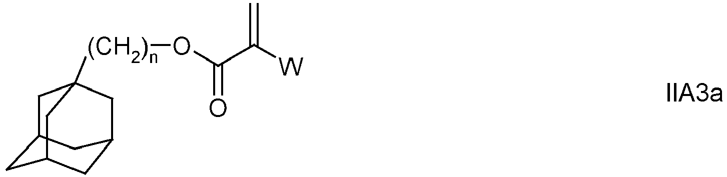 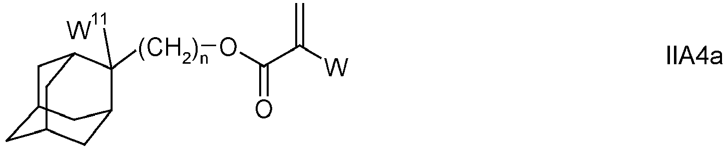 bei denen n 0 oder eine ganze Zahl von 1 bis 8 ist, W H, CH₃ oder C₂H₅ ist und W¹¹, W¹² und W¹³ H, F oder C₁-C₁₂-Alkyl sind.

6. FK-Medium nach irgendeinem der Ansprüche 1 bis 5, **dadurch gekennzeichnet, dass** die Komponente A) eine oder mehrere dritte polymerisierbare Verbindungen enthält, die ausgewählt sind aus der Formel III
P¹-Sp¹-G³-Sp²-P² III
bei der
P¹ und P² unabhängig voneinander und bei jedem Auftreten gleich oder verschieden eine polymerisierbare Gruppe bedeuten,
Sp¹, Sp² unabhängig voneinander gleiche oder verschiedene Spacergruppen oder eine Einfachbindung bedeuten,
G³ eine geradkettige, verzweigte oder cyclische Alkylgruppe mit 1 bis 20 C-Atomen ist, die gegebenenfalls einfach, mehrfach oder perfluoriert ist und gegebenenfalls durch eine oder mehrere Gruppen P¹-Sp¹- oder L wie in Anspruch 1 definiert substituiert ist und bei der gegebenenfalls eine oder mehrere CH₂-Gruppen so durch -O-, -CO-, -O-CO- oder -CO-O- ersetzt sind, dass O-Atome einander nicht direkt benachbart sind.

7. FK-Medium nach irgendeinem der Ansprüche 1 bis 6, **dadurch gekennzeichnet, dass** die Komponente A) eine oder mehrere dritte polymerisierbare Verbindungen enthält, bei denen die beiden polymerisierbaren Gruppen, oder Gruppen P¹ und P², voneinander verschieden sind.

8. FK-Medium nach irgendeinem der Ansprüche 1 bis 7, **dadurch gekennzeichnet, dass** die Komponente A) eine oder mehrere dritte polymerisierbare Verbindungen enthält, die ausgewählt sind aus den folgenden Formeln 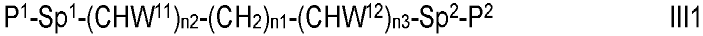 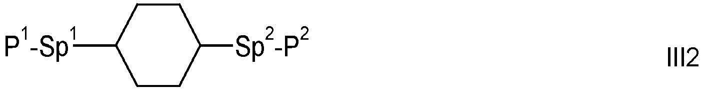 P¹-(CH₂)ₙ₂-(CF₂)ₙ₁-(CH₂)ₙ₃-P² III3
(P¹-Sp¹-(CH₂)ₙ₄)ₙ₅CH₄₋ₙ₅ III4
bei denen P¹, P², Sp¹, Sp² wie in Anspruch 6 definiert sind,
W¹¹, W¹² bei jedem Auftreten gleich oder verschieden H, F oder C₁-C₁₂-Alkyl sind,
n1 eine ganze Zahl von 2 bis 15 ist,
n2, n3 unabhängig voneinander 0 oder eine ganze Zahl von 1 bis 3 sind,
n4 0 oder eine ganze Zahl von 1 bis 15 ist,
n5 3 oder 4 ist,
und der Cyclohexylenring in Formel III2 gegebenenfalls durch eine oder mehrere gleiche oder verschiedene Gruppen W¹¹ substituiert ist.

9. FK-Medium nach irgendeinem der Ansprüche 1 bis 8, **dadurch gekennzeichnet, dass** die Komponente A) eine oder mehrere dritte polymerisierbare Verbindungen enthält, die ausgewählt sind aus den folgenden Formeln
CH₂=CW-CO-O-(CHW¹¹)ₙ₄-(CH₂)ₙ₁-O-CH=CH₂ III1a
CH₂=CH-O-(CHW¹)ₙ₄-(CH₂)ₙ₁-O-CO-CH=CH₂ III1b
CH₂=CW-CO-O-(CHW¹¹)ₙ₂-(CH₂)ₙ₁-(CHW¹²)ₙ₃-O-CO-CW=CH₂ III1c 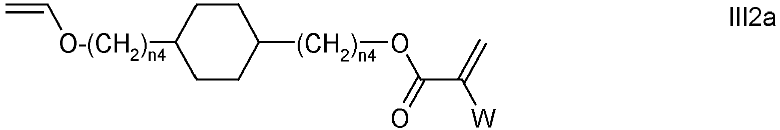 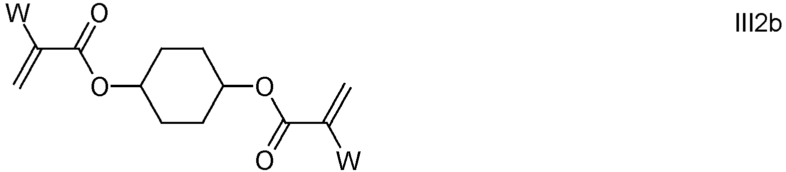 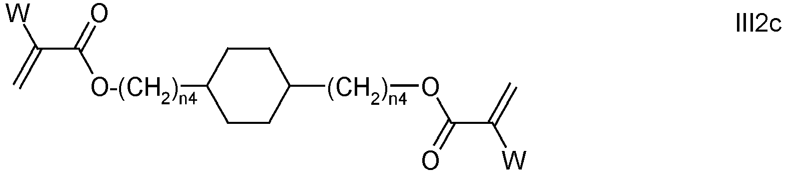
CH₂=CW-CO-O-(CH₂)ₙ₂-(CF₂)ₙ₁-(CH2)ₙ₃-O-CH=CH₂ III3a
CH₂=CW-CO-O-(CH₂)ₙ₂-(CF₂)ₙ₁-(CH₂)ₙ₃-O-CO-CW=CH₂ III3b
(CH₂=CW-CO-O-(CH₂)ₙ₂)₃CH III4a
(CH₂=CW-CO-O-(CH₂)ₙ₂)₄C III4b
bei denen W H, CH₃ oder C₂H₅ ist und W¹¹, W¹², n1, n2 und n4 wie in Anspruch 8 definiert sind und der Cyclohexylenring in Formel III2a-c gegebenenfalls durch eine oder mehrere gleiche oder verschiedene Gruppen W¹¹ substituiert ist.

10. FK-Medium nach irgendeinem der Ansprüche 1 bis 9, **dadurch gekennzeichnet, dass** die Komponente A) eine oder mehrere vierte polymerisierbare Verbindungen enthält, die ein Ringsystem enthaltend einen oder mehrere aromatische oder heteroaromatische Ringe oder kondensierte aromatische oder heteroaromatische Ringe und daran gebunden zwei polymerisierbare Gruppen, die gleich oder voneinander verschieden sind, enthalten.

11. FK-Medium nach irgendeinem der Ansprüche 1 bis 10, **dadurch gekennzeichnet, dass** die Komponente A) eine oder mehrere vierte polymerisierbare Verbindungen enthält, die ausgewählt sind aus der folgenden Formel
P¹-Sp¹-B¹-(Z^{b}-B²)ₘ-Sp²-P² IV
worin P¹, P², Sp¹, Sp² wie in Anspruch 6 definiert sind,
B¹ und B² unabhängig voneinander und bei jedem Auftreten gleich oder verschieden eine aromatische, heteroaromatische, alicyclische oder heterocyclische Gruppe mit 4 bis 25 Ringatomen sind, die auch anellierte Ringe enthalten kann und die unsubstituiert oder ein- oder mehrfach durch L wie in Anspruch 4 definiert substituiert ist, bei denen mindestens einer von B¹ und B² eine aromatische oder heteroaromatische Gruppe bedeutet,
Z^{b} bei jedem Auftreten gleich oder verschieden -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁₁-, -CF₂CH₂-, -CH₂CF₂-, -(CF₂)ₙ₁₁-, -CH=CH-, -CF=CF-, -C≡C-, -CH=CH-COO-, -OCO-CH=CH-, CR⁰R⁰⁰ oder eine Einfachbindung ist,
R⁰ und R⁰⁰ jeweils unabhängig voneinander H oder Alkyl mit 1 bis 20 C-Atomen bedeuten,
m 0, 1, 2, 3 oder 4 bedeutet,
n11 1, 2, 3 oder 4 bedeutet.

12. FK-Medium nach irgendeinem der Ansprüche 1 bis 11, **dadurch gekennzeichnet, dass** die Komponente A) einen Photoinitiator enthält.

13. FK-Medium nach irgendeinem der Ansprüche 1 bis 11, **dadurch gekennzeichnet, dass** die Komponente A) einen Lichtsensibilisator enthält.

14. FK-Medium nach irgendeinem der Ansprüche 1 bis 13, **dadurch gekennzeichnet, dass** die Konzentration der ersten polymerisierbaren Verbindung in dem FK-Medium 1 bis 30 Gew.-% beträgt.

15. FK-Medium nach irgendeinem der Ansprüche 1 bis 14, **dadurch gekennzeichnet, dass** das Verhältnis der Menge der ersten polymerisierbaren Verbindung, oder Verbindung der Formel I, relativ zur kombinierten Menge der zweiten, dritten und vierten polymerisierbaren Verbindungen, oder Verbindungen der Formel II, III und IV, in dem FK-Medium 10:1 bis 1:10 ist.

16. FK-Medium nach irgendeinem der Ansprüche 1 bis 14, **dadurch gekennzeichnet, dass** die Gesamtkonzentration der ersten, zweiten, dritten und vierten polymerisierbaren Verbindungen in dem FK-Medium 10 bis 40 Gew. % beträgt.

17. FK-Medium nach irgendeinem der Ansprüche 1 bis 16, **dadurch gekennzeichnet, dass** die Komponente B) eine oder mehrere Verbindungen enthält, die ausgewählt sind aus den Formeln A und B 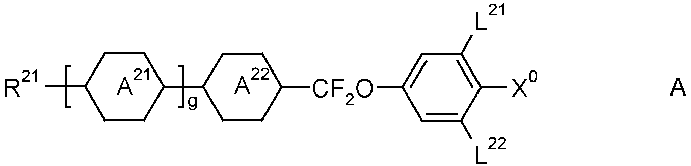 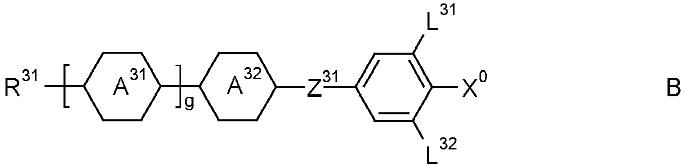 worin die einzelnen Reste, unabhängig voneinander und bei jedem Auftreten gleich oder verschieden, die folgenden Bedeutungen besitzen: 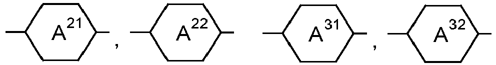 jeweils unabhängig voneinander und bei jedem Auftreten gleich oder verschieden 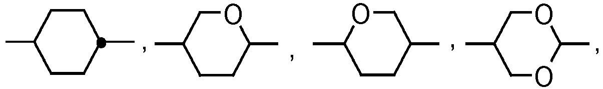 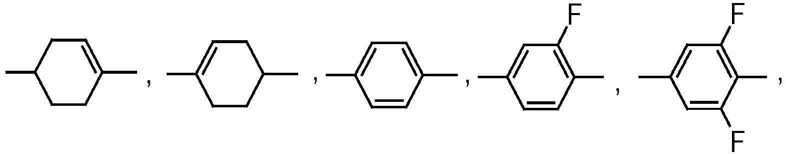
R²¹, R³¹ jeweils unabhängig voneinander Alkyl, Alkoxy, Oxaalkyl oder Alkoxyalkyl mit 1 bis 9 C-Atomen oder Alkenyl oder Alkenyloxy mit 2 bis 9 C-Atomen, die alle gegebenenfalls fluoriert sind,
X⁰ F, Cl, halogeniertes Alkyl oder Alkoxy mit 1 bis 6 C-Atomen oder halogeniertes Alkenyl oder Alkenyloxy mit 2 bis 6 C-Atomen,
Z³¹ -CH₂CH₂-, -CF₂CF₂-, -COO-, *trans-*CH=CH-, *trans-*CF=CF-, -CH₂O- oder eine Einfachbindung,
L²¹, L²², L³¹, L³² jeweils unabhängig voneinander H oder F,
g 0, 1, 2 oder 3.

18. FK-Medium nach Anspruch 17, **dadurch gekennzeichnet, dass** die Komponente B) zusätzlich zu den Verbindungen der Formel A und/oder B eine oder mehrere Verbindungen der Formel E enthaltend eine Alkenylgruppe 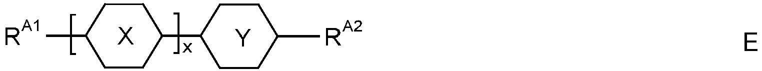 enthält, worin die einzelnen Reste, bei jedem Auftreten gleich oder verschieden, jeweils unabhängig voneinander, die folgende Bedeutung besitzen: 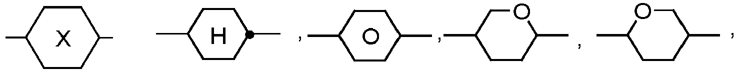 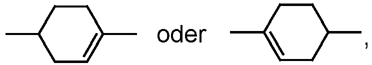 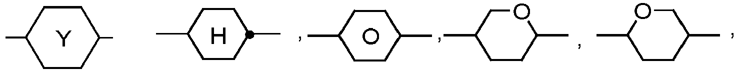 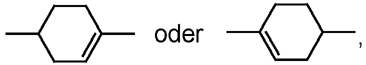
R^{A1} Alkenyl mit 2 bis 9 C-Atomen oder, wenn mindestens einer der Ringe X, Y und Z Cyclohexenyl bedeutet, auch eine der Bedeutungen von R^{A2},
R^{A2} Alkyl mit 1 bis 12 C-Atomen, worin zusätzlich eine oder zwei nicht benachbarte CH₂-Gruppen so durch -O-, -CH=CH-, -CO-, -OCO-oder -COO- ersetzt sein können, dass O-Atome nicht direkt miteinander verknüpft sind,
x 1 oder 2.

19. FK-Medium nach irgendeinem der Ansprüche 1 bis 16, **dadurch gekennzeichnet, dass** die Komponente B) eine oder mehrere Verbindungen enthält, die ausgewählt sind aus den Formeln CY und PY: 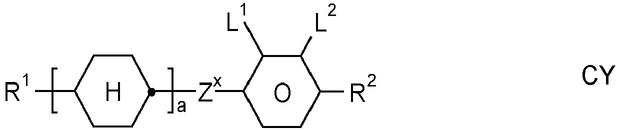 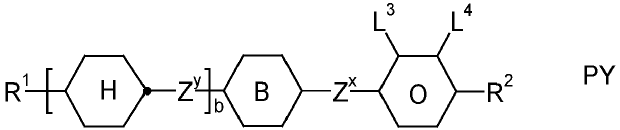 bei denen
a 1 oder 2 bedeutet,
b 0 oder 1 bedeutet, 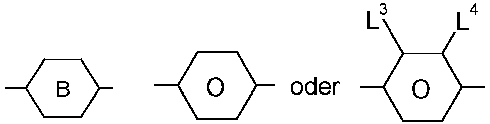 bedeutet,
R¹ und R² jeweils unabhängig voneinander Alkyl mit 1 bis 12 C-Atomen bedeuten, wobei zusätzlich eine oder zwei nicht benachbarte CH₂-Gruppen so durch -O-, -CH=CH-, -CO-, -OCO- oder -COO- ersetzt sein können, dass O-Atome nicht direkt miteinander verknüpft sind,
Z^{x} und Z^{y} jeweils unabhängig voneinander -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung bedeuten,
L¹⁻⁴ jeweils unabhängig voneinander F, Cl, OCF₃, CF₃, CH₃, CH₂F, CHF₂ bedeuten.

20. FK-Medium nach Anspruch 19, **dadurch gekennzeichnet, dass** die Komponente B) eine oder mehrere Alkenylverbindungen enthält, die ausgewählt sind aus den Formeln AN und AY 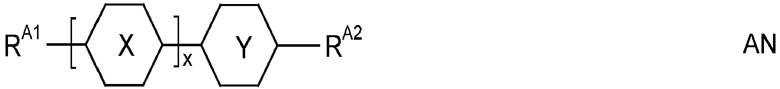 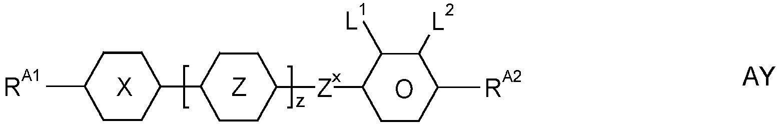 worin die einzelnen Reste, bei jedem Auftreten gleich oder verschieden und jeweils unabhängig voneinander, die folgende Bedeutung besitzen: 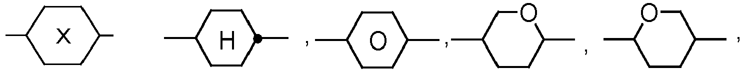 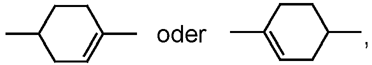 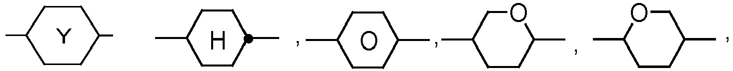 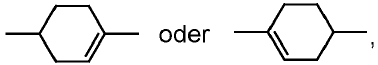 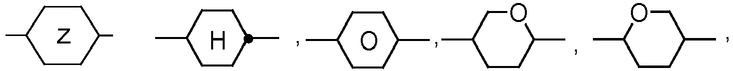 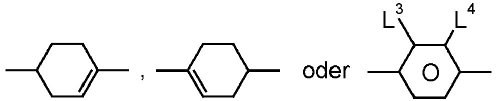
R^{A1} Alkenyl mit 2 bis 9 C-Atomen oder, wenn mindestens einer der Ringe X, Y und Z Cyclohexenyl bedeutet, auch eine der Bedeutungen von R^{A2},
R^{A2} Alkyl mit 1 bis 12 C-Atomen, worin zusätzlich eine oder zwei nicht benachbarte CH₂-Gruppen so durch -O-, -CH=CH-, -CO-, -OCO- oder -COO- ersetzt sein können, dass O-Atome nicht direkt miteinander verknüpft sind,
Z^{x} -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- oder eine Einfachbindung,
L¹⁻⁴ H, F, Cl, OCF₃, CF₃, CH₃, CH₂F oder CHF₂,
x 1 oder 2,
z 0 oder 1.

21. FK-Medium nach irgendeinem der Ansprüche 1 bis 20, **dadurch gekennzeichnet, dass** die polymerisierbaren Verbindungen polymerisiert werden.

22. FK-Anzeige enthaltend ein FK-Medium nach irgendeinem der Ansprüche 1 bis 21.

23. FK-Anzeige des Anspruchs 22, bei der es sich um eine flexible oder gekrümmte Anzeige handelt.

24. FK-Anzeige des Anspruchs 22 oder 23, bei der es sich um eine TN-, OCB-, IPS-, FFS-, Posi-VA-, VA- oder UB-FFS-Anzeige handelt.

25. Verfahren zur Herstellung einer FK-Anzeige nach irgendeinem der Ansprüche 22 bis 24, umfassend die Schritte des Bereitstellens eines FK-Mediums wie in irgendeinem der Ansprüche 1 bis 20 definiert in die Anzeige und Polymerisierens der polymerisierbaren Verbindungen in definierten Bereichen der Anzeige.

26. Verfahren des Anspruchs 25, bei dem die polymerisierbaren Verbindungen durch Einwirkung von UV-Bestrahlung photopolymerisiert werden.

27. Verfahren des Anspruchs 26, bei dem die polymerisierbaren Verbindungen durch Einwirkung von UV-Bestrahlung durch eine Photomaske photopolymerisiert werden.

28. Verfahren zur Herstellung eines FK-Mediums nach irgendeinem der Ansprüche 1 bis 20, umfassend die Schritte des Mischens einer flüssigkristallinen Komponente B) wie in irgendeinem der Ansprüche 1 und 17 bis 20 definiert mit einer oder mehreren polymerisierbaren Verbindungen, oder mit der Komponente A), wie in irgendeinem der Ansprüche 1 bis 16 definiert, und gegebenenfalls mit weiteren FK-Verbindungen und/oder Zusatzstoffen.

## Revendications

1. Milieu cristallin liquide (LC) comprenant un composant polymérisable A) qui comprend un ou plusieurs composé(s) polymérisable(s), et un composant cristallin liquide B) qui comprend un ou plusieurs composé(s) mésogène(s) ou cristallin(s) liquide(s), **caractérisé en ce que** le composant polymérisable A) comprend un ou plusieurs premier(s) composé(s) polymérisable(s) comprenant un groupe cinnamate dont l'atome de O est connecté à un groupe acrylate ou méthacrylate via un groupe d'espaceur hydrocarbone qui comporte de 2 à 20 atomes de C,
**caractérisé en ce que** le composant A) comprend un ou plusieurs premier(s) composé(s) polymérisable(s) qui est/sont sélectionné(s) parmi la formule I 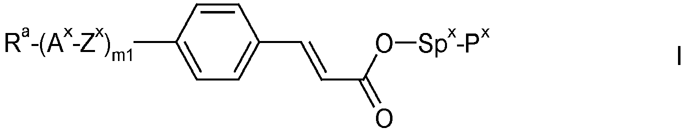 dans laquelle les radicaux individuels, de manière indépendante les uns des autres, et pour chaque occurrence, de manière identique ou différente, présentent les significations qui suivent
P^{x} représente un groupe acrylate ou méthacrylate,
Sp^{x} représente alkylène en chaîne droite, ramifié ou cyclique qui comporte de 2 à 20 atomes de C, où un ou plusieurs groupe(s) CH₂ non adjacents est/sont en option remplacé(s) par -O-, -S-, -CO-, -CO-O-, -O-CO-, -O-CO-O- de telle sorte que des atomes de O et/ou de S ne soient pas directement connectés les uns aux autres,
R^{a} représente H, F, Cl, CN, P^{x}, P^{x}-Sp^{x}-, R^{x}, R^{x}-O-CO-CH=CH-, P^{x}-Sp^{x}-O-CO-CH=CH-, R^{x}-CH=CH-CO-O-, P^{x}-Sp^{x}-CH=CH-CO-O-,
R^{x} représente alkyle en chaîne droite, ramifié ou cyclique qui comporte de 1 à 25 atome(s) de C, où un ou plusieurs groupe(s) CH₂ non adjacents est/sont en option remplacé(s) par -O-, -S-, -NR⁰-, -CO-, -CO-O-, -O-CO-, -O-CO-O-, -C(R⁰)=C(R⁰⁰)- ou -C≡C-, de telle sorte que des atomes de O et/ou de S ne soient pas directement connectés les uns aux autres, et où un ou plusieurs atome(s) de H est/sont chacun en option remplacé(s) par F ou par Cl,
A^{x} représente un groupe aromatique, hétéroaromatique, alicyclique ou hétérocyclique qui comporte de 4 à 25 atomes de cycle, lequel peut également contenir des cycles fusionnés, et lequel est non substitué ou mono- ou polysubstitué par L,
Z^{x} représente -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁₁-, -CF₂CH₂-, -CH₂CF₂-, -(CF₂)ₙ₁₁-, -CH=CH-, -CF=CF-, -C≡C-, -CH=CH-COO-, -OCO-CH=CH-, CR⁰R⁰⁰ ou une liaison simple,
L représente F, Cl, -CN, -NO₂, -NCO, -NCS, -OCN, -SCN, -C(=O)N(R^{q})₂, -C(=O)Y^{z}, -C(=O)R^{q}, -N(R^{q})₂, silyle en option substitué, aryle ou hétéroaryle en option substitué qui comporte de 5 à 20 atomes de cycle, ou alkyle en chaîne droite ou ramifié qui comporte de 1 à 25 atome(s) de C, où, en outre, un ou plusieurs groupe(s) CH₂ non adjacents peut/peuvent chacun être remplacé(s), de manière indépendante les uns des autres, par -C(R⁰)=C(R⁰⁰)-, -C≡C-, -N(R⁰)-, -O-, -S-, -CO-, -CO-O-, -O-CO-, -O-CO-O- de telle sorte que des atomes de O et/ou de S ne soient pas liés directement les uns aux autres, et où, en outre, un ou plusieurs atome(s) de H peut/peuvent être remplacé(s) par F, Cl, -CN,
R^{q} représente H, F, Cl, CN, ou alkyle en chaîne droite, ramifié ou cyclique qui comporte de 1 à 25 atome(s) de C, où un ou plusieurs groupe(s) CH₂ non adjacents est/sont en option remplacé(s) par -O-, -S-, -CO-, -CO-O-, -O-CO-, -O-CO-O- de telle sorte que des atomes de O et/ou de S ne soient pas directement connectés les uns aux autres, et où un ou plusieurs atome(s) de H est/sont chacun en option remplacé(s) par F ou par Cl,
R⁰, R⁰⁰ représentent H ou alkyle qui comporte de 1 à 20 atome(s) de C,
Y^{z} représente halogène,
m1 représente 0, 1 ou 2,
n11 représente 1, 2, 3 ou 4, et
le composant A) comprend un ou plusieurs deuxième(s) composé(s) polymérisable(s) qui est/sont sélectionnés parmi les formules qui suivent 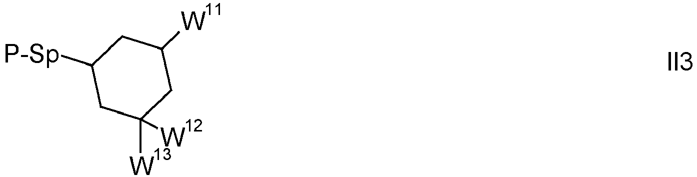 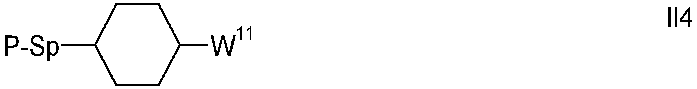 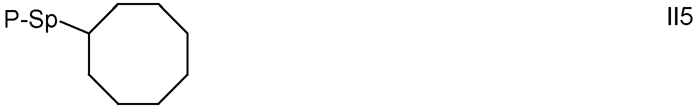 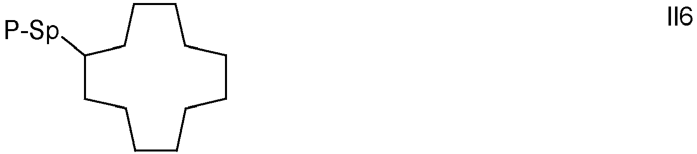 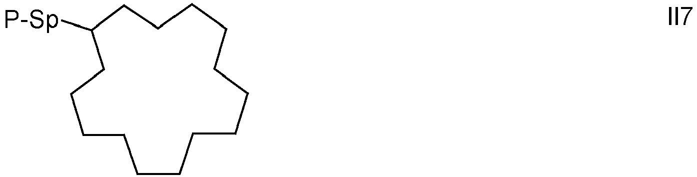 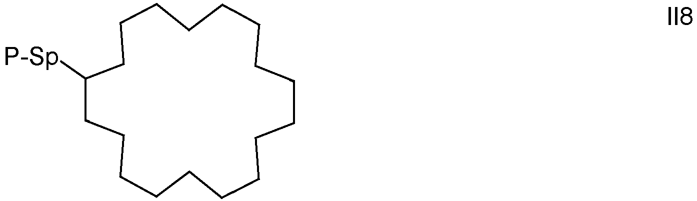 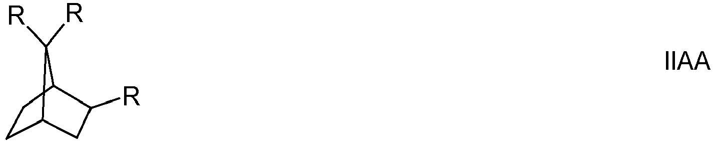 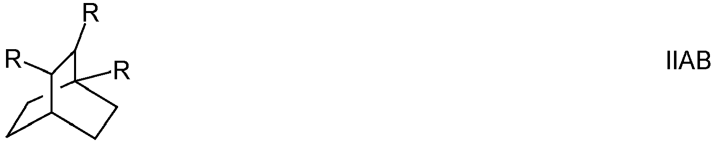 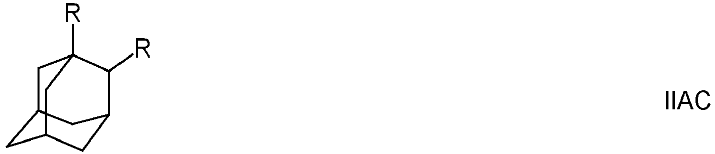 dans lesquelles les radicaux individuels, de manière indépendante les uns des autres et pour chaque occurrence, de manière identique ou différente, présentent les significations qui suivent
P, Sp présentent les significations qui ont été données selon la revendication 7,
W¹¹, W¹² sont H, F ou C₁-C₁₂-alkyle en chaîne droite ou ramifié,
W¹³, W¹⁴ sont H ou F,
n1 est un entier de 2 à 15,
n2, n3 sont 0 ou un entier de 1 à 3,
R représente pour chaque occurrence, de manière identique ou différente, P-Sp- ou présente l'une des significations qui ont été données pour R^{x}, et l'un des groupes R dans chacune des formules IIAA-IIAC représente P-Sp-.

2. Milieu LC selon la revendication 1, **caractérisé en ce que** le composant A) comprend un ou plusieurs premier(s) composé(s) polymérisable(s) qui est/sont sélectionné(s) parmi les formules qui suivent 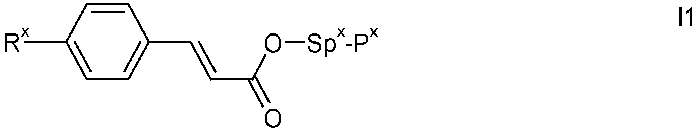 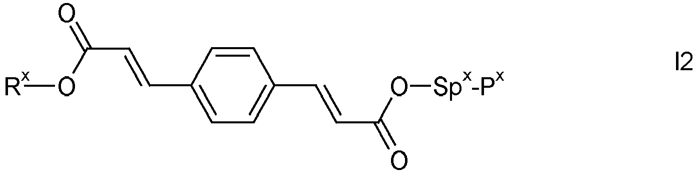 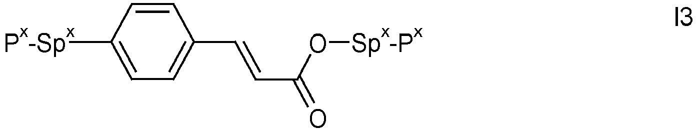 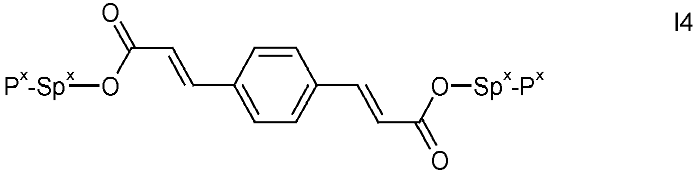 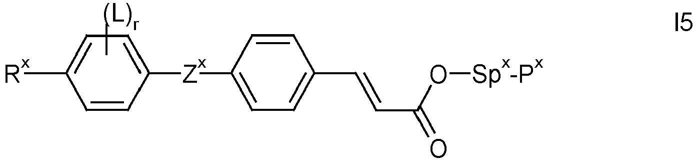 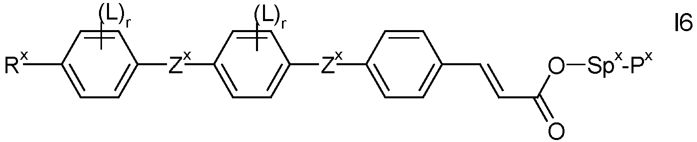 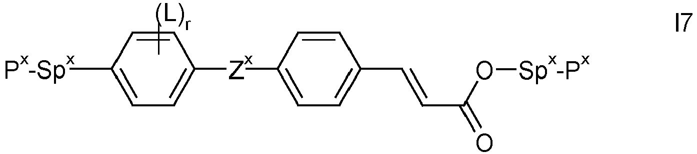 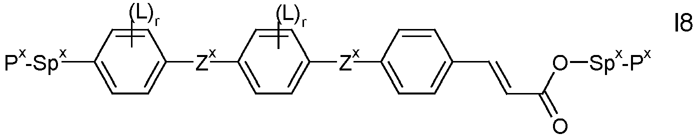 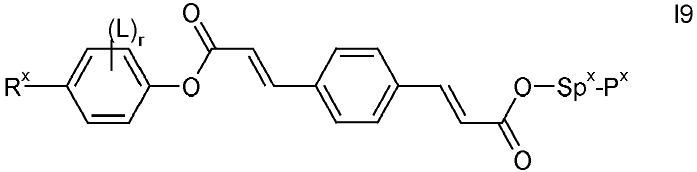 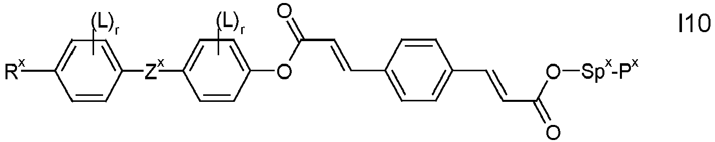 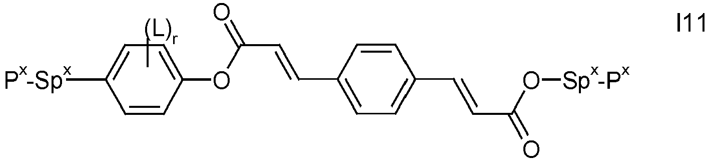 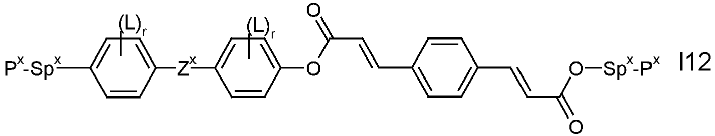 dans lesquelles P^{x}, Sp^{x}, R^{x} et L présentent les significations qui ont été données selon la revendication 1, et r est 0, 1, 2, 3 ou 4.

3. Milieu LC selon la revendication 1 ou 2, **caractérisé en ce que** le composant A) comprend un ou plusieurs premier(s) composé(s) polymérisable(s) qui est/sont sélectionné(s) parmi les formules qui suivent

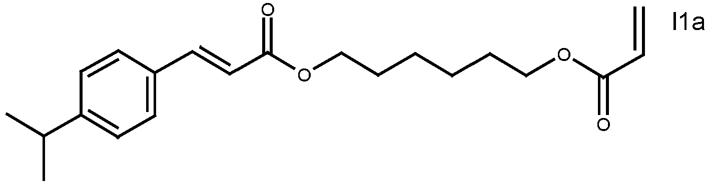

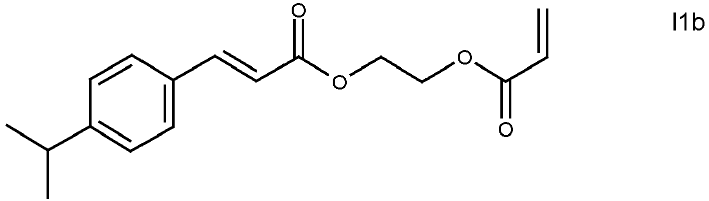

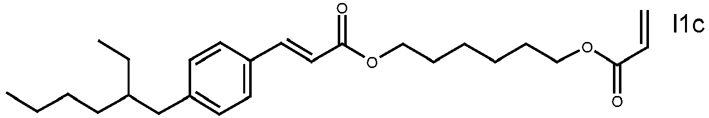

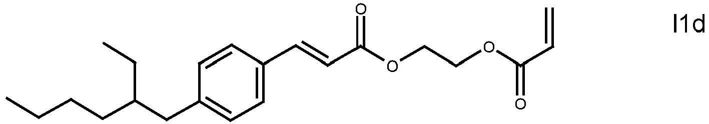

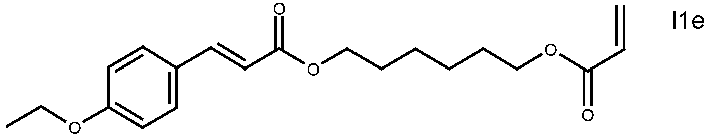

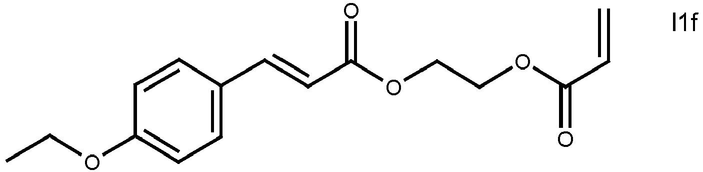

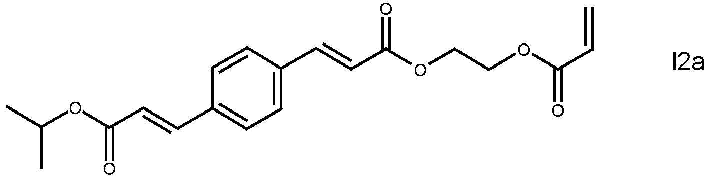

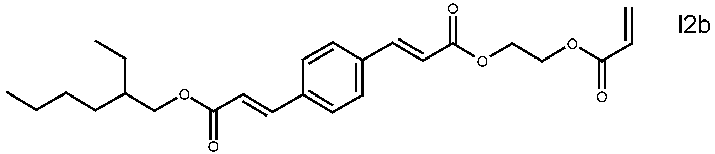

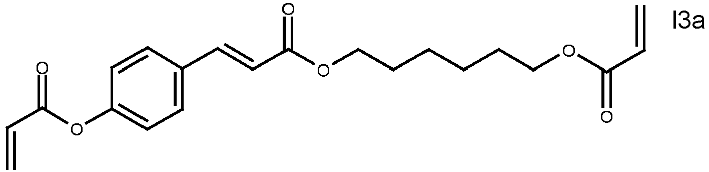

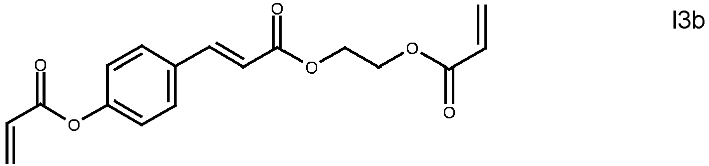

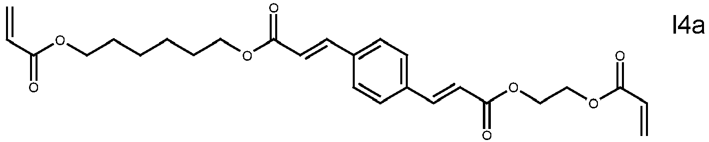

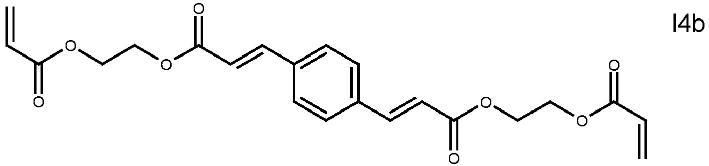

4. Milieu LC selon l'une quelconque des revendications 1 à 3, **caractérisé en ce que** le composant A) comprend un ou plusieurs deuxième(s) composé(s) polymérisable(s) qui est/sont sélectionné(s) parmi les formules qui suivent 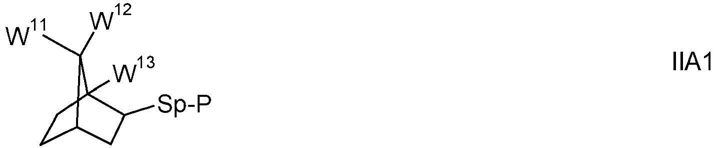 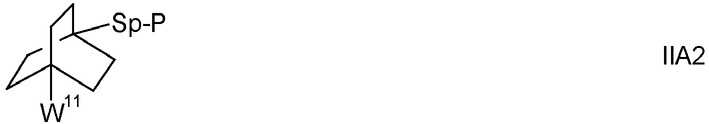 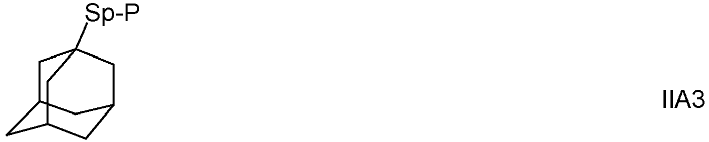 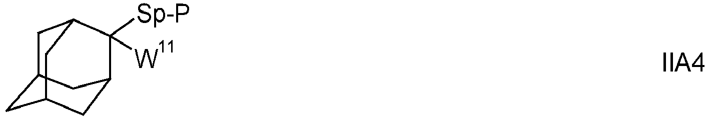 dans lesquelles P et Sp présentent les significations qui ont été données selon la revendication 7, W¹¹, W¹² et W¹³ sont, de manière indépendante les uns des autres, H, F ou C₁-C₁₂-alkyle, et les groupes cycloalkyle sont en option substitués par un ou plusieurs groupe(s) L comme il a été défini selon la revendication 1.

5. Milieu LC selon l'une quelconque des revendications 1 à 4, **caractérisé en ce que** le composant A) comprend un ou plusieurs deuxième(s) composé(s) polymérisable(s) qui est/sont sélectionné(s) parmi les formules qui suivent 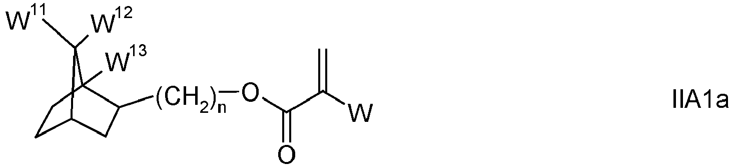 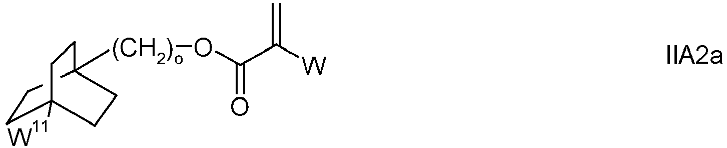 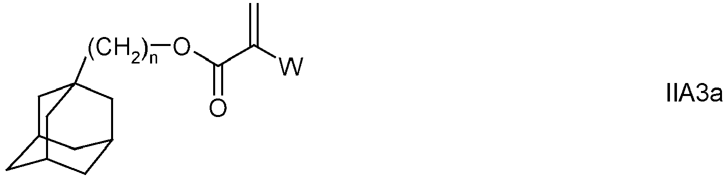 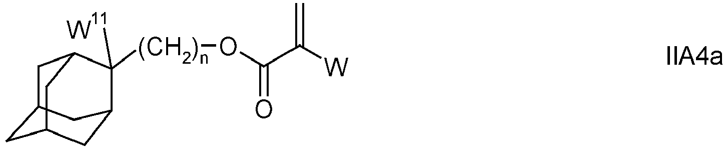 dans lesquelles n est 0 ou un entier de 1 à 8, W est H, CH₃ ou C₂H₅ et W¹¹, W¹² et W¹³ sont H, F ou C₁-C₁₂-alkyle.

6. Milieu LC selon l'une quelconque des revendications 1 à 5, **caractérisé en ce que** le composant A) comprend un ou plusieurs troisième(s) composé(s) polymérisable(s) qui est/sont sélectionné(s) parmi la formule III
P¹-Sp¹-G³⁻Sp²-P² III
dans laquelle
P¹ et P² représentent, de manière indépendante l'un de l'autre et pour chaque occurrence, de manière identique ou différente, un groupe polymérisable,
Sp¹, Sp² représentent, de manière indépendante l'un de l'autre, des groupes d'espaceur identiques ou différents ou une liaison simple,
G³ est un groupe alkyle en chaîne droite, ramifié ou cyclique qui comporte de 1 à 20 atome(s) de C, lequel est en option mono-, poly- ou perfluoré et est en option substitué par un ou plusieurs groupe(s) P¹-Sp¹- ou L comme il a été défini selon la revendication 1, et où un ou plusieurs groupe(s) CH₂ est/ sont en option remplacé(s) par -O-, -CO-, -O-CO- ou -CO-O-de telle sorte que des atomes de O ne soient pas directement adjacents les uns aux autres.

7. Milieu LC selon l'une quelconque des revendications 1 à 6, **caractérisé en ce que** le composant A) comprend un ou plusieurs troisième(s) composé(s) polymérisable(s), dans lequel les deux groupes polymérisables, ou les groupes P¹ et P², sont différents l'un de l'autre.

8. Milieu LC selon l'une quelconque des revendications 1 à 7, **caractérisé en ce que** le composant A) comprend un ou plusieurs troisième(s) composé(s) polymérisable(s) qui est/sont sélectionné(s) parmi les formules qui suivent
P¹-Sp¹-(CHW¹¹)ₙ₂-(CH₂)ₙ₁-(CHW¹²)ₙ₃-Sp²-P² III1 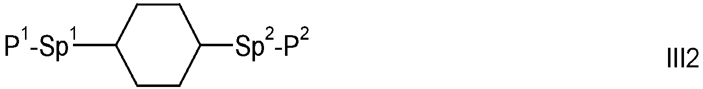
P¹-(CH₂)ₙ₂-(CF₂)ₙ₁-(CH₂)ₙ₃-P² III3
(P¹-Sp¹-(CH₂)ₙ₄)ₙ₅CH₄₋ₙ₅ III4
dans lesquelles P¹, P², Sp¹, Sp² sont comme il a été défini selon la revendication 6,
W¹¹, W¹² sont, pour chaque occurrence de manière identique ou différente, H, F ou C₁-C₁₂-alkyle,
n1 est un entier de 2 à 15,
n2, n3 sont, de manière indépendante l'un de l'autre, 0 ou un entier de 1 à 3,
n4 est 0 ou un entier de 1 à 15,
n5 est 3 ou 4,
et le cycle cyclohexylène dans la formule III2 est en option substitué par un ou plusieurs groupes identiques ou différents W¹¹.

9. Milieu LC selon l'une quelconque des revendications 1 à 8, **caractérisé en ce que** le composant A) comprend un ou plusieurs troisième(s) composé(s) polymérisable(s) qui est/sont sélectionné(s) parmi les formules qui suivent
CH₂=CW-CO-O-(CHW¹¹)ₙ₄-(CH₂)ₙ₁-O-CH=CH₂ III1a
CH₂=CH-O-(CHW¹)ₙ₄-(CH₂)ₙ₁-O-CO-CH=CH₂ 1111b
CH₂=CW-CO-O-(CHW¹¹)ₙ₂-(CH₂)ₙ₁-(CHW¹²)ₙ₃-O-CO-CW=CH₂ III1c 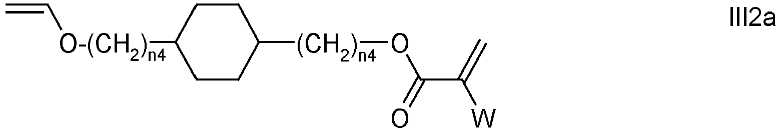 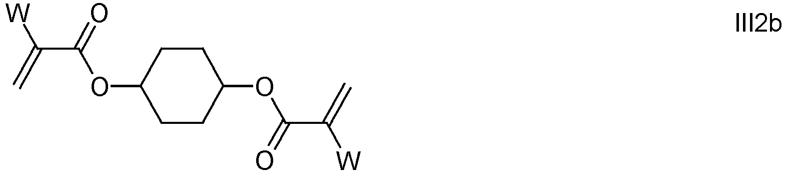 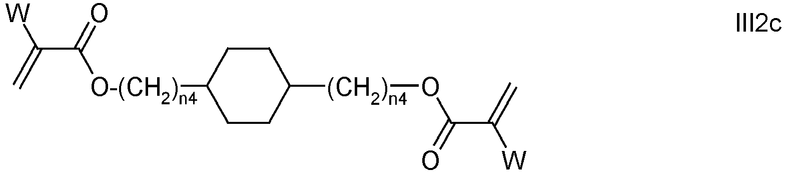
CH₂=CW-CO-O-(CH₂)ₙ₂-(CF₂)ₙ₁-(CH₂)ₙ₃-O-CH=CH₂ III3a
CH₂=CW-CO-O-(CH₂)ₙ₂-(CF₂)ₙ₁-(CH₂)ₙ₃-O-CO-CW=CH₂ III3b
(CH₂=CW-CO-O-(CH₂)ₙ₂)₃CH III4a
(CH₂=CW-CO-O-(CH₂)ₙ₂)₄C III4b
dans lesquelles W est H, CH₃ ou C₂H₅ et W¹¹, W¹², n1, n2 et n4 sont comme il a été défini selon la revendication 8, et le cycle cyclohexylène dans la formule III2a-c est en option substitué par un ou plusieurs groupes identiques ou différents W¹¹.

10. Milieu LC selon l'une quelconque des revendications 1 à 9, **caractérisé en ce que** le composant A) comprend un ou plusieurs quatrième(s) composé(s) polymérisable(s) comprenant un système de cycle qui contient un ou plusieurs cycle(s) aromatique(s) ou hétéroaromatique(s) ou un ou plusieurs cycle(s) aromatique(s) ou hétéroaromatique(s) condensé(s), et deux groupes polymérisables qui sont identiques l'un à l'autre ou différents l'un de l'autre lui sont liés.

11. Milieu LC selon l'une quelconque des revendications 1 à 10, **caractérisé en ce que** le composant A) comprend un ou plusieurs quatrième(s) composé(s) polymérisable(s) qui est/sont sélectionné(s) parmi la formule qui suit
P¹-Sp¹-B¹-(Z^{b}-B²)ₘ-Sp²-P² IV
dans laquelle P¹, P², Sp¹, Sp² sont comme il a été défini selon la revendication 6,
B¹ et B² sont, de manière indépendante l'un de l'autre, et pour chaque occurrence, de manière identique ou différente, un groupe aromatique, hétéroaromatique, alicyclique ou hétérocyclique qui comporte de 4 à 25 atomes de cycle, lequel peut également contenir des cycles fusionnés et lequel est non substitué, ou mono- ou polysubstitué par L comme il a été défini selon la revendication 4, dans lequel au moins l'un de B¹ et B² représente un groupe aromatique ou hétéroaromatique,
Z^{b} est, pour chaque occurrence de manière identique ou différente, -O-, -S-, -CO-, -CO-O-, -OCO-, -O-CO-O-, -OCH₂-, -CH₂O-, -SCH₂-, -CH₂S-, -CF₂O-, -OCF₂-, -CF₂S-, -SCF₂-, -(CH₂)ₙ₁₁-, -CF₂CH₂-, -CH₂CF₂-, -(CF₂)ₙ₁₁-, -CH=CH-, -CF=CF-, -C≡C-, -CH=CH-COO-, -OCO-CH=CH-, CR⁰R⁰⁰ ou une liaison simple
R⁰ et R⁰⁰ représentent chacun, de manière indépendante l'un de l'autre, H ou alkyle qui comporte de 1 à 20 atome(s) de C,
m représente 0, 1, 2, 3 ou 4,
n11 représente 1, 2, 3 ou 4.

12. Milieu LC selon l'une quelconque des revendications 1 à 11, **caractérisé en ce que** le composant A) comprend un photo-initiateur.

13. Milieu LC selon l'une quelconque des revendications 1 à 11, **caractérisé en ce que** le composant A) comprend un photosensibiliseur.

14. Milieu LC selon l'une quelconque des revendications 1 à 13, **caractérisé en ce que** la concentration du premier composé polymérisable dans le milieu LC est comprise entre 1 % et 30 % en poids.

15. Milieu LC selon l'une quelconque des revendications 1 à 14, **caractérisé en ce que** le rapport de la quantité du premier composé polymérisable, ou du composé de la formule I, sur la quantité combinée des deuxième, troisième et quatrième composés polymérisables, ou des composés des formules II, III et IV dans le milieu LC est compris entre 10:1 et 1:10.

16. Milieu LC selon l'une quelconque des revendications 1 à 14, **caractérisé en ce que** la concentration totale des premier, deuxième, troisième et quatrième composés polymérisables dans le milieu LC est comprise entre 10 % et 40 % en poids.

17. Milieu LC selon l'une quelconque des revendications 1 à 16, **caractérisé en ce que** le composant B) comprend un ou plusieurs composé(s) qui est/sont sélectionné(s) parmi les formules A et B 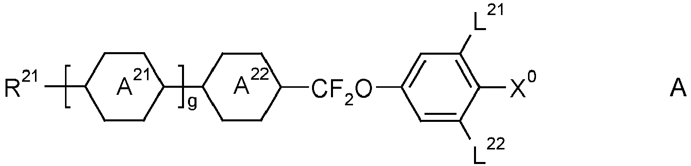 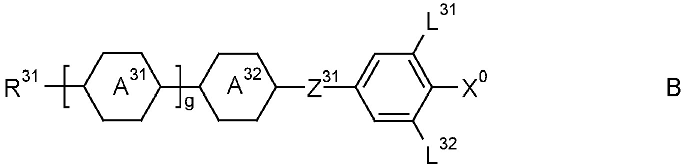 dans lesquelles les radicaux individuels présentent, de manière indépendante les uns des autres et pour chaque occurrence, de manière identique ou différente, les significations qui suivent : 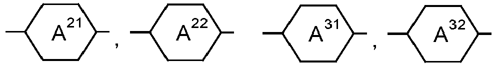 représentent chacun, de manière indépendante les uns des autres, et pour chaque occurrence, de manière identique ou différente 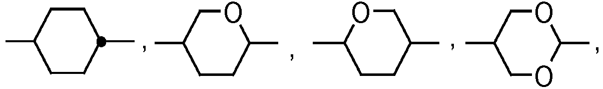 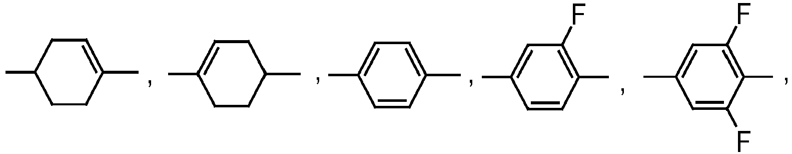
R²¹, R³¹ représentent chacun, de manière indépendante l'un de l'autre, alkyle, alcoxy, oxaalkyle ou alcoxyalkyle qui comporte de 1 à 9 atome(s) de C ou alkényle ou alkényloxy qui comporte de 2 à 9 atomes de C, dont tous sont en option fluorés,
X⁰ représente F, Cl, alkyle ou alcoxy halogéné qui comporte de 1 à 6 atome(s) de C ou alkényle ou alkényloxy halogéné qui comporte de 2 à 6 atomes de C,
Z³¹ représente -CH₂CH₂-, -CF₂CF₂-, -COO-, *trans*-CH=CH-, *trans*-CF=CF-, -CH₂O- ou une liaison simple,
L²¹, L²², L³¹, L³² représentent chacun, de manière indépendante les uns des autres, H ou F,
g représente 0, 1, 2 ou 3.

18. Milieu LC selon la revendication 17, **caractérisé en ce que** le composant B) comprend, en plus des composés des formules A et/ou B, un ou plusieurs composé(s) de la formule E contenant un groupe alkényle 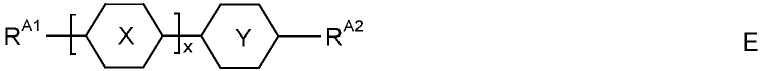 dans laquelle les radicaux individuels présentent, pour chaque occurrence de manière identique ou différente et chacun de manière indépendante les uns des autres, la signification qui suit : 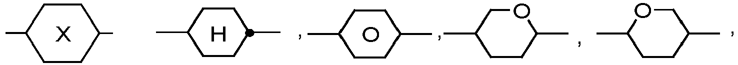 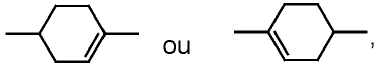 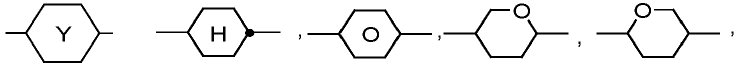 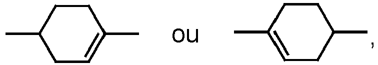
R^{A1} représente alkényle qui comporte de 2 à 9 atomes de C ou, si au moins l'un des cycles X, Y et Z représente cyclohexényle, présente également l'une des significations de R^{A2},
R^{A2} représente alkyle qui comporte de 1 à 12 atome(s) de C, où, en outre, un ou deux groupe(s) CH₂ non adjacents peut/peuvent être remplacé(s) par -O-, -CH=CH-, -CO-, -OCO- ou -COO- de telle sorte que des atomes de O ne soient pas liés directement les uns aux autres,
x représente 1 ou 2.

19. Milieu LC selon l'une quelconque des revendications 1 à 16, **caractérisé en ce que** le composant B) comprend un ou plusieurs composé(s) qui est/sont sélectionné(s) parmi les formules CY et PY : 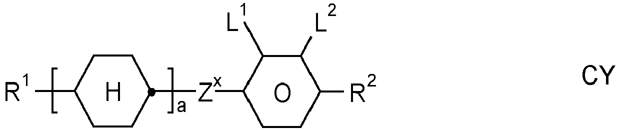 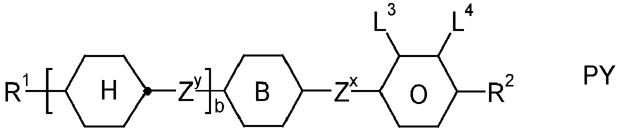 dans lesquelles
a représente 1 ou 2,
b représente 0 ou 1, 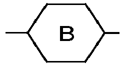 représente 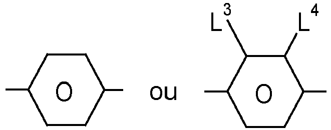
R¹ et R² représentent chacun, de manière indépendante l'un de l'autre, alkyle qui comporte de 1 à 12 atome(s) de C, où, en outre, un ou deux groupe(s) CH₂ non adjacents peut/peuvent être remplacé(s) par -O-, -CH=CH-, -CO-, -OCO- ou -COO-de telle sorte que des atomes de O ne soient pas liés directement les uns aux autres,
Z^{x} et Z^{y} représentent chacun, de manière indépendante l'un de l'autre, -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- ou une liaison simple,
L¹⁻⁴ représentent chacun, de manière indépendante les uns des autres, F, Cl, OCF₃, CF₃, CH₃, CH₂F, CHF₂.

20. Milieu LC selon la revendication 19, **caractérisé en ce que** le composant B) comprend un ou plusieurs composé(s) alkényle qui est/sont sélectionné(s) parmi les formules AN et AY 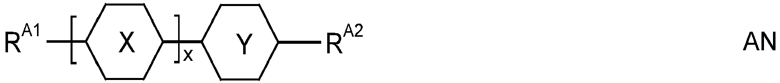 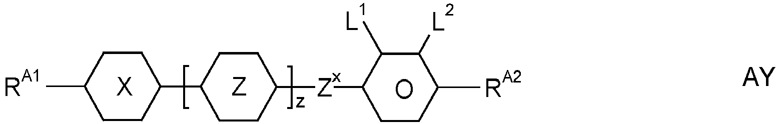 dans lesquelles les radicaux individuels présentent, pour chaque occurrence de manière identique ou différente et chacun de manière indépendante les uns des autres, la signification qui suit : 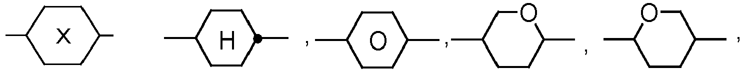 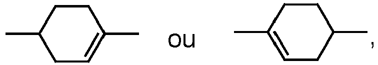 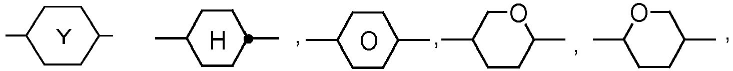 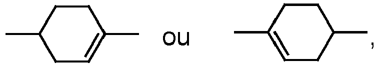 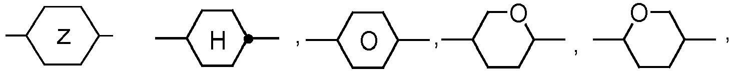 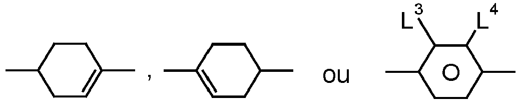
R^{A1} représente alkényle qui comporte de 2 à 9 atomes de C ou, si au moins l'un des cycles X, Y et Z représente cyclohexényle, également l'une des significations de R^{A2},
R^{A2} représente alkyle qui comporte de 1 à 12 atome(s) de C, où, en outre, un ou deux groupe(s) CH₂ non adjacents peut/peuvent être remplacé(s) par -O-, -CH=CH-, -CO-, -OCO- ou -COO- de telle sorte que des atomes de O ne soient pas liés directement les uns aux autres,
Z^{x} représente -CH₂CH₂-, -CH=CH-, -CF₂O-, -OCF₂-, -CH₂O-, -OCH₂-, -CO-O-, -O-CO-, -C₂F₄-, -CF=CF-, -CH=CH-CH₂O- ou une liaison simple,
L¹⁻⁴ représentent H, F, Cl, OCF₃, CF₃, CH₃, CH₂F ou CHF₂,
x représente 1 ou 2,
z représente 0 ou 1.

21. Milieu LC selon l'une quelconque des revendications 1 à 20, **caractérisé en ce que** les composés polymérisables sont polymérisés.

22. Affichage LC comprenant un milieu LC selon l'une quelconque des revendications 1 à 21.

23. Affichage LC selon la revendication 22, lequel est un affichage souple ou incurvé.

24. Affichage LC selon la revendication 22 ou 23, lequel est un affichage TN, OCB, IPS, FFS, posi-VA, VA ou UB-FFS.

25. Procédé pour la fabrication d'un affichage LC selon l'une quelconque des revendications 22 à 24, comprenant les étapes constituées par la fourniture d'un milieu LC tel qu'il a été défini selon l'une quelconque des revendications 1 à 20 à l'intérieur de l'affichage, et par la polymérisation des composés polymérisables dans des régions définies de l'affichage.

26. Procédé selon la revendication 25, dans lequel les composés polymérisables sont photopolymérisés par exposition à une irradiation UV.

27. Procédé selon la revendication 26, dans lequel les composés polymérisables sont photopolymérisés par exposition à une irradiation UV au travers d'un photomasque.

28. Procédé de préparation d'un milieu LC selon l'une quelconque des revendications 1 à 20, comprenant les étapes constituées par le mélange d'un composant cristallin liquide B) tel qu'il a été défini selon l'une quelconque des revendications 1 et 17 à 20, avec un ou plusieurs composé(s) polymérisable(s), ou avec un composant A), tel qu'il a été défini selon l'une quelconque des revendications 1 à 16, et en option, avec d'autres composés LC et/ou additifs.
